# EUROPEAN PATENT APPLICATION

(11) **EP 4 471 559 A1**
(43) Date of publication of application: **04.12.2024**
(21) Application number: 24179233.2
(22) Date of filing: 31.05.2024
(51) Int. Cl.: G06F 3/04815, G06F 3/01, G06F 3/0482, G06F 3/04842, G06F 3/04847

(54) **INPUT RECOGNITION IN 3D ENVIRONMENTS**

(30) Priority: 02.06.2023 US 202363470811 P; 29.05.2024 US 202418676786
(71) Applicant: Apple Inc., Cupertino, CA 95014 (US)
(72) Inventor: SHUTZBERG, Julian K., Cupertino (US); MEYER, David J., Cupertino (US); TEITELBAUM, David M., Cupertino (US); AGAOGLU, Mehmet N., Cupertino (US); FASEL, Ian R., Cupertino (US); LORTIE, Chase B., Cupertino (US); BREWER, Daniel J., Cupertino (US); CORNELISSEN, Tim H., Cupertino (US); GUM, Leah M., Cupertino (US); BERARDINO, Alexander G., Cupertino (US); SOTO DOBLADO, Lorenzo, Cupertino (US); CHAWDA, Vinay, Cupertino (US); BAR YOSEF, Itay, Cupertino (US); IRONY, Dror, Cupertino (US); MOSTAFA, Eslam A., Cupertino (US); ENGELHARD, Guy, Cupertino (US); LACEY, Paul A., Cupertino (US); SHENOI, Ashwin Kumar Asoka Kumar, Cupertino (US); NAYAK, Bhavin Vinodkumar, Cupertino (US); GE, Liuhao, Cupertino (US); SOFFER, Lucas, Cupertino (US); BELYAEV, Victor, Cupertino (US); DANDU, Bharat C., Cupertino (US); SCHROEDER, Matthias M., Cupertino (US); TANG, Yirong, Cupertino (US)
(74) Representative: COPA Copenhagen Patents

(57) **Abstract**

Various implementations disclosed herein include devices, systems, and methods that interpret user activity as user interactions with user interface (UI) elements positioned within a three-dimensional (3D) space such as an extended reality (XR) environment. Some implementations enable user interactions with virtual elements displayed in 3D environments that utilize alternative input modalities, e.g., XR environments that interpret user activity as either direct interactions or indirect interactions with virtual elements.

## Description

### CROSS-REFERENCE TO RELATED APPLICATIONS

This Application claims the benefit of U.S. Provisional Application Serial No. 63/470,811 filed June 2, 2023, which is incorporated herein in its entirety.

### TECHNICAL FIELD

The present disclosure generally relates to assessing user interactions with electronic devices that involve hand and body gestures, gaze, voice and/or other user activity.

### BACKGROUND

Existing user interaction systems may be improved with respect to facilitating interactions based on user activities.

### SUMMARY

Various implementations disclosed herein include devices, systems, and methods that interpret user activity as user interactions with virtual elements (e.g., user interface elements) positioned within in a three-dimensional (3D) space such as an extended reality (XR) environment. Some implementations enable user interactions with virtual elements displayed in 3D environments that utilize alternative input modalities, e.g., XR environments that interpret user activity as either direct interactions or indirect interactions with virtual elements. Whether user activity should be interpreted using one of multiple input modality schemes (e.g., using a direct interpretation process or an indirect interpretation process) may be determined based on sensor data (e.g., images, depth sensor data, motion data of devices held or worn by the user, etc.) and/or using one or more modality distinguishing criteria.

In some implementations, an XR environment may enable a user to provide input using both (a) a direct input modality in which the user interacts with virtual content by virtually touching the virtual content (and/or coming in close proximity to the virtual content as determined via one or more proximity criteria) and (b) an indirect input modality in which the user interacts with virtual content using gaze, pointing gestures, input devices, etc. to interact with the content without necessarily virtually touching or coming close to the virtual content.

In some implementations, for a direct interaction, the virtual element (e.g., a user interface (UI) element) is identified based on the user's hand position intersecting (or coming close to as determined via one or more proximity criteria) a 3D area associated with a virtual element. Based on determining that a direct input modality is applicable, a direct interaction recognition process is applied to interpret the user activity, e.g., determining whether the hand gesture/motion is a tap, a swipe, etc. During such user activity, the hand (or other body part) virtually interacts with a virtual element by virtually contacting the UI element. For example, a user may move their finger to directly tap, pinch, swipe, or otherwise interact with a UI element within a 3D space.

In some implementations, for an indirect interaction, the virtual element that is the subject of a user interaction is identified in another way, e.g., based on the user's gaze direction and associated hand gesture. Based on determining that an indirect input modality is applicable, an indirect interaction recognition process is applied to interpret the user activity (e.g., the gaze direction and an associated hand pinch) as initiating or performing an action with respect to a gaze-identified virtual element. User activity may be indirect, for example, in the sense that the hand need not contact or approach the UI element in the 3D space. For example, hand gestures may be performed by a user's hand while resting by the user's side or otherwise close to the user, while the UI is displayed at a distance in the 3D space relative to a viewpoint of the user (e.g., a position of the user in the 3D space).

In some implementations, a processor performs a method by executing instructions stored on a computer readable medium. The method involves obtaining hand data associated with a position of a hand in a 3D space. The hand data may be obtained based on first sensor data, e.g., using outward facing image sensors on an HMD, and the hand position may be associated with a hand gesture. The method involves obtaining gaze data associated with a direction of a gaze in the 3D space. The gaze data may be obtained based on second sensor data, e.g., based on outward facing image and/or depth sensors on an HMD that capture images of the hand.

The method involves selecting a direct interaction mode. The direct interaction mode may be selected manually or automatically. In some implementations, a direct interaction mode is selected automatically based on a criterion, e.g., based on the user hand position and the position of the virtual object in the 3D space satisfying a spatial relationship to one another. In accordance with selecting the direct interaction mode, the method involves identifying a first interaction with a first virtual object based on identifying that the position of the hand intersects a first area associated with a position of the first virtual object in a XR environment corresponding to the 3D space.

The method further involves, either before or after the direct interaction mode, selecting an indirect interaction mode. Such a mode may be selected automatically or manually. In some implementations, an indirect interaction mode is selected based on automatically determining that a criterion for a direct interaction mode is not satisfied. In accordance with selecting the indirect interaction mode, the method involves identifying a second interaction with a second virtual object based on identifying that the gaze direction intersects a second area associated with a position of the second virtual object in the XR environment.

In accordance with some implementations, a device includes one or more processors, a non-transitory memory, and one or more programs; the one or more programs are stored in the non-transitory memory and configured to be executed by the one or more processors and the one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figures 1A-B illustrate exemplary electronic devices operating in a physical environment, in accordance with some implementations.
Figure 2 illustrates views, provided via a device, of virtual elements within the 3D physical environment of Figures 1A-1B in which the user performs a direct interaction, in accordance with some implementations.
Figure 3 illustrates views, provided via a device, of virtual elements within the 3D physical environment of Figures 1A-1B in which the user performs an indirect interaction, in accordance with some implementations.
Figure 4 illustrates an exemplary determination of a direct interaction mode based on a 3D area around a virtual object, in accordance with some implementations.
Figure 5 illustrates an exemplary determination of a direct interaction mode based on a 3D area around a virtual object and an attention zone, in accordance with some implementations.
Figure 6 illustrates another exemplary determination of a direct interaction mode based on a 3D area around a virtual object and an attention zone, in accordance with some implementations.
Figure 7 illustrates an exemplary determination of a direct interaction mode based on a time threshold, in accordance with some implementations.
Figures 8A-8B illustrate an exemplary determination of an indirect interaction mode, in accordance with some implementations.
Figure 9 illustrates indirect interaction recognition, in accordance with some implementations.
Figure 10 illustrates a transition from a direct interaction mode to an indirect interaction mode, in accordance with some implementations.
Figure 11 is a process flow chart illustrating an exemplary process using hands and eye data to provide direct and indirect input, in accordance with some implementations.
Figure 12 is a flowchart illustrating a method for interpreting user activity as user interactions with virtual elements positioned within in a 3D space, in accordance with some implementations.
Figures 13A-13B illustrate a gesture made relative to a user interface element on a 2D user interface and a corresponding 3D region in accordance with some implementations.
Figure 14 illustrates a gesture made relative to a user interface element on a 2D user interface, in accordance with some implementations.
Figure 15 illustrates a gesture made relative to a user interface element on a 2D user interface and corresponding 3D region for an expected tap gesture and corresponding deadband region for the expected tap gesture, in accordance with some implementations.
Figure 16 illustrates a gesture made relative to a user interface element on a 2D user interface and corresponding non-cylindrical 3D region for an expected tap gesture and corresponding deadband region for the expected tap gesture, in accordance with some implementations.
Figure 17 illustrates a gesture made relative to a user interface element on a 2D user interface and corresponding non-cylindrical 3D region for an expected tap gesture and corresponding deadband region for an expected tap gesture, in accordance with some implementations.
Figures 18A-18B illustrate exemplary non-cylindrical 3D regions in accordance with some implementations.
Figure 19 illustrates exemplary 3D regions oriented based on viewpoint direction in accordance with some implementations.
Figures 20A-20B illustrate exemplary 3D regions sized based on gesture speed in accordance with some implementations.
Figure 21 is a flowchart illustrating a method for interpreting user position data as input based on a gesture path relative to a defined 3D region, in accordance with some implementations.
Figure 22 illustrates views of an XR environment provided by the device of Figure 1 based on the physical environment of Figure 1 in which a movement including an intentional drag is interpreted, in accordance with some implementations.
Figure 23 illustrates interpreting a user's intentions in making a movement relative to an actual user interface position.
Figure 24 illustrates interpreting a user's intentions in making a movement relative to an actual user interface position.
Figures 25-26 illustrate a movement having characteristics corresponding to a retraction in accordance with some implementations.
Figure 27 illustrates a retraction dead-band in accordance with some implementations.
Figures 28-29 illustrate a dynamic break volume in accordance with some implementations.
Figures 30-31 illustrate a trajectory correction in accordance with some implementations.
Figure 32 is a flowchart illustrating a method for determining which segments of a movement to associate with user interface content based on characteristics of the movement, in accordance with some implementations.
Figure 33 is a flowchart illustrating a method for interpreting a movement using a dynamic break volume in accordance with some implementations.
Figure 34 illustrates the user making a pinching gesture while changing gaze direction relative to content presented in views of an XR environment provided by the device 110 of Figure 1, in accordance with some implementations.
Figures 35A, 35B, and 35C illustrate hand engagement, indirect selection, and indirect gestures based on hand and gaze, in accordance with some implementations.
Figures 36A, 36B, 36C, and 36D illustrate various anomalies associated with a user's gaze direction relative to a user interface element, in accordance with some implementations.
Figure 37 illustrates an exemplary interaction tracking flow in accordance with some implementations.
Figure 38 illustrates associating a pinch with a gaze event on a chart showing gaze velocity over time in accordance with some implementations.
Figure 39 illustrates associating pinches with a gaze event on a chart showing gaze velocity over time in accordance with some implementations.
Figure 40 illustrates associating a pinch with a gaze-holding event rather than a saccadic event in accordance with some implementations.
Figure 41 is a flowchart illustrating a method for triggering a user interface response based on a gaze holding event, in accordance with some implementations.
Figure 42 illustrates use of an exemplary input support framework to generate interaction data based on hands and gaze data and UI target data, in accordance with some implementations.
Figures 43A-43B illustrate an exemplary hit detection correction in accordance with some implementations.
Figures 44A-44B illustrate 2D and 3D elements which may be positioned within a 3D environment in accordance with some implementations.
Figure 45 illustrates exemplary control regions and fuzzy hit test regions around elements of a user interface in accordance with some implementations.
Figures 46A-46C illustrate exemplary control regions and fuzzy hit test regions around elements of a user interface in accordance with some implementations.
Figure 47 illustrates a determining of whether to associate a user activity with a user interface element in accordance with some implementations.
Figures 48A-48B illustrate using sampling in determining to associate a user activity with an element in accordance with some implementations.
Figures 49A-49D illustrate hysteresis in determining how to associate user activity with elements in accordance with some implementations.
Figures 50A-50B are flowcharts illustrating methods for supporting application input recognition, in accordance with some implementations.
Figure 51 is a flowchart illustrating another method for supporting application input recognition, in accordance with some implementations.
Figure 52 is a flowchart illustrating a method for supporting application input recognition using sampling, in accordance with some implementations.
Figure 53 is a flowchart illustrating a method for supporting application input recognition supporting application user activity recognition, in accordance with some implementations.
Figure 54 shows a flow diagram of a technique for detecting input gestures, in accordance with some embodiments.
Figure 55 shows a flowchart of a technique for enabling gesture input, in accordance with some embodiments.
Figure 56 shows a flowchart of a technique for classifying intentionality of a gesture, in accordance with some embodiments.
Figure 57 shows a flow diagram of a technique for classifying a touch stage, in accordance with some embodiments.
Figure 58 shows a flow diagram of an action network, in accordance with some embodiments.
Figure 59 shows, a flow diagram for handling occluded hands for gesture recognition, according to some embodiments.
Figure 60A-60B show example diagrams of a technique for processing an occluded gesture, in accordance with one or more embodiments.
Figure 61 shows a flowchart of a technique for handling occluded hands for gesture recognition, according to some embodiments.
Figure 62 is a flowchart illustrating a method for user input recognition, in accordance with some implementations.
Figure 63 is a block diagram of an electronic device, in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example implementations described herein.

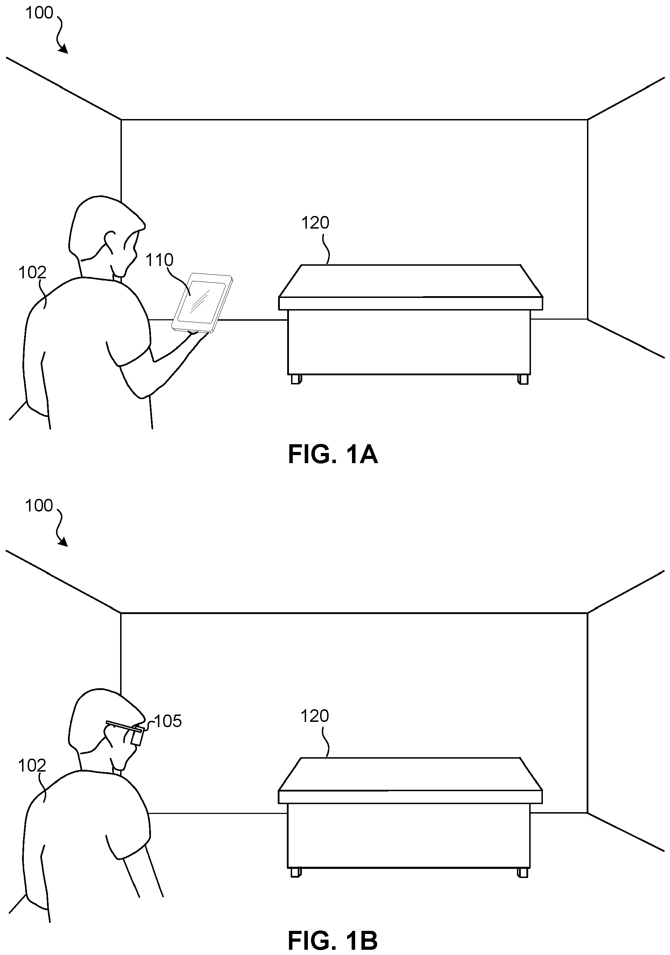

Figures 1A-B illustrate exemplary electronic devices 105 and 110 operating in a physical environment 100. In the example of Figures 1A-B, the physical environment 100 is a room that includes a desk 120. The electronic devices 105 and 110 may include one or more cameras, microphones, depth sensors, or other sensors that can be used to capture information (e.g., images, sound, lighting characteristics, etc.) about and evaluate the physical environment 100 and the objects within it, as well as information about the user 102 of electronic devices 105 and 110. The information about the physical environment 100 and/or user 102 may be used to provide visual and audio content and/or to identify the current location of the physical environment 100 (e.g., including locations of objects, such as the desk 120, in the physical environment 100) and/or the location of the user within the physical environment 100.

In some implementations, views of an extended reality (XR) environment may be provided to one or more participants (e.g., user 102 and/or other participants not shown) via electronic devices 105 (e.g., a wearable device such as an HMD) and/or 110 (e.g., a handheld device such as a mobile device, a tablet computing device, a laptop computer, etc.). Such an XR environment may include views of a 3D environment that are generated based on camera images and/or depth camera images of the physical environment 100, as well as a representation of user 102 based on camera images and/or depth camera images of the user 102. Such an XR environment may include virtual content that is positioned at 3D locations relative to a 3D coordinate system (i.e., a 3D space) associated with the XR environment, which may correspond to a 3D coordinate system of the physical environment 100.

In some implementations, video (e.g., pass-through video depicting a physical environment) is received from an image sensor of a device (e.g., device 105 or device 110). In some implementations, a 3D representation of a virtual environment is aligned with a 3D coordinate system of the physical environment. A sizing of the 3D representation of the virtual environment may be generated based on, for example, a scale of the physical environment or a positioning of an open space, floor, wall, etc., such that the 3D representation is configured to align with corresponding features of the physical environment. In some implementations, a viewpoint (e.g., of the user 102) within the 3D coordinate system may be determined based on a position of the electronic device within the physical environment. The viewpoint may be determined based on, for example, image data, depth sensor data, motion sensor data, etc., which may be retrieved via a virtual inertial odometry system (VIO), a simultaneous localization and mapping (SLAM) system, etc.

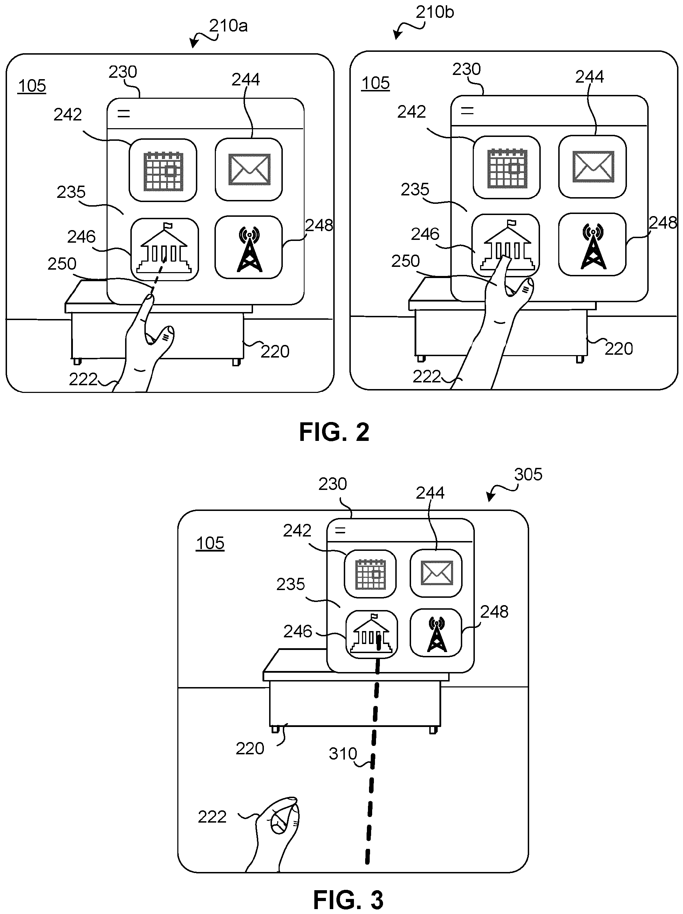

**Figure 2** illustrates views, provided via a device, of virtual elements within the 3D physical environment of Figures 1A-1B in which the user performs a direct interaction. In this example, the user 102 makes a hand gesture relative to content presented in views 210a-b of an XR environment provided by a device (e.g., device 105 or device 110 above). The views 210a-b of the XR environment include an exemplary user interface 230 of an application (e.g., an example of virtual content) and a depiction 220 of the desk 120 (i.e., an example of real content). As an example, in Figure 2, the user interface 230 is a two-dimensional virtual object (e.g., having a flat front-facing surface). Providing such a view may involve determining 3D attributes of the physical environment 100 above (e.g., a position of the desk 120 in the physical environment 100, a size of the desk 120, a size of the physical environment 100, etc.) and positioning the virtual content, e.g., user interface 230, in a 3D coordinate system corresponding to that physical environment 100.

In the example of Figure 2, the user interface 230 includes various content items, including a background portion 235 and icons 242, 244, 246, 248. The icons 242, 244, 246, 248 may be displayed on the flat user interface 230. The user interface 230 may be a user interface of an application, as illustrated in this example. The user interface 230 is simplified for purposes of illustration and user interfaces in practice may include any degree of complexity, any number of content items, and/or combinations of 2D and/or 3D content. The user interface 230 may be provided by operating systems and/or applications of various types including, but not limited to, messaging applications, web browser applications, content viewing applications, content creation and editing applications, or any other applications that can display, present, or otherwise use visual and/or audio content.

In this example, the background portion 235 of the user interface 230 is flat. In this example, the background portion 235 includes all aspects (e.g., visual characteristics) of the user interface 230 being displayed except for the icons 242, 244, 246, 248. Displaying a background portion of a user interface of an operating system or application as a flat surface may provide various advantages. For example, doing so may provide an easy to understand or otherwise use portion of an XR environment for accessing the user interface of the application. In some implementations, multiple user interfaces (e.g., corresponding to multiple, different applications) are presented sequentially and/or simultaneously within an XR environment using one or more flat background portions, though other configurations are possible.

In some implementations, the positions and/or orientations of such one or more user interfaces may be determined to facilitate visibility and/or use. The one or more user interfaces may be at fixed positions and orientations within the 3D environment. In such cases, user movements would not affect the position or orientation of the user interfaces within the 3D environment (e.g., such that the user interfaces remain at their respective positions or orientations and do not move relative to the viewpoint of the user).

The position of the user interface within the 3D environment may be based on determining a distance of the user interface from the user (e.g., from an initial or current user position). The position and/or distance from the user may be determined based on various criteria including, but not limited to, criteria that accounts for application type, application functionality, content type, content/text size, environment type, environment size, environment complexity, environment lighting, presence of others in the environment, use of the application or content by multiple users, user preferences, user input, and other factors.

In some implementations, the one or more user interfaces may be body-locked content, e.g., having a distance and orientation offset relative to a portion of the user's body (e.g., their torso). For example, the body-locked content of a user interface could be 0.5 meters away and 45 degrees to the left of the user's torso's forward-facing vector. If the user's head turns while the torso remains static, a body-locked user interface would appear to remain stationary in the 3D environment at 0.5m away and 45 degrees to the left of the torso's front facing vector. However, if the user does rotate their torso (e.g., by spinning around in their chair), the body-locked user interface would follow the torso rotation and be repositioned within the 3D environment such that it is still 0.5 meters away and 45 degrees to the left of their torso's new forward-facing vector.

In other implementations, user interface content is defined at a specific distance from the user with the orientation relative to the user remaining static (e.g., if initially displayed in a cardinal direction, it will remain in that cardinal direction regardless of any head or body movement). In this example, the orientation of the body-locked content would not be referenced to any part of the user's body. In this different implementation, the body-locked user interface would not reposition itself in accordance with the torso rotation. For example, a body-locked user interface may be defined to be 2m away and, based on the direction the user is currently facing, may be initially displayed north of the user. If the user rotates their torso 180 degrees to face south, the body-locked user interface would remain 2m away to the north of the user, which is now directly behind the user.

A body-locked user interface could also be configured to always remain gravity or horizon aligned, such that head and/or body changes in the roll orientation would not cause the body-locked user interface to move within the 3D environment. Translational movement, on the other hand, would cause the body-locked content to be repositioned within the 3D environment in order to maintain the distance offset.

In the example of Figure 2, the user 102 moves their hand from an initial position as illustrated by the position of the depiction 222 of the hand in view 210a. The hand moves along path 250 to a later position as illustrated by the position of the depiction 222 in the view 210b. As the user 102 moves their hand along this path 250, the finger intersects the user interface 230. Specifically, as the finger moves along the path 250, it virtually pierces the icon 246 in the user interface 230 and thus a tip portion of the finger (not shown) is optionally occluded in view 210b by the user interface 230 from the viewpoint of the user.

Implementations disclosed herein interpret user movements such as the user 102 of Figures 1A-1B moving their hand / finger along path 250 relative to a user interface element such as icon 246 in the user interface 230, to recognize user input/interactions. The interpretation of user movements and other user activity may be based on recognizing user intention using multiple, potentially separate, recognition processes corresponding to different input modalities. Using multiple, potentially separate, recognition processes for different modalities may improve functionality, accuracy, efficiency, and/or provide other device-based or interaction-based benefits.

Recognizing input in the example of Figure 2 may involve determining that a gesture is a direct interaction and then using a direct input recognition process to recognize the gesture. For example, such a gesture may be interpreted as a tap input directed to the icon 246. In making such a gesture, the user's actual motion relative to the icon 246 may deviate from an ideal motion (e.g., a straight path through the center of the user interface element (e.g., the icon 246) in a direction that is perfectly orthogonal to the plane of the user interface element). The actual path may be curved, jagged, or otherwise non-linear and may be at an angle rather than being orthogonal to the plane of the user interface element. The path may have attributes that make the gesture similar to other types of input gestures (e.g., swipes, drags, flicks, etc.) For example, the non-orthogonal motion may make the gesture similar to a swipe motion in which a user provides input by piercing a user interface element and then moving in a direction along the plane (e.g., horizontally or vertically) of the user interface.

Some implementations disclosed herein determine that a direct interaction mode is applicable and, based on the direct interaction mode, utilize a direct interaction recognition process to distinguish or otherwise interpret user activity that corresponds to direct input, e.g., identifying intended user interactions, for example, based on if, and how, a gesture path intersects one or more 3D regions of space. Such recognition processes may account for actual human tendencies associated with direct interactions (e.g., natural arcing that occurs during actions intended to be straight, tendency to make movements based on a shoulder or other pivot position (e.g., elbow), etc.), human perception issues (e.g., user's not seeing or knowing precisely where virtual content is located relative to their hand), and/or other direct interaction-specific issues.

Note that the user's movement in the real world (e.g., physical environment 100) correspond to movements within a 3D space, e.g., an XR environment that is based on the real-world and that includes virtual content such as user interface positioned relative to real-world objects including the user. Thus, the user is moving his hand in the physical environment 100, e.g., through empty space, but that hand (i.e., a depiction or representation of the hand) intersects with and/or pierces through the user interface 230 of the XR environment that is based on that physical environment. In this way, the user virtually interacts directly with the virtual content.

**Figure 3** illustrates an exemplary view, provided via a device, of virtual elements within the 3D physical environment of Figures 1A-1B in which the user performs an indirect interaction. In this example, the user 102 makes a hand gesture while looking at (e.g., while the gaze of the user 102 is directed toward) content presented in the view 305 of an XR environment provided by a device (e.g., device 105 or device 110). The view 305 of the XR environment includes the exemplary user interface 230 of Figure 2. In the example of Figure 3, the user 102 makes a pinching gesture with their hand as illustrated by the depiction 222 while gazing along gaze direction path 310 at user interface icon 246. In this example, this user activity (e.g., a pinching hand gesture along with a gaze directed at a UI element) corresponds to a user intention to interact with user interface icon 246.

Implementations disclosed herein interpret user activity, such as the user 102 forming a pinching hand gesture along with a gaze directed at a UI element, to recognize user/interactions. For example, such user activity may be interpreted as a tap input directed to the icon 246, e.g., selecting icon 246 in the user interface 230, which causes the device to activate the icon 246 and optionally display content (e.g., a user interface) corresponding to the icon 246. However, in performing such actions, the user's gaze direction and/or the timing between a gesture and detection of the gaze at a target with which the user intends the gesture to be associated may be less than perfectly executed and/or timed.

Some implementations disclosed herein determine that an indirect interaction mode is applicable. Based on the indirect interaction mode, an indirect interaction recognition process is used to identify intended user interactions based on user activity. For example, the process may identify intended user interactions based on if, and how, a gesture path (e.g., similar to path 310 in Figure 3) intersects one or more 3D regions of space. Such recognition processes may account for actual human tendencies associated with indirect interactions (e.g., eye saccades, eye fixations, and other natural human gaze behavior, arching hand motion, retractions not corresponding to insertion directions as intended, etc.), human perception issues (e.g., user's not seeing or knowing precisely where virtual content is relative to their hand), and/or other indirect interaction-specific issues.

Some implementations determine an interaction mode, e.g., a direct interaction mode or indirect interaction mode, so that user behavior can be interpreted by a specialized (or otherwise separate) recognition process for the appropriate interaction type, e.g., using a direct interaction recognition process for direct interactions and an indirect interaction recognition process or indirect interactions. Such specialized (or otherwise separate) process utilization may be more efficient, more accurate, or provide other benefits relative to using a single recognition process configured to recognize multiple types (e.g., both direct and indirect) interactions.

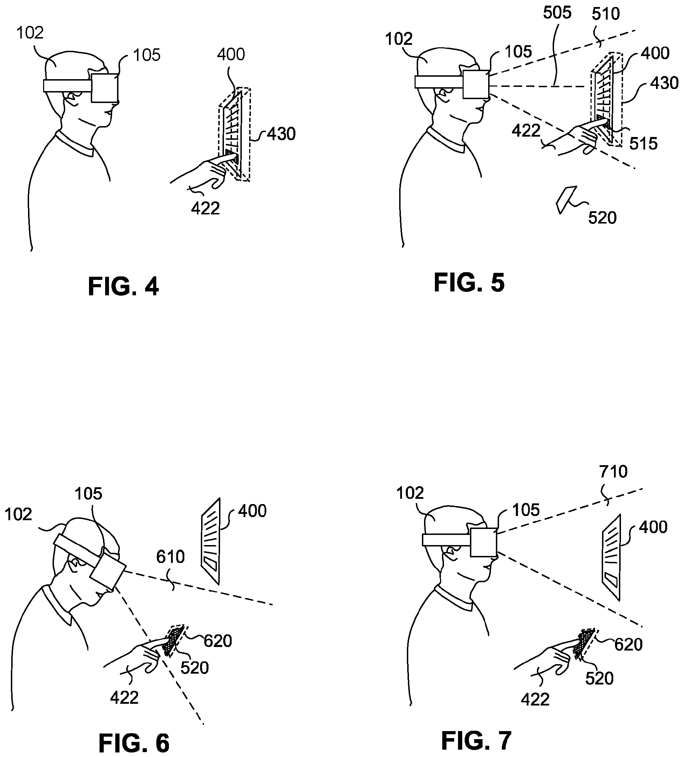

**Figure 4** illustrates an exemplary determination of a direct interaction mode based on a 3D area 430 around a user interface 400. In this example, the user 102 is using device 105 (e.g., implemented as an HMD) to view and interact with an XR environment that includes the user interface 400. A 3D area 430 around the user interface 400 is determined by the device 105. Note that, in this example, the dashed lines indicating the boundaries of the 3D area 430 are for illustration purposes and are not visible to the user 102. The 3D area 430 is used in determining at different points in time, whether a direct interaction mode or indirect interaction mode is applicable based on user activity. In this example, the interaction mode is determined based on whether hand 422 of user 102 intersects with the 3D area 430. In this case, in Figure 5, hand 422 does intersect with 3D area 430 (e.g., breaches a boundary of the 3D area 430) and, thus, the interaction mode is determined to be a direct interaction mode. The user's activity (e.g., hand movement, etc.) is assessed accordingly, e.g., using a direct interaction recognition process, such as providing a selection directed to the user interface 400.

**Figure 5** illustrates an exemplary determination of a direct interaction mode based on a 3D area 430 around a user interface 400 and an attention zone 510. In this example, the user 102 is using device 105 (e.g., implemented as an HMD) to view and interact with an XR environment that includes the user interface 400. A 3D area 430 around the user interface 400 is determined by the device 105, as similarly discussed above with reference to Figure 4. Note that, in this example, the dashed lines indicating the boundaries of the 3D area 430 are for illustration purposes and are not visible to the user 102. The attention zone 510 is also a 3D area (e.g., a conical-shaped zone centered around a center line corresponding to the user's head direction or a forward-facing direction of the device 105). User head direction may be determined based on estimating a pose (e.g., position and/or orientation of the head using sensor(s) on the device 105). For example, the head direction may be determined based on determining a position of a plane corresponding to the user's cheeks and extending a vector from a position on the user's face in a direction orthogonal to that plane. In another example, head direction may be determined in part on an orientation of HMD worn on the head, e.g., determined a vector referenced to the device directly rather than based on the user's face based on device pose tracking techniques. User device direction may be determined via sensor data, e.g., image data, depth data, motion data, VIO processes, SLAM processes, etc. A attention zone 510 may be determined based on a field of view provided in views provided by the device 105, e.g., corresponding to a center portion (e.g., the center 30%, 50%, 70%, etc.) of the field of view, such that the attention zone 510 has predetermined three-dimensional characteristics (e.g., a fixed volume relative to the center line discussed above). In other implementations, the attention zone 510 corresponds to the field of view provided in the views provided by the device 105.

The 3D area 430 and attention zone 510 are used in determining, at different points in time, whether a direct interaction mode or indirect interaction mode is applicable for a detected user activity. In this example, the interaction mode is determined based on determining that the hand 422 of user 102 intersects with the 3D area 430 at an intersection point 515 and also whether the intersection point 515 is within the attention zone. In this case, the intersection point 515 is also within the attention zone 510 and, thus, the interaction mode is determined to be a direct interaction mode. The user's activity (e.g., hand movement, etc.) is assessed accordingly, e.g., using a direct interaction recognition process, as previously discussed herein. The interaction mode may or may not also apply with respect to potential interactions with other (e.g., nearby) user interface elements, such as second user interface 520. For example, in Figure 5, because the hand 422 intersects the 3D area 430 (e.g., at the intersection point 515) around the user interface 400, rather than a 3D area around the second user interface 520, the device 105 does not perform a selection operation directed to the second user interface 520 based on the user's activity (e.g., movement of the hand 422) when the device 105 performs a selection operation directed to the user interface 400.

**Figure 6** illustrates another exemplary determination of a direct interaction mode based on a 3D area 620 around a virtual object (e.g., the second user interface 520) and an attention zone 610. In this example, the user 102 is using device 105 to view and interact with an XR environment that includes the user interface 400 of Figure 5 and a second user interface 520. A 3D area 620 around the virtual object (e.g., the second user interface 520) is determined by the device 105. Note that, in this example, the dashed lines indicating the boundaries of the 3D area 620 are for illustration purposes and are not visible to the user 102. In some implementations, the 3D area 620 has one or more characteristics of the 3D area 520 discussed above. The attention zone 610 is also a 3D area (e.g., a conical-shaped zone centered around a center line corresponding to the user's head direction or a forward-facing direction of the device 105). In some implementations, the attention zone 610 has one or more characteristics of the attention zone 510 discussed above. The 3D area 620 and attention zone 610 are used in determining, at different points in time, whether a direct interaction mode or indirect interaction mode is applicable for a detected user activity. In this example, the interaction mode is specific to interactions with the second user interface 520 (and thus is determined to not apply to user interface 400).

The interaction mode for the second user interface 520 is determined based on determining that the hand 422 of user 102 intersects with the 3D area 620 at an intersection point (e.g., similar to intersection point 515 in Figure 5) and whether the intersection point is within the attention zone. In this case, in Figure 6, the intersection point is within the attention zone 610 and, thus, the interaction mode is determined to be a direct interaction mode. The user's activity (e.g., hand movement, etc.) is assessed accordingly, e.g., using a direct interaction recognition process, as similarly described above.

In should be noted an intersection point may correspond to a single location, e.g., x,y,z position, to a 2D, or to a 3D area at which an intersection occurs. Whether an intersection point is considered within an attention zone may be based on whether there is any intersection, e.g., any point on hand 422 intersects any point in the attention zone 610. In another example, whether an intersection point is considered within an attention zone is based on other criteria, e.g., whether at least portion of a given size of the hand 422 is within the attention zone 610. In another example, a particular point on a hand is used (e.g., a point on or near the end of a particular finger) to determine whether an intersection point is considered within an attention zone, e.g., when that particular point on the hand 422 is within the attention zone 610.

**Figure 7** illustrates an exemplary determination of a direct interaction mode based on a time threshold. In this example, the direct interaction mode has been established based on the determination made in Figure 6 above. This direct interaction mode with the second user interface 520 is determined to remain active for a period of time (e.g., 0.1, 1, 5, 10, 15, 30, etc. seconds) after the determination is made. Thus, even if the user looks up (changing the attention zone 710) to encompass the user interface 400 rather than the second user interface 520, as shown in Figure 7, the direct interaction mode determined for the second user interface 520 remains active. In other words, within the threshold amount of time, the direct interaction mode is still applicable to interactions of hand 422 with the second user interface 520 (e.g., selection interactions, movement interactions, etc.). Once the threshold amount of time above expires, the interaction mode may again be determined, e.g., as being direct or indirect and/or with respect to the same or different user interface elements. In some implementations additional or alternative heuristics (e.g., other than a time-based threshold) are used to determine when to redetermine the interaction mode, e.g., based on a change of content, change of environment, movement of the user that has certain characteristics.

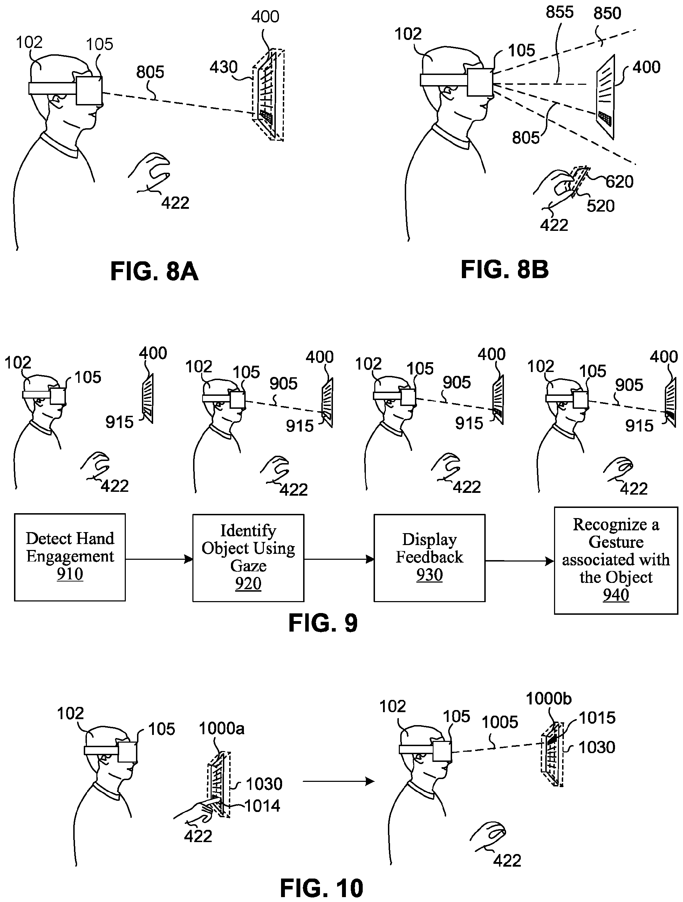

**Figure 8A** illustrates an exemplary determination of an indirect interaction mode based on a 3D area around a virtual object. In this example, the user 102 is using device 105 to view and interact with an XR environment that includes the user interface 400 of Figures 4-7. A 3D area 430 around the user interface 400 is determined by the device 105, as previously discussed herein. Note that, in this example, the dashed lines indicating the boundaries of the 3D area 430 are for illustration purposes and are not visible to the user 102. The 3D area 430 is used in determining at different points in time whether a direct interaction mode or indirect interaction mode is applicable for a detected user activity. In this example, as shown in Figure 8A, the interaction mode is determined based on whether hand 422 of user 102 intersects with the 3D area 430. In this case, hand 422 does not intersect with 3D area 430 and, thus, the interaction mode is determined to be an indirect interaction mode. The user's activity (e.g., hand movement along with gaze direction 805, etc.) is assessed accordingly, e.g., using an indirect interaction recognition process, such as providing a selection directed to the user interface 400 as similarly described herein.

In some implementations, a third interaction mode (e.g., a no interactions allowed mode) may be determined based on one or more criteria being satisfied. For example, such a mode may be triggered by a user providing input to specifically enter a mode in which the user's activity will not disturb (e.g., by providing relative interactions with) content. In another example, such a mode may be triggered manually or automatically for a low power mode.

**Figure 8B** illustrates an exemplary determination of an indirect interaction mode based on a 3D area 620 around a virtual object (i.e., second user interface 520) and an attention zone 850. In this example, the user 102 is using device 105 to view and interact with an XR environment that includes the user interface 400 and a second user interface 520. A 3D area 620 around the second user interface 520 is determined by the device 105, as similarly described above. Note that, in this example, the dashed lines indicating the boundaries of the 3D area 620 are for illustration purposes and are not visible to the user 102. The attention zone 850 is also a 3D area (e.g., a conical-shaped zone centered around a center line 855 corresponding to the user's head direction or a forward-facing direction of the device 105), as similarly described above.

The 3D area 620 and attention zone 850 are used in determining, at different points in time, whether a direct interaction mode or indirect interaction mode is applicable. In this example, the interaction mode is determined based on determining that the hand 422 of user 102 intersects with the 3D area 620 at an intersection point and whether the intersection point is also within the attention zone 850. In this case, the hand 422 of user 102 does intersect with the 3D area 620, however the intersection point is not within the attention zone 850 and, thus, the interaction mode is determined to be an indirect interaction mode. The user's activity (e.g., hand movement and gaze direction 805, etc.) is assessed accordingly, e.g., using an indirect interaction recognition process, as similarly described above. The interaction mode may or may not also apply with respect to potential interactions with nearby user interface elements, such as the user interface 400, as similarly described above.

**Figure 9** illustrates indirect interaction recognition. In this example, sensor data on device 105 is used to recognize a user interaction made by user 102, e.g., based on outward-facing image sensor data, depth sensor data, eye sensor data, motion sensor data, etc. Such data may be monitored for an engagement condition corresponding to the start of a user interaction. In some implementations, engagement is triggered based on detecting hand motion, e.g., raising a hand or raising a hand while making a particular hand gesture.

In this example, at block 910, the process includes detecting that the user 102 has positioned their hand 422 within view of outward facing image sensors (e.g., in the field of view of the XR environment of Figure 9). The process may include detecting a particular hand configuration, e.g., a claw shape, a flat hand, a steady hand in any configuration, etc., as an indication of hand engagement or may simply include detecting the presence of the hand 422 within sensor view.

At block 920, the process includes identifying an object using user gaze data. In this example, the process includes identifying that the gaze direction 905 of user 102 is on user interface element 915 of the user interface 400, as shown in Figure 9.

At block 930, the process includes displaying feedback based on the object identified by the gaze. In this example, the feedback distinguishes user interface element 915 graphically (e.g., from other user interface elements displayed in the user interface 400) to indicate that the user interface element 915 now has a different state (e.g., a "hover" state that is analogous to the state of a traditional UI icon when a cursor is on the item without clicking/tapping). In some implementations, displaying the user interface element 915 with feedback includes highlighting or bolding the user interface element 915, displaying the user interface element 915 with a focus ring or glow, increasing a size of the user interface element 915, and/or changing a color of the user interface element 915.

At block 940, the process includes recognizing a gesture to be associated with the identified object. In this example, the user is gazing in gaze direction 905 at user interface element 915 while (or at least within a threshold time with respect to) the device 105 detects a pinch gesture by hand 422. This pinch gesture, in this example, is interpreted to initiate an action upon the user interface element 915, e.g., causing a selection action that is analogous to a cursor "click" event of a traditional UI icon during which a cursor is positioned on an icon and a trigger such as a mouse click or track pad tap is received or similarly analogous to a touch screen "tap" event.

Figure 9 illustrates examples of recognizing indirect user interactions. Numerous other types of indirect interactions can be recognized, e.g., based on one or more user actions identifying a user interface element and/or one or more user actions providing input (e.g., no-action/hover type input, selection type input, input having a direction, path, speed, acceleration, etc.). Input in 3D space that is analogous to input on 2D interfaces may be recognized, such as input analogous to mouse movements, mouse button clicks, touch screen touch events, trackpad events, joystick events, game controller events, etc.

**Figure 10** illustrates a transition from a direct interaction mode to an indirect interaction mode. In this example, at a first point in time, a direct interaction mode is determined based on a user hand 422 being within the 3D area 1030 around a user interface 1000a, as similarly discussed herein. In this example, the interaction mode is determined based on whether hand 422 of user 102 intersects with the 3D area 1030. In this case, hand 422 does intersect with 3D area 1030 and, thus, the interaction mode is determined to be a direct interaction mode. The user's activity (e.g., hand movement, etc.) is assessed accordingly, e.g., using a direct interaction recognition process, as previously discussed above. A direct interaction recognition process may include recognizing a direct touch interaction with UI element 1014. This direct touch may initiate an action corresponding to the UI element 1014, e.g., triggering the display of user interface 1000b.

Then, at a second point in time, the direct interaction mode is exited based on user hand 422 being outside of the 3D area 1030 around a user interface 1000b.

At the second point in time, an indirect interaction mode may be determined based on user hand 422 being outside of the 3D area 1030 around a user interface 1000b. In this example, the interaction mode is determined based on whether hand 422 of user 102 intersects with the 3D area 1030, as previously discussed herein. In this case, hand 422 does not intersect with 3D area 1030 and, thus, the interaction mode is determined to be an indirect interaction mode. The user's activity (e.g., hand movement, gaze direction, etc.) is assessed accordingly, e.g., using an indirect interaction recognition process. A direct interaction recognition process may include recognizing a gaze-pinch interaction with UI element 1015, e.g., recognizing that a pinch of hand 422 occurs while a gaze direction 1005 is directed at UI element 1015. This interaction may initiate an action corresponding to the UI element 1015, e.g., triggering a change in the user interface 1000b, such as a change in appearance of the user interface 1000b or one or more elements displayed in the user interface 1000b).

During a user experience, a user's interaction mode may transition from direct to indirect and vice versa, providing the user with significant flexibility with respect to interacting with UI content in a manner that best suits the user and/or circumstances, as a benefit. The transition may be accompanied by feedback indicating to the user that a transition of interaction modes has occurred and/or identifying the new/active mode.

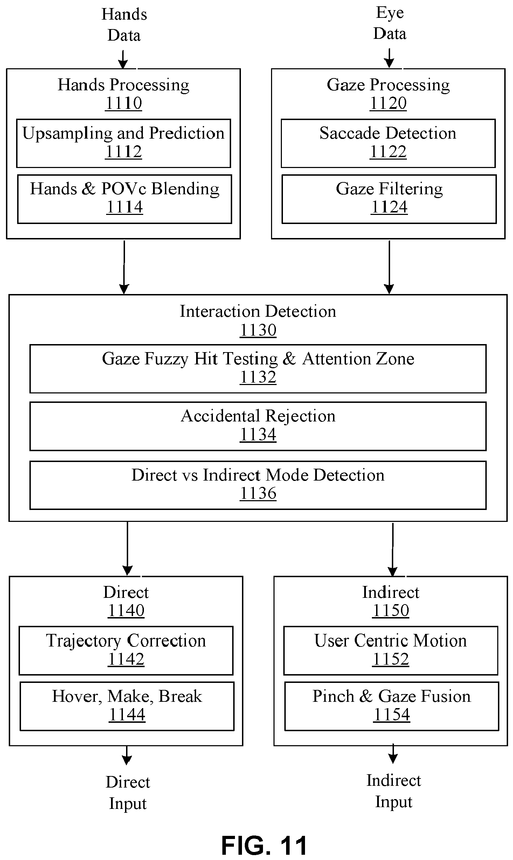

**Figure 11** is a process flow chart illustrating an exemplary process using hands and eye data to provide direct and indirect input. In this example, hands data (e.g., "Hands Data") is input to hands processing block 1110. An up-sampling and prediction block 1112 up-samples the hands data (e.g., adding more frames) and makes predictions about future hand locations, paths, trajectories, speeds, accelerations, etc. In some implementations, at a hands input process, the internal states of an upsampler are updated with new observation data from a hands computer-vision-based tracking system. At an interaction detection process, data is received about when the next frame will be rendered, it computes an interpolation/prediction timestamp and queries the upsampler for joints data corresponding to that timestamp. These steps may occur asynchronously and/or at different frame rates. The process may often query upsamples for several predictions at different timestamps in between updates from the computer vision tracking system, e.g., hand tracking may runs at 30Hz while the display may renders at 90Hz.

The hands and point of view correction (POVc) blending block 1114 may use corrected and uncorrected hand joint data to mitigate POVc-coupled hand jumps, e.g., that may occur due to background depth and camera switching. The Hands and POVc blending block may compute new hand pose information to address discrepancies between the location of the user's hands in the real world (e.g., tracked by computer vision system), and where the hands appear to be located from the perspective of the user looking at the display. The algorithm may smoothly blend the real & POV-corrected versions of the hand skeleton to create hand pose information that is optimized for input recognition in usage contexts where hand registration to UI is important (e.g. during direct input, where a finger must line up with a button). When a user's hands are outside of a user's field of view (FOV) and/or the view of the sensors, it may be undesirable to expend resources or may not otherwise be possible to provide corrections, resulting in jumps in hand position. The process may include smoothly blending hands data over time, for example, based on whether the user is in a direct or indirect mode, whether the hand is near a UI element or not, or other factors.

The eye data (e.g., "Eye Data") is input to a gaze processing block 1120. The saccade detection block 1122 removes saccades, blinks, and/or other gaze-loss events (e.g., leaving only segments of gaze corresponding to fixations). An example saccade detection process may use gaze confidence, tracking state, pupil center, pupil diameter, inter-pupillary distance (IPD), gaze ray data, and velocity data to detect saccades and blinks for removal and/or identify fixations for gaze interactions. It may distinguish between gaze events that are fixations and gaze events that are saccades to facilitate more accurate gaze-based input. The gaze filtering block 1124 filters and/or smooths the gaze data signal. This may involve smoothing the gaze data during the fixations. Filtering may be tightly coupled to the gaze motion classification. The gaze processing block 1120 may lock /remember the last smoothed gaze location for those interim periods or may leverage additional algorithms / policies to "fill in" the data in between the fixations.

The processed hands and eye data are provided to the interaction detection block 1130, as shown in Figure 11. Note that the interaction detection block 1130 may additionally use UI geometry data including data about an application's user interface (e.g., an appearance of the user interface, locations of user interface elements within the user interface, behaviors (e.g., interactivity) of the user interface elements within the user interface, etc.). The UI geometry data may be provided at a different rate than the hands and/or eye data. In one example, UI data is received at a first rate (e.g., 90 fps) while hands and gaze data are received asynchronously at slower average rates (e.g., at 60 fps). The interaction detection block 1130 may additionally use frame target time, e.g., the system's prediction of when this frame will be rendered. The interaction detection block 1130 may run asynchronously, e.g., as UI updates and/or gaze/hands data are received. In some implementations, as discussed below, the interaction detection block 1130 includes a gaze fuzzy hit testing and attention zone block 1132, an accidental rejection block 1134, and a direct versus indirect mode detection block 1136.

The gaze fuzzy hit testing and attention zone block 1132 block identifies virtual elements (e.g., UI elements) that the user gaze is considered to be associated with (e.g., directed at) and an attention zone, e.g., based on head or device orientation/direction. An example gaze fuzzy hit testing process may include using gaze ray data, confidence data, gesture data (e.g., hand motion classification), fixation cluster spread data, etc. to loosen / tighten a gaze area/cone-case (e.g., attention zone) based on precision of gaze tracking and/or user behavior. This process may include utilizing UI geometry from a system process that is based on UI information provided by one or more applications, e.g., identifying interaction targets (e.g., which UI elements to associate with a given user activity) based on the 3D representation of UI elements. Use of such UI information may facilitate more accurate hit testing. In addition to UI geometry, fuzzy hit testing can query more detailed data, e.g., about remote effects, gestures, or other context.

The accidental rejection block 1134 identifies hand & gaze behavioral instances that were rejected (i.e., associated with subconscious user behaviors that are not intentional interactions) but that are nonetheless still to be associated with virtual elements in appropriate conditions. The accidental rejection block 1134 attempts to understand the intent behind user motion to better interpret that motion, e.g., as an intentional UI element interaction or something else. An example accidental rejection process may use hand joint data, interaction state history, gaze attention zone data, occlusion data, etc. to reject (or cancel) unintentional user interactions. This process may include utilizing UI geometry from a 3D simulation system that is based on UI information provided by applications, e.g., distinguishing user intentional activity from accidental activity based on the UI elements that are nearby. Use of such UI information may facilitate more accurate accidental rejection. For example, user motion in a Z direction may be identified as accidental based on determining (from application declared data) that the application's UI is 2D / planar and thus that the motion in the Z direction is unlikely to be intended input directed to the UI, i.e., it is likely accidental motion not intended to trigger UI interaction, and thus an input support process may be more confident in rejecting the user activity as accidental.

Some implementations support two interaction modes (e.g., a direct interaction mode and an indirect interaction mode). Some implementations support other combinations of interaction modes (e.g., a direct interaction mode, an indirect interaction mode, a gaze-only interaction mode, and/or peripheral device interactions). Processes may be used to determine which, if any, of several interaction models the user is performing. This may involve recognizing and ignoring accidental behavior and also disambiguating which interaction model is intended when the user wants to interact intentionally. In this example, the direct versus indirect mode detection block 1136 uses the processed hands and eye data to determine an interaction mode for interpreting user activity, e.g., selecting a direct interaction mode or an indirect interaction mode, as previously discussed herein.

If a direct interaction mode is selected, the hands and eye data (processed and/or unprocessed) is provided to direct interaction recognition block 1140, which provides direct input to the user interface. In some implementations, the direct interaction recognition block 1140 includes a trajectory correction block 1142 and a hover, make, break block 1144. The trajectory correction block 1142 may adjust the trajectory of a user motion, e.g., adjusting a user hand motion to account for user behavior in 3D environments, e.g., to make the motion data better correspond to the user's intended motion / intended interactions. The hover, make, break block 1144 may perform various recognition processes using a hand gesture, motion path, velocity, acceleration, etc. to identify certain types of direct interactions with a user interface element, such as a "hover" interaction based on detecting that a hand/finger is proximate but not touching a user interface element, a "make" interaction based on detecting a point (in 3D space/time) that a hand/finger has made contact with a user interface element, a "break" interaction based on detecting a point (in 3D space/time) that a hand/finger has stopped contacting a user interface element, etc.

Numerous types of direct interactions may be recognized and provided as user input. In another example, a direct interaction is recognized by recognizing that the user makes contact with a slider bar user interface element, moves the hand left a distance "X" while making contact with the slider bar, and then retracts their hand (e.g., moves their hand away from the slider bar user interface element) to break contact with the slider bar. The slider bar may be moved left based on this input, e.g., by a distance X. In another example, the user makes a similar motion to provide input imparting a velocity on a user interface element, e.g., providing 3D swipe gesture through on a user interface to cause the user interface to begin moving and continue moving after the hand breaks contact where the continued motion is based on a velocity having been imparted on the UI object, e.g., analogous to when a user swipes up on a multi-touch interface of a mobile phone.

If an indirect interaction mode is selected, the hands and eye data (processed and/or unprocessed) is provided to indirect interaction recognition block 1150, which provides indirect input to the user interface. In some implementations, the indirect interaction recognition block 1150 includes a user centric motion block 1152 and a pinch and gaze fusion block 1154. User centric motion block 1152 accounts for user centric motion in the hands data (e.g., accounting for the fact that the user may be making motions that pivot around a rotation point, e.g., a shoulder, elbow, wrist, etc.). User centric motion block 1152 may be used to map user hand motion into an object or affordance separate from the hand, e.g., an affordance displayed on application content.

The pinch and gaze fusion block 1154 determines which gaze data to associate with a user activity indicative of an intention to interact with a UI element, such as a pinch gesture. Numerous types of indirect interactions may be recognized and provided as user input. In one example, a user pinches fingers together and moves the pinched hand while gazing at a UI element to provide movement input directed to that UI element. In another example, a user pinches and releases the fingers quickly while gazing at a UI element to provide selection events (e.g., analogous to touch screen tap or mouse click input events).

An input support process as illustrated in the example of Figure 11 may perform one or more core functions. In some implementations these functions include, but are not limited to, obtaining gaze data and associating a user's gaze with UI elements associated with one or more applications. Doing so may involve performing a fuzzy hit testing process. Doing so may involve creating an attention zone. An attention zone can be thought of as a spatial zone/area. It is possible for larger objects to be partially inside / partially outside an attention zone, such that the system needs to test where on the object the user was interacting to understand if an interaction point was inside the user's attention zone. An attention zone may include some or all portions of a set of zero or more UI elements that the user is likely giving attention to at a given time. An attention zone may be used to disambiguate between interaction types (e.g., direct or indirect input modalities), disambiguate which application a user is interacting with, and/or disambiguate which UI elements are the targets of the user's intentions to interact with UI elements.

In some implementations, an input support process relies heavily upon a simulation system to provide a geometric representation of a user interface for hit testing against hands and gaze data. An input support process may use a collision world (e.g., 3D geometry abstractions) provided by the simulation system. An input support process may use user interface metadata information (e.g., UI priority, hierarchical display ordering, transparency information, etc.) to facilitate appropriate UI target selection. An input support process may utilize a separate hit-testing process that produces 3D world hit test results. An input support process may utilize a hit testing process that uses an application-provided hierarchical tree (e.g., declaring UI elements, relationships, and/or rendering information for example regarding what regions are transparent, rendered on top, etc.).

In some implementations, an input support process performs the functions illustrated in Figure 11 to provide an input support process that produces data for an application. The input support process may produce an interaction state for one or more UI elements, such as identifying whether an interaction is direct or indirect, whether an interaction is a hover/close proximity interaction (e.g., associated with user activity not linked to UI interaction behavior) or gesture/pinch/touch interaction (e.g., associated with user activity indicating UI intentional behavior).

In some implementations, an input support process includes providing an interaction pose, e.g., a trajectory corrected point on a UI element configured to drive a touch-screen tap type of input.

In some implementations, an input support process includes providing a manipulator pose, e.g., corresponding to a position and/or orientation of the hand itself. A manipulator pose may provide a 3D location of a stable hand center or pinch centroid (e.g., based on a contact of two fingers of the hand). A manipulator pose may provide position and/or orientation of a manipulator driving the interaction, e.g., for direct touch interactions, providing the index fingertip information (e.g., location) and, for indirect pinch interactions, providing pinch information (e.g., pinch centroid).

In some implementations, an input support process includes providing an active target (e.g., UI element).

In one example, a user initiates an interaction by pinching while gazing at a UI element. The application receives an interaction pose on the UI element and recognizes the user's intent to interact with the UI element. The user continues pinching and moves their hand to the left. The application receives more interaction poses, such as a set of positions on the user interface based on the moving 3D positions of the hand as it moves left, and responds by moving the associated UI element to the left. In this example, by pinching while gazing at a UI object and then moving the pinched hand to the left, the user provides input that the application can recognize to move the object to the left. The application is able to respond accordingly without needing to receive (and without actually receiving) information about the user's gaze directions and/or specific hand characteristics. In this example, the application receives only interaction pose data and thus may be an application capable of only receiving interaction pose data as a proxy for touch input data. The application may additionally or alternatively be provided with manipulator pose data, e.g., of the 3D positions of the hand as it moves left and may determine the motion of the associated object based on the changing manipulator pose position. The application may be provided with user change-based information, e.g., accelerated user-centric deltas providing delta-updates similar to a trackpad communicating the amount the user has moved from frame-to-frame, rather than an absolute position. Communicating changes, e.g., via a separate API, may helps us optimize one set of signals to accurately represent motion (e.g., for scrolling) separate from signals that also need to be absolute-position-accurate (e.g. for drawing).

In some implementations, an input support process includes receiving a gaze direction that could potentially be associated with different UI elements, e.g., because the gaze direction is between the UI elements or because the UI elements overlap one another. Fuzzy hit testing and other such processes discussed above may help disambiguate user intention to identify an appropriate UI element in such cases.

In some implementations, an input support process includes recognizing two-handed 3D gestures, e.g., a two-handed zoom gesture, and provides information to an application that corresponds to multi-touch touch screen input gestures. Doing so, for example, may involve generating an interaction pose for each hand that can be interpreted by an application's 2D touch-based gesture recognition processes as two touch points moving closer to or farther from one another, which may be interpreted as a pinch-to-zoom touch-screen gesture (e.g., zooming in or out of a user interface).

In some implementations, an application is developed for use on a mobile platform that uses single and/or multi-touch input gestures. The application may be developed by the application developer including calls to a gesture API and then specifying what to do on certain types of touch events, e.g., do "X" on a tap event, "Y" on a swipe event, etc. It may be desirable to use such applications on a new or different platform that offers input modalities different than (or in addition to) single and/or multi-touch input gestures. Rather than implementing all new 3D gestures and gesture recognition processes within the application, some implementations disclosed herein interpret 3D user activity (e.g., hand positions, gaze directions, etc.) and send proxy data to the application corresponding to where a touch would be if the 3D user activity had been performed as a 2D touch input gesture. An input support process may provide such proxy data to such applications and, in doing so, enable a large universe of existing 2D/touch-based applications to be easily imported and used within a new 3D system that uses new and different 3D user activity-based inputs. An input support process may make additional information available so that newer / modified application can take advantage / use more information about the user's 3D activity. Alternatively, this information may be leveraged by an old unmodified application that is linking against XR-compatible versions of UI frameworks, which can under-the-hood take advantage of this extra data on the app's behalf (e.g., a binary compatible app using a standard long press recognizer can benefit from an XR-based OS implementation that uses z-depth of the touch to more accurately recognize long press than a native 2D-only approach).

In some implementations, to enable use of both legacy 2D/touch-based applications and newer applications with additional, 3D recognition capabilities, the input support process may provide multiple types of information, such as interaction pose data to support touch-based input recognition by a legacy application as well as manipulator pose data to support applications with additional, 3D recognition capabilities.

Interpreting 3D user activity as 2D touch-based activity can require overcoming various challenges. For example, a user's hand movement in 3D space when performing a touch gesture may be equated with a touch-screen tap gesture but may lack the precision expected for a touch-screen tap gesture. A touch on a touch screen involves contact with a physical surface that stops the finger while a motion "virtually" touching a UI in a 3D XR environment may involve the user's hand poking through the UI element (e.g., as similarly illustrated in view 210b of Figure 2). A user may intend to tap the surface of a virtual button but actually poke through the surface at one position and then retract the hand/finger at a slightly different position. This user activity involving two different UI element positions (e.g., a first entry position and a second exit position relative to the UI element) can be interpreted (by an input support process) as a tap at a single point using various algorithms and/or machine learning processes, e.g., performing a trajectory correction. The application receives the single location (from the input support process) and recognizes it as a touch event. Thus, an input support process may classify and/or interpret user activity to account for unique circumstances of interacting within a 3D environment and package the data provided to the application so that the application does not need to itself distinguish between the action intended by the user and the action actually performed by the user.

An input support process may account for sensor inaccuracy/limitations, such as accounting for the fact that gaze direction that are identified may differ from actual gaze directions, in providing data to applications. The applications need not account for such inaccuracies themselves.

In formatting the data for the application in a format the application will understand, an input support process can resolve ambiguities, account for inaccuracies, and/or repackage input provided in an input modality that the application does not/need not itself understand into a format that the application does recognize.

In short, an input support process may perform various processes that interpret raw 3D data for consumption by applications so that the applications (and their developers) need not perform those processes via manually-programmed processes. Additionally, performing such processes by a shared OS process can unify the input experience across all apps so that users receive consistent UI response behavior.

Moreover, a shared input support process (e.g., used by multiple applications) may enable multiple interaction modalities, e.g., that provide different ways of a user selecting a button, and abstract the user activity data associated with those different modalities for the same types of interactions to provide that same data to the application for different types of input. The input modalities can thus be changed and/or added to over time without requiring changes to the applications, so long as the input support process can abstract the new or changed input modality user activities to the format understood by the applications.

In some implementations, an application utilizes a gesture recognizer that runs within the application process. The gesture recognizer may include a state machine that classifies inputs that are received in a stream of input data, e.g., a tap has started, a tap is ongoing, a tap has ended. An input support process may provide data to the application that are recognized by the gesture recognizer running within the application process as particular types of input, e.g., taps, that may correspond to a single input modality specific to the application, such as a touch-based input modality. The input support process may configure the data provided to the application to ensure that the application's process recognizes the user activity accurately, e.g., by providing data in a form that the gesture recognizer expects. In one example, the input support process converts user activity involving a user gaze and a hand gesture to data that can be recognized as touch input. In another example, the input support process converts user activity involving a 6DOF controller and a gaze direction to data that can be recognized as touch input.

An application developer need not write an application for different input modality platforms. Rather an application developer can write an application for a touch platform (or a generic 2D input modality) and the application may be imported with little or no effort to work within a 3D user activity platform. A single application may be used on mobile devices, laptop devices, tablet devices, desktop devices, and 3D XR devices. The techniques disclosed here can enable binary-code compatibility, i.e., an application being executable in different environments that utilize different input modalities.

In some implementations, an input support process provides a gesture flag and/or gesture classification to an application, e.g., indicating to the application that the user has raised their hand or recognizing that a particular gesture is a tap, swipe, scroll, etc. as a hint that the application can use in recognizing the gesture.

In some implementations, an input support process facilitates an application recognizing gaze-only input without providing raw gaze data to the application. This may involve periodically providing gaze data (i.e., the location on a UI element that the user is gazing at). Gaze-only data may be associated with an interaction state and data provided to the applications based on gaze-only data only when the gaze data is associated with a particular interaction state, such as providing data when a gaze-hover state is applicable. Such data may be provided only based on express user authorization. For example, when a user stares at a UI element for more than a threshold amount of time (e.g., 0.01, 0.1, 0.5, 1, 2, 3, 4, 5, etc. seconds) the application may be notified and an affordance may be displayed (e.g., a dot). If the user then looks at the affordance, the application may be notified that the stared at UI element has been hit/selected. In another example, a stare at a point within a UI element for more than a threshold amount of time may trigger a hover feedback, which may be handled out of process or by the application. A gaze-only input modality may be another input modality that is abstracted into data provided to an application such that the application can interpret the input, e.g., using a generic or touch-based gesture recognition process.

In some implementations, an input support process determines an interaction state for each hand (e.g., direct versus indirect) and/or an interaction state associated with a user gaze (e.g., gaze only or not gaze only).

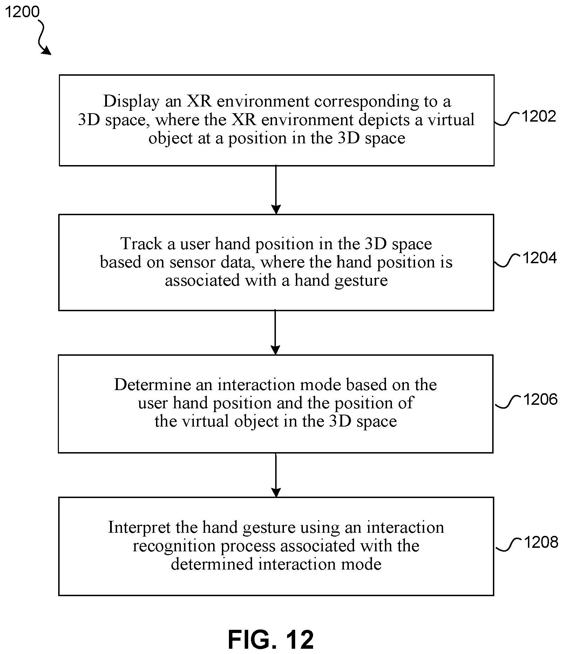

**Figure 12** is a flowchart illustrating a method 1200 for interpreting user activity as user interactions with virtual elements positioned within in a 3D space. In some implementations, a device such as electronic device 105 or electronic device 110 performs method 1200. In some implementations, method 1200 is performed on a mobile device, desktop, laptop, HMD, or server device. The method 1200 is performed by processing logic, including hardware, firmware, software, or a combination thereof. In some implementations, the method 1200 is performed on a processor executing code stored in a non-transitory computer-readable medium (e.g., a memory).

At block 1202, the method 1200 includes displaying an XR environment corresponding to a 3D space, where the XR environment comprises depicts a virtual object at a position in the 3D space. The virtual object may be a user interface element such as a button, icon, text entry field, slider bar, or menu item, that is presented as part of a virtual UI displayed at a fixed position or otherwise within the XR environment, e.g., a virtual 2D menu with buttons displayed a few feet in front of the user in XR.

At block 1204, the method 1200 includes tracking a user hand position in the 3D space based on sensor data. This may involve obtaining user position data corresponding to a 3D position of a portion (e.g., finger/hand) of a user in the 3D space. The user position data may be obtained based on sensor data (e.g., image sensor, depth sensor data, motion sensor data, etc.) and may provide a path of the portion of the user over a time period. In one example, the user position data may be a skeleton representation of the user generated periodically, e.g., 30 fps, based on outward facing image/depth sensors on an HMD. Such user position data may provide a path of a portion of the skeleton (e.g., a finger skeleton portion). In other words, for example, by tracking the orientation of the skeleton over multiple instants in time, a path of a finger portion of the skeleton over time relative to a 3D space may be determined.

In some implementations, the portion of the user corresponds to a point on or in a finger of the user. The portion of the user may correspond to a point on or in a hand of the user. The user position data may correspond to a position within a skeleton representation of the user that is generated periodically, e.g., at multiple points in time during a period of time.

At block 1206, the method 1200 includes determining an interaction mode based on the user hand position and the position of the virtual object in the 3D space. Determining the interaction mode comprises selecting whether the interaction mode is direct or indirect based on the user hand position and the position of the virtual object in the 3D space. Determining the interaction mode may involve selecting a direct interaction mode based on the hand position intersecting a 3D area associated with the virtual object in the 3D space. Determining the interaction mode may involve selecting an indirect interaction mode based on the hand position being outside of a 3D area associated with the virtual object in the 3D space.

At block 1208, the method 1200 includes interpreting the hand gesture using an interaction recognition process associated with the determined interaction mode. In some implementations, the method involves tracking a position of the hand gesture in the 3D space and identifying one or more interaction points based on the tracking. The method may involve identifying the one or more interaction points based on a gaze direction.

In some implementations, determining the interaction mode comprises selecting a direct interaction mode in which the virtual element is identified based on the hand position intersecting a 3D area associated with the virtual object in the 3D space, and the interaction recognition process is a direct interaction recognition process applied to the hand gesture. Determining the interaction mode may involve selecting a direct interaction mode based on: determining an attention zone based on a gaze direction or head pose of the user; determining an intersection of the hand position intersecting a 3D area associated with the virtual object in the 3D space; and determining that the intersection is within the attention zone. In some implementations, the interaction mode is a direct interaction mode and the method 1200 includes discontinuing interaction detection for a predetermined period of time (e.g., 0.1, 1, 2, 4, 5, 10, 15, etc. seconds) following a recognition of the hand gesture.

Some implementations initiate a selection of the virtual object based on interaction mode being a direct interaction mode and the hand gesture being a direct touch with the virtual object. Some implementations initiate a hover of the virtual object based on interaction mode being a direct interaction mode and the hand position being proximate to the position of the virtual object and within an attention zone. The hover may be an interaction analogous to a mouse or cursor hover in a traditional computing (e.g., desktop, laptop, etc.) environment in which a cursor is positioned above or on a UI element without an activation or selection command during which hover feedback may be provided, e.g., highlighting or otherwise distinguishing the element. The hover of the virtual object may be automatically maintained when the position of the virtual object is no longer in the attention zone, e.g., for a predetermined period of time, such as 10 seconds, 30 seconds, etc.

In some implementations, determining the interaction mode comprises selecting an indirect interaction mode in which the virtual element is identified based on a gaze direction intersecting an area associated with the virtual object, and the interaction recognition process is an indirect interaction recognition process applied to the hand gesture. Determining the interaction mode may involve selecting an indirect interaction mode based on: determining an attention zone based on a gaze direction or head pose of the user; determining an intersection of the hand position intersecting a 3D area associated with the virtual object in the 3D space; and determining that the intersection is outside of the attention zone.

Some implementations initiate a selection of the virtual object based on interaction mode being an indirect interaction mode and the hand gesture being a pinch occurring while a gaze is directed towards the virtual object. In some implementations, the interaction mode is an indirect interaction mode and interpreting the hand gesture comprises: recognizing that the hand gesture is a pinch; and identifying the virtual object based on a gaze direction occurring during the pinch. In some implementations, the interaction mode is an indirect interaction mode and interpreting the hand gesture comprises: recognizing that the hand gesture corresponds to hand engagement; identifying the virtual object based on a gaze direction occurring during the hand engagement; and initiating a hover of the virtual object based on the hand engagement.

In some implementations, the method 1200 is performed by an electronic device that is a head-mounted device (HMD) and/or the XR environment is a virtual reality environment or an augmented reality environment.

In some implementations, a system or method detects, for or in indirect mode, when the user is resting their hand (or arm) on their lap, an, armrest of the chair they are sitting on, or another physical object. The user's hand or arm being supported by another physical object may be used to determine to use an indirect interaction mode and/or to determine how interpret hand gestures performed by the hand.

In some implementations, a method is performed by executing instructions (e.g., stored in a non-transitory computer-readable medium). The method may obtain a user hand position in a 3D space based on sensor data, wherein the hand position is associated with a hand gesture. The method determines that an arm or hand associated with the hand position is supported by (e.g., resting on) a physical object (e.g., the user's lap, the user's leg, an arm rest, etc.). In accordance with determining that the arm or hand is supported by the physical object, the method interprets the hand gesture using an interaction recognition process associated with an indirect interaction mode. The hand gesture may be interpreted as a user interaction in an extended reality (XR) environment corresponding to the 3D space. Determining to utilize the indirect interaction mode may be based on determining that the arm or hand is supported by the physical object. The method may initiate an action (e.g., a selection of a virtual object) based on recognizing a hand gesture, e.g., based on recognizing the hand gesture occurring while a gaze is direct towards the virtual object.

In the indirect interaction mode, a virtual element may be identified based on a gaze direction intersecting an area associated with the virtual object.

An interaction recognition process is an indirect interaction recognition process applied that identifies a hand gesture. In some implementations, recognizing the hand gesture involves recognizing a pinch.

In some implementations, the method determines that the arm or hand associated with the hand position is supported by the physical object based on determining a first position of the arm or hand, determining a second position of the physical object, and determining that a relationship between the first position and second position satisfy a criterion, e.g., determining that skeleton representation of a user's hand is within a threshold distance of a surface of the physical object, e.g., based on image data, depth data, etc.

### 3D Gesture Recognition Using Defined 3D Regions

Various implementations disclosed herein include devices, systems, and methods that use a defined 3D region to interpret a user hand gesture relative to a UI element in 3D space. Such gestures may be direct in which the hand virtually interacts with a UI element by virtually contacting the UI element. For example, a user may move their finger to directly tap, pinch, swipe, or otherwise interact with a UI element within the 3D space. In contrast, gestures may be indirect in which the hand remains separate from the UI element in the 3D space. For example, such gestures may be performed by a user's hand while resting by the user side or otherwise close to the user while the UI is displayed in the distance in the 3D space. Implementations disclosed herein are particularly useful for direct gestures but may also be applied to indirect gestures.

Implementations disclosed herein use a defined 3D region to interpret a hand gesture relative to a UI element in 3D space. The type or 3D position of input that is recognized may depend upon whether and how a path of the user hand gesture in 3D space relates to the 3D region. In one example, the 3D region is used as a no-input or "deadband" region with respect to a particular type of input gesture. In a specific example, to determine whether (and where) a tap gesture is performed relative to a planar virtual user interface, the path of a user's finger as it moves towards and through the planar virtual user interface may be considered. A 3D region for a "tap" gesture may be defined based on the 3D position of a virtual user interface (e.g., a button on a flat virtual UI). Whether and/or how the path of the user's finger is interpreted as a tap gesture (or another type of gesture) may be based on that path and the defined 3D region. For example, if the path of the finger enters or leaves a particular 3D region (e.g., going outside of the 3D region not expected to be associated with a tap on a particular UI icon and/or entering a 3D region that is expected to be associated with a tap on that UI icon), then the path may be determined to not correspond to a tap gesture. That path may instead be analyzed as input with respect to something else, e.g., with respect to whether the path corresponds to a non-tap gesture (e.g., scroll, swipe, etc.).

The 3D region may be configured to provide various features. For example, the 3D region may be positioned and/or configured based on the position, orientation, and/or shape of the UI element to which it corresponds, e.g., based on the position and shape of a button on a flat virtual user interface. In some implementations, the 3D region has a non-cylindrical shape, e.g., a tapered shape, or otherwise has a shape with a profile that differs based on distance away from the virtual user interface surface to which it corresponds. In some implementations, the 3D region has an orientation based on a viewpoint direction. In some implementations, the 3D region has a size that is determined based on the speed of motion of the portion (e.g., finger) of the user as the finger moves along the path.

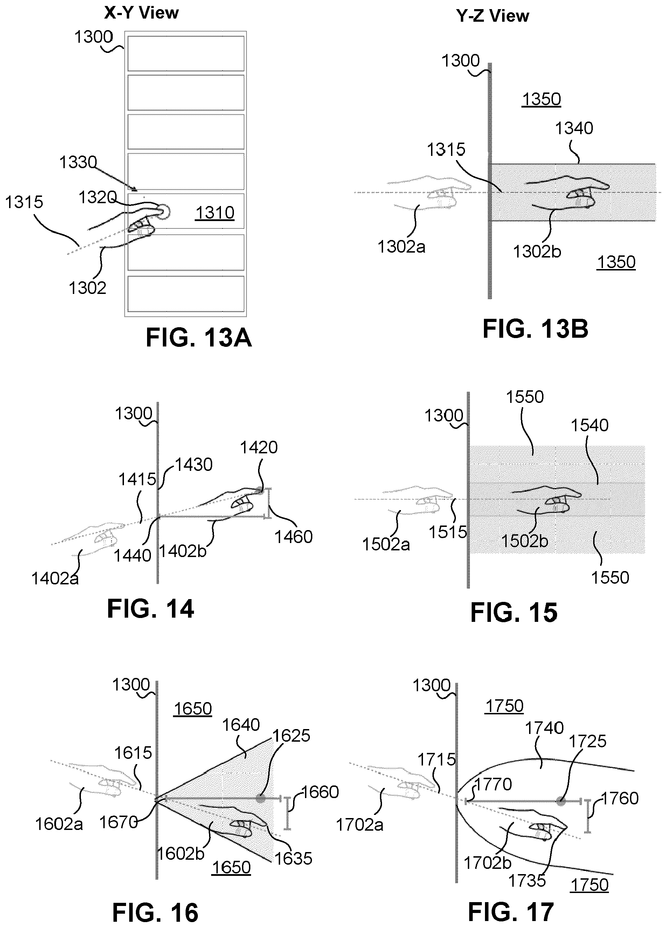

**Figures 13A-13B** illustrate a gesture made relative to a user interface element on a 2D user interface and corresponding 3D region. In this example, Figure 13A illustrates an X-Y view of the user interface 1300, while Figure 3B illustrates a Y-Z view of the user interface 1300 as hand 1302 performs a gesture by moving along path 1315 (i.e., from hand position 1302a to hand position 1302b). In this example, the gesture is intended (by the user 102) to be a tap gesture on virtual button 1310. The user makes the gesture by moving their hand/finger through the virtual button 1310, i.e., the user intends to make a motion with their hand such that path 1315 intersects the virtual button 1310 at position 1320.

Note that the user's movement in the real world (e.g., physical environment 100) correspond to movements within a 3D space, e.g., an XR environment that is based on the real-world and that includes virtual content such as user interface positioned relative to real-world objects including the user. Thus, the user is moving his hand in the physical environment 100 through empty space, but that hand (i.e., a depiction or representation of the hand) intersects with and/or pierces through the user interface 1300 of the XR environment based on that physical environment.

The user's device (e.g., device 110 or device 105 of Figure) 1 or another device determines whether the user's gesture (e.g., the path 1315) corresponds to input to the user interface 1300. For example, one or more 3D regions may be defined and used to interpret the user's gesture. In the example of Figure 13B, a first 3D region 1340 is defined to correspond to a 3D area in which the user's hand/finger is expected to stay during a motion path associated with a tap gesture after piercing virtual button 1310 through the plane of the user interface 1300. Conversely, a second 3D region 1350 (surrounding the cylinder of 3D region 1340) is defined to correspond to a different 3D area in which the user's hand is expected to not enter during a motion path associated with a tap gesture after piercing virtual button 1310. If the user's hand path 1315 leaves the first 3D region 1340 and/or enters the second 3D region 1350 after piercing the user interface 1300, then the data is analyzed further to determine whether it is a particular non-tap gesture or not (e.g., using a classification machine learning model focusing on non-tap gestures). However, if, as shown in Figure 13B, the user's hand path 1315 remains within the first 3D region 1340 or does not enter the second 3D region 1350 after piercing the user interface 1300, then the data is analyzed further to determine whether it is a tap gesture or not (e.g., using a classification machine learning model focusing on tap gestures).

In other implementations, additional classification algorithms / machine learning models are not used, and the motion path is classified as a tap or non-tap gesture based simply on assessing which 3D regions (e.g., first 3D region 1340 and/or second 3D region 1350) the path 1315 intersects.

In some implementations, if the path 1315 does not leave the first 3D region 340 and does not enter the second region 3D region 1350, the gesture is interpreted to be a tap gesture, while if the path 1315 does leave the first 3D region or enter the second 3D region 1350, the gesture data (e.g., path 1315) is analyzed to determine which of multiple types of non-tap gestures (if any) the gesture is.

**Figure 14** illustrates a gesture made relative to a user interface element on the user interface 1300. The lack of tactile feedback may lead to imprecise hand placement / touch inaccuracies. For example, a user may attempt to pierce straight through the UI plane to provide a tap gesture but actually have an angled trajectory. In this example of Figure 14, the user's hand moves from hand position 1402a to hand position 1402b along path 1415, piercing the user interface 1300 at position 1440 and stopping at position 1420. This stopping position 1420 may be used to identify a corresponding position 1430 on the user interface 1300, which may be used to determine for which, if any, user interface elements of user interface 1300, the gesture was intended. This could result in inaccuracy, for example, if a different UI element is at piercing position 1440 (e.g., the intended UI element) than at the corresponding stopping position 1430 (e.g., the interpreted position).

In some implementations, the piercing position 1440 is used instead of the corresponding stopping position 1430 to interpret the gesture, e.g., to identify the intended UI element. In some implementations, both the piercing position 1440 and the corresponding stopping position 1430 on the user interface 1300 are used to interpret the gesture. If both positions, i.e., both the piercing position 1440 and the corresponding stopping position 1430, are within same user interface element, then the input may be associated with that user interface element. If the piercing position 1440 and the corresponding stopping position 1430 are within different user interface elements (or one of the positions is not within a user interface element), than an algorithm or machine learning model may be used to apply criteria to select with which user interface element the gesture is to be associated. In some implementations, the separation distance 1460 (e.g., of the piercing position 1440 and stopping position 1420 on a virtual plane parallel to the user interface 1300) is used to determine if and how to interpret the input gesture. For example, if the separation distance is greater than a threshold, the input may be excluded from consideration as a tap input.

In some implementations, a device learns to interpret an intended piercing position based on an actual stopping position, e.g., determining corresponding stopping position 1430 to be an intended piercing position. In some implementations, a determined intended piercing position is used to identify an intended user interface element. In some implementations, both a determined intended piercing position and an actual piercing position are used to interpret a gesture, e.g., by identifying a user interface element and/or a user interface coordinate, e.g., by averaging or weighting. In some implementations, a system learns how to interpret a particular user's input gesture based on feedback from the user, e.g., indicating that an intended piecing position should be used rather than an actual piercing position.

**Figure 15** illustrates a gesture made relative to a user interface element on a user interface 1300, a tilted 3D region 1540 for an expected tap gesture, and a tilted deadband region 1550 for the expected tap gesture. In this example, the user moves a hand from an initial position 1502a through a second position 1502b along path 1515 and thus through user interface 1300 at an angle, i.e., a non-orthogonal direction. A first tilted 3D region 1540 is defined based on the path 1515 to correspond to a 3D area in which the user's hand/finger is expected to stay during a motion path associated with a tap gesture after piercing the user interface 1300 (e.g., at a particular location or through a particular UI element). Conversely, a second tilted 3D region 1550 is defined to correspond to a different 3D area in which the user's hand is expected to not enter during a motion path associated with a tap gesture. If the user's hand path 1515 leaves the first 3D region 1540 and/or enters the second 3D region 1550 after piercing the user interface 1300, then the motion is treated as corresponding to a non-tap gesture and/or further analyzed to identify a type of non-tap gesture (if any) that was intended by the movement. However, if, as shown in Figure 15, the user's hand path 1515 remains within the first tilted 3D region 1540 or does not enter the second tilted 3D region 1550 after piercing the user interface 1300, then the motion is treated as corresponding to a tap gesture and/or further analyzed to identify a tap gesture or its characteristics (e.g., duration, intended UI target, etc.). Figure 5 illustrates how 3D regions (e.g., deadbands) can be centered around a direction of hand movement, e.g., for identifying tap and non-tap gestures.

**Figure 16** illustrates a gesture made relative to a user interface element on a user interface 1300 and corresponding non-cylindrical 3D region 1640 for an expected tap gesture and corresponding deadband region 1650 for the expected tap gesture. In this example, the user moves a hand from an initial position 1602a through a second position 1602b along path 1615 and thus through user interface 1300. The hand stops (and/or retracts) when the fingertip reaches position 1635. In this example, the center axis of the non-cylindrical 3D region 1640 is aligned with the normal direction of the user interface 1300. In alternative implementations, the central axis of the non-cylindrical 3D region 1640 may be aligned differently, e.g., based on view direction.

A first 3D region 1640 is defined to correspond to a 3D area in which the user's hand/finger is expected to stay during a motion path associated with a tap gesture after piercing the user interface 1300 (e.g., at a particular location or through a particular UI element). In this example, the first 3D region 1640 has a non-cylindrical shape, e.g., a cone shape that increases in diameter based on increasing distance from the user interface 1300 in the 3D space. Such a shape enables a motion path to deviate more (e.g., from perfect/expected path) after passing through a user interface element at greater distances from the user interface, while still being considered a particular gesture type, e.g., a tap gesture. Thus, the separation distance 1660 (e.g., the distance between where fingertip position 1635 when the hand stops and a corresponding position 1625 on an orthogonal line through the user interface element) may be greater than the diameter 1670 of the first 3D shape 1640 at the plane of the user interface 1300. Using a non-cylindrical 3D region shape for the first 3D region 1640 may provide more flexibility or otherwise enable assessment of user movements in ways that allow deviations from perfect gesture behavior while still ensuring that movements are accurately interpreted.

In Figure 16, a second 3D region 1650 (outside of first 3D region 1640) is defined to correspond to a different 3D area in which the user's hand is expected to not enter during a motion path associated with a tap gesture. If the user's hand path 1615 leaves the first 3D region 1640 and/or enters the second 3D region 1650 after piercing the user interface 1300, then the motion is treated as corresponding to a non-tap gesture and/or further analyzed to identify a type of non-tap gesture (if any) that was intended by the movement. However, if, as shown in Figure 16, the user's hand path 1615 remains within the first 3D region 1640 or does not enter the second 3D region 1650 after piercing the user interface 1300, then the motion is treated as corresponding to a tap gesture and/or further analyzed to identify a tap gesture or its characteristics (e.g., duration, intended UI target, etc.).

**Figure 17** illustrates a gesture made relative to a user interface element on the user interface 1300 and corresponding non-cylindrical 3D region 1740 for an expected tap gesture and corresponding deadband region 1750 for an expected tap gesture. The user moves a hand from an initial position 1702a through a second position 1702b along path 1715 and thus through user interface 1300. The hand stops (and/or retracts) when the fingertip reaches position 1735. The 3D region 1740 for the expected tap gesture is tilted to be centered around an extension of path 1715, e.g., where the user's hand would travel if it were to continue on a straight path given the trajectory of path 1715.

A first 3D region 1740 is defined to correspond to a 3D area in which the user's hand/finger is expected to stay during a motion path associated with a tap gesture after piercing the user interface 1300 (e.g., at a particular location or through a particular UI element). In this example, the first 3D region 1740 has a non-cylindrical shape, e.g., a rounded cone shape that increases in diameter at a decreasing rate farther from the user interface 1300 in the 3D space. Such a shape enables a motion path to deviate more (e.g., from perfect/expected path) after passing through a user interface element at greater distances from the user interface, while still being considered a particular gesture type, e.g., a tap gesture. Thus, the separation distance 1760 (e.g., the distance between the fingertip position 1735 when the hand stops and a corresponding position 1725 on an orthogonal line through the user interface element) may be greater than the diameter of the first 3D shape 1740 at the plane of the user interface 1300. Using a non-cylindrical 3D region shape for the first 3D region 1740 may provide more flexibility or otherwise enable assessment of user movements in ways that allow deviations from perfect gesture behavior while still ensuring that movements are accurately interpreted.

In Figure 17, a second 3D region 1750 (outside of first 3D region 1740) is defined to correspond to a different 3D area in which the user's hand is expected to not enter during a motion path associated with a tap gesture. If the user's hand path 1715 leaves the first 3D region 1740 and/or enters the second 3D region 1750 after piercing the user interface 1300, then the motion is treated as corresponding to a non-tap gesture and/or further analyzed to identify a type of non-tap gesture (if any) that was intended by the movement. However, if, as shown in Figure 17, the user's hand path 1715 remains within the first 3D region 1740 or does not enter the second 3D region 1750 after piercing the user interface 1300, then the motion is treated as corresponding to a tap gesture and/or further analyzed to identify a tap gesture or its characteristics (e.g., duration, intended UI target, etc.).

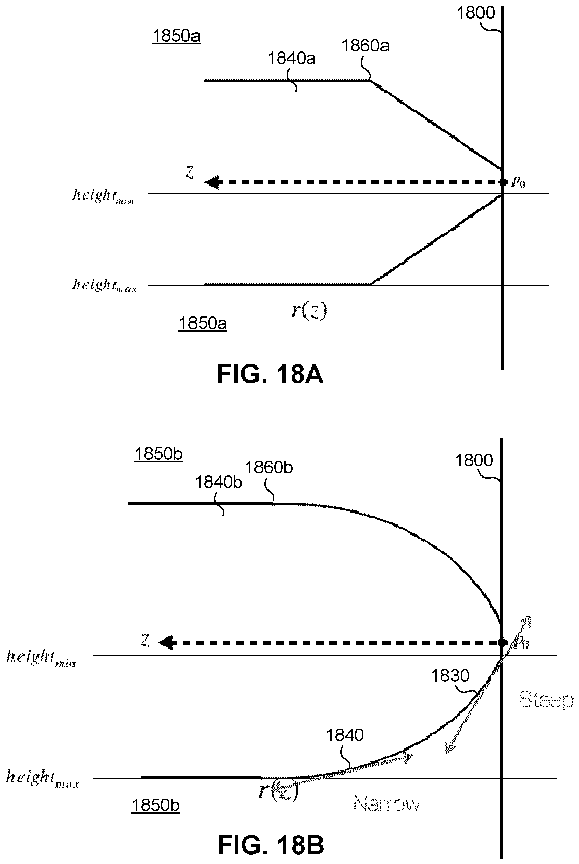

**Figures 18A-18B** illustrate exemplary non-cylindrical 3D regions. In Figure 18A, a first 3D region 1840a is defined to correspond to a 3D area in which the user's hand/finger is expected to stay during a motion path associated with a tap gesture after piercing the user interface 1800 (e.g., at a particular location or through a particular UI element). In this example, the first 3D region 1840a has a non-cylindrical shape along at least a portion of its length, e.g., an initial cone shape that increases in diameter before changing into a cylindrical shape for outer portions beyond position 1860a. Such a shape enables a motion path to deviate more (e.g., from perfect/expected path) after passing through a user interface element at greater distances from the user interface, while still being considered a particular gesture type, e.g., a tap gesture. Using a non-cylindrical 3D region shape for a first portion of the first 3D region 1840a may provide more flexibility or otherwise enable assessment of user movements in ways that allow deviations from perfect gesture behavior while still ensuring that movements are accurately interpreted. In Figure 18A, a second 3D region 1850b (outside of first 3D region 1840a) is defined to correspond to a different 3D area in which the user's hand is expected to not enter during a motion path associated with a tap gesture.

In Figure 18B, a first 3D region 1840b is defined to correspond to a 3D area in which the user's hand/finger is expected to stay during a motion path associated with a tap gesture after piercing the user interface 1800 (e.g., at a particular location or through a particular UI element). In this example, the first 3D region 1840b has a non-cylindrical shape along at least a portion of its length, e.g., an initial rounded cone shape that increases in diameter before changing into a cylindrical shape beyond position 1860b. The non-cylindrical 3D shape 1840b may be logarithmically or exponentially-defined. The 3D shape 1840b initially is initially steep (e.g., changing diameter/height rapidly along z) in portion 1830 and then gradually changes to be less steep (e.g., changing diameter/height less rapidly along z) in portion 1870 before becoming flat (cylindrical/constant diameter/height) beyond position 1860b. Such a shape enables a motion path to deviate more (e.g., from perfect/expected path) after passing through a user interface element at greater distances from the user interface, while still being considered a particular gesture type, e.g., a tap gesture. Using a non-cylindrical 3D region shape for a first portion of the first 3D region 1840b may provide more flexibility or otherwise enable assessment of user movements in ways that allow deviations from perfect gesture behavior while still ensuring that movements are accurately interpreted. In Figure 18B, a second 3D region 1850b (outside of first 3D region 1840b) is defined to correspond to a different 3D area in which the user's hand is expected to not enter during a motion path associated with a tap gesture.

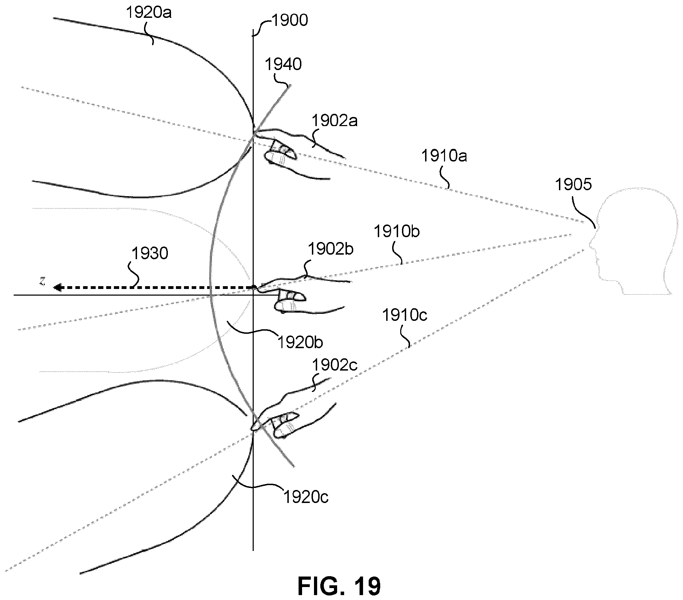

**Figure 19** illustrates exemplary 3D regions 1920a-c that are oriented relative to a user interface 1900 based on a viewpoint direction. The viewpoint directions 1910a-c in this example are determined based on a position at the time of a respective piercing of the user interface 1900 of a fingertip, and a viewpoint 1905 of the user. Thus, 3D region 1920a is orientated at an angle (relative to the orthogonal direction 1930 of the plane on which the user interface 1900 is positioned) based on the viewpoint direction 1910a determined based on the viewpoint 1905 and position on the user interface of piercing when the hand is at position 1902a. Similarly, 3D region 1920c is orientated at an angle (relative to the orthogonal direction 1930 of the plane on which the user interface 1900 is positioned) based on the viewpoint direction 1910c determined based on the viewpoint 1905 and position on the user interface of piercing when the hand is at position 1902c.

In contrast, the 3D region 1920b is treated differently. 3D region 1920b is oriented along the orthogonal direction of the plane on which the user interface 1900 is positioned rather than along a viewpoint direction such as viewpoint direction 1910b. Using an orthogonal orientation (rather than a viewpoint-based orientation) may selected based on the circumstances, i.e., based on the direction 1910b being similar to (e.g., within a threshold similarity metric) of the orthogonal direction. A system may be configured to orient 3D regions based on whether a viewpoint direction deviates substantially (e.g., beyond a threshold similarity metric) from the orthogonal direction. If the viewpoint direction does not deviate substantially, the orthogonal orientation is used. If the viewpoint direction does deviate substantially, a non-orthogonal orientation determined based on the viewpoint direction is used. In other examples, 3D region 920b may (like 3D regions 1920a,c) be oriented based on a viewpoint direction, e.g., based on the direction 1910b.

In Figure 19, the trajectory 1940 is followed by the finger-tip during a non-tap interaction (e.g., a scroll gesture). This illustrates an example of how a typical non-tap gesture trajectory could go outside of the 3D regions 1920a and 1920c.

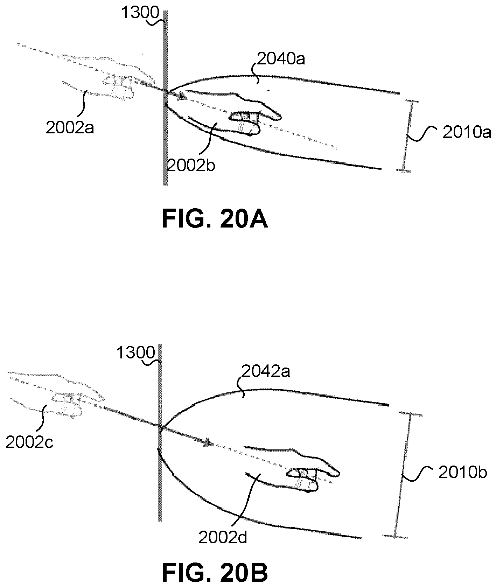

**Figures 20A-20B** illustrate exemplary 3D regions sized based on gesture speed. In Figure 20A, a first 3D region 2040b is defined to correspond to a 3D area in which the user's hand/finger is expected to stay during a motion path associated with a tap gesture after piercing the user interface 1300 (e.g., at a particular location or through a particular UI element). In this example, the first 3D region 2040b has a non-cylindrical shape along at least a portion of its length. The diameter 2010a of the 3D region 2040b is relatively narrow. This is based on the gesture speed of the hand from hand position 2002a to and/or through hand position 2002b being relatively slow. A 3D region may be expanded at higher velocities to allow for more flexibility/sloppiness that may occur when a user is tapping very fast. During a relatively slow movement, relatively less inaccuracy in the gesture piercing direction may be tolerated, e.g., in considering whether a path corresponds to a tap or not.

In Figure 20B, a first 3D region 2042a is also defined to correspond to a 3D area in which the user's hand/finger is expected to stay during a motion path associated with a tap gesture after piercing the user interface 1300 (e.g., at a particular location or through a particular UI element). In this example, the first 3D region 2040a has a non-cylindrical shape along at least a portion of its length. However, the diameter 2010b of the 3D region 2042a is relatively wider compared to the diameter 2010a of the first 3D region 2040a of Figure 20A. This is based on the gesture speed of the hand from hand position 2002c to and/or through hand position 2002d being relatively fast. During a relatively fast movement, relatively more inaccuracy in the gesture piercing direction may be tolerated, e.g., in considering whether a path corresponds to a tap or not.

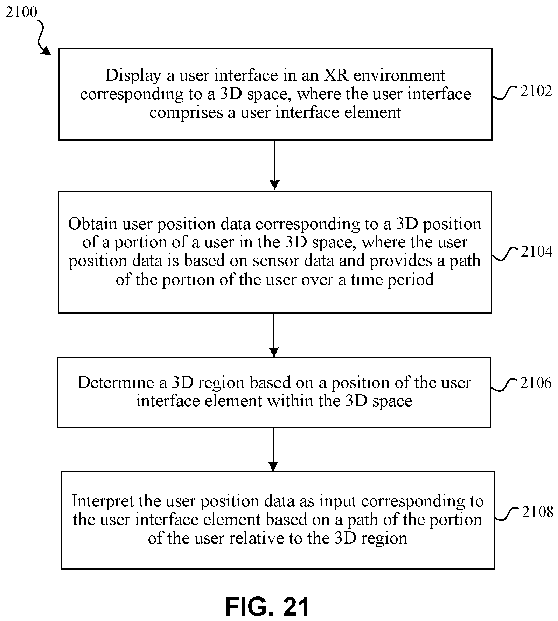

**Figure 21** is a flowchart illustrating a method 2100 for interpreting user position data as input based a gesture path relative to a defined 3D region. In some implementations, a device such as electronic device 110 or device 105 performs method 2100. In some implementations, method 2100 is performed on a mobile device, desktop, laptop, HMD, or server device. The method 2100 is performed by processing logic, including hardware, firmware, software, or a combination thereof. In some implementations, the method 2100 is performed on a processor executing code stored in a non-transitory computer-readable medium (e.g., a memory).

At block 2102, the method 2100 displays a user interface in an XR environment corresponding to a 3D space, where the user interface comprises a user interface element. The user interface comprises a user interface element such as a button, icon, text entry field, slider bar, or menu item, that is presented as part of a virtual UI displayed at a fixed position or otherwise within the XR environment, e.g., a virtual 2D menu with buttons displayed a few feet in front of the user in XR.

At block 2104, the method 2100 obtains user position data corresponding to a 3D position of a portion (e.g., finger/hand) of a user in the 3D space. The user position data may be obtained based on sensor data (e.g., image sensor, depth sensor data, motion sensor data, etc.) and may provide a path of the portion of the user over a time period. In one example, the user position data may be a skeleton representation of the user generated periodically, e.g., 30 fps, based on outward facing image/depth sensors on an HMD. Such user position data may provide a path of a portion of the skeleton (e.g., a finger skeleton portion). In other words, for example, by tracking the orientation of the skeleton over multiple instants in time, a path of a finger portion of the skeleton over time relative to a 3D space may be determined.

In some implementations, the portion of the user corresponds to a point on or in a finger of the user. The portion of the user may correspond to a point on or in a hand of the user. The user position data may correspond to a position within a skeleton representation of the user that is generated periodically, e.g., at multiple points in time during a period of time.

At block 2106, the method 2100 determines a 3D region (e.g., a no-input or deadband area) based on a position of the user interface element within the 3D space. For example, this may involve determining a position, orientation, size, and shape of a 3D region based on a button or other UI element on a flat 2D interface to be present a few feet in front of the user's viewpoint within an XR environment.

In some implementations, the 3D region has a shape that has a width (e.g., diameter) that varies based on distance away from the 3D element (e.g., forming a tapered cylinder, cone, rounded cone, etc.). Figures 16, 17, 18A, 18B, 19, and 20 illustrate 3D region has a shape that has a width (e.g., diameter) that varies based on distance away from the 3D element.

In some implementations, the 3D region has an orientation determined based a viewpoint direction. In some implementations, the 3D region has an orientation determined based on a viewpoint direction determined based a piercing position and a viewpoint position. Figure 19 illustrates 3D regions having orientations determined based on viewpoint direction.

In some implementations, the 3D region has a size attribute (e.g., width/diameter) determined based on a speed associated with a movement of the portion of the user along the path. Figure 20 illustrates 3D regions having size attributes determined based on gesture speed.

At block 2108, the method 2100 interprets the user position data as input corresponding to the user interface element based on a path of the portion of the user relative to the 3D region. For example, the user position data and path of the portion of the user may be used to determine whether the path corresponds to a tap input gesture (e.g., where the path remains within a first 3D region and/or does not enter a second 3D region) or a non-tap input gesture (e.g., where the path does not remain within a first 3D region and/or enters a second 3D region). In some implementations, finger position data may be exclusively considered for tap recognition (e.g., sent to a tap recognizer/classifier) if all 3D positions of the finger along the path remain with a first 3D region and/or do not enter a second 3D region. If the finger position along the path, does enter the second 3D region then the finger position data may instead be considered for non-tap recognition (e.g., sent to a non-tap classifier)). In some implementations, the first 3D region is a deadband in the sense that, while the finger is in that region, in-plane motion is suppressed. In the second region, presence of the finger is known to be a non-tap gesture, and there is not motion suppression, e.g., no deadband effect.

In some implementations, interpreting the user position data involves determining whether the path of the portion of the user over the time period corresponds to a tap gesture. Interpreting the user position data may involve determining that the path of the portion of the user relative to the 3D region is entirely within the 3D region. Interpreting the position data may be based on determining that the path of the portion of the user relative to the 3D region is entirely within the 3D region. Based on this, the method 2100 may determine to use a tap recognizer algorithm or machine learning model to determine that the path of the portion of the user corresponds to a tap. Such a tap recognizer algorithm or machine learning model may use only two-dimensional input data, e.g., positions on a plane associated with the user interface determined based on the 3D position of the portion of the user along the path. Using only 2D data may enable faster, real-time, or otherwise more efficient assessment of the gesture. Moreover, using 3D regions in analyzing user motion as described herein may enable selection of an appropriate (e.g., gesture-type specific) algorithm or machine learning model to use. Such selection of an appropriate processing technique may enable efficient processing, e.g., the gesture-type specific processing techniques may be more efficient than generic algorithms/machine learning models that attempt to identify/interpret input for multiple (e.g., all) input gesture types.

Interpreting the user position data may involve determining that the path of the portion of the user relative to the 3D region extends beyond the 3D region. Interpreting the user position data may involve, based on determining that the path of the portion of the user relative to the 3D region extends beyond the 3D region, using a non-tap recognizer algorithm or machine learning model to determine that the path of the portion of the user corresponds to a non-tap gesture. A different processing module may thus be used for some types of input (corresponding to tap gestures in which the path does not extend beyond the 3D region) and other types of input (corresponding to non-tap gestures in which the path does extend beyond the 3D region. Using such different, alternative processing modules may be more efficient than using a single processing module, e.g., for both tap and non-tap inputs. In some implementations, the path corresponds to a non-tap gesture such as a scroll, pan, swipe, or drag gesture identified by the non-tap recognizer algorithm or machine learning model using only two-dimensional input data.

### Interpreting User Movement as Direct Touch User Interface Interactions

Various implementations disclosed herein include devices, systems, and methods that interpret direct touch-based gestures, such as drag and swipe gestures, made by a user virtually touching one position of a user interface and, while still touching, moving their hand to another position of the user interface (UI). Such gestures may be made relative to a user interface presented as virtual content in the 3D space of an extended reality (XR) environment. Ideally such gestures would be associated with user interface positions based on where the user's hand virtually intersects the user interface, e.g., where the hand makes contact and breaks contact with the user interface. However, because a user's perception of when and where the user is virtually touching the user interface (e.g., overlapping the user interface in an extended reality (XR) space) may be inaccurate, unexpected gain or loss of user interface-associated motion (referred to as "hooking") may occur. For example, a segment of the user's movement may be associated with user interface contact when the user expects the segment of movement to not occur during user interface contact. Conversely, a segment of the user's movement may not be associated with user interface contact when the user expects the segment of movement to occur during user interface contact.

Some implementations determine which segments of a movement to associate with user interface content based on characteristics of the movement. In drags (i.e., where a user attempts to touch at a position on the user interface move to a second position on the user interface and release the touch at that second position), hooking can occur when a segment of the movement associated with *retracting* the hand is associated with UI contact, in contrast to the user's expectation that such retracting would not occur during UI contact. This may cause the system to identify an incorrect break point on the user interface, i.e., using the retraction portion of the movement to identify the break point rather than the position on the user interface corresponding to the user's position when the intentional UI-contacting motion ceased. Some implementations avoid such erroneous associations (and thus more accurately interpret movements) by determining whether to associate such a segment (e.g., a potential retraction segment) based on whether the characteristics of the segment are indicative of a retraction. In other words, some implementations determine that a segment of a movement that would otherwise be associated with user interface content (e.g., based on actual position overlap) should not associated be associated with user interface contact if the segment of the motion is likely to be a retraction. This may involve determining to not associate a segment of motion with user interface contact based on determining that the segment is a likely to be a retraction based on assessing how aligned the segment is with a retraction axis, a significance of a retraction direction change, or a motion stop.

In some implementations, user movement is interpreted using a technique that avoids unexpected gain or loss of UI-associated motion using a dynamic break volume. Some implementations determine that a break occurs when a user movement leaves a break volume that is adjusted dynamically based on retraction confidence and/or piercing depth. Intentional swipe momentum may be preserved by breaking at an appropriate time before motion is lost from an arc or retraction.

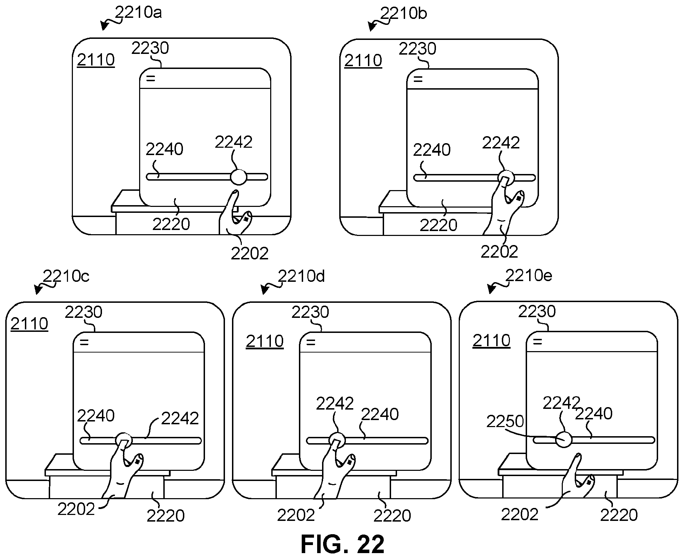

**Figure 22** illustrates views 2210a-e of an XR environment provided by a device 2210 (e.g., device 110 or device 105 of Figure) 1 based on a physical environment in which a user movement is interpreted. The views 2210a-e of the XR environment include an exemplary user interface 2230 of an application (i.e., virtual content) and a depiction 2220 of the table 120 (i.e., real content). Providing such a view may involve determining 3D attributes of the physical environment 100 and positioning the virtual content, e.g., user interface 2230, in a 3D coordinate system corresponding to that physical environment 100.

In the example of Figure 22, the user interface 2230 may include various content and user interface elements, including a scroll bar shaft 2240 and its scroll bar handle 2242 (also known as a scroll bar thumb). Interactions with the scroll bar handle 2242 may be used by the user 102 to provide input to which the user interface 2230 respond, e.g., by scrolling displayed content or otherwise. The user interface 2230 may be flat (e.g., planar or curved planar without depth). Displaying the user interface 2230 as a flat surface may provide various advantages. Doing so may provide an easy to understand or otherwise use portion of an XR environment for accessing the user interface of the application.

The user interface 2230 may be a user interface of an application, as illustrated in this example. The user interface 2230 is simplified for purposes of illustration and user interfaces in practice may include any degree of complexity, any number of user interface elements, and/or combinations of 2D and/or 3D content. The user interface 2230 may be provided by operating systems and/or applications of various types including, but not limited to, messaging applications, web browser applications, content viewing applications, content creation and editing applications, or any other applications that can display, present, or otherwise use visual and/or audio content.

In some implementations, multiple user interfaces (e.g., corresponding to multiple, different applications) are presented sequentially and/or simultaneously within an XR environment using one or more flat background portions. In some implementations, the positions and/or orientations of such one or more user interfaces may be determined to facilitate visibility and/or use. The one or more user interfaces may be at fixed positions and orientations within the 3D environment. In such cases, user movements (e.g., of a user moving their head while wearing an HMD) would not affect the position or orientation of the user interfaces within the 3D environment.

In other implementations, the one or more user interfaces may be body-locked content, e.g., having a distance and orientation offset relative to a portion of the user's body (e.g., their torso). For example, the body-locked content of a user interface could be 2 meters away and 45 degrees to the left of the user's torso's forward-facing vector. While wearing an HMD, if the user's head turns while the torso remains static, a body-locked user interface would appear to remain stationary in the 3D environment at 2m away and 45 degrees to the left of the torso's front facing vector. However, if the user does rotate their torso (e.g., by spinning around in their chair), the body-locked user interface would follow the torso rotation and be repositioned within the 3D environment such that it is still 2m away and 45 degrees to the left of their torso's new forward-facing vector.

In other implementations, user interface content is defined at a specific distance from the user with the orientation relative to the user remaining static (e.g., if initially displayed in a cardinal direction, it will remain in that cardinal direction regardless of any head or body movement). In this example, the orientation of the body-locked content would not be referenced to any part of the user's body. In this different implementation, the body-locked user interface would not reposition itself in accordance with the torso rotation. For example, body-locked user interface may be defined to be 2m away and, based on the direction the user is currently facing, may be initially displayed north of the user. If the user rotates their torso 180 degrees to face south, the body-locked user interface would remain 2m away to the north of the user, which is now directly behind the user.

A body-locked user interface could also be configured to always remain gravity or horizon aligned, such that head and/or body changes in the roll orientation would not cause the body-locked user interface to move within the 3D environment. Translational movement would cause the body-locked content to be repositioned within the 3D environment in order to maintain the distance offset.

In the example of Figure 22, at a first instant in time corresponding to view 2210a, the user 102 has positioned their hand in the physical environment 100 and a corresponding depiction 2202 of the user 102 shows a fingertip of the user 102 not yet touching the user interface 2230. The device 2110 may track user positioning, e.g., locations of the user's fingers, hands, arms, etc.

The user 102 moves their hand/finger forward in the physical environment 100 causing a corresponding movement of the depiction 2202 of the user 102. Thus, at a second instant in time corresponding to the view 2210b, the user 102 has positioned their hand in the physical environment 100 and a corresponding depiction 2202 of the user 102 shows a fingertip of the user 102 touching or extending into a scroll bar handle 2242.

The device 2110 may determine positioning of the user relative to the user interface 2230 (e.g., within an XR environment) and identify user interactions with the user interface based on the positional relationships between them and/or information indicative of when the user is perceiving or expecting their hand/finger to be in contact with the user interface. In this example, the device 2110 detects a make point (e.g., a point in time and/or the 3D space at which contact between a user and a user interface occurs or is expected to occur) as the portion of the depiction 2202 of the fingertip of the user 102 contacts the scroll bar handle 2242.

Detecting such a make point may initiate a user interaction. For example, the device 2110 may start tracking subsequent movement corresponding to a drag type user interaction that will be interpreted to move the scroll bar handle 2242 along or otherwise based on the right/left movement of the depiction 2202 of the portion of the user 102. Movement of the scroll bar handle 2242 (caused by such user motion) may also trigger a corresponding user interface response, e.g., causing the user interface 2230 to scroll displayed content according to the amount the scroll bar handle 2242 is moved, etc.

In the example of Figure 22, at a third instant in time corresponding to view 2210c, the user 102 has moved their hand in the physical environment 100 and a corresponding depiction 2202 of the user 102 has moved left with respect to the user interface 2230 while the hand is still considered to be in contact with the user interface 2230. Movement of the hand may continue to drag the scroll bar handle 2242 in this way until a break point (e.g., a point in time and/or the 3D space at which contact between a user and a user interface occurs or is expected to be discontinued).

In this example, at a fourth instant in time corresponding to view 2210d, the user 102 has continued moving their hand in the physical environment 100 and a corresponding depiction 2202 of the user 102 has continued moving left with respect to the user interface 2230 since the hand is still considered to be in contact with the user interface until it reaches break point 2250. At the fifth instant in time corresponding to view 2210e, the device 2110 detects that the user has concluding the drag type user interaction and the hand is retracting as shown by the depiction 2202. The segment of the user movement (e.g., movement after break point 2250 at which the user begins retracting the depiction 2202 away from the user interface 2230) is not associated with user interface contact, e.g., it is not interpreted as part of the drag-type user interaction.

Implementations disclosed herein interpret user movements that relate to the positioning of a user interface within a 3D space so that the user movements are interpreted as direct touches with the user interface in accordance with user expectations, e.g., when the user perceives or thinks they are virtually contacting the user interface, which may not necessarily correlate precisely with when actual contact occurs between the user and the user interface depictions in the XR environment.

Some implementations determine which segments of a movement to associate with user interface content based on characteristics of the movement. In drags (i.e., where a user attempts to touch at a position on the user interface move to a second position on the user interface and release the touch at that second position), hooking can occur when a segment of the movement associated with *retracting* the hand is associated with UI contact in contrast to the user's expectation that such retracting would not occur during UI contact. This may cause the system to identify an incorrect break point on the user interface, i.e., using the retraction to identify the break point rather than the position on the user interface corresponding to the user's position when the drag motion ceased.

Some implementations avoid such erroneous associations (and thus more accurately interpret movements) by determining whether to associate such a segment (e.g., a potential retraction segment) based on whether the characteristics of the segment are indicative of a retraction. In other words, some implementations determine that a segment of a movement that would otherwise be associated with user interface content (e.g., based on actual position overlap) should not associated be associated with user interface contact if the segment of the motion is a retraction. This may involve determining to not associate a segment of motion with user interface contact based on determining that the segment is a retraction based on (a) assessing how aligned the segment is with a retraction axis, (b) a significance of a retraction direction change, or (c) a motion stop.

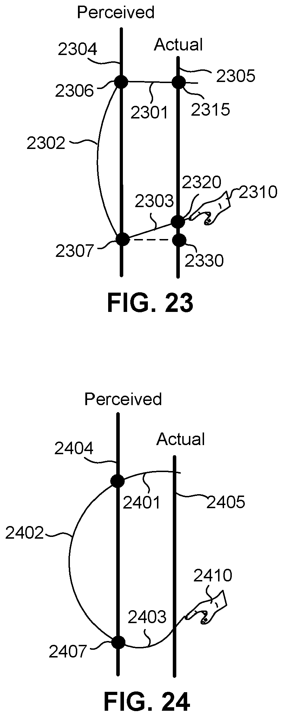

**Figure 23** illustrates a user's intentions in making a movement relative to an actual user interface position. In this example, during a first segment 2301 of a user movement, the user 2310 moves a portion of their body (e.g., their finger, hand, etc.) with the intention of making contact with a user interface. In this example, the first segment 2301 of the movement extends through the actual UI plane 2305 to perceived UI plane 2304. The user may perceive (or otherwise expect) that the UI plane is at a location that differs from its actual position for various reasons.

Based on the user's perception of where the UI plane is, i.e., perceived UI plane 2304 location, the user continues moving the portion of their body (e.g., their finger, hand, etc.) during a second segment 2302 of movement in a drag-type motion, e.g., moving their finger across the user interface. The actual motion path during such a second segment 2302 may be linear or non-linear (e.g., arcuate as illustrated). In this example, based on the movement during the first segment 2301 and/or the second segment 2302, the device 2110 determines a location of a make point 2315 on the actual user interface 2305. In one example, the change in direction exceeding a threshold is determined as the time of the make point 2315 and the make point 2315 location is determined based on where the movement intersected the actual UI plane 2305. In another example, the position 2306 at which such a change occurred is used to determine a corresponding position on the actual UI plane 2305 to use as the make point.

After the make point is established, the movement of the user is monitored and used as user input. The movement is used as input (i.e., continues to be associated with contact with the user interface) until a condition is satisfied, e.g., a break point is determined.

In this example, based on the user's perception of where the UI plane is, i.e., perceived UI plane 2304 location, at the end of the intended drag motion which occurs at the end of the second segment 2302, the user moves the portion of their body (e.g., their finger, hand, etc.) during a third segment 2303 of movement in a retraction movement back towards themselves. During the second segment 2302 and the third segment 2303 of the movement, the movement is assessed to attempt to identify when and where the user expects that UI contact has concluded. This assessment may occur repeatedly, e.g., every frame, every 5 frames, every 0.1 ms, etc.) such that the association of the movement with user interface contact can be determined as soon as (or very soon after) the user stops intending to make contact with the user interface. This may involve assessing the path of the movement to determine whether a current segment of the movement has a characteristic that satisfies a retraction criterion. Such a retraction criterion may be configured to distinguish retraction motion from another type of motion (e.g., continued drag motion, swiping motion, etc.). The characteristic may be, but is not limited to being, (a) a measure of alignment between the movement direction and a retraction direction (b) a measure of retraction direction change and/or (c) whether the user (e.g., finger) has stopped.

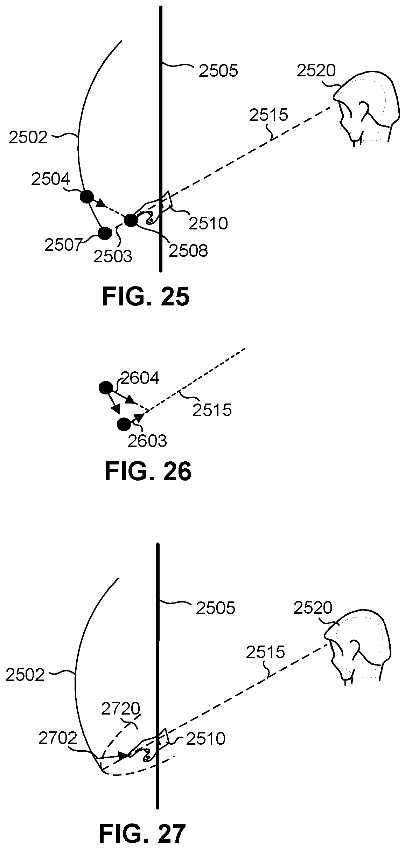

In the example of Figure 23, the third segment 2303 is determined to be a retraction motion. Accordingly, this third segment 2303 is not treated as movement associated with user interface contact/drag input. Only the second segment 2302 is treated as movement associated with user interface contact/drag input. The assessment of whether segments should be associated with user interface contact or not may be used to determine an appropriate break point for the movement. In this example, the second 2302 segment transitions at point 2307 to the third segment 2303, i.e., association of the movement with user interface contact is determined to end at this point in time. This is used to determine a corresponding position 2330 on the actual user interface 2305 to use as the break point rather than the position 2320 at which the user's retracting body portion (e.g., hand, finger, etc.) crossed the actual user interface 2305. Figures 25-27, described below, provide additional examples of using movement characteristics to interpret segments of user movement, e.g., with respect to determine which segments should be associated with user interface contact.

**Figure 24** also illustrates a user's intentions in making a movement relative to an actual user interface position. In this example, the user 2410 makes a swiping movement of the portion of their body (e.g., their finger, hand, etc.). In this example, the first segment 2401 of the movement swipes through the actual UI plane 2405 into perceived UI plane 2404. Based on the user's perception of where the UI plane is, i.e., perceived UI plane 2404 location, the user continues making the swiping movement during a second segment 2402 and through a third segment 2403 during which the swiping motion broadly arcs back towards the user. The end of the swipe may differ from a drag retraction (e.g., as illustrated in Figure 23) and in the movement may be used to identify the type of movement (e.g., drag or swipe) and/or treat the end of the movements (e.g., third segments 2303, 2403) differently.

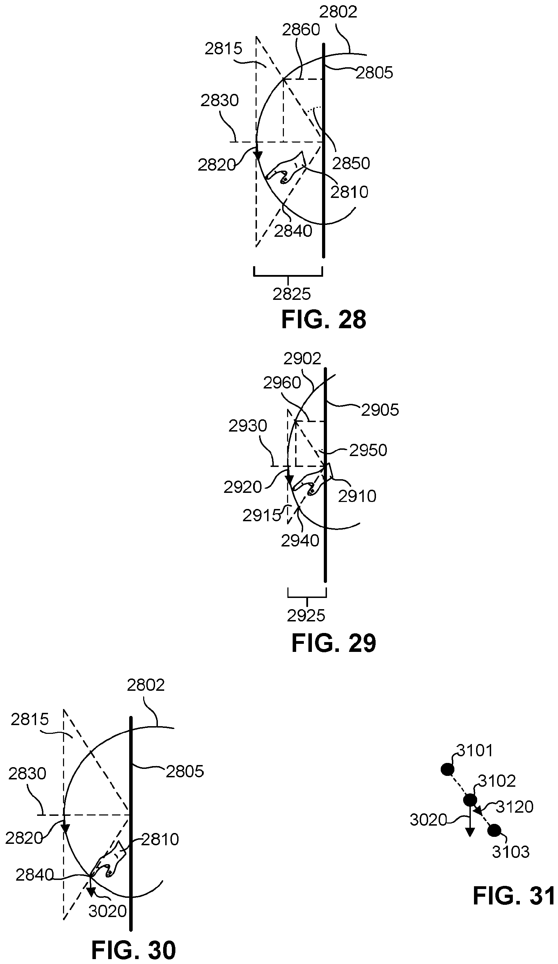

In some implementations, the swiping movement illustrated in Figure 24 is interpreting using a dynamic break volume to avoid unexpected gain or loss of UI-associated motion. This may involve determining that a break event occurs based on determining that the movement leaves a break volume that is adjusted dynamically based on (a) retraction confidence and/or (b) piercing depth. Intentional swipe momentum may be preserved by breaking at an appropriate time before motion is lost from an arc or retraction for example using swipe trajectory correction. Figures 28-31, described below, provide additional examples of using dynamic break volumes and correcting trajectory (e.g., swipe trajectory).

**Figures 25-26** illustrate a segment of a movement having characteristics corresponding to a drag motion followed by a retraction motion. In this example, the user movement (e.g., of user 2510) includes a drag segment 2502 and a retraction segment 2503 relative to the actual user interface 2505. The movement transitions from the drag segment 2502 to the retraction segment 2503 at point 2503. This transition is detected based on detecting that the retraction segment 2503 has one or more characteristics that correspond to a retraction. In this example, a retraction direction 2510 is identified based on the current position of the user 2510 (e.g., finger, hand, etc.) and the user's head 2520. In other examples, a retraction direction may be based on another portion of the user, e.g., the direction between the current position of the user 2510 (e.g., finger, hand, etc.) and a center of the user's torso (not shown).

The retraction direction 2510 may be used to determine a retraction confidence, e.g., a measure of confidence that a current segment of the movement corresponds to a retraction versus another type of motion. For example, such a retraction confidence may be based on how aligned the segment is with the retraction motion. Movement that is more aligned with the retraction direction 2510 may be more likely to correspond to drag retraction movement than movement that is not aligned with (e.g., perpendicular to, etc.) the retraction direction 2510. In this example, the retraction segment 2503 of the movement is closely aligned with the retraction direction 2510 and thus the segment is determined to be a retraction following the drag.

In some implementations, movement characteristics are used to detect retraction and/or trigger determining an early break event (i.e., prior to the user actually disconnecting from the user interface).

In some implementations, rather than using an instantaneous movement direction (e.g., direction 2603) to compare with a retraction direction 2515 to identify retractions, an averaged movement direction (2604) may be determined and compared with a retraction direction 2515 to identify retractions. This may help ensure that noise or micro-changes of direction do not inadvertently trigger a retraction detection. For example, it may be more accurate to use an averaged movement direction 2604 than a current instantaneous movement direction 2603 to identify retractions.

In some implementations, an average movement direction (e.g., movement 2604) is determined using a lag position 2504 (e.g., an index fingertip lag position) and used to assess a retraction confidence. Such a lag position 2504 may be a lazy follow of the user's position (e.g., finger position) determined using a delayed moving average filter (50 ms, ,125ms). The lag position 2504 may be used to determine an average movement direction ( 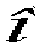 ) 2604 from that lag position 2504 to the current position 2508, e.g., 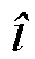 = norm(current finger position - lag position). A retraction axis/direction (r) 2510, e.g., *ř* = norm(headpos - current finger position). The current movement direction ( 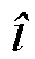 ) 604 and the retraction axis/direction (ř) 2515 may be used to determine a retraction confidence based on their dot product: *r_{c}* = 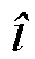 *• ř.* In this example, a *r_{c}* = 1.0 is indicative of a highly confident retraction, a *r_{c}* = -1.0 is indicative of a highly confident piercing type movement, and a *r_{c}* = 0.0 is indicative of a low confidence retraction (not retracting). Retraction confidence may be overridden or automatically set to zero in circumstances in which sensor data providing trajectory information is uncertain or otherwise when the trajectory of the movement is not trusted.

**Figure 27** illustrates a retraction dead-band 2720. Following the example, of Figures 25-26, a retraction dead-band 2720 is spawned based on detecting the occurrence of motion corresponding to a retraction. The retraction dead-band 2720 is a region or volume of 3D space used to interpret movement, e.g., hand movement within the retraction dead-band 2720 is considered a retraction. However, if the user motion leaves the retraction dead-band 2720 3D space, it may no longer be considered a retraction and thus may be interpreted as input, e.g., recognized as a tap, drag, swipe, etc. A retraction dead-band may be used to distinguish motion corresponding to an input versus a movement corresponding to a retraction. The retraction dead-band may be shaped, positioned, and otherwise configured so that movement closer to the user interface 2505 will be more likely to be outside of the retraction dead-band 2720 than movement further from the user interface 2505, and thus more likely to be interpreted as a continuous scroll, drag, etc. The retraction dead-band 2720 may have various shapes, e.g., having a straight profile or a curved (e.g., exponentially curved) profile.

In Figure 27, the retraction dead-band 2720 is aligned with (e.g., centered on) the retraction axis/direction 2515 such that any in-plane motion is discarded. Movement during the retraction segment 2503 that is within the retraction dead-band 2720 will not be associated with user interface contact, e.g., will not continue to affect the drag response. However, if the movement exits the retraction dead-band 2720, it may resume being treated as movement associated with user interface contact. The retraction dead-band 2720 may be configured to timeout after a threshold amount of time.

**Figures 28-29** illustrate a dynamic break volume. Such a break volume may be particularly useful with respect to swipe type input. Swipes tend to be faster than drag interactions and have more arc. When swiping, a user may expect to preserve the motion/velocity at the point in time/space when the perceive that UI contact is broken. For example, the user may swipe and expect the swipe to initiate a scroll that continues after UI contact is broken based on the speed of movement when the UI content ends. However, this perceived break may not coincide precisely with the actual break of contact from the user interface. Some implementations disclosed herein utilize a dynamic break volume to, among other things, preserve the user's intentional swipe momentum, e.g., by breaking early before motion is lost from an arc or retraction.

Figure 28 illustrates a user movement 2802 (of user 2810) relative to a user interface 2805. A break volume 2815 is generated and used to determine when to break the swipe motion, i.e., discontinue associating the movement 2802 with user interface contact. The break volume 2815 may be adjusted in shape or position over time, for example, based on the current position of the user 2810 or a position (e.g., a lag position) determined based on the current position of the user 2810. In this example, an axis 2830 of the break volume 2815 is aligned with a target axis (e.g., the z axis of a user interface 2805 based on a current lag position 2812). The current lag position 2812 may be determined based on the current user position 2813, e.g., based on lag parameters e.g., a predetermined lag period, lag distance, etc. In this example, the break volume 2815 is a centroid C_{xy} that tracks a lag (e.g., index_{lag} 2820 associated with an index fingertip position). The break volume 2815 may be configured to change shape, position, and/or orientation based the movement 2802 and/or during the movement 2802. The break volume 2815 may expand and contract in an umbrella-like way remaining symmetrical about the axis 2830 while potentially shifting laterally relative to the user interface (e.g., shifting down in Figure 28. The break volume 2815 may be shifted based on retraction confidence, and/or be increased in slope based on piercing direction depth 2825 (e.g., tracking index_{lag} 2820).

In some implementations, a break volume 2815 is not symmetrical, e.g., not symmetrical about axis 2830. For example, a break volume 2815 may include only a lower portion below the axis 2830. In some implementations, a break volume 2815 is symmetrical about an axis that is not perpendicular/orthogonal to user interface 2805. For example, a break volume may be symmetrical about an axis that is at a predetermined angle relative the user interface, where the predetermined angle is determined based on user-specific characteristics, e.g., the user's typical motion path characteristics when making a gesture of a given type.

In an alternative implementation, break volume 2815 is determined based on a predicted path, e.g., based trajectory, speed, or other characteristics of a user motion. For example, the break volume 2815 may be determined based on a predicted path that is predicted when a gesture is initially recognized, e.g., as a swipe gesture, and associated with speed, direction, path or other motion characteristics. In some implementations, based on one or more points along a predicted path, a break volume 2815 may be configured with respect to shape and position. In some implementations, a break volume is determined and/or adjusted over time during the course of a user motion based on both a current user position and a predicted user path.

Figure 29 illustrates a different user movement 2902 (of user 2910) relative to a user interface 2905. A break volume 2915 is generated and dynamically altered during the movement 2902. The break volume 2915 is used to determine when to break the swipe motion, i.e., discontinue associating the movement 902 with user interface contact. In this example, an axis 2930 of the break volume 2915 is aligned with a target axis (e.g., the z axis of a user interface 2905 based on a current lag position). In this example, the break volume 2915 is a centroid C_{xy} that tracks a lag (e.g., index_{lag} 2920 associated with an index finger tip position). The break volume 915 may be configured to change shape, position, and/or orientation based the movement 902 and/or during the movement 2902. The break volume 2915 may expand and contract in an umbrella-like way, shifting based on retraction confidence and/or increasing in slope based on piercing direction depth 2925 (e.g., tracking index_{lag} 2920).

Figures 28 and 29 illustrate how different movements 2802, 2902 can be interpreted using different dynamic break volumes 2815, 2915. Based on the different movements 2802, 2902 illustrated in Figures 28 and 29, the respective dynamic break volumes 2815, 2915 have different shapes, sizes, and positions. Moreover, during a given movement, the location, shape, and/or orientation of a given break volume is dynamically adjusted to correspond to the current state of the movement. The position of the break volume moves to adapt to the user's current position, depth, and movement path. Using dynamic (context-specific) break volumes may enable a device to better determine break events in different circumstances and ultimately to interpret user movement more consistently with user expectations than when using a fixed (one-size-fits-all break volume).

The shape of the break volumes 2815, 2915 may be determined using parameters that allow the break volume to be customized for a particular implementation. Such parameters may include: β (slope sensitivity) corresponding to how sensitive the slope is to changes piercing depth; and α (piercing depth scalar) corresponding to how much the break/volume centroid can shift. These parameters may be used to determine the characteristics of the centroid of the break volumes 2815, 2915. For example, length *D*₀ 2860, 2960 may be determined based on the lag 2820, 2920 and the piercing depth scalar: e.g., *D*₀ = index_{lag} * α. The slope θ 2850, 2950 may be determined based on the length *D*₀ 2860, 2960 and the slope sensitivity: e.g., θ = 90 - atan2(*D*₀,β). The axis C_{z} 2830, 2930 of the break volume 2815, 2915 may be determined based on the retraction confidence r_{c} (e.g., determined via techniques disclosed herein) and piercing depth 2825, 2925: e.g., C_{z} = map(|r_{c}|, depth). The positioning of the break volume 2815, 2915 with respect to the other dimensions (e.g., x/y) may depend upon the lag position, e.g., index_{lag(xy)}: e.g., C_{xy} = index_{lag(xy)}.

**Figures 30-31** illustrate a trajectory correction based on the movement 2802 of Figure 28. Natural arcing (e.g., during a swipe) may cause lost motion on break, which may result in UI issues such as "effortful" scrolls. Some implementations preserve intentional swipe velocity on break without introducing noticeable hooks of changes in velocity. Some implementations dampen aggressive hooking that was not broken early via other techniques, e.g., not broken early based on a drag retraction detection.

Figures 30-31 illustrate determining a corrected trajectory 3020 to associate with the movement 2802 rather than the instantaneous trajectory 3120. In this example, a lag (i.e., index lag direction (*ĥ*)) is used to determine the corrected trajectory 3020. The index lag direction may be determined based on the current index position and a prior index position (e.g., the prior frame's position): e.g., *ĥ* = norm(index_{gt} - index_{lag}). A position difference (Δ pos) may be determined based on the current index position and the prior index position: e.g., Δ pos = index_{gt} - indexₚᵣₑᵥ. If the segment of the movement has not yet been classified as a drag, the device may predict whether the next frame's Δ (e.g., at position 3103) will be outside of the break volume 2815. If so, the device makes this frame's positional Δ in line with the direction *ĥ*, e.g., it corrects the trajectory if the movement is predicted to leave the break volume 2815 in the next frame. This technique may suppress some "kick-back" of hooks of failed swipes and should not impact failed drags.

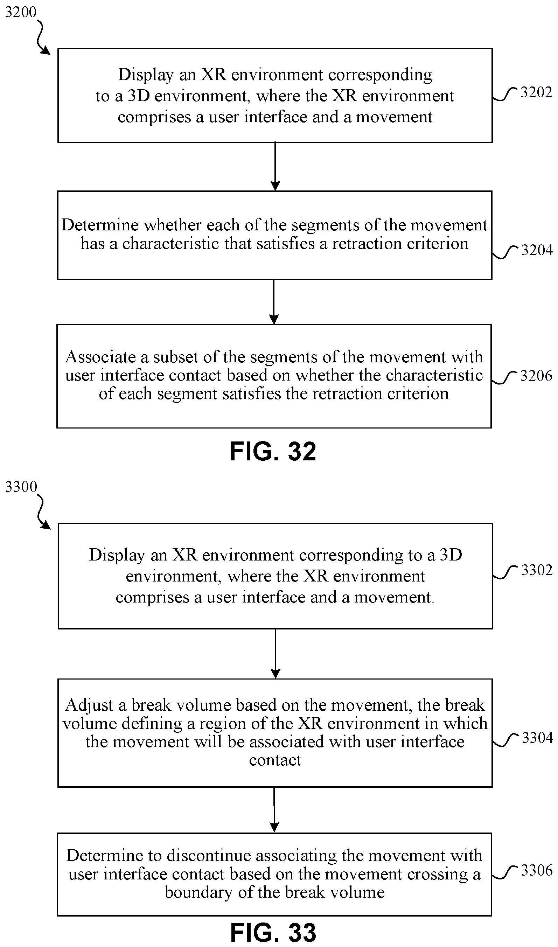

**Figure 32** is a flowchart illustrating a method 3200 for determining which segments of a movement to associate with user interface content based on characteristics of the movement. In some implementations, a device such as electronic device 110 or electronic device 105 performs method 3200. In some implementations, method 3200 is performed on a mobile device, desktop, laptop, HMD, or server device. The method 3200 is performed by processing logic, including hardware, firmware, software, or a combination thereof. In some implementations, the method 3200 is performed on a processor executing code stored in a non-transitory computer-readable medium (e.g., a memory).

At block 3202, the method 3200 displays an XR environment corresponding to a 3D environment, where the XR environment comprises a user interface and a movement. The movement comprising segments.

At block 3204, the method 3200 determines an occurrence of an event (e.g., a make contact event) associated with contact with the user interface in the XR environment, e.g., based on determining that contact with the UI occurred, was intended to occur, or was perceived by the user. This may involve determining when the user has pierced the user interface. This may involve indicating that a direct touch gesture is in effect, an input criterion (e.g., drag and/or swipe criterion) has been satisfied, and that the movement is being tracked with respect to being input to the user interface.

At block 3206, the method 3200 determines whether each of the segments of the movement has a characteristic that satisfies a drag retraction criterion. The drag retraction criterion is configured to distinguish retraction motion following a drag from another type of motion. The device may use one or more sensors to track a portion of the user (e.g., the user's hands, finger, finger-tip, index finger-tip, etc.). As examples, the characteristic may be, but is not limited to being, (a) a measure of alignment between the movement direction during the respective segment and a retraction direction (b) a measure how quickly movement direction changes and/or (c) whether the user (e.g., hand/finger) has stopped moving. Figures 23, 25, and 26 illustrate characteristics that may be used to assess whether a segment satisfies a drag retraction criterion.

In some implementations, the characteristic comprises a drag retraction confidence determined based on alignment between a direction of the movement during a respective segment and a retraction direction. The retraction direction is a direction from a portion of the user being used for interaction (e.g., finger, hand, etc.) to a head a central portion of the user (e.g., head, torso, etc.). The drag retraction criterion may be whether the drag retraction confidence exceeds a threshold.

In some implementations, the drag retraction criterion is whether a change in the drag retraction confidence exceeds a threshold (e.g., a kink threshold). A rapid change in the drag retraction confidence may correspond to a rapid change in movement direction relative to a retraction axis, which may be indicative that the intended motion of the user touching the user interface has concluded. Similarly, the drag retraction criterion may comprise whether a portion of the user has stopped moving (e.g., is currently moving at a rate below a threshold speed 0.1 m/s). Stopping may be indicative that the intended motion of the user touching the user interface has concluded or that the user has or is about to begin a retraction.

At block 3208, the method 3200 associates a subset (e.g., one, some, or all) of the segments of the movement with user interface contact based on whether the characteristic of each of the segments satisfies the drag retraction criterion. In some implementations, the association of select segments is achieved by implementing a drag retraction dead-band such that movement occurring during the retraction (because such movement is within the drag retraction dead-band) is not recognized as user interface contact motion. Figure 7 illustrates an exemplary drag retraction deadband.

**Figure 33** is a flowchart illustrating a method 3300 for interpreting a movement using a dynamic break volume. In some implementations, a device such as electronic device 110 or electronic device 105 performs method 3300. In some implementations, method 3300 is performed on a mobile device, desktop, laptop, HMD, or server device. The method 3300 is performed by processing logic, including hardware, firmware, software, or a combination thereof. In some implementations, the method 3300 is performed on a processor executing code stored in a non-transitory computer-readable medium (e.g., a memory).

At block 3302, the method 3300 displays an XR environment corresponding to a 3D) environment, where the XR environment comprises a user interface and a movement.

At block 3304, the method 3300 determines an occurrence of an event (e.g., a make contact event) associated with contact with the user interface in the XR environment, e.g., based on determining that contact with the UI occurred, was intended to occur, or was perceived by the user. This may involve determining when the user has pierced the user interface. This may involve indicating that a direct touch gesture is in effect, an input criterion (e.g., drag and/or swipe criterion) has been satisfied, and that the movement is being tracked with respect to being input to the user interface.

At block 3306, the method 3300 adjusts a break volume based on the movement, the break volume defining a region of the XR environment in which the movement will be associated with user interface contact. Adjusting the break volume may involve shifting the break volume based on a retraction confidence, where the retraction confidence is based on alignment between a direction of the movement and a retraction direction. The retraction direction may be a direction from a portion of the user used for interaction (e.g., hand, finger, etc.) to a central portion of the user (e.g., head, torso, etc.). Adjusting the break volume may involve adjusting a slope of the break volume based on a piercing depth of the movement. Examples of adjusting a break volume are illustrated in Figures 28-29.

At block 3308, the method 3300 determines to discontinue associating the movement with user interface contact (e.g., determine that a break event has occurred) based on the movement crossing a boundary of the break volume.

In some implementations, a trajectory correction is provided. For example, this may involve adjusting a velocity associated with a first time (e.g., correcting trajectory direction of the current frame) based on determining that the movement will cross outside the boundary of the break volume at the subsequent time (e.g., next frame). The velocity associated with the first time may be adjusted based on a velocity of a prior time. Examples of trajectory correction are provided in Figures 30-31.

### User Interface Response Based on Gaze-Holding Event Assessment

Various implementations disclosed herein include devices, systems, and methods that assess user interactions to trigger user interface responses. In some implementations, a user interface response is triggered based on identifying a gaze-holding event (i.e., a fixation-like gaze event that is not associated with saccadic behavior). Only gaze-holding events (and thus not saccade-related behaviors in the gaze data) (or acceptable portions thereof) may be used to trigger user interface responses. Using gaze-holding events to trigger user interface behavior may be advantageous, for example, because gaze directions during gaze-holding events may be more likely to correspond to a user perceiving what they are seeing and/or intentionally looking at something.

Using gaze-holding events can facilitate accurate gaze-based hover responses, e.g., the user interface may be enabled to highlight a user interface icon when a user intentionally looks at the icon (e.g., similar to a mouse-hover response on a mouse-based user interface), while not highlighting the icon when the user's gaze happens to move over the icon while the user is glancing around within the user interface. Similarly, using gaze-holding events can facilitate accurate gesture-to-gaze association-based input responses. In one example, this involves associating single hand gestures, such as a pinches, gestures spreading of all five fingers on one hand, or multi-finger swipe gestures, with users intentional gazing at UI objects, while not associating such activities with objects that happen to be gazed upon during saccade-related or other unintentional behaviors. In another example, this involves associating multi-hand gestures, such as both hands pinching at the same time or the hands moving away from one another, with users intentionally gazing at UI objects, while not associating such activities with objects that happen to be gazed upon during saccade-related or other unintentional behaviors. In another example, this involves associating head movement, such as nodding, shaking, or tilting or the head, with users intentionally gazing at UI objects, while not associating such activities with objects that the happen to be gazed upon during saccade-related or other unintentional behavior. In some implementations, a gaze is associated with one or more of a hand gesture, head gesture, torso-based gesture, arm gesture, leg gesture, or whole-body movement, e.g., associating a gaze with a combined hand/head gesture. A gaze may additionally, or alternatively, be associated with input provided via a physical device, such as a keyboard, mouse, hand-held controller, watch, etc.

In some implementations, gaze holding events are used to associate a non-eye-based user activity, such as a hand or head gesture, with an eye-based activity, such as the user gazing at a particular user interface component displayed within a view of a 3D environment. For example, a user's pinching hand gesture may be associated with the user gazing at a particular user interface component, such as a button, at around the same time as the pinching hand gesture is made. These associated behaviors (e.g., the pinch and the gaze at the button) may then be interpreted as user input, e.g., user input selecting or otherwise acting upon that user interface component. In some implementations, non-eye-based user activity is only associated with certain types of eye-based user activity that are likely to correspond to a user perceiving what they are seeing and/or intentionally looking at something. For example, it may be desirable to associate a user hand gesture with gaze-holding events corresponding to intentional/perceptive user activity. Gaze-holding events occur while a gaze holds on an object while the head is static or moving. It may be undesirable to associate a user hand gesture with a saccadic eye event that may occur reflexively rather than based on a user perceiving what they see or intentionally looking at something.

Gaze data may be examined or interpreted to identify gaze-holding events (e.g., non-saccadic eye events). The non-eye-based user activity may then be associated with one of those events, rather than being associated with a reflexive, saccadic eye event. During a saccadic event, for example, a user may look away from the user interface element that they intend to interact with for a brief period. Some implementations, ensure that non-eye-based activity (e.g., a user's hand gesture) is not associated with a saccadic event or other gaze event during which the user's gaze does not accurately correspond to the user interface or other content with which the user intends to interact.

In some implementations, eye gaze data (e.g., eye velocity data, eye acceleration data, change is gaze pose, etc.) is used to identify a subset of gaze events that only includes gaze-holding events and that excludes reflexive, saccadic events, blinks, and other eye behavior that does not correspond to a user perceiving what they are seeing and/or intentionally looking at something. Excluding saccadic events, blinks, and other eye behavior that does not correspond to a user perceiving what they are seeing and/or intentionally looking at something may improve the accuracy and/or efficiency of a system that attempts to accurately associate non-eye-based user activity with intentional user gazing, i.e., intentionally gazing at a user interface component for the purpose of providing user input corresponding to that user interface component. Thus, in some implementations, user non-eye-based activities, such as hand gestures, are only associated with gaze-holding events based on the events being more likely than non-gaze-holding events to correspond to a user perceiving what they are seeing and/or intentionally looking at something.

In some implementations, a processor performs a method by executing instructions stored on a computer readable medium. The method obtains gaze motion classification data that was generated based on sensor data of an eye captured by the one or more sensors. The gaze motion classification data distinguishes gaze periods associated with gaze holding events (e.g., intentional fixations on user interface targets) from gaze periods associated with non-gaze-holding events (e.g., gaze shifting events, blink/loss events, etc.). The gaze motion classification data may be provided by a simple gaze motion classifier, e.g., a heuristic algorithm that assesses only gaze velocity, or a more complex algorithm or machine learning model that uses more than gaze velocity. Using the gaze motion classification data may facilitate triggering user interface responses only in appropriate circumstances, e.g., only based on fixations on intentional fixations on user interface targets and not based on unintentional gaze motion (e.g., saccades, blinks, etc.). In some implementations, gaze classification output (e.g., identifying gaze-holding events) is assessed to lock gaze during saccade, loss, and fast fixations and/or stabilize the gaze during fixation.

The method may use gaze classification data that is generated based on a gaze velocity at multiple times. The gaze data may be obtained based on sensor data of an eye captured by the sensor. For example, the gaze data may be based on a signal of live gaze velocity data obtained based on a stream of live images of the eye captured by an inward facing camera of a head-mounted device.

The gaze-holding events may be identified based on the gaze velocity. Saccadic gaze events, blinks, and/or other eye events unlikely to correspond to a user perceiving what they are seeing and/or intentionally looking at something may be excluded from the identified gaze-holding events.

The method detects a user activity and triggers a user interface response based on the user activity and the gaze motion classification data. The method may trigger a user interface response based on determining that a gaze-holding event of the gaze-holding events corresponds to a user interface element. For example, based on a gaze-holding event having a gaze direction directed at a particular user interface icon, the method may trigger a hover-type response by the user interface, e.g., highlighting that icon as a "hovered" or "in focus" element of the user interface. In some implementations, the user activity is a gaze in a gaze direction occurring during a gaze-holding event and the user interface response comprises providing an indication of user attention to the user interface element based on determining that the gaze-holding event corresponds to the user interface element.

In some implementations, the user activity is a gesture or input device interaction distinct from the gaze, the gaze-holding event is associated with the user activity, and the user interface response is triggered based on associating the user activity with the user interface element. For example, based on a gaze holding event being directed at a particular user interface icon and an occurrence of a user activity (e.g., a pinch gesture) that is associated with the gaze holding event, the method may trigger a selection-type response by the user interface, e.g., triggering a selection or "clicked on" action on the user interface icon.

The method may detect that user activity has occurred, where the activity is distinct from the gaze-holding events, e.g., is a non-eye-based eye activity such as a pinch or other hand gesture. Examples of activity distinct from the gaze-holding events include activities that are separate from the eye, including, but not limited to, single hand gestures, multi-hand gestures, head movements, torso movements, movements of arms or legs, whole body movements, and/or interactions with other devices.

The method may associate a gaze-holding event with the activity. Accordingly, in various implementations, a gaze-holding event is associated with one or more of a gesture made by a single hand, a gesture that involve one or more fingers, a gesture made by multiple hands, a gesture made by a head, a gesture made by hand and head positions/movements made at approximately the same time, and/or inputs to a device such as a controller, input device, wearable device, or hand-held device.

In some implementations, the method determines that a gaze-holding (e.g., non-saccadic) event occurred during/simultaneous with the activity (e.g., pinch) and, based on this determination, associates the gaze-holding event with the activity. Thus, a pinch that occurs while a user's gaze is fixed on the center of a button is associated with that gaze and thus that button. In some implementations, the method determines that a gaze-holding (e.g., non-saccadic) event did not occur during/simultaneous with the activity (e.g., pinch) and determines whether the activity is a valid late activity (e.g., a valid late pinch). This may be based on determining whether the late activity occurred within a threshold time of a prior gaze-holding (e.g., non-saccadic) event and, if so, associating the activity with that prior gaze-holding event. In some implementations, if no gaze-holding (e.g., non-saccadic) event occurs during/simultaneous with the activity or prior within the time threshold, then the method waits to see if a gaze-holding occurs within an upcoming time period. If a new gaze-holding does occur within such a period (e.g., within a threshold time), then the method may associate the activity with that new gaze-holding. In these examples, a non-eye-based activity such, as a pinch, that occurs during a saccade is not associated with the saccade (which is not a gaze-holding event). Instead, the non-eye-based activity, such as a pinch, may be associated with a prior or upcoming non-saccadic gaze-holding event. The associating of a non-eye-based activity with a gaze-holding event may identify an object associated with the event, such as a user interface target at which the gaze of the identified gaze-holding event is directed. Thus, the user's non-eye-based activity (e.g., pinch) can be associated with user interface components and other objects. In some implementations, content is presented to appear with in a 3D environment such as an extended reality (XR) environment, and the techniques disclosed herein are used to identify user interactions with user interface and/or other content within that 3D environment.

In some implementations, the user interface response is based on user activity (e.g., a large saccade), where the response ignores / does not use a gaze-holding event that follows the large saccade event. In one example, the user activity is a saccadic event having a characteristic that exceeds a threshold and the user interface response is based on excluding a potential gaze holding event or a portion of a gaze holding event occurring during a time period following the saccadic event. In some implementations, identifying a gaze-holding events comprises excluding a potential gaze holding event or a portion of gaze holding event occurring during a time period following a saccadic event in the velocity data, wherein potential gaze holding event is excluded based on: (a) an amplitude representing velocity change during saccadic event; (b) a rate of change of velocity during the saccadic event; (c) a duration of the potential gaze holding event; (d) or gaze travel distance.

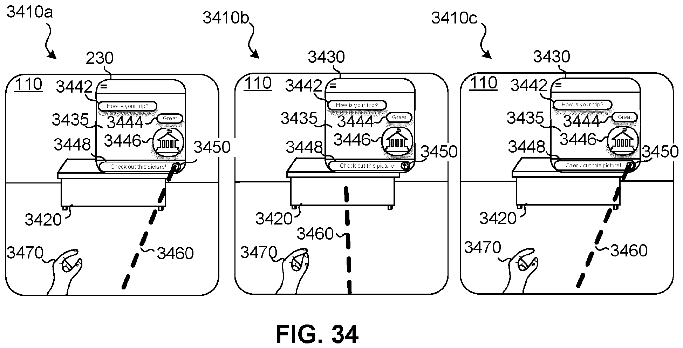

**Figure 34** illustrates the user 102 making a pinching hand gesture while changing gaze direction relative to content presented in views 3410a-c of an XR environment provided by the device 110 (or device 105) of Figure 1. The views 3410a-c include an exemplary user interface 3430 of an application and a depiction 3420 of the table 120. Providing such a view may involve determining 3D attributes of the physical environment 100 and positioning virtual content, e.g., user interface 3430, in a 3D coordinate system corresponding to that physical environment 100.

In the example of Figure 34, the user interface 3430 include various content items, including a background portion 3435, message bubble portions, 3442, 3444, 3446, and a new message entry portion 3448 with button 3450. The message bubble portions 3442, 3444, 3446 may be displayed on the flat user interface 3430 with 3D effects in the view provided by device 110. The user interface 3430 may be a user interface of a text messaging application, as illustrated in this example. The user interface 3430 is simplified for purposes of illustration and user interfaces in practice may include any degree of complexity, any number of content items, and/or combinations of 2D and/or 3D content. The user interface 3430 may be provided by operating systems and/or applications of various types including, but not limited to, messaging applications, web browser applications, content viewing applications, content creation and editing applications, or any other applications that can display, present, or otherwise use visual and/or audio content.

In this example, the user interface 3430 is provided in a way that combines 2D flat portions and 3D effects to provide functional and aesthetic benefits. In this example, the background portion 3435 of the user interface 3430 is flat. In this example, the background portion 3435 includes all aspects of the user interface 3430 being displayed except for the message bubbles 3442, 3444, 3446 and new message entry portion 3448 with button 3450. Displaying a background portion of a user interface of an operating system or application as a flat surface may provide various advantages. Doing so may provide an easy to understand or otherwise use portion of an XR environment for accessing the user interface of the application. In some implementations, multiple user interfaces (e.g., corresponding to multiple, different applications) are presented sequentially and/or simultaneously within an XR environment using flat background portions.

In some implementations, the positions and/or orientations of such one or more user interfaces are determined to facilitate visibility and/or use. The one or more user interfaces may be at fixed positions and orientations within the 3D environment. In such cases, user movements would not affect the position or orientation of the user interfaces within the 3D environment.

In other implementations, the one or more user interfaces may be body-locked content, e.g., having a distance and orientation offset relative to a portion of the user's body (e.g., their torso). For example, the body-locked content of a user interface could be 2 meters away and 45 degrees to the left of the user's torso's forward-facing vector. If the user's head turns while the torso remains static, a body-locked user interface would appear to remain stationary in the 3D environment at 2m away and 45 degrees to the left of the torso's front facing vector. However, if the user does rotate their torso (e.g., by spinning around in their chair), the body-locked user interface would follow the torso rotation and be repositioned within the 3D environment such that it is still 2m away and 45 degrees to the left of their torso's new forward-facing vector.

In other implementations, user interface content is defined at a specific distance from the user with the orientation relative to the user remaining static (e.g., if initially displayed in a cardinal direction, it will remain in that cardinal direction regardless of any head or body movement). In this example, the orientation of the body-locked content would not be referenced to any part of the user's body. In this different implementation, the body-locked user interface would not reposition itself in accordance with the torso rotation. For example, body-locked user interface may be defined to be 2m away and, based on the direction the user is currently facing, may be initially displayed north of the user. If the user rotates their torso 180 degrees to face south, the body-locked user interface would remain 2m away to the north of the user, which is now directly behind the user.

A body-locked user interface could also be configured to always remain gravity or horizon aligned, such that head and/or body changes in the roll orientation would not cause the body-locked user interface to move within the 3D environment. Translational movement would cause the body-locked content to be repositioned within the 3D environment in order to maintain the distance offset.

The views 3410a-c illustrate the user's gaze 3460 and hand 3470 gesturing occurring at successive points in time, e.g., view 3410a corresponds to a first instant in time, view 3410b corresponds to a second instant in time after the first instant in time, and view 3410c corresponds to a third instant in time after the second instant in time. In this example, during the period of time from the first instant in time to the third instant in time, the user intends to provide user input selecting button 3450 by gazing at the button 3450 (i.e., directing their gaze direction 3460 at button 3450) while simultaneously making a pinching gesture with hand 3470. The user understands that this type of input (e.g., simultaneously gazing at a user interface object such as button 3450 while making a pinching hand gesture) will be interpreted as input corresponding to the gazed at user interface object.

However, while attempting to do so, in this example, the user 102 experiences an involuntary saccade, looking away from the button 3450 at the second instant in time when the pinch occurs. Thus, at the first instant in time illustrated in view 3410a, the user 102 has not yet pinched and is gazing at the button 3450. At the second instant in time illustrated in view 3410b, the user 102 has pinched hand 3470 but the involuntary, reflexive saccade occurs and thus the gaze 3460 is directed at the depiction 3420 of the desk 120 rather than at the button 3450. This gaze direction does not correspond to the user's intent or what the user is perceiving. At the third instant in time illustrated in view 3410c, the user 102 is no longer pinching hand 3470 and the saccade has ended with the gaze 3460 returning to the object, e.g., button 3450.

Some implementations disclosed herein assess user gaze data, e.g., gaze velocity, to identify types of eye events that should be associated with non-eye-based activity versus types of eye events that should not be associated with non-eye-based activity. Some implementations, attempt to distinguish gaze-holding events (i.e., eye gaze events associated with a user intentionally gazing at an object and/or perceiving what they are seeing) from other gaze events (e.g., saccades, blinks, etc.) in which the user in not intentionally gazing at an object and/or perceiving what they are seeing.

In the example of Figure 34, the user's gaze data, e.g., gaze velocity data, may be assessed to determine that at the second instant in time (illustrated in view 210b) while the pinch occurs there is no gaze-holding event, e.g., the gaze event that occurs at the second instant in time is instead a saccadic gaze event.

Based on determining that the pinch did not occur during/simultaneously with a gaze-holding event, the device 110 may attempt to associate the pinch with a prior or future gaze-holding event. For example, the device 110 may determine that the pinch (at the second instant in time illustrated in view 3410b) occurred within a predetermined threshold amount of time following an identified gaze-holding event (e.g., occurring at the first instant in time illustrated in view 3410a). For example, the threshold may be a 1ms, 2 ms, 10 ms, 50ms, etc. If the first instant in time (illustrated in view 3410a) and the second instant in time (illustrated in view 3410b) occurred within 1ms, 2ms, 10, ms, etc. of one another, then the pinch occurring at the second instant in time (illustrated in view 3410b) is associated with the gaze-holding event (i.e., the user 102 gaze direction being directed to button 3450) at the first instant in time (illustrated in view 3410a).

If, on the other hand, the first instant in time (illustrated in view 3410a) and the second instant in time (illustrated in view 3410b) do not occur within the threshold (e.g., 1ms, 2ms, 10, ms, etc.) of one another, than the pinch occurring at the second instant in time (illustrated in view 3410b) is not associated with the gaze-holding event that occurred at the first instant in time (illustrated in view 3410a). If no prior gaze-holding event occurred within the threshold amount of time, then the device 110 may wait as new gaze data is received and assess such data to determine if a new gaze event occurs following the pinch that occurred at the second instant in time (illustrated in view 3410b). For example, the device 110 may determine that the pinch (at the second instant in time illustrated in view 3410b) occurred within a predetermined threshold amount of time before an identified gaze-holding event (e.g., occurring at the third instant in time illustrated in view 3410c). For example, the threshold may be a 1ms, 2 ms, 10 ms, 50ms, etc. If the third instant in time (illustrated in view 3410c) and the second instant in time (illustrated in view 3410b) occurred within 1ms, 2ms, 10, ms, etc. of one another, then the pinch occurring at the second instant in time (illustrated in view 3410b) is associated with the gaze-holding event (i.e., the user 102 gaze direction being directed to button 3450) at the third instant in time (illustrated in view 3410c). The threshold amounts of time used to assess prior gaze-holding events or wait for new gaze-holding events may be the same or may be different from one another.

If no new gaze-holding event occurs within the threshold amount of time, then the device 110 may determine that the pinch occurring at that second instant in time (illustrated in view 3410b) should not be associated with any gaze events. In other words, if no valid gaze-holding event occurs in a window of time before and after a given non-eye-based user activity, the device 110 may determine to not associate that activity with any eye-based activity. The non-gaze-based activity (e.g., a pinch) may still be interpreted as input, but will not be associated with a gaze event / direction. In some implementations, a given input type (e.g., a pinch) is interpreted a first way when associated with an eye-based event and another way when not associated with an eye-based event. In some implementations, a non-eye-based activity, such a pinch, is not treated as input unless associated with a gaze event. In some implementations, device 110 presents visual or audible output asking the user 102 for clarification or further input when a non-eye-based activity cannot be associated with a valid gaze-holding event / user interface object.

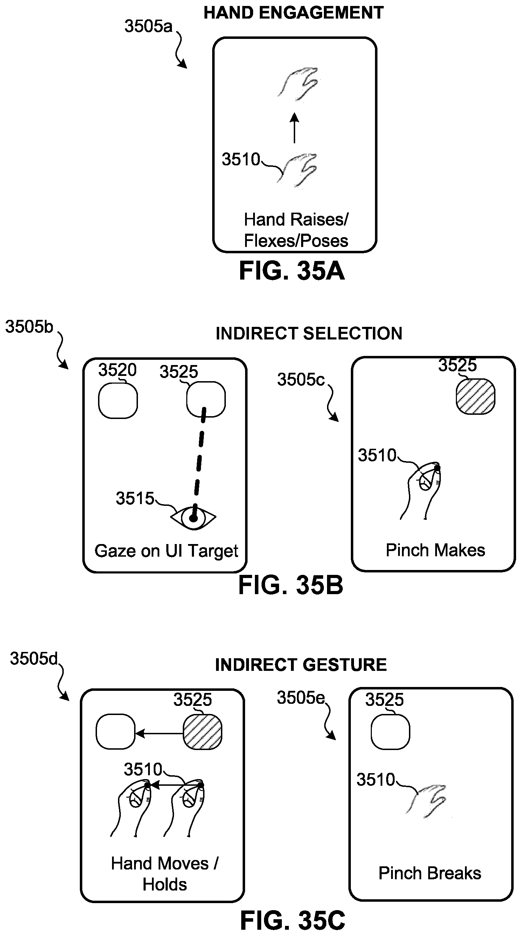

**Figures 35A, 35B, and 35C** illustrate hand engagement, indirect selection, and indirect gestures based on hand and gaze.

In Figure 35A, illustration 3505a illustrates a hand engagement user input in which a user provides input by simply raising/moving hand 3510. In this example, the hand engagement user input is treated as input without requiring and/or using any associated gaze or other eye data.

Such hand gestures may be recognized by a device using one or more sensors of various types. For example, an image sensor may capture a sequence of images that may be interpreted to identify an object (e.g., hand) and its movement path, configuration (e.g., whether fingers are touching/pinching or not), etc.

In Figure 35B, illustrations 3505b-c illustrate an indirect selection. Illustration 3505b illustrates a user eye 3515 gazing at a user interface object 3525, which is one of two user interface objects 3520, 3525 that are visible to the user in this example. In illustration 3505c, the user makes a pinch gesture with hand 3510 to identify the user interface object 3525. The user interface object 3525 is identified based on the pinch being associated with the gaze at that user interface object 3525 as shown in illustration 3505b. The association of the pinch of illustration 305c with the gaze (and its associated user interface object) of illustration 3505b can be based on various association criteria. For example, the pinch and gaze/UI object may be associated based on the pinch and gaze occurring at the same time. In another example, the pinch and gaze/UI object may be associated based on the gaze occurring within a predetermined threshold amount of time prior to or after the pinch.

In the example of Figure 35B, user interface object 3525 is graphically changed (e.g., with highlighting, a different color, etc.) to illustrate that the object was selected based on the indirect selection input recognized based on the user's gaze. In other words, the selected user interface object 3525 is identified as having been selected based on a change to its appearance. In some implementations, a gaze holding event is used to trigger a user interface response that is analogous to a traditional mouse-based hover user interface response. In some implementations, gaze direction alone (i.e., prior to or without a pinch being received) to trigger a user interface response. A gaze holding event may be identified and used to trigger such a user interface response. For example, a gaze holding event may be recognized, the user interface target at which the gaze is directed (e.g., user interface element 3525) may be identified based on the gaze direction during the gaze holding event, and the user interface modified with a response corresponding to recognizing that the user is intentionally looking at that user interface target, e.g., by highlighting user interface element 3525.

The user's gaze may additionally, or alternatively, be associated with a gesture as illustrated in Figure 35B. In some implementations, a gaze holding event is used to trigger a user interface response that is analogous to a traditional mouse-based click/selection user interface response. In some implementations, gaze direction along with a user gesture is used to trigger a user interface response. A gaze holding event may be identified, associated with the user gesture, and the combined gaze-gesture input combination used to trigger such a user interface response. For example, a gaze holding event may be recognized, a gesture may associated with that gaze holding event (e.g., based on occurring at or around the same time), the user interface target at which the gaze is directed (e.g., user interface element 3525) may be identified based on the gaze direction during the gaze holding event, and the user interface modified with a response corresponding to recognizing that the user is intentionally looking at that user interface target at (or around) the time the user provides the gesture, e.g., by triggering a selection of the user interface element 3525 and/or a change in the appearance of user interface element 3525, etc.

The eye and hand activities of Figure 35B can be detected based on one or more sensors. For example, eye activity may be detected based on an inward facing camera of a head mounted device (HMD) while the hand activity may be detected based on an outward facing camera on the HMD.

In Figure 35C, illustrations 3505d-e illustrate an indirect gesture. Illustration 3505d shows a hand gesture in which the user moves the hand 3510 left while pinching, i.e., the pinch / touching fingers are maintained during the pinch. In this example, the pinch illustrated in illustration 3505c is maintained as illustrated in illustration 3505d. In other words, as the pinch is made (i.e., the fingers come together and touch), the pinch based on that instant in time is associated with a user interface element 3525, which is selected based on that pinch and gaze association (shown in Figure 35B), and the continuing/ongoing pinch in which the finger and thumb remain touching is then interpreted as additional input as illustrated in illustration 3505d of Figure 35C. In illustration 3505d, the hand engagement user input is treated as input without requiring and/or using any associated gaze or other eye data. The input is simply the movement of hand 3510 in a leftward direction.

Based on this activity, the selected user interface object 3525 is moved. In this example, the direction and distance that the selected user interface object moves is based on the direction and distance that the hand moves. In some implementations, the direction of user interface object movement is constrained to a direction on a defined 2D plane, e.g., a direction on the 2D plane upon which user interface elements are displayed such as on a virtual screen a few feet in front of the user. For example, the direction of the UI object movement may be constrained to a direction that most closely corresponds to the 3D direction of the hand's movement. In some implementations, the amount of movement / distance is scaled, e.g., 1 inch of hand movement corresponds to 2 inches of UI object movement, 4 inches of UI object movement, 1 foot of UI object movement, etc.

In illustration 3505e, the user breaks the pinch that was made in illustration 3505d and maintained during the movement of illustration 3505d. In illustration 3505e, the hand engagement user input (breaking the pinch) is treated as input without requiring and/or using any associated gaze or other eye data. The input is simply the separation of the fingers that had been pinched together. In this example, the pinch break of illustration 3505e is interpreted to end the movement of the UI object 3525, i.e., the UI object 3525 stops moving based on the movement of the hand once the pinch is broken.

The hand gestures of illustrations 3505d-e may be recognized by a device using one or more sensors of various types. For example, an image sensor may capture a sequence of images that may be interpreted to identify an object (e.g., hand) and its movement path, configuration (e.g., when fingers touch/pinch, when fingers stop touching/pinching), etc.

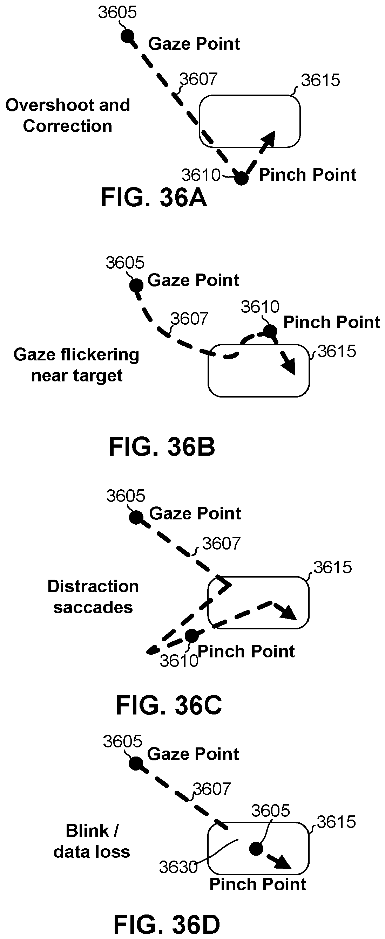

**Figures 36A, 36B, 36C, and 36D** illustrate various anomalies associated with a user's gaze direction relative to a user interface element. In Figure 36A, a gaze direction changes from gaze point 3605 along path 3607 relative to a user interface object 3615 with which the user intends to interact (i.e., to pinch while gazing as pinch-plus-gaze input). In this example, the user's gaze overshoots the user interface object 3615 such that the pinch occurs at pinch point 3610, while the user's gaze is outside of the user interface object 3615.

In Figure 36B, the gaze direction changes from gaze point 3605 along path 3607 relative to a user interface object 3615 with which the user intends to interact (i.e., to pinch while gazing as pinch-plus-gaze input). In this example, the user's gaze flickers near the target user interface object 3615 such that the pinch occurs at pinch point 3610, while the user's gaze is outside of the user interface object 3615.

In Figure 36C, the gaze direction changes from gaze point 3605 along path 3607 relative to a user interface object 3615 with which the user intends to interact (i.e., to pinch while gazing as pinch-plus-gaze input). In this example, the user's gaze is subject to a saccade such that the pinch occurs at pinch point 3610, while the user's gaze is outside of the user interface object 3615.

In Figure 36D, the gaze direction changes from gaze point 3605 along path 3607 relative to a user interface object 3615 with which the user intends to interact (i.e., to pinch while gazing as pinch-plus-gaze input). In this example, a blink / data loss gaze event occurs such that the pinch occurs at pinch point 3610, while the user's gaze direction is unknown.

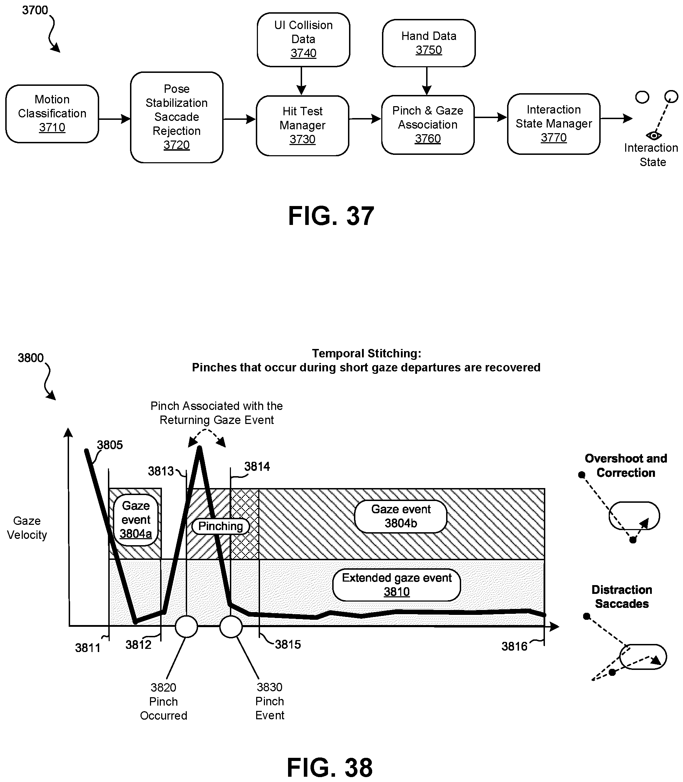

**Figure 37** illustrates an exemplary interaction tracking flow 3700. In this example, at motion classification block 3710 eye gaze data is classified into events of different classification types. This may involve an algorithm or machine learning model processing gaze data, e.g., a series of gaze direction and/or gaze velocity values, and determining gaze events occurring at one or more points in time. At block 3720, pose stabilization and saccade rejection are applied to the gaze data and/or gaze classifications. The stabilization may adjust for eye twitch and/or small eye movements that do not correspond to intentional/perceptive user eye movements. The saccade rejection may involve identifying eye gaze events that correspond to involuntary / reflexive eye saccades and removing those events, e.g., altering the gaze data to remove gaze data corresponding to those types of gaze events.

At block 3730 (hit test manager), the eye gaze data (e.g., eye gaze-holding events identified within the stabilized and saccade removed eye gaze data) is assessed along with user interface collision data 3740 to identify eye fixations corresponding to particular user interface elements. For example, a user interface on a virtual 2D surface or within a 3D region may be presented within a view of a 3D environment. Gaze directions of gaze-holding events within that 3D environment may be assessed relative to the user interface elements, e.g., to identify when gaze directions of the gaze-holding events intersect with (or are close to) particular user interface elements. For example, this may involve determining that the user is gazing at a particular user interface element at a particular point in time when a gaze-holding event is occurring.

At block 3760 (pinch & gaze association), hand data 3750 is associated with the gaze-holding events and associated user interface elements identified by the hit test manager 3730. This may involve determining that a hand gesture that occurs at a particular instant in time or during a particular period of time should be associated with a particular gaze-holding event and its associated user interface element. As described herein, such association may be based on timing and/or other criteria.

At block 3770 (interaction state manager), the hand data 3750 associated with gaze-holding events and associated user interface element is used to manage interactions. For example, user input events may be provided to an application that is providing a user interface so that the application can respond to the user input events, e.g., by changing the user interface. The user input events may identify the user interface element that a given input is associated with, e.g., identifying that the user has provided gaze-plus-pinch input selecting element A, that the user has provided pinch input moving 10 distance units to the left, that the user has released a pinch, etc. User input is thus recognized and used to trigger interaction state updates.

**Figure 38** illustrates a chart 3800 showing gaze velocity 3805 occurring over time. In this example, during an extended gaze event 3810 between times 3811 and 3816, a user gazing at a user interface element is interrupted by a short gaze departure between times 3812 and 3814. Thus, the user's gaze is directed at the user interface element between times 3811 and 3812 and between times 3814 and 3816. The user pinches between times 3813 and 3815, with the pinch make occurrence 3820 occurring at time 3813 and the pinch break occurring at time 3815. The initial portion of the pinch occurs between times 3813 and 3814, during which the short gaze departure is also occurring, e.g., during an overshoot and correction or distraction saccade event. The short gaze departure, however, is identified based on the gaze velocity during its occurrence (during the time period between time 3812 and time 3814) and only gaze-holding events 3804a and 3804b are considered with respect to potential association with the pinch make occurrence 3820. Accordingly, in this example, the pinch occurrence 3820 is associated with the gaze event 3804b at pinch event 3830, i.e., the gaze (and corresponding gazed-upon user interface item) at time 3815. Accordingly, the pinch occurring during the short gaze departure is recovered and associated with the correct/intended gaze direction / user interface element.

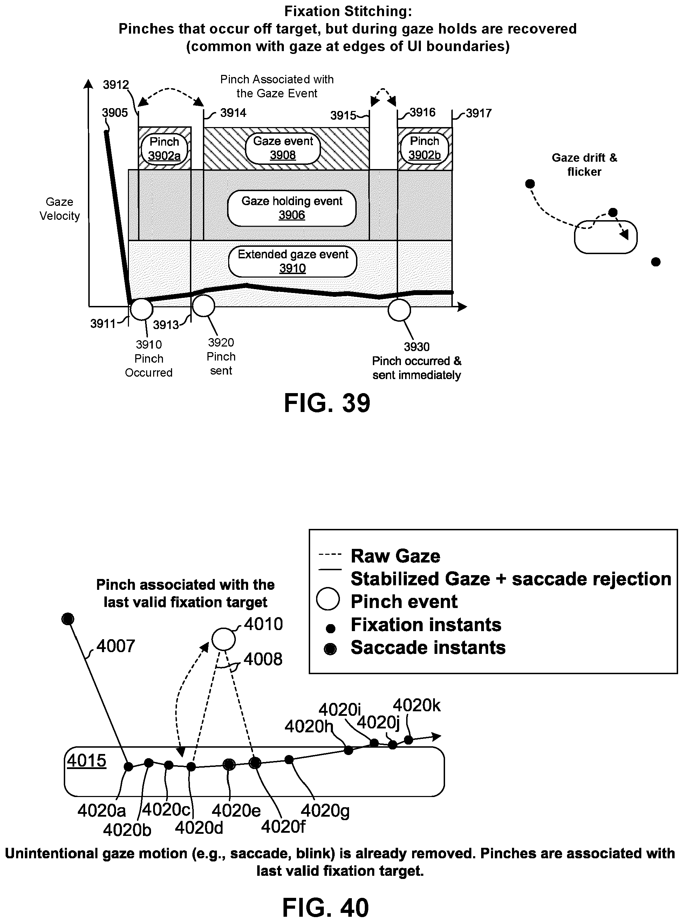

**Figure 39** illustrates associating a pinch with a gaze event on a chart 3900 showing gaze velocity 3905 over time. In this example, during an extended gaze event 3910 between times 3911 and 3917, pinches 3902a-b occur off target, but during gaze-holding events, and are recovered. In this example, a gaze-holding event 3906 is detected to occur during the time period between times 3901 and 3917 and a gaze event 3908 within that gaze-holding event 3906 can be associated with a user interface element, e.g., between times 3911 and 3914 the user's gaze is relatively fixed but just outside the user interface element, between times 3914 and 3915 the user gaze is relatively fixed within the user interface element, and between times 3916 and 3917 the user gaze is relatively fixed just outside of the user interface element. Pinches occurring during the gaze-holding event 3906 are associated with the gaze event 3908 with which there is a corresponding user interface element. Thus, the first pinch 3902a (from time 3912 to time 3913) is associated with this gaze event 3908 (and its corresponding UI element). Similarly, the second pinch 3902b (from time 3916 to time 3917) is also associated with the gaze-holding event 3906 (and its corresponding UI element).

**Figure 40** illustrates associating a pinch 4010 with a gaze-holding event rather than a saccadic event. In this example, the locations of the user gaze at multiple gaze events 4020a-k are illustrated relative to a user interface element 4015. Gaze events 4020a,b,c,d,g,h,i,j,k are determined to be gaze-holding events based on analyzing gaze data. In contrast, gaze events 4020e,f are determined to be saccade instants based on analyzing the gaze data. In this example, a pinch 4010 occurs during the saccade while the gaze is outside of the user interface element 4015. However, the pinch 4010 is not associated with a saccadic instant. Instead, the pinch 4010 is associated with a last valid fixation target, which in this example is the location associated with the gaze event 4020d. In this way, unintentional gaze motion (e.g., saccades, blinks, etc.) are not considered for association, since they are removed from the signal and not included in the valid fixation targets.

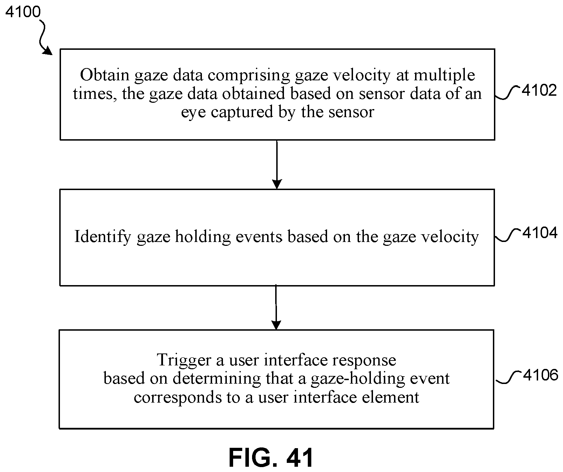

**Figure 41** is a flowchart illustrating a method 4100 for triggering a user interface response based on a gaze holding event. In some implementations, a device such as electronic device 110 performs method 4100. In some implementations, method 4100 is performed on a mobile device, desktop, laptop, HMD, or server device. The method 4100 is performed by processing logic, including hardware, firmware, software, or a combination thereof. In some implementations, the method 4100 is performed on a processor executing code stored in a non-transitory computer-readable medium (e.g., a memory).

At block 4102, the method 4100 obtains gaze data comprising gaze velocity at multiple times, the gaze data obtained based on sensor data of an eye captured by the one or more sensors. For example, the gaze data may be based on a signal of live gaze velocity data obtained based on a stream of live images of the eye captured by an inward facing camera of a head-mounted device (HMD).

At block 4104, the method 4100 identifies gaze-holding events based on the gaze velocity. Identifying the gaze-holding events may involve motion classification, pose stabilization, and/or blink removal. In some implementations, a gaze velocity signal is used to classify eye / gaze motion. Gaze velocity and/or position data may be stabilized, for example, to account for eye twitching and micro-eye movements not associated with voluntary or conscious behavior. In some implementations, an event rejection process is performed to remove gaze events that are associated with saccades, blinks, and other events with which user intentional and/or conscious interactions are not likely to be related.

At block 4106, the method 4100 triggers a user interface response based on determining that a gaze-holding event of the gaze-holding events corresponds to a user interface element. For example, based on a gaze-holding event having a gaze direction directed at a particular user interface icon, the method may trigger a hover-type response by the user interface, e.g., highlighting that icon as a "hovered" or "in focus" element of the user interface. In another example, based on a gaze holding event being directed at a particular user interface icon and an occurrence of a user activity (e.g., a pinch gesture) that is associated with the gaze holding event, the method may trigger a selection-type response by the user interface, e.g., triggering a selection or "clicked on" action on the user interface icon.

The method may detect that an activity has occurred, where the activity is distinct from the gaze-holding events. The activity may be a non-eye-based eye activity such as a pinch or other hand gesture. Examples of activity distinct from the gaze-holding events include activities that are separate from the eye, including, but are not limited to, single hand gestures, multi-hand gestures, head movements, torso movements, movements with arms or legs, whole body movements, and/or interactions with devices.

Single hand gestures include, but are not limited to, a user forming a shape/configuration and/or making a particular motion with a single hand, for example by pinching (e.g., touching a pointer or other finger to a thumb), grasping (e.g., forming hand into a ball shape), pointing (e.g., by extending one or more fingers in a particular direction), or performing a multi-finger gesture. One example of a hand gesture involves a user pinching where the pinching (e.g., touching finger to thumb and then releasing) provides input (e.g., selection of whatever the user is gazing upon). Another example of a hand gesture involves a user pinching (e.g., to initiate detection of the gesture) followed by a movement or change to the hand while the pinching is maintained, e.g., pinching and then moving the hand to provide a directional input movement based on the direction of the movement of the hand.

One example of a multi-finger gesture is a user spreading all fingers apart (e.g., configuring the hand so that no finger touches any other finger). Another example of a multi-finger gesture is a multi-finger swipe (e.g., extending two or more fingers and moving those fingers along a particular path or across a particular real or virtual surface). Another example of a multi-finger gesture is a hand-held approximately flat with fingers all touching adjacent fingers. Another example of a multi-finger gesture is two fingers extended in a peace-sign configuration. Another example of a multi-finger gesture is all fingers extending straight from the palm and then bent at their respective knuckles. Another example of a multi-finger gesture is the thumb touching two or more of the finger's tips in a particular sequence, e.g., first touching the pointer finger then touching the pinky finger. Another example of a multi-finger gesture is fingers held in a particular configuration, e.g., pointer touching middle finger, middle finger not touching ring finger, ring finger touching pinky finger while the whole hand moves along a particular path, e.g., up and down.

Multi-hand gestures include, but are not limited to, a user forming a shape/configuration and/or making a particular motion with both hands simultaneously or within a threshold amount of time of one another, e.g., within a 2 second time window. One example of a multi-hand gesture involves a user pinching both hands where the pinching (e.g., touching finger to thumb and then releasing on both hands within a threshold amount of time) provides input (e.g., a particular interaction with whatever the user is gazing upon). Another example of a multi-hand gesture involves a user pinching with both hands within a threshold amount of time of one another (e.g., to initiate detection of the gesture) followed by a movement or change to one or both of the hands while the pinching is maintained, e.g., (a) pinching both hands and then moving the hands towards or apart from one another to provide a zoom in or zoom out input, (b) pinching both hands and then moving both hands left, right, up, down, etc. simultaneously and together to provide a panning input in the direction of movement, or (c) pinching both hands and the moving the hands in a way that maintains the distance between hands while changing their relative positioning to provide rotation input based on the change (e.g., as if holding a string between the hands and rotating the string to provide corresponding rotation input to a user interface element).

Multi-hand gestures may involve each hand performing a gesture, for example, by pinching (e.g., touching a pointer or other finger to a thumb), grasping (e.g., forming hand into a ball shape), pointing (e.g., by extending one or more fingers in a particular direction), or performing a multi-finger gesture. In one example, a multi-hand gesture is provided (or initiated) by both hands pinching at the same time, e.g., within a threshold time of one another. In one example, a combined (e.g., multi-hand) gesture is based on the timing between two initiation actions (e.g., pinches performed by each hand) and/or the hands proximity to one another.

Head gestures may involve a movement of the head with respect to a degree of freedom (e.g., translating, rotating, etc.). Head movement may involve, but is not limited to, a head nodding, shaking, or tilting.

User activity to be associated with a gaze direction may involve user input provided via a device, e.g., a device seperate from the HMD or other device that is sensing the user's gaze direction. Such a device may be an input device such as a keyboard, mouse, VR controller, ring, a wearable device such as a watch, a hand-held device such as a phone, tablet, or laptop, or any other type of device capable of interaction or user input.

User activity may involve a user using a hand to interact with a controller or other input device, pressing a hot key, nodding their head, turning their torso, making a facial expression, jumping, sitting, or any other activity performed by a user separate from the user's eye gaze. The activity may be detected based on sensor data (e.g., from an outward facing camera) or based on input device data. The activity may be static, e.g., a user holding a hand steady in a particular configuration, or non-static, e.g., a user making a particular motion such as moving a hand while holding a pinch hand configuration.

The method may associate a gaze-holding event with the activity. Accordingly, in various implementations, a gaze-holding event is associated with one or more of a gesture made by a single hand, a gesture that involve one or more fingers, a gesture made by multiple hands, a gesture made by a head, a gesture made by hand and head positions/movements made at approximately the same time, and/or inputs to a device such as a controller, input device, wearable device, or hand-held device.

Associating the gaze-holding event with the activity may be based on determining that activity occurred during the gaze-holding event. Associating the gaze-holding event with the activity may involve determining that the activity did not occur during any of the gaze-holding events and determining that the activity occurred within a threshold time after the gaze-holding event. Associating the gaze-holding event with the activity may involve determining that the activity did not occur during any of the gaze-holding events, determining that the activity did not occur within a threshold time after any of the gaze-holding events, and determining that the gaze-holding event occurred within a threshold time after the activity.

In some implementations, the method 4100 associates a gaze-holding event with another user activity (e.g., a pinch) during the presentation of content on a device such as an HMD. In such implementations, the gaze-holding event may be associated with the user gazing at a portion of the content that is being presented and thus the association may associate the other user activity (e.g., the pinch) with that portion of the content. In some implementations, the content is provided within a view of a 3D environment such as an XR environment. In some implementation, the view comprises only virtual content. In some implementations, the view comprises mixed reality or augmented reality content. In some implementations, at least a portion of 3D environment depicted in the view corresponds to a physical environment proximate the device, e.g., via passthrough video or via a see-through portion of the device. In some implementations, a 3D environment is not presented. For example, a user's gaze-holding events may be associated with input that is received while the user gazes at and provides activity that is input to a device such as a smart phone or tablet, i.e., a device that does not present 3D content or use stereoscopic display to display content at different depths.

Gaze velocity data may be assessed or filtered in a way that accounts for fast fixation inaccuracies such as those associated with short duration gaze holding events that occur following significant gaze-shifting/saccadic events. For example, the method may ignore potential gaze holding events that have a short duration and that follow a gaze shifting / saccadic event in which the gaze has shifted more than a threshold amount or at more than threshold rate (e.g., based on absolute gaze directional change amount or gaze velocity associated with a saccadic event). In some implementations, gaze-holding events that are identified based on gaze velocity exclude potential gaze holding events occurring during a time period following a saccadic event in the velocity data where the saccadic event has an amplitude greater than a threshold. In some implementations, gaze-holding events that are identified based on gaze velocity exclude potential gaze holding events occurring during a time period following a saccadic event in the velocity data where the saccadic event has velocity that is greater than a threshold velocity and/or changes at a rate that is greater than a threshold rate of change. Furthermore, in some additional or alternative implementations, gaze-holding events that are identified based on gaze travel exclude potential gaze holding events occurring during a time period following a saccadic event in the eye tracking data where the saccadic event has a distance of eye travel that is greater than a threshold distance.

Gaze holding events or portions thereof may be rejected from consideration with respect to providing user interface responses based on various criteria. In some implementations, this involves rejecting the gaze holding (e.g., a portion of a gaze holding event) for a period in the beginning of the gaze holding (and accepting the rest) even when the gaze holding event might take longer than the rejection period. A user may saccade and land on a target next to their intended target, and then from there drift slowly to the intended target. In this case, the time from landing on the neighbor target and the drifting is rejected, but the portion of the gaze holding event occurring after landing on the intended target is accepted.

In some implementations, at least a potential gaze holding event occurring during a time period following a saccadic event is excluded, where potential gaze holding event is excluded based on (a) an amplitude representing an amount of velocity change during the saccadic event, (b) a rate of change of the velocity during the saccadic event, (c) a duration of the potential gaze holding event, and/or (d) distance of eye travel during the saccadic event.

In some implementations, a potential gaze holding event is excluded based on it occurring between two saccadic events having one or more particular characteristics such as those described above. For example, in the case where there is a large saccade, a short intermediate gaze holding event and then another large saccade, the intermediate gaze holding event may be rejected.

In some implementation, a small saccade following one or more large saccades that might be erroneously classified as a gaze holding event is correctly characterized (i.e., as a small saccade rather than a gaze holding event) based on determining that it follows a saccadic event having one or more particular characteristics such as those described above. Similarly, a gaze classifier may classify gaze data associated with a continuous saccade by falsely identifying a gap (and thus classifying the second portion of the saccade as a gaze holding event). Such an erroneous classification may be correctly characterized (e.g., as a saccadic event rather than a gaze holding event) based on determining that it follows a saccadic event having one or more particular characteristics such as those described above.

Excluding potential gaze events in such circumstances may be beneficial because when a user makes a large eye movement (e.g., a saccade of large amplitude), the eye may not go as quickly to an intended gaze target as in other circumstances. When the eye makes a large eye movement, it often does not land exactly where the user intends, e.g., on an intended user interface target. Often, the eyes naturally land around the general area (not on it exactly) and then move and adjusts to the exact location of the intended user interface element following subsequent gaze holding event(s). The system may exclude the one or more initial gaze holding events (e.g. due to velocity, distance of eye travel, time-proximity to a significant gaze shifting event, etc.) following a significant gaze shift (e.g., high-amplitude saccadic event) and interpret a later gaze holding event as the appropriate gaze holding event to use to identify gaze direction in a triggered user interface response. Excluding gaze-holding events that occur soon after such large eye movements, may thus help ensure that a gaze-holding event is only used to trigger user interface responses in circumstances in which the gaze holding event is likely to have a gaze direction that corresponds to an intended gaze target.

### Fuzzy Hit Testing

Various implementations disclosed herein include devices, systems, and methods that associate user activities with elements within a 3D environment. Some implementations do so in ways that account for inaccuracies (i.e., fuzziness) in sensor-based detection of the user activities, e.g., inaccuracy in sensor data-based gaze tracking or sensor data-based hand/joint position. Some implementations use a sampling technique to associate user activity in a 3D environment with an appropriate element, such as a portion of a user interface (UI) positioned within a 3D environment. For example, a sampling technique may be used to identify sample locations within the 3D environment (e.g., sample locations around a gaze direction) to evaluate and ultimately select from to associate with a user activity, e.g., associating a particular UI button with a gaze direction. In one example, the user activity is a gaze direction, and a pattern of rays around the gaze direction is generated to identify candidate UI targets from which a UI element is selected to associate with the gaze direction.

In some implementations, a processor performs a method by executing instructions stored on a computer readable medium of an electronic device. The method receives data corresponding to user activity in a 3D coordinate system. The data may provide a directional representation (e.g., a ray in the 3D coordinate system) of user activity. For example, the method may identify a gaze direction associated with a user's gaze at one or more points in time (e.g., a gaze direction associated with an indirect user interaction). In another example, the method may identify a user hand position or motion and determine a ray from a viewpoint (e.g., eye position) to the hand or a ray from a viewpoint to a position at which the hand is determined to intersect a virtual UI (e.g., an eye-to-touchpoint ray synthesized on the first frame of a direct user interaction).

The method generates a plurality of sample locations in the 3D coordinate system based on the data corresponding to the user activity. In some implementations, given a gaze direction, ray, or point in the 3D coordinate system identified based on the user activity, the method may identify a plurality of nearby rays or points in the 3D coordinate system. In one example, the method generates a pattern of 10-30 rays in a pattern. The pattern may include rays or points that may be spaced relative to one another to satisfy predetermined criteria, e.g., spaced within a pattern to ensure UI elements of particular size and/or shape that are within the boundary of the pattern will be intersected by at least one of the rays or points. The pattern may change over time, e.g., frame to frame. For example, the pattern for each frame may include randomly positioned rays/points generated based on a user activity (e.g., gaze ray or gaze ray intersection point).

The method identifies UI targets within the 3D coordinate system based on the plurality of sample locations. In some implementations, the UI targets include colliders corresponding to 2D or 3D elements, e.g., corresponding to the 3D positions/boundaries of 3D virtual objects and/or 2D UI elements of apps defined by layer trees, etc. In some implementations, a collider corresponding to a UI hierarchy is identified and then the UI hierarchy is examined to identify which UI element of the UI hierarchy is on top (e.g., the closest, opaque, non-occluded element) at the sample location.

The method selects a UI target of the identified UI targets to associate with the user activity based on a selection criterion. In some implementations, for each of the identified UI target, the method computes the closest opaque point and the distance (e.g., angular distance) to the user activity location (e.g., to the gaze direction location, etc.) and then sorts and prioritizes the UI targets according to a policy. This may involve, when multiple UI targets are within a threshold distance (e.g., within a 1° angular distance) of the user activity location, the method prioritizes according to a policy by ranking UI targets according to type (e.g., type of effects enabled for different element types), UI element layering, nesting, and/or geometry of the UI targets, proximity to the user activity location (e.g., gaze direction location), and/or based on applying hysteresis logic that prioritizes previous targets and/or avoids flickering.

Various implementations disclosed herein include devices, systems, and methods that associate user activities with elements within a 3D environment. Some implementations provide output (e.g., based on user activity to element associations) to applications in a way that facilitates the application's recognition of the user activity, e.g., providing output based on 3D user activity such that an application can use the output to recognize the user activity as being associated with an appropriate/intended element using existing touchscreen/2D input. In some implementations, doing so may enable an application configured for a 2D environment (e.g., a mobile device app) to be executed within a 3D environment without requiring that the application change its own 2D input recognition process or otherwise to account for the fuzziness of the underlying 3D user activity, e.g., inaccuracy in sensor data tracking gaze (indirect) or hand/joint position (direct).

In some implementations, a processor performs a method by executing instructions stored on a computer readable medium of an electronic device. The method receives data corresponding to user activity in a 3D coordinate system. The data may provide a directional representation (e.g., a ray in the 3D coordinate system) of user activity. For example, the method may identify a gaze direction associated with a user's gaze at one or more points in time (e.g., a gaze direction associated with an indirect user interaction). In another example, the method may identify a user hand position or motion and determine a ray from a viewpoint (e.g., eye position) to the hand or a ray from a viewpoint to a position at which the hand is determined to intersect a virtual UI (e.g., an eye to touch point ray synthesized on the first frame of a direct user interaction).

The method receives data corresponding to positioning of UI elements of an application within the 3D coordinate system (e.g., a geometry collision world). The data corresponding to the positioning of the UI element may be based at least in part on data (e.g., positions/shapes of 2D elements intended for a 2D window area) provided by the application. In some implementations, the application may provide a layered tree that is used to position the UI elements, e.g., on a 2D region of the 3D coordinate system. Such information may be provided to a simulation process that positions the application element in the 3D space, e.g., by defining the 3D position of one or more colliders (e.g., each having a rectangular window area) in the 3D space for the app elements.

The method identifies one or more UI targets within the 3D coordinate system based on the data corresponding to the user activity and the data corresponding to positioning of the UI elements of the application within the 3D coordinate system. The method selects a UI target of the identified UI targets to associate with the user activity based on a selection criterion. The method, based on selecting the UI target to associate with the user activity, identifies a point within a 2D region to the application such that the application can associate an action (e.g., selection/hit/hover/etc.) with the UI target.

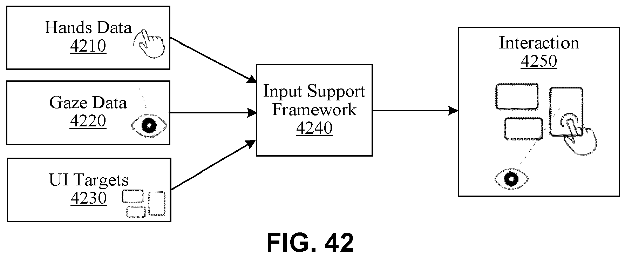

**Figure 42** illustrates use of an exemplary input support framework 4240 to generate interaction data based on hands data 4210, gaze data 4220, and UI target data 4230 to produce interaction data 4250 that can be provided to one or more applications and/or used by system processes to provide a desirable user experience. In some implementations, the input support process 4240 is configured to understand a user's intent to interact, generate input signals and events to create reliable and consistent user experiences across multiple applications, detect input out-of-process and route it through the system responsibly. The input support process 4240 may arbitrate which application, process, and/or UI element should receive user input, for example, based on identifying which application or UI element is the intended target of a user activity. The input support process 4240 may keep sensitive user data, e.g., gaze, hand/body enrollment data, etc., private; only sharing abstracted or high-level information with applications.

The input support framework 4240 may take hands data 4210, gaze data 4220, and UI target data 4230 and determine user interaction states. In some implementations, it does so within a user environment in which multiple input modalities are available to the user, e.g., an environment in which a user can interact directly as illustrated in Figure 2 or indirectly as illustrated in Figure 3 to achieve the same interactions with UI elements. For example, the input support process may determine that the user's right hand is performing an intentional pinch and gaze interaction with a user interface element, that the left hand is directly tapping a user interface element, or that the left hand is fidgeting and therefor idle/doing nothing relevant to the user interface.

Based on determining a user intent to interact, the input support framework 4240 may generate interaction data 4250 (e.g., including an interaction pose, manipulator pose, and/or interaction state). The input support framework 4240 may generate input signals and events that applications may consume without needed custom or 3D input recognition algorithms in process. In some implementations, the input support framework 4240 provides interaction data 4250 in a format that an application can consume as a touch event on a touch screen or as track pad tap with a 2D cursor at a particular position. Doing so may enable the same application (with little or no additional input recognition processes) to interpret interactions across different environments including new environments for which an application was not originally created and/or using new and different input modalities. Moreover, application responses to input may be more reliable and consistent across applications in a given environment and across different environments, e.g., enabling consistent UI responses for 2D interactions with the application on tablets, mobile devices, laptops, etc. as well as for 3D interactions with the application on an HMD and/or other 3D/XR devices.

The input support framework may also manage user activity data such that different apps are not aware of user activity relevant to other apps, e.g., one application will not receive user activity information while a user types a password into another app. Doing so may involve the input support framework 4240 accurately recognizing to which application a user's activity corresponds and then routing the interaction data 4250 to only the right application. The input support framework 4240 may use details about the UIs of multiple, potential target apps to disambiguate input.

### Fuzzy Hit Testing Process Examples

Some implementations associate user activities with elements within 3D environments. Some implementations do so in ways that account for inaccuracies (i.e., fuzziness) in sensor-based detection of the user activities, e.g., inaccuracy in sensor data-based gaze tracking or sensor data-based hand/joint positions. Associating user activities with elements can involve "hit testing," which generally refers to identifying user activity corresponding to a potential input and determining where and how to route information about the user activity to a respective UI or other element or otherwise in the system. Some implementations perform hit testing using a sampling technique to associate user activity in a 3D environment with an appropriate element (e.g., portion of a UI) positioned within the 3D environment. For example, a sampling technique may be used to identify sample locations within the 3D environment (e.g., sample locations around a gaze direction/gaze intersect point) to evaluate and ultimately select to associate with the user activity, e.g., associating a particular UI button with a gaze direction. In one example, the user activity is a gaze direction, and a pattern of rays around the gaze direction is generated to identify candidate UI targets from which a UI element is selected to associate with the gaze direction.

In the 2D user interface context (e.g., on mobile and laptop devices), hit testing can start with touch point (e.g., on a touch screen) and the hit testing may determine to which application or process the touch/hit should be provided/associated. In such a context, an application may perform some or all of such hit testing itself (e.g., using an in-app process specified by the app's code or functions (e.g., from an app development library) embedded within the app's executable code or otherwise used by the app and/or using custom logic developed by the application developer. In such processes, the application may effectively perform in-depth hit testing itself, e.g., determining which element within the application's user interface should receive/respond to a give touch screen tap or other such user activity.

In the 2D context, hit testing may involve evaluating a hierarchical UI structure (e.g., a tree structure) that defines UI element positions and characteristics using a hierarchy. Hit testing may involve starting at a high-level element of the UI structure (e.g., starting at the main window) and recursively moving down the hierarchy/tree (e.g., the window will ask its children given a touch position if the children pass the hit test, the children will ask their children, and so on recursively down the hierarchy/tree). The hit test passing logic may ask is this point inside each hierarchical element's bounds/boundaries. The hit testing logic may provide a visible element area and a hittable area associated with the element where the hittable area has a different size or shape than the visible element. In one example, hit testing logic is utilized so a small dot-shaped element will having a hittable area corresponding to a large square around the dot-shaped element, e.g., passing the elements hit test involves identifying that a hit point is within that bigger zone.

One area of problems overcome by aspects of the present disclosure is enabling hit testing logic utilized by 2D applications for 2D interactions on touch screens via mice, etc. intended for mobile device, laptops, etc. to work in the context of gaze-based and/or other 3D user activities. Gaze and/or other 3D activity tracking may not have the same accuracy and/or characteristics as touch screen and/or other 2D user activities. In addition, aspects of the present disclosure may provide hit testing (e.g., associating user activity with application and other content) in ways that protect user information, e.g., without providing applications unfettered access to user gaze direction information, hand size/shape/activity information, etc.

A touch screen may identify user activity (e.g., identifying a user touching a screen at a particular x,y position) with relative accuracy (e.g., within 100 microns). In contrast, tracking user gaze, hand position/configuration/motion, and/or other 3D user activities may be significantly less accurate. Some implementations disclosed herein provide hit testing and/or other processes that account for the possibility of this greater "fuzziness" in tracking 3D user activity. For example, a device may track a user's gaze with plus or minus 1 degree of accuracy. Thus, if a user is looking at a button (e.g., the edge of a button), the detected gaze ray may appear to be a whole degree outside of the button. Some implementations, evaluate such user activity to determine to associate the gaze direction with the button in spite the gaze being outside of the button to account for the inaccuracy of the system.

Some implementations perform such determinations outside of the application processes, for example, using a system level process to determine which apps, which UI elements within apps, and/or non-app elements to which a user activity is to be associated. Performing some or all aspects of fuzzy hit testing or other such processes outside of an application's process, e.g., via a system process, may provide various advantages. It may expand the capabilities of an app (e.g., an already existing app or an app otherwise configured for another/non-3D platform) not configured for 3D user activity and/or particular user activities (e.g., gaze and/or gesture-based input). It may protect user privacy for example by abstracting user activity data provided to the apps after performing fuzzy hit testing so that information about the user activity is limited (e.g., avoiding the provision of unlimited gaze/hand data). It may account for user activity that (due to fuzziness) could be associated with one of multiple different applications. It may ensure that fuzzy-hit testing and related processes are performed consistently across multiple different applications. It may additionally make it easier to upgrade or change fuzzy hit testing and related processes, e.g., without requiring individual applications to be reconfigured with sensing hardware, hit testing features, or other aspects of the system change over time. It may provide a single stage for fuzzy hit testing (e.g., at the operating system level) that may be more efficient, effective, and/or accurate that performing it at multiple times and/or using multiple stages.

Making an early, accurate decision at the operating system level and using application-specific information may unify fuzzy hit testing for optimal system performance. For example, using a central layer having detailed sensor data (e.g., low-level gaze/pupil data and hands data) as well as detailed application user interface data (e.g., information from an application's UI hierarchy specifying element positions, sizes, characteristics, transparencies, remote effects, etc.) may enable a robust, accurate, and efficient system. In some implementations, the system-level fuzzy hit testing information has enough information about application UI elements that it can determine (e.g., without burdening a rendering/display component of the system) which element of the UI is "on top" (e.g., that the user sees) for a given sample position/sample ray direction. Figuring out what UI element is on top can be complex and error prone without such information, e.g., accuracy may be thwarted by rounded transparent corners of a UI element, a transparent hole within a given object, an action figure defined as a cube with transparent regions around the figure's actual shape, etc. Similarly, UI elements may be clipped and/or prioritized in ways that thwart accurate association of UI elements with user activity without sufficient information. Some implementations provide a system process with sufficiently detailed information to perform accurate unified fuzzy hit testing using detailed sensor data, while account for transparencies, clipping, prioritization, and/or while preserving user privacy.

Moreover, such a system process may provide the information about a user activity (e.g., based on its own fuzzy hit testing) in a way that the user activity will be associated with an appropriate UI element (e.g., based on the app's separate association/fuzzy hit testing process). For example, an app may provide a 2D user interface element that is positioned within a 3D world and a system level process may correct for 3D user activity sensing inaccuracy by determining that a user activity should be associated with a particular element of the app's UI and provide input data such that the app will recognize an input to that element, e.g., providing a 2D interaction point within the bounds of that element.

Some implementations address issues arising from gaze tracking or other 3D user activity tracking processing have relatively low accuracy, e.g., a gaze tracking algorithm having one degree of error such that gaze hit locations may not always be exactly where the user is looking and potentially causing gaze targeting failures in which a gaze point is slightly off/outside of a target. Some implementations provide a system or operating system level process for system-wide hit testing "forgiveness" or "fuzziness" for targeting UI elements with gaze or other 3D user activity.

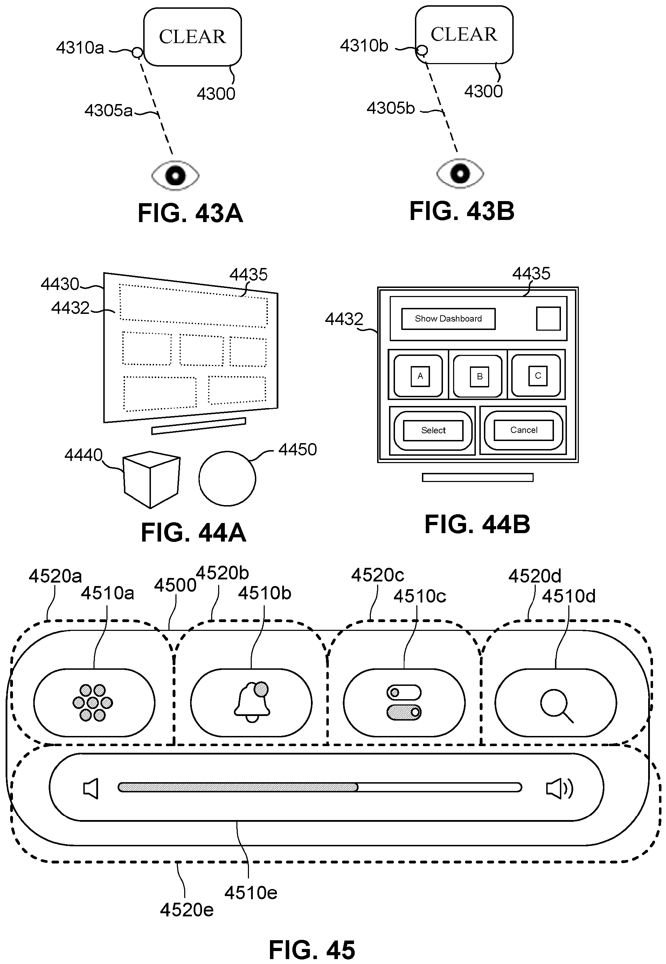

**Figures 43A-43B** illustrate an exemplary hit detection correction in the context of a user interface element 4300 provided by/specified by an application. In this example a user gaze direction 4305a is determined based on sensor data. The detected gaze direction 4305a intersects the user interface at a point 4310a that is outside of user interface element 4300. A system-level fuzzy hit detection process is executed and determines that the gaze should be associated with the user interface element 4300, e.g., as if the user had gaze in gaze direction 4305b at point 4310b within the user interface element 4300. The system-level detection process may provide output to the application such that the application will recognize input to UI element 4300, e.g., by identifying point 4310b as an interaction point to the application.

In some implementations, as illustrated in Figures 43A-43B, a fuzzy hit testing process is configured to "snap" (i.e., relocate) a point associated with a 3D user activity into the bounds of a nearby UI or other element so that an application correctly interprets the 3D user activity without having to be configured to address the potential lack of accuracy in the sensor data or processes used to detect the 3D user activity. Moreover, a system level process may perform such fuzzy hit testing to pick an appropriate element from elements provided by potentially multiple applications.

**Figures 44A-44B** illustrate 2D and 3D elements which may be positioned within a 3D environment. In this example, such elements are tracking by a simulation process / engine that positions colliders within a 3D coordinate system. Such collider may be used to describe or specify the 2D and 3D geometry of an XR environment. In some implementations, the 3D geometry may include colliders that contain UI features that are specified via multiple layers of complex data structures, e.g., using a hierarchical or tree structure. In some implementations, content within a collider may be specified an application, e.g., using a UI hierarchical structure that encodes UI appearance and characteristics, e.g., an Apple^{®} Core Animations^{®} (CA) structure specifying the rendering pixel images, vector graphics, and/or textures and/or providing animations to provide desirable user experiences. A hierarchical layer structure may be used to specify, for example, the appearance of a window, where buttons are within the window, where text is in the window, etc. 3D elements, e.g., a 3D model or a cube, may be specified without a hierarchical or other UI-specifying structure.

In the examples of Figures 44A and 44B, 3D cube 4440 and 3D sphere 4440 are positioned within respective colliders within a 3D coordinate system. A user interface window 4432 having elements (e.g., element 4435) that are specified by a hierarchical UI definition/animation structure is also provided. The user interface window (and its elements) is positioned within collider 4430 within the 3D coordinate system. The hierarchical UI definition, for example, may specify that the window 4432 has a base layer, which has a layer for a platter, which has a layer for a button, and the button may have layers for text and button characteristics. The hierarchical structure of a UI can be simple or complex, small or large, dense or sparse. The hierarchical structure may include layers that specify remote effects for UI elements. A remote effect may be implemented as a special layer that has behavior/action associated with certain user activity, e.g., hover when gazed upon, etc. A remote effect may be used by an application to communicate to an input recognition process the effects that are intended for a particular UI element, e.g., glow when gazed upon, expand when gazed upon, etc.

In some implementations, a hierarchical layer provides a 2D arrangement of layers that is displayed flat (e.g., in a 2D region) of a 3D coordinate system. In some implementations, one or more of such 2D layers are implemented in a distinguishing way (e.g., protruding slightly from the rest of the layers). Such protruding may be accounted for in displaying the content, determining interactions with the content, and/or prioritizing interactions with portions of the content.

In some implementations, an applications framework controls element sizing. Control sizing may involve accounting for a region around a UI element that acts as visual padding, e.g., providing a region of minimum size for interactions with every element. This may involve ensuring that elements include space around visual features to achieve a minimum element size, e.g., fuzzy hit testing may require a minimum threshold (e.g., 15 pts, 18pts, 21pts, etc.). It may involve controlling visual space to be consistent among elements in layouts to ensure fair hit testing amongst elements, e.g., not providing some elements with significantly more space/padding than other elements. It may involve making control sizes static per element, for example, not adapting hit areas for tighter layouts, gaze entry/exit, viewing angle, etc.

Some implementations provide an input support process that provides system-wide fuzzy hit testing. This may involve providing fuzzy hit testing in a way that complements hit box sizing by applying additional visual angle forgiveness and prioritization logic. It may involve using a process or algorithm that evaluates which visual targets are near a user activity location (e.g., near a gaze) and snapping the location to a desired target. It may enable dynamic hit areas (i.e., based on layout, viewing angle, gaze entry/exit, etc.) and prioritization of UI elements across contexts.

**Figure 45** illustrates exemplary control regions 4510a-e and fuzzy hit test regions 4520a-e around elements of a user interface. Figure 45 illustrates fair visual spacing between the elements 45 10a-e. The top row of buttons (i.e., UI elements 4510a-d) has some spacing built into the buttons, e.g., space around the button label/icon and the displayed button edges. Thus, the control regions 4510a-e correspond to the edges of the buttons. On the other hand, the slider (i.e., UI element 4510a) has no spacing built in, e.g., no space around the slider bar. Thus, the control region 4510e adds spacing to achieve minimum size requirements. Amongst multiple elements within a single UI or across different UIs, a roughly equal amount of spacing may be provided in sizing elements. The control region sizes are also static for the UI elements, i.e., the control regions 4510a-e are not adapted or changed unless the respective element itself changes size.

A system may apply fuzzy hit testing to user interactions near one or more of the UI elements of Figure 45. This may involve defining (e.g., algorithmically) the control regions, detecting (e.g., algorithmically) the UI elements that are nearest a user interaction location (e.g., a gaze point), and snapping (e.g., algorithmically) the interaction point to the nearest edge of a UI element. A dis-ambiguation process or logic may be applied to determine which UI element to snap to of the user interaction location is between controls. Such a process may determine a closest UI element to a user interaction location and/or account for other criteria. This is illustrated in Figure 45 by the fuzzy hit test regions 4520a-e, i.e., user interaction locations within fuzzy hit test region 4520a are associated with control region 4510a, user interaction locations within fuzzy hit test region 4520b are associated with control region 4510b, user interaction locations within fuzzy hit test region 4520c are associated with control region 4510c, user interaction locations within fuzzy hit test region 4520d are associated with control region 4510d, and user interaction locations within fuzzy hit test region 4520e are associated with control region 4510e. The fuzzy hit test regions 4520a-e are smaller between the controls 4510a-e to avoid overlap, e.g., by splitting the distance between adjacent controls. Note that fuzzy hit testing in 3D may be applied based on angular size requirements (e.g., based on 1 degree of gaze angle imprecision). Thus, the fuzzy hit test regions 4520a-e may grow and shrink in size (while avoiding overlap), for example, as a user moves closer to or farther away from the user interface or views the user interface straight on or from a significant angle.

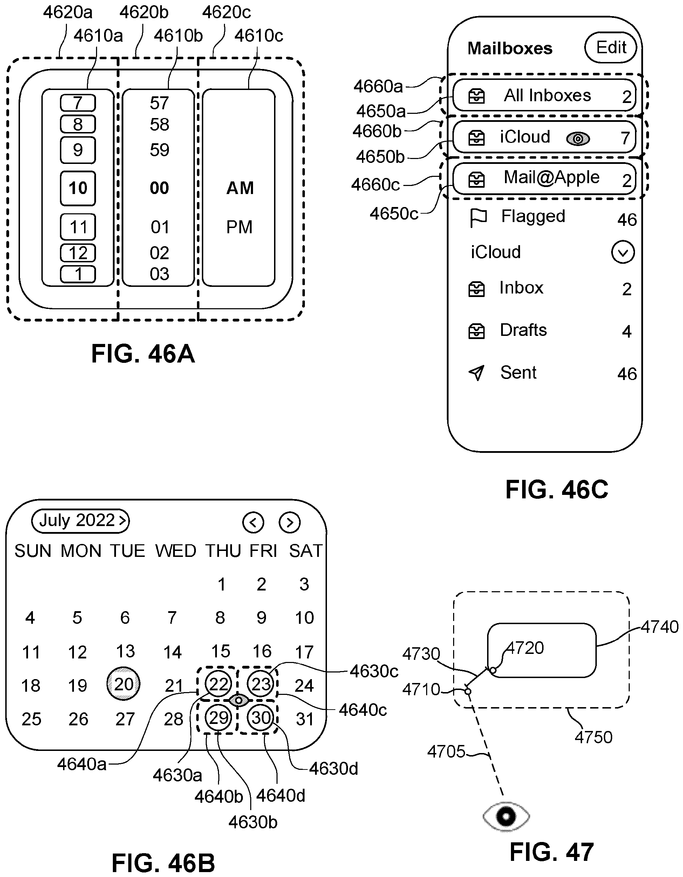

Figures 46A-C illustrate exemplary control regions and fuzzy hit test regions around elements of a user interfaces. Figure 46A illustrates exemplary control regions 4610a-c and fuzzy hit test regions 4620a-c around elements of a user interface. Figure 46B illustrates exemplary control regions 4630a-d and fuzzy hit test regions 4640a-d around elements of a user interface. Figure 46C illustrates exemplary control regions 4650a-c and fuzzy hit test regions 4640a-d around elements of a user interface.

**Figure 47** illustrates determining to associate a user activity with a UI element, e.g., of an exemplary fuzzy hit testing process. In this example, a gaze direction 4705 is detected and used to identify UI location 4710, e.g., based on determining that the gaze direction 4705 intersects the UI at UI location 4710 within a 3D coordinate system. In this example, the UI element has a control region 4740 and a fuzzy hit test region 4750 (e.g., which may be based on a minimum angular distance from a closest edge of the control region 4740 or other criteria or policies). Based on the UI location being within the fuzzy hit test region 4750 (e.g., distance 4730 being less than an angular distance threshold), the process determines to associate the user activity with the user interface element. This may involve treating the gaze as if it intersected the UI at position 4720. The position on the UI associated with the user activity may be the closest position on the UI element. It may be the closest position on the UI element that is opaque. It may be the closest position on the UI element that is opaque and not occluded, e.g., by another UI element or virtual object. The position 4720 may be provided to an owner (e.g., application that provided the UI element) so that the application can respond to the user activity appropriately.

Determining whether to associate a user activity with a UI element and/or with which UI element to associate a user activity, e.g., fuzzy hit testing, can involve various processes. In some implementations, it involves (1) discovering UI targets (2) finding a closest point and distance from a user activity location and (3) sorting and/or prioritizing targets according to a policy.

The first step, discovering UI targets, may involve finding all UI targets within a region around a user activity location. For example, a detected gaze direction may be used to determine a user interface location (e.g., a location at which the gaze direction interests a UI). Additional/sample UI locations around the user interface location (e.g., around gaze-direction or otherwise identified user activity location) may be determined (e.g., by generating a scattershot ray pattern configured to detect all UI targets around the UI location that have at least a minimum size (e.g., at least 1° tall). The additional/sample UI locations around the UI location may then be used to identify visible UI targets, e.g., by accounting for transparency, focus level, render order, etc.

The second step, finding the closest point and distance from a user activity location, may involve identifying the closest point within each identified visible UI targets. For example, for each discovered UI target, this may involve computing the closest opaque (e.g., non-transparent) point. It may involve identifying the distance (e.g., angular distance) between the closest opaque point and the user interface location associated with the user activity (e.g., computing angular distance based on the viewpoint location).

The third step, sorting and/or prioritizing targets according to a policy, may involve determining whether multiple UI targets were identified. The process may, when multiple targets are discovered (e.g., within 1° of gaze), select which of the UI targets to associate with the user activity based on a policy. The process/policy may rank targets according to type (e.g., prioritizing remote effects such as hover over other layer/geometry type elements). For targets of the same type, the process/policy may prioritize nested targets and then prioritize UI targets having the closest/smallest distance (e.g., angular) to the user activity location (e.g., gaze location). The process/policy may apply hysteresis logic to prioritize previously-identified/associated UI targets, which may avoid flicker, as explained in more detail with respect to Figures 13A-B.

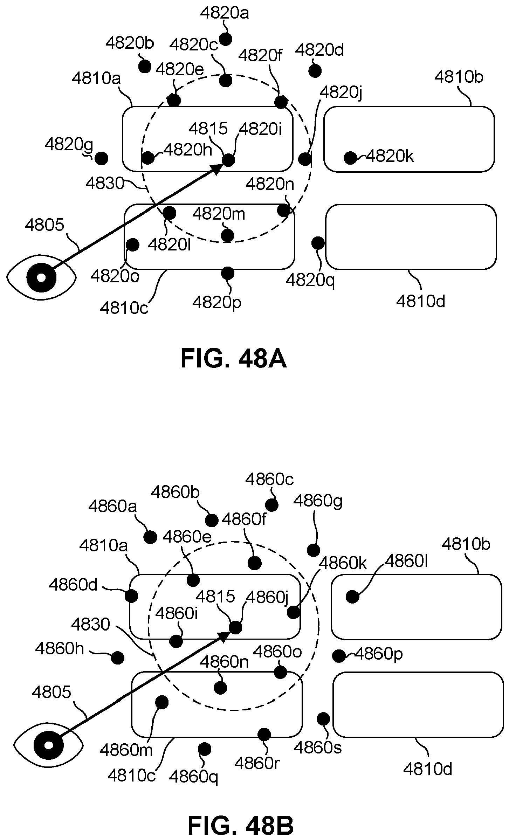

**Figure 48A** illustrates using sampling in determining to associate a user activity with a user interface element. In this example, a UI, including UI elements 4810a-d is positioned within a 3D coordinate system in which user activity is assessed. In this example, the user activity is a gaze. The system detects the gaze direction 4805, which may have an expected amount or range or error, e.g., the user's actual gaze direction may be expected to be within 1° of the detected gaze direction with a level of confidence. The detected gaze direction 4805 is used to identify a user activity location 4815. In this example, the user activity location 4815 is a point at which the gaze direction 4805 is determined to intersect the UI.

The user activity location 4815 is used to discover potential UI targets. This may involve finding all UI targets within a region around a user activity location 4815. In this example, additional/sample UI locations 4820a-q are identified around the user interface location 4815. The additional/sample UI locations are determined by generating a pattern configured to detect all UI targets around the UI location that have at least a minimum size (e.g., at least 1° in one or more directions, at least a minimum dimension (e.g., height, width, etc.) on a plane of the UI, etc.). The pattern may be generated to correspond to angular requirements by using rays to generate the pattern. For example, a scattershot ray pattern may be generated and the intersections of each of the rays in the scattershot ray pattern used to identify a pattern of sampling locations.

The additional/sample UI locations 4820a-q around the UI location 4815 may then be used to identify visible UI targets, e.g., by accounting for transparency, focus level, render order, etc. A given ray (e.g., of the scattershot ray pattern) may intersect with multiple (e.g., 2, 3, 4, 5, 10, etc.) elements (e.g., colliders, remote effects, hierarchical UI tree layers, etc.). The process may determine (e.g., via logic) which of the intersected element is on top, opaque, not occluded, etc., e.g., which element that a ray interests is visible based on ordering, transparency, not-clipped by the render system, etc.

The process, in the example of Figure 48A, determines which element (if any) of the UI is on top for each of the additional/sample locations 4820a-q, e.g., for each of the 17 points of the pattern of additional, sample locations. Note that, in this example, one of the sample/additional locations (i.e., sample/additional location 4820i) corresponds to the user activity location 4815. The elements determined to be on top for each of the additional/sample locations 4820a-q provides a list of (zero or more) candidate UI targets. In the example of Figure 48, the candidate UI targets include UI elements 4810a, 4810b, and 4810c based on each intersecting at least one of the additional/sample locations 4820a-q. UI element 4810d is not identified as a candidate UI target since none of the additional/sample locations 4820a-q intersect it.

Figure 48B illustrates an alternative pattern of additional/sample locations 4860a-s. Some implementations use an optimized pattern of additional/sample locations (or rays used to generate such a pattern). For example, using a configuration of equally spaced locations (e.g., forming a shape as illustrated in Figure 48B) may enable the use of a relatively small or minimal number of sampling locations. The pattern may be selected to achieve various objects. For example, the pattern may be configured to ensure that objects having at least a specified minimum size (e.g., minimum height, minimum width, etc.) will be discovered. The pattern may be configured to ensure that at least a region of a particular size will be covered by the pattern as a whole, e.g., ensuring that a region covering a region associated with expected error threshold of the user activity detection (e.g., corresponding to a 1° of error expected in gaze tracking) is covered. In one example, the pattern is configured to ensure that it will capture/detect rectangular UI elements having at least minimum height and/or width dimensions and/or that it will cover a region of the UI corresponding to the gaze detection accuracy using a minimum number of sampling locations. Using a relatively small or minimal number of sampling locations can reduce power consumption, reduce processing requirements, and/or increase processing speed, e.g., making fuzzy hit testing faster and more efficient. Using a tilted pattern can help ensure that long, thin elements displayed horizontally or vertically, e.g., text, is discovered.

Determining which element is on top based on a ray within a 3D coordinate system may involve using a physics solver process. For example, each ray may be passed into the physics solver which utilizes a 3D simulation/collision world to determine which collider(s) are intersected by the rays. It may iterate along each ray determining whether each collider corresponds to a 3D virtual object (e.g., a virtual cube, etc.) or hosts UI content (e.g., by hosting UI hierarchical tree elements). In some implementations, a physics solver identifies intersections with colliders and then a separate process is used to determine within a collider which UI element is on top. For example, if the UI within a collider is provided by an Apple^{®} Core Animations^{®} (CA) structure, a CA hit test (e.g., a 2D hit test process) may be performed to identify which UI element is on top at a given location. Determining which element is on top may involve determining whether (and where) given UI elements are opaque or transparent. Such testing may require detailed information about an application's user interface. Performing such testing via a system-level process (i.e., as opposed to within an application's own process) may require the application exposing UI information for system use. In some implementations, one or more applications provide UI information (e.g., a hierarchical structure identifying UI element positions, layering, remote effects, etc.) for use by a system-level process (e.g., an input support process) in performing system-level fuzzy hit testing.

The process illustrated in Figure 48 may involve extracting from the candidate UI targets geometry information, e.g., rectangular shape, dimensions, rounding of corners, which corners are rounded, where there are transparencies, etc. Such geometry information may be used to identify the closest opaque, un-occluded point on a candidate UI target, e.g., the point on the candidate UI target having the smallest distance (e.g., angular) to the gaze 4805 / user activity location 4815.

The process illustrated in Figure 48 may involve using information about the candidate UI targets to prioritize those targets, for example, using a policy to determine which candidate UI target to associate with the gaze. Using a consistent policy across multiple applications or otherwise across the system may provide a consistent user experience, e.g., ensuring that applications have similar behavior with respect to disambiguating user activity. This may help application developers who can design application UI layouts in light of known or otherwise expected user activity interpretation. If a given UI element includes elements that are hard to hit, they will be consistently hard to hit/interact with and a developer can change the UI layout to make the elements easier to hit/interact with.

Some implementations utilize a policy that ranks candidate UI targets based on target types. In some implementations, remote effect candidate targets are prioritized over other types of candidate targets. Thus, if a gaze direction is 0.9 degrees from a remote effect and 0.2 degrees from a plain UI layer or 3D object, the remote effect will be selected in spite of its greater distance. Such a policy may ensure that a gaze within a threshold distance (e.g., within 1° angular distance) of a remote effect will always reliably hit the remote effect. Such a policy may encourage developers to utilize remote effects to specify behavior for important content.

For targets of the same type, a policy may prioritize nested candidate targets. For example, if a button is inside a backing plane (both button and backing plane being of the same type), the policy my prioritize the inner button. Such a policy ensures that inner/smaller UI elements have a minimum fuzziness.

In some implementations, a developer may specify UI elements having higher priority by specifying minor (potentially unnoticeable) 3D positions of the UI elements. For example, a developer may position most UI elements on a 2D plane and certain prioritized UI elements at elevated/popped out positions slightly above the 2D plane. The policy used to prioritize candidate targets may prioritize closer / popped out UI elements, e.g., always picking a UI target when it is popped out.

Some implementations utilize the following policy:
Policy Step 1 - Sorting targets of different types:
   - Remote effects win over all other targets
      ∘ Example: hyperlinks with remote effects "steal" gaze from plain text
Policy Step 2 - Targets of same type
   - Nested remote effects prioritized
      ∘ Example: toggle button has priority over list cell
   - Closest angular distance wins
   - Angular hysteresis on previous target to prevent target flicker

Some UI content, such as text, can be relatively dense, e.g., much denser than 1° angular distance between letters/words from typical viewing positions. A policy can account for such density, for example, in prioritizing certain types of dense content over other types of dense content, e.g., prioritizing hyperlinks over plain text. Some implementations, enable specific/different gestures to allow a user to select low priority content (e.g., text) so that plain text adjacent to a higher-priority hyperlink can still be selected.

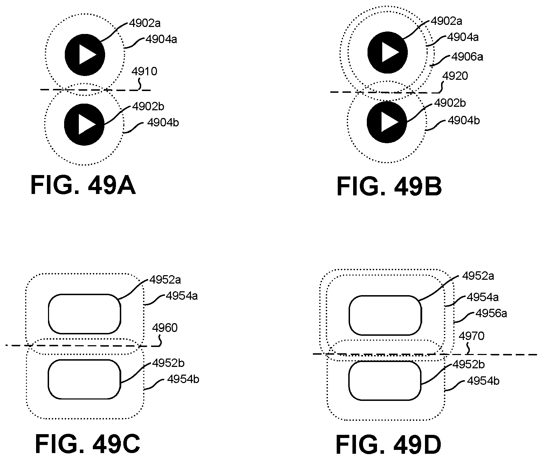

**Figures 49A-49D** illustrate hysteresis in determining to associate user activity with user interface elements. This may involve prioritizing a candidate target if the target was previously identified, e.g., prioritizing a button while the user's gaze remains on or near the button. Such prioritization may be accomplished by expanding the target's fuzzy hit test area. Such prioritization may reduce the appearance of flicker which may occur effects are displayed when user activity between two UI elements is alternately associated with a first UI element than the second UI element than back to the first UI element, etc.

In Figure 49A, during an initial user activity association, each of two UI elements 4902a-b has an equally size fuzzy hit testing region 4904a-b, e.g., each such region determined based on a 1° angular distance. Based on these regions and a disambiguation policy, user activity locations above decision boundary 4910 will be associated with UI element 4902a and user activity locations below decision boundary 4910 will be associated with UI element 4902b. The decision boundary 4910 is equidistant between the UI elements 4902a-b.

Once UI element 4902a is associated with the user activity (e.g., a gaze at an initial point in time), the regions change. As illustrated in Figure 49B, subsequent to the initial association, the two UI elements 4902a-b have differently-sized fuzzy hit testing regions. The fuzzy hit test region 4906a is determined based on a 1.2° angular distance and thus is larger than the original fuzzy hit test region 4902a (including for comparison in Figure 49B). The fuzzy hit test region 4902b remains determined based on a 1° angular distance. Based on these regions and a disambiguation policy, user activity locations above decision boundary 4920 will be associated with UI element 4902a and user activity locations below decision boundary 4920 will be associated with UI element 4902b. This decision boundary 4920 is closer to UI element 4902b than to UI element 4902a, it is no longer equidistant between the two.

In Figure 49C, during an initial user activity association, each of two UI elements 4952a-b has an equally size fuzzy hit testing region 4954a-b, e.g., each such region determined based on a 1° angular distance. Based on these regions and a disambiguation policy, user activity locations above decision boundary 4960 will be associated with UI element 4952a and user activity locations below decision boundary 4960 will be associated with UI element 4952b. The decision boundary 4960 is equidistant between the UI elements 4952a-b.

Once UI element 4952a is associated with the user activity (e.g., a gaze at an initial point in time), the regions change. As illustrated in Figure 49D, subsequent to the initial association, the two UI elements 4952a-b have differently-sized fuzzy hit testing regions. The fuzzy hit test region 4956a is determined based on a 1.2° angular distance and thus is larger than the original fuzzy hit test region 4952a (including for comparison in Figure 49D). The fuzzy hit test region 4952b remains determined based on a 1° angular distance. Based on these regions and a disambiguation policy, user activity locations above decision boundary 4970 will be associated with UI element 4952a and user activity locations below decision boundary 4970 will be associated with UI element 4952b. This decision boundary 4970 is closer to UI element 4952b than to UI element 4952a, it is no longer equidistant between the two.

### Direct Touch Examples of Fuzzy Hit Testing

Fuzzy hit testing may be used to improve targeting accuracy with respect to direct touch user interactions. For example, it may be used to improve targeting accuracy with respect to the initial touch point for a direct touch interaction. Inaccuracy in detecting initial touch point location may be the result of sensor inaccuracy (e.g., detecting hand joint locations accurately), depth perception issues (e.g., user's intending to pierce at a location but actually piercing at another location), matting and inclusion errors, parallax errors, and potentially other issues. Fuzzy hit testing may be used to adjust a detected touch down location towards or within a nearby UI element, e.g., the target to which it is closest.

In some implementations, a direction-based fuzzy hit process that is utilized for example for gaze fuzzy hit corrections is additionally or alternatively used to adjust direct touch interaction locations. Doing so may involve synthesizing a mock gaze direction based on a detected direct touch location, e.g., determining a ray from a current viewpoint position (real or synthesized) through the detected direct touch location.

For example, at the beginning of a direct touch (e.g., on the first frame at which a direct touch is detected), a fuzzy hit test process is performed using a ray synthetically-generated based on a detected location of the direct touch. For direct touch, the user interface or other elements with which a user is interacting are within arm's reach of the user. Thus, in some implementations, the synthesis of a gaze ray may be based on a viewpoint at a selected distance away from the content, e.g., 0.57 meters away. With such a distance, the forgiveness of the ray-based/angular distance based fuzzy hit testing process may correspond to a desired amount of distance on the plane of the UI, e.g., a 1° angular distance may correspond to 1 cm of radial spacing on the surface of a flat UI 0.57 meters away.

In some implementations, the amount of forgiveness (e.g., 1° angular distance / 1 cm Euclidean distance) may be static. In other implementations, the amount of forgiveness (e.g., 1° angular distance / 1 cm Euclidean distance) is dynamic. For example, it may scale in size based the approach movement of the hand during a direct touch and/or the piercing speed. Hand approach motion and speed may be indicative of or correlated with user care (e.g., being precise or being loose/sloppy). More precise user activity may be given less forgiveness in fuzzy hit testing (e.g., smaller radius) or a different skew based on the piercing angle, etc. Using a fixed amount of forgiveness may simplify debugging and ensure greater consistency.

A fuzzy hit testing process may then be applied, e.g., as depicted in Figure 48, to associate the user activity (e.g., the direct touch initial location) with a UI element, e.g., snapping the detected location to a new location within a nearby UI element.

The system may continue to track the user activity, e.g., as the user hand continues to move to swipe, retract, etc., with subsequent positions on the UI being adjusted based on the initial adjustment / starting UI touch point location, e.g., correcting the trajectory of the hand based on the initial correction.

Direct touch fuzzy hit testing may omit accounting for hysteresis. For example, it may not make sense to account for prior user activity in some or all direct touch contexts, e.g., hysteresis may not make sense if a user touches and retracts and then touches and retracts again, etc.

In some implementations, fuzzy hit testing is run only at the beginning of a direct touch user activity (e.g., only on a single frame at or near the beginning of the user activity). Doing so may conserve power, conserve processing resources, and make the process quicker and more efficient than it otherwise might be. Doing so may be appropriate for some types of direct touch but not other types of direct touch. For example, it may be appropriate to run fuzzy hit testing only on the first frame of a direct touch initial touch but appropriate to run fuzzy hit testing to detect hover type direct touch events, e.g., where the finger hovers just above one or another UI element.

Direct touch user activity may involve different types of hover feedback. For example, a system may provide both a glow that tracks a user's finger continuously (e.g., directly below the user's finger anywhere on a UI platter) and UI-element specific hover feedback (e.g., making a button pop out slightly when the user's finger hovers over it). Fuzzy hit testing may be used for one or both of these different types of feedback but may be particularly useful for the second, which requires associating the user activity with a particular (and usually relatively small) UI element rather than a particular spot on a window, platter or other relatively larger UI region.

Fuzzy hit testing may snap a touch location to a point on a nearby UI element and may change the target ID associated with a user activity. For example, a user may hover over a button and the system may pop out the button, identifying the button as the new target of the user activity. If the user misses and hits the backing plane slightly, e.g., misses the bounds of that button, then the system may change the target as well so that if the user pokes the backing plane, they also poke the button that is popped out. This may help address the question of when the touch of a popped-out button occurs, e.g., when the top of the button is touched or when the button is depressed.

Fuzzy hit testing for indirect user activity (e.g., gaze) may be run frequently, e.g., on every frame in some implementations, or less frequently, depending upon the requirements for detecting interactions based on a given user activity.

In some implementations, fuzzy hit testing of direct touch user activity that corresponds to hand touches is guided based on user gaze direction. For example, direct touch fuzzy hit testing may bias UI element association towards a UI element at which a user is gazing during (or just before) a direct touch. Even though a gaze is not overtly part of the user interaction, it can still be useful to disambiguate user intent. In some implementations, on the first frame of a direct touch, a detect touch location, if a gaze direction's fuzzy hit test point (snapped hit test point) is within 1 cm of the detected touch point, then we just accept the detected touch point, e.g., based on the gaze direction being approximately at the same location. This is based on the insight that users tend to look at UI elements as they touch them. Similarly, if a touch fails, a user tends to immediately look at the target that was intended. In the context of relatively dense UIs (e.g., a virtual keyboard), simply using a gaze point as a touch point could lead to incorrect/inaccurate targeting. However, for relatively isolated targets this may provide accuracy and efficiency. Gaze may be used effectively to disambiguate between two direct touch targets, e.g., when the detected touch point is in the region between the two targets.

In addition, the insight that people tend to look before they touch, especially for small buttons, may be used to perform calibration on gaze and/or hand tracking during use of a device. For example, the system may determine that a gaze direction was detected to be off an amount (e.g., 0.5) to the upper left consistently over a number of user interface interactions and adjust the gaze tracking accordingly.

### Exemplary Input Support Processes

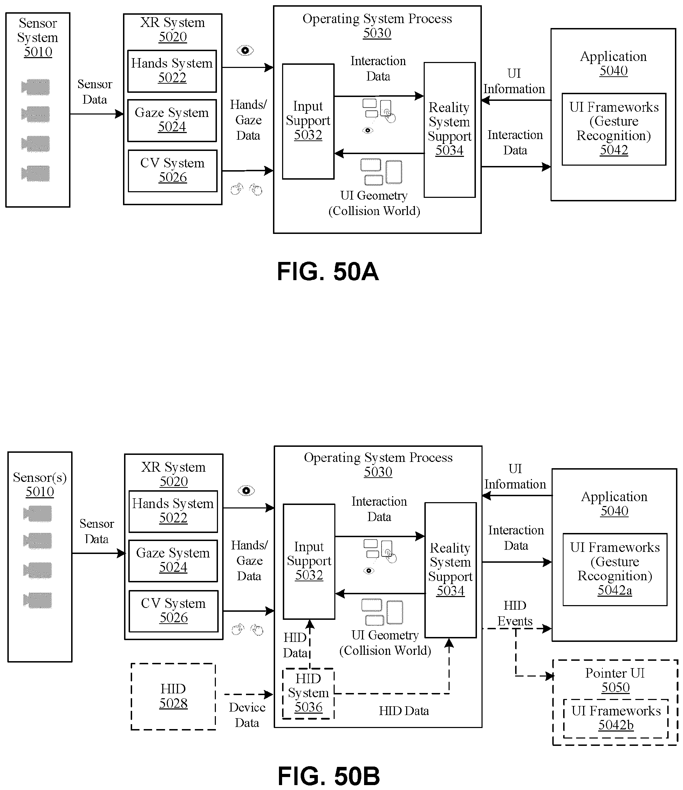

**Figure 50A** illustrates an exemplary architecture that receives user activity data and application UI information at a system process that outputs interaction events data for one or more applications to use to recognize input.

In this example, the sensor system 5010 and AR system 5020 can be considered a sensing layer, e.g., determining where the user's hands are in the 3D world, where the user is gazing in the 3D world, etc., and the OS process 5030 and application 5040 can be considered an interaction layer, e.g., determining what the user is interacting with, how the user is interacting, etc.

The sensor system 5010 may include various sensors, including, but not limited to, color / RGB image sensors, greyscale image sensors, depth sensors, dynamic vision sensors, motion sensors, etc. The sensor systems may include Image Signal Processor (ISP) components and/or other components that process sensor data.

The sensor system 5010 may provide the sensor data to the XR system 420 in various forms. In some implementations, sensor data is sent over time, periodically, and/or at a fixed rate, e.g., at X frames of sensor data per second (fps). In one example, hands data based on images captured by one or more outward facing image sensors (e.g., on a device such as an HMD) is sent to the XR system 5020 at a fixed rate (e.g., 10 fps, 20 fps, 30 fps, 60 fps, 120 fps, etc.). In another example, such hands data is sent at a non-fixed rate or otherwise irregularly. In one example, gaze data based on images captured by one or more inward facing image sensors (e.g., on the inside of a device such as an HMD) is sent to the XR system 5020 at a fixed rate (e.g., 10 fps, 20 fps, 30 fps, 60 fps, 120 fps, etc.). In another example, such gaze data is sent at a non-fixed rate or otherwise irregularly. Hands data and gaze data may be sent to the XR system 5020 at the same or different rates and/or the same or different times. The sensor data may include additional types of information and/or may provide information about other parts of the user or the physical environment in which the user is within. Such other sensor data may be provided at the same or different rates and/or at the same or different times as the hands data and/or gaze data.

The XR system 5020 utilizes the received sensor data to perform user activity monitoring and/or tracking. In one example, the XR system 5020 is configured to provide relatively low-level tracking algorithms. For example, the hands system 5022 of the XR system 5020 may use the sensor data to perform a hand tracking algorithm to track the positions, pose (e.g., position and orientation), configuration (e.g., shape), or other aspects of the hand over time. The hands system 5022 may generate, update, and/or track a 3D model of a hand, e.g., a model of the hand that represents the hand's shape using defined "joints" or nodes that may or may not correspond to the user's physiological hand joints. In one example, a hand model of 20+ joints is maintained over time based on the sensor data such that the hands data generated by hands system 5022 represents the current position/pose/configuration of the hand at different points in time, which may enable determining 3D movements or other changes made by a hand over time. The hands system may alternatively (or additionally) track a subset of points on a surface of the user's hand, e.g., tracking the positions of one or more fingertips/thumb-tips of the user's hand. Such tracking may, but need not, include determining when such portions (e.g., fingertips/thumb-tips) are touching one another and/or other portions of the user or the physical environment. The hands system 5022 may output hand position, pose, and/or configuration information as well as confidence values corresponding to such hand data.

The gaze system 5024 of the XR system 5020 may use the sensor data to perform a gaze tracking algorithm to track eye characteristics such as, but not limited to gaze direction, over time. The gaze system 5024 may use the sensor data to directly (e.g., without modeling the shape of the eye and/or head) determine a gaze direction of one or both eyes. The gaze system 5024 may use the sensor data to generate, update, and/or track a 3D model of an eye, e.g., a model of the eye that represents the eye's shape based on identifying the positions of points (e.g., eyeball center, cornea center, pupil center, etc.), dimensions (e.g., eye-ball diameter, pupil diameter, etc.), and/or surface portions of the eye. In one example, the gaze system 5024 outputs a stream of gaze directions (e.g., vector in 3D space or relative to the user's current position) of each eye over time. In one example, the gaze system 5024 outputs gaze directions and confidence values corresponding to such gaze directions.

The XR system 5020 may include a computer vision (CV) system 5026 that underpins or otherwise supports the hands system 5022, gaze system 5024, and/or other XR system sub-systems (not shown). For example, the CV system 5026 may perform one or more environment and/or user assessment algorithms, e.g., performing simultaneous localization and mapping (SLAM) to model the 3D physical environment and keep track of the user's position relative to that model. In another example, the CV system 5026 may identify objects such as walls, doors, tables, appliances, etc., within the physical environment and/or the positions of such objects. In another example, the CV system 5026 may perform a semantic understanding algorithm to semantically label objects within the physical environment. In another example, the CV system 5026 may use sensor data associated to assess user characteristics (e.g., type of activity currently being performed (e.g., exercise, work, meditation, etc.), posture/motion (e.g., sitting, standing, walking, running, driving, etc.), and/or other user characteristics). Such user characteristic data may be used by hands system 5022 and/or gaze system 5024 to improve their efficiency and/or accuracy.

In Figure 50A, the XR system 5020 provides hands / gaze data to the operating system process 5030. The hands/gaze data may be provided periodically (e.g., at a fixed frame rate corresponding to the sensor capture rate or otherwise) or irregularly. In one example, the hands data is provided at the same frame rate per second as the gaze data. In another example, the hands data is provided at a different frame rate than the gaze data.

The hands/gaze data received by the operating system process 5030 may be used by the input support process 5032 to (1) itself provide/initiate some responses on to user activity on behalf of the application 5040 and/or (2) provide some information (e.g., interaction data) to the application 5040 to enable the application 5040 to respond to user activity. The input support process 5040 / operating system process 5030 may provide an application with information about a first type of user activity (e.g., activity determined to correspond to intentional user interactions with UI elements). Thus, as illustrated in Figure 50A, the input support process 5032 generates interaction data that is provided to the application 5040. This interaction data provided to the application 5040 may exclude or convert/abstract the hands/gaze data (and other user-based information). The application 5040 may receive only interaction data and thus may not receive data about other types of user activities, e.g., user activity deemed to be something other than an intentional interaction with a UI element such as user activity in which the user is simply gazing over the UI or other portions of an XR environment or during which the user is reading text displayed within the application's UI. Note that, in this example of Figure 50A, the interaction data provided by the input support process 5032 is provided to the application 5040 via a reality system support 5034. However, in other examples, the input support process 5032 may provide such interaction data to the application 5040 directly or via a different intermediary.

In some implementations, the input support process 5032 uses information about the user interface of one or more applications such as application 5040 to provide input support to those applications. In some implementations, the application 5040 sends user interface information to input support process 5032 that the input support process 5032 utilizes to interpret user interactions associated with the application 5040. For example, the application 5040 may provide information that defines the appearance of a rectangular region containing a set of user interface elements at specified positions and having certain desired interaction capabilities (e.g., selectable, non-selectable, hoverable, non-hoverable, expandable, non-expandable, etc.). The application 5040 may define the type, position, visual appearance, functional characteristics, or other aspects of such elements for use by the input support process 5032. The application 5040 may provide information to the input support process 5032 about its UI elements that defines what information the application 5040 will receive. For example, based on defining a button component, the application 5040 may receive input events associated with the button when the input support system recognizes user activity (e.g., a pinch and gaze, etc.) as an intentional interaction with the button element.

In some implementations, the input support process 5032 may use information about the positioning of an application user interface and/or the user interface elements within such user interfaces to better understand the user's activity and/or intentions and ultimately to provide a more accurate, more enjoyable, or otherwise better experience for the user. For example, the input support process 5032 may use information about the positioning of application user interface and/or the user interface elements within such user interfaces to (a) distinguish user activity associated with a first type of user activity (e.g., intentional interaction events) from other types of user activity, (b) determine to which user activities to respond to directly and to which user activities the application will respond, and thus selectively provide the application 5040 with information limited to the user activities to which the application 5040 will itself respond, (c) respond to some user activity associated with the application 5040 (e.g., providing hover feedback without needing to notify the application 5040), and/or (d) target user activity towards one of multiple applications to which user activity could potentially be intended.

In the example of Figure 50A, the reality system support process 5034 provides the input support process 5032 with UI geometry (e.g., collision world) data to enable the input support process 5032 to better support input to applications and/or other XR environment elements. The reality system support process 5034 may generate, update, and/or maintain information about items within a 3D XR environment, e.g., maintaining a current understanding / snapshot view of everything within the environment. This may involve determining where virtual content will be positioned within a XR environment that is based on a user's physical environment. For example, the reality system support process 5034 may determine that a first application's UI is to be positioned above the surface of a user's physical desk in an XR environment and a second applications' UI is to be positioned in front of the window to the side of the user's desk.

The reality system support process 5034 may determine where to position and how to configure (e.g., by determining container sizes and dimensions) spaces for application UI content to be rendered within a 3D XR environment based on information provided by the applications. In the example of Figure 50A, the application 5040 provides UI information (e.g., that may include UI element declarations) that the reality system support process 5034 uses to determine where to position and how to configure the spaces for the application's user interface. In one example, configuring the application's UI involves determining a position for one or more containers/colliders (e.g., one or more flat rectangular or other 2D shaped windows or one or more square or other 3D shaped bounding areas) in which the applications' UI will be positioned in 3D space. The reality system support process 5034 may position containers for each of one or more applications based on the UI information (e.g., UI declarations) provided by those applications. It may account for surroundings (e.g., the size of the room or other characteristics the XR environment), the user's position, activity, and preferences, and numerous other considerations in determining where and how to organize and manage the 3D positioning of objects within an XR environment. Applications need not know (or be informed about) the positions of their user interfaces within a 3D XR environment.

The reality system support process 5034 may determine not only the positions of user interface container/collider features such as windows containing all application content but also other user interface elements with respect to which user interactions and user activity may relate. Such user interface elements include, but are not limited to, text elements, buttons, sliders, scroll bars, pickers (e.g., color pickers), menu controls, timelines, images, vector graphics, rulers, icons, and tabs.

Tracking user interface element positions within the 3D XR environment and providing such information to input support process 5032 may enable input support process 5032 to more efficiently, accurately, and effectively support input processes including, but not limited to, supporting input to applications such as application 5040. Moreover, using such information may additionally enable input support process 5032 to do so in a way that protects the privacy of the user by limiting the information about user activity that is exposed to application 5040.

For example, the input support process 5032 may use hands data from hands system 5022 to determine that a user is not currently making a gesture indicative of interaction intent (e.g., hand is not pinching) and use a gaze direction from the gaze system 5024 to determine that the user is gazing at a particular button within the user interface of application 5040 within the 3D environment maintained by the reality system support process 5034. The input support process 5032 can use this to initiate an out of process (e.g., outside of the application process) response, e.g., the reality system support process 5034 may provide hover feedback highlighting the button to the user. The application 5040 need not receive any information about the user's current user activity (e.g., the user's hand state and/or gaze state) and need not even be aware that the hover feedback was provided by the system. In this example, the input support process 5032 uses the UI geometry information provided by the reality system support process 5034 and based on UI information provided by the application 5040 to provide a response on to user activity on behalf of the application 5040 without the application needed to itself be involved. Avoiding providing user activity data about some types of user activity (e.g., unintentional activity) can help protect user private data from application 5040.

In another example, the input support process 5032 may use hands data from hands system 5022 to determine that a user is not currently making a gesture indicative of interaction intent (e.g., hand is not pinching) and use a gaze direction from the gaze system 5024 to determine that the user is gazing at a menu heading within the user interface of application 5040 within the 3D environment maintained by the reality system support process 5034. The input support process 5032 can use this to initiate an out of process (e.g., outside of the application process) response, e.g., the reality system support process 5034 may provide an expansion of the menu showing previously hidden menu options to the user. The application 5040 need not receive any information about the user's current user activity (e.g., the user's hand state and/or gaze state) and need not even be aware that the menu was expanded. In this example, the input support process 5032 uses the UI geometry information (e.g., identifying the menu and its menu options and their positions within 3D space) provided by the reality system support process 5034 and based on UI information provided by the application 5040 to provide a response on to user activity on behalf of the application 5040 without the application needed to itself be involved. Avoiding providing user activity data about some types of user activity (e.g., unintentional activity) can help protect user private data from application 5040.

The input support process 5032 may additionally (or alternatively) use the UI geometry information (provided by the reality system support process 5034 and based on UI information provided by the application 5040) to provide information to the application 5040 to respond itself to user activity. In some implementations, such information is limited to only user activity associated with a first type of user activity, e.g., user activity associated with an intentional interaction with a user interface element. The input support process 5032 may provide information (e.g., interaction data) to enable the application 5040 to respond to user activity itself. Such information may process or limit the user activity data (e.g., the hands / gaze data received from the XR system 5020) such that the application 5040 does not obtain detailed user data, e.g., data about specific user gaze directions, user hand size/shape, etc.

For example, the input support process 5032 may use hands data from hands system 5022 to determine that a user is currently making a gesture indicative of interaction intent (e.g., hand is pinching) and use a gaze direction from the gaze system 5024 to determine that the user is gazing at a particular button within the user interface of application 5040 within the 3D environment maintained by the reality system support process 5034. Based on determining that this user activity (e.g., pinch and gaze) satisfies criteria to qualify as a first type of user activity (e.g., an intentional interaction with a UI element), the input support process 5032 can generate data (e.g., interaction data) that is different than the raw hands and raw gaze data to send to the application 5040 to enable the application 5040 to respond to the user activity itself. The application 5040 need not receive the raw hands data and/or the raw gaze data associated with the user's current activity and need not even be aware that the user activity was gaze/hands-based. Rather, the data provided to the application 5040 may simply be sufficient for the application 5040 to recognize an input event (e.g., a hit event) to the button of the user interface of the application 5040. Such data may have been abstracted to use input modality agnostic format or a single input modality format that may differ from the input modalities available on the device (e.g., using a touch-screen input modality format). Avoiding providing detailed user activity (e.g., detailed hands or gaze data) can help protect user private data from application 5040.

The data provided to application 5040 that enables the application 5040 to respond to input to its UI elements can have various forms. In some implementations, such data is limited to only certain types of user activity and thus the data format reflects this, e.g., the application 5040 may be provided with data defining an interaction event in circumstances in which the application is to be provided data to respond to intentional UI interaction events. In one example, an application 5040 is only provided information identifying a UI element that was interacted with and the type of event, e.g., button X received a hit type interaction.

In other implementations, an application 5040 has an input recognition framework for a particular input environment (e.g., a 2D input environment) and the data provided to the application 5040 mimics the format of that input environment. For example, an application 5040 may be configured with a 2D input recognition framework in which the application 5040 is configured to recognize 2D touch input on a touch screen device, e.g., receiving interaction pose data identifying touch points and directions for user touches to a touch screen interface. Note that the term "pose" here refers to such information identifying a 2D position on a touch screen and/or a direction associated with the touch - it may involve receiving only 2D position or it may involve receiving 2D position and directional data. In this example, such an application 5040 with a 2D input recognition framework may be provided with data that mimics a touch event. For example, the input support process 5032 may use hands data from hands system 5022 to determine that a user is currently making a gesture indicative of interaction intent (e.g., hand is pinching) and use a gaze direction from the gaze system 5024 to determine that the user is gazing at a particular button within the user interface of application 5040 within the 3D environment maintained by the reality system support process 5034. The input support process 5032 may generate interaction data that identifies the 2D position of the gaze direction relative to the application's user interface element and provides this as an interaction pose to the application 5040 so that the application 5040 can interpret this as a touch event (e.g., a tap) at that position (on the button) and initiate an appropriate response. The application 5040 need only receive the interaction pose without needing to receive the raw hands or gaze data. In this example, the application 5040 knows the point of interaction (in its 2D space) but does not know (and does not need to know for input recognition purposes) the gaze direction in the 3D space of the XR environment.

In some implementations, the use of input support process 5032 enables execution of application 5040 in an environment different than its original or intended environment. For example, the application 5040 may be originally compiled or intended for execution on a mobile device having a 2D touch screen input environment or a laptop having a 2D mouse/trackpad driven environment. The application 5040 may be executed within a device that offers 3D input modalities and receive data from the input support process 5032 (corresponding to those 3D input modalities that the application 5040 cannot directly recognize) in a format that the application 5040 can recognize, e.g., as a 2D input corresponding to touch screen or mouse/trackpad-driven input. An application intended for a mobile device, laptop, or other device may be executed within an HMD environment that enables 3D interactions without needing to make significant (or any) modifications to the input recognition processes of the application. In one example, an HMD is configured with binary compatibility to mobile and/or laptop devices, e.g., made capable of executing the binary or object code executable of mobile and/or laptop devices) and provides enhanced input capabilities to mobile and/or laptop applications executing on the HMD by utilizing an input support process 5032 that provides data based on user activity in a 3D environment that the applications can recognize as 2D modality-based input.

In the above example, the application 5040 may be provided with additional information. For example, the application 5040 may receive information about the location of the pinching hand, e.g., a manipulator pose. Such hand information may be higher level than the raw hands data. For example, the application 5040 may receive a manipulator pose that identifies the position and/or orientation of the hand within 3D space without receiving information about the hand's configuration and/or information about a 3D model (e.g., of joints) used to represent the hand's positions, pose, and/or configuration in 3D space. In another example, the application 5040 may receive information about an interaction state, e.g., identifying a type of interaction as determined by the input support process 5032.

In the above example, the criteria for identifying a first type of user activity (e.g., activity associated with intentional user element interaction) involves assessing whether the user's hand exhibited a particular configuration (e.g., a pinch gesture) and, based on identifying the hand exhibiting such a configuration, identifying other concurrent user activity, e.g., identifying where the user is gazing at (or near) that time. Such a pinch may be determined based on criteria that assesses the proximity of portions of a user hand model to one another (e.g., how close is the fingertip to the thumb tip, etc.), using a classifier or other algorithm to label or classify a user hand configuration, or otherwise by processing the hands data. Other types of user activity and/or criteria may be used to identify a first type of user activity (e.g., activity associated with intentional user element interaction). For example, a voice command may be recognized as an indicator of intentional activity, e.g., recognizing a key word or phrase such as "select" or "hit" or "tap" or "click this" and then associating a gaze direction and/or other user activity occurring during or near the time of the utterance of the key word or phrase with the intention to interact, e.g., using the other activity to identify the UI element target upon which the action will be taken.

The input support process 5032 may additionally account for sensor-based or other inaccuracies in the hands and/or gaze data. Tracking user application interface element positions within the 3D XR environment and providing such information to input support process 5032 may enable it to account for such inaccuracies. Moreover, it may be desirable to a use a system (shared) process so that such inaccuracies can be accounted for consistently and effectively across multiple applications, e.g., providing a system-level fuzzy hit testing process. In other words, it may be desirable to have a single shared process performing such corrections rather than having individual applications doing so. In one example, a user gazes at a button but the gaze system 5024 generates a user's gaze direction that is slightly outside of the button (e.g., 0.5 degrees outside). The input support process 5032 may correct for this error. For example, it may determine that the gaze was likely actually directed at the button since it is within a threshold (e.g., 1 degree) of the button and there is nothing else nearby. The input support process 5032 may correct for this in providing the data to the application 5040 that enables the application to respond to the user activity. For example, rather than providing an interaction pose slightly outside of the button, it may provide an interaction pose that is within the button, e.g., at the button's edge. The application 5040 thus need not account for the gaze inaccuracy in its own input recognition processes, e.g., it need not itself determine whether an interaction pose just outside of the button should be considered a within the button. This may be particularly useful if the application 5040 uses a framework from another input paradigm, e.g., a touch screen paradigm that utilizes different (potentially much smaller) inaccuracy/error thresholds. Such an application would not have to implement different thresholds for different inaccuracy levels expected in different input modalities. Having the input support process (e.g., an OS process) correct for such inaccuracies may provide more consistent and accurate results without requiring that application developers devote extensive resources to addressing such inaccuracies and/or differences amongst different input modalities.

The application 5040 may provide UI information to the operating system process 5030 in various formats. In some implementations, the application 5040 declares its UI elements, e.g., declaring a hierarchy of UI elements within its user interface. Such declarations may include information/instructions that enable the operating system process 5030 to respond to some user activity on the application's behalf. In some implementations, the application 5040 declares remote effects for certain UI elements, e.g., declaring that button X should show hover feedback but that button Y should not show hover feedback. An application 5040 may use remote effect declarations to specify the behavior that the application 5040 intends for some or all of its UI elements. The application may provide a hierarchical declaration structure (e.g., an Apple^{®} Core Animations^{®} (CA) structure) that declares UI element positions, sizes, types, hierarchical relationships, transparent portions, layering effects, special effects, and/or any other information that facilitates the functions provided by the reality system support process 5034 and/or the input support process 5032. The application 5040 may provide such information over an inter-process communication (or otherwise) to the operating system process 5030.

The input support process 5032 may use such information (e.g., application declarations of UI elements and/or remote effects) to better interpret user activity. For example, a given gaze may be between two UI elements, one having remote effects and the other not having remote effects, and the input support process 5032 may move/snap the gaze to the UI element that has the remote effects since it is more likely to be the appropriate/intended UI element to which a UI response should be associated. Remote effects may be performed out of process without application 5040 being involved.

In some implementations, an application 5040 is enabled to request user permission for specified user data (e.g., detailed hands and/or detailed gaze data) and, if explicitly approved by the user, enabled to receive such information.

In various implementations, hands system 5022 may produce different types of data including, but not limited to, timestamp data, joint position data, POV corrections (e.g., to joint positions), world transform data, joint confidence data, palm center data, palm normal direction data, hand action data, hand radius data, pinch data, object detection data (e.g., regarding an object held or touching the hand), and occlusion data, e.g., occlusion probability data regarding one joint being occluded and thus its data potentially less accurate. Similarly, in various implementations, the gaze system 5026 may produce different types of data including, but not limited to, timestamp data, world transform data, binocular gaze data, gaze confidence data, gaze tracking state data, gaze direction data, gaze origin data, pupil center data, and pupil diameter data. In some implementations, the XR system includes a frame support module that enables better frame drop support via input frame queuing.

Input support process 5032 may have access to rich and detailed hands data and gaze data and use that rich and detailed information to support accurate, efficient, and consistent input responses both within app processes and outside of app processes. However, it may be desirable to keep the details of such rich and detailed user data outside of applications, such as application 5040, for example, to prevent such applications from knowing information about the user that the user considers private, e.g., what the user reads, which content they look at and for how long, how quickly the user reads, how big the user's hands/fingers are, how the user interacts with other applications or aspects of the XR environment, etc.

**Figure 50B** illustrates another exemplary architecture that receives user activity data and application UI information at a system process that outputs interaction events data for one or more applications to use to recognize input. In this example, the sensor system 5010 and AR system 5020 can be considered a sensing layer, e.g., determining where the user's hands are in the 3D world, where the user is gazing in the 3D world, how the user is using an input device such as a trackpad or controller, etc., and the OS process 5030 and application 5040 can be considered an interaction layer, e.g., determining what the user is interacting with, how the user is interacting, etc.

Sensors(s) 5010 and XR system components (e.g., hands system 5022, gaze system 5024, and CV system 5026) are similar to those discussed with respect to Figure 50A. In addition, a human interface device (HID) 5028 (e.g., a trackpad, 3D mouse, hand-held controller, etc.) provides device HID data to a HID system 5036. Such device data may correspond to 3D motion or position data controlling a point, an object, a ray or another form of input affordance that is positioned within an XR environment. For example, a user may manipulate the position and orientation of a hand-held controller to direct a ray/vector within the XR environment towards UI elements. The HID5028 may include multiple input mechanisms, e.g., one to position a ray and one to indicate an intention to interact with what the ray is directed towards. In this example, the user may manipulate the HID 5028 and see a visualization of a ray extending from the device in a direction. The user may manipulate the device to point the ray at a button on a user interface of an application and depress a physical button on the HID 5028 (while the ray is pointed at the button) to indicate an intention to interact with the button, e.g., initiating a click, tap, hit, etc. on the button.

In the example of Figure 50B, the HID system uses the motion data to provide HID data to both the reality system support process 5034 (which can position the affordance (e.g., ray, point, etc.) within the 3D XR environment) and the input support process 5032 (which can use the HID data to identify intentional interaction, respond to some interactions on behalf of one or more applications, and/or provide data to the one or more applications to enable the one or more applications to respond to HID events without providing detailed or otherwise private user data to the application.

In one example, the input support process 5032 recognizes that a ray direction from an HID device intersects an application's UI element and initiates an out of process UI response (e.g., hover feedback on the element) without providing information about the user activity to the application.

In another example, the input support process 5032 recognizes a first type of user activity (e.g., an intentional UI element interaction type of activity) based on the HID data satisfying certain criteria (e.g., including an intentional physical button depression, occurring while a keyword/key-phrase is uttered, occurring while the other hand pinches, etc.). The input support process 5032 sends interaction data to the application based on this user activity. Note that the same interaction data may be triggered by different types of user activity, e.g., user activity utilizing different interaction modalities such as direct touch, indirect touch, HID-based, etc. The input support process, as described above, may package the data provided to the application 5040 in a form that the application 5040 can recognize as input without the application needing to have built-in input recognition processes that are specific to some or all of the input modalities. For example, the application 5040 may not include controller-ray direction + button click-based 3D input recognition and the input support process can package interaction data associated with such input in a format that the application can understand, e.g., as 2D touch-based input to a touch screen / 2D mouse cursor-based input.

In an alternative implementation, HID data is provided directly to the reality system support process 5034 and/or application 5040 without input support process 5032 support.

In some implementations, the HID 5028 is a trackpad and the input support process 5032 fuses gaze direction and trackpad touch data, e.g., with trackpad touch providing an indication of intentional interaction with a UI element and the gaze direction used to identify the target, e.g., UI element, to be associated with that intentional interaction.

In some implementations, the HID events are provided to a pointer UI process (that is potentially separate from the OS process 5030 and/or the application 5040). The pointer UI process may control the positioning of an affordance (e.g., point representation, shape representation, ray representation, etc.) that is displayed to the user via a UI framework 5042b. In some implementations, the pointer UI process 5050 and UI frameworks 5042 are within application 5040, i.e., are executed in process by application 5040.

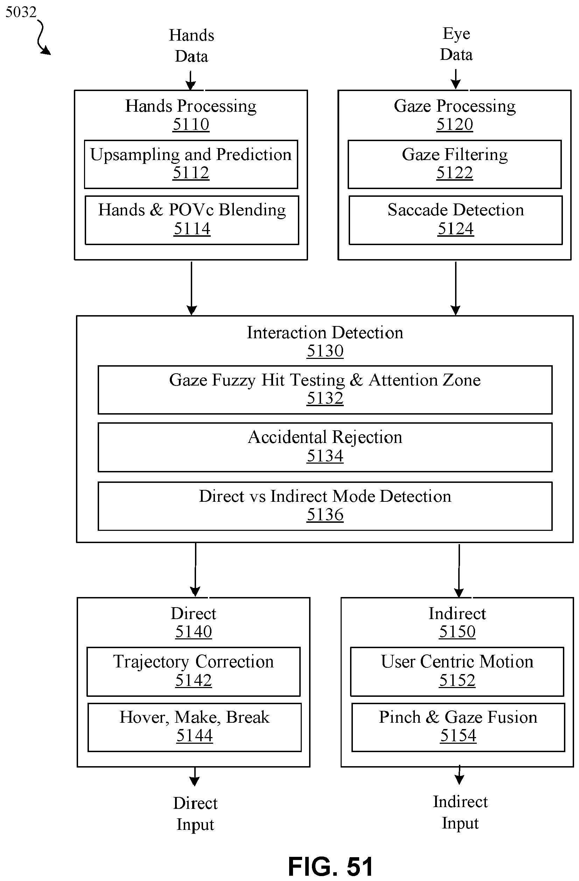

**Figure 51** is a process flow chart illustrating an exemplary process using hands and eye data to provide direct and indirect input.

In this example, hands data is input to hands processing block 5110. An upsampling and prediction block 5112 up-samples the hands data (e.g., adding more frames) and makes predictions about future hand locations, paths, trajectories, speeds, accelerations, etc. The hands and POVc blending block 5114 may use corrected and uncorrected hand joint data to mitigate POVc-coupled hand jumps, e.g., that may occur due to background depth and camera switching. When a user's hands are outside of a user's field of view (FOV) and/or the view of the sensors, it may not make sense to expend resources or may not otherwise be possible to provide corrections, resulting in jumps in hand position. The process may smoothly blend hands data over time, for example, based on whether the user is in a direct or indirect mode, whether the hand is near a UI element or not, or other factors.

The eye data is input to a gaze processing block 5120. The gaze filtering block 5122 filters and/or smooths the gaze data signal. The saccade detection block 5124 removes saccades and/or other eye behavior that is predicted to be unintentional. An example saccade detection process may use gaze confidence, tracking state, pupil center, pupil diameter, inter-pupillary distance (IPD), gaze ray data, and velocity data to detect saccades and blinks for removal and/or identify fixations for gaze interactions. It may distinguish between gaze events that are fixations and gaze events that are saccades to facilitate more accurate gaze-based input.

The processed hands and eye data are provided to the interaction detection block 5130. Note that the interaction detection block 5130 may additionally use UI geometry data including data about an application's user interface. The UI geometry data may be provided at a different rate than the hands and/or eye data. In one example, UI data is received at first rate (e.g., 90 fps) while hands and gaze data a received asynchronously at slower average rates (e.g., at 60 fps). The interaction detection block 5120 may run asynchronously, e.g., as UI updates and/or gaze/hands data are received.

The gaze fuzzy hit testing and attention zone 5132 block identify virtual elements (e.g., UI elements) that the user gaze is considered to be associated with and an attention zone, e.g., based on head or device orientation/direction. An example gaze fuzzy hit testing process may use gaze ray data, confidence data, gesture data (e.g., hand motion classification), fixation cluster spread data, etc. to loosen / tighten a gaze area/cone-case based on precision of gaze tracking and/or user behavior. Another example gaze fuzzy hit testing process may use the process described with respect to Figure 48. These processes may utilize UI geometry from the reality system support process 5034 that is based on UI information provided by applications such as application 5040, e.g., identifying interaction targets (e.g., which UI elements to associate with a given user activity) based on declared remote effects or the UI elements. Use of such UI information may facilitate more accurate hit testing.

The accidental rejection block 5134 identifies gaze instances that were rejected (i.e., not associated with virtual elements via fuzzy hit testing processes) but that are nonetheless still to be associated with virtual elements in appropriate conditions, e.g., to account for fuzzy hit testing anomalies. It attempts to understand the intent behind user motion to better interpret that motion, e.g., as an intentional UI element interaction or something else. An example accidental rejection process may use hand joint data, interaction state history, gaze attention zone data, occlusion data, etc. to reject (or cancel) unintentional user interactions. This process may utilize UI geometry from the reality system support 5034 that is based on UI information provided by applications such as application 5040, e.g., distinguishing user intentional activity from accidental activity based on the UI elements or their declared remote effects that are nearby. Use of such UI information may facilitate more accurate accidental rejection. For example, user motion in a Z direction may be identified as accidental based on determining (from application declared data) that the application's UI is 2D / planar and thus that the motion in the Z direction is unlikely to be intended input to the UI, i.e., it is likely accidental motion not intended to trigger UI interaction, and thus the input support process 5032 may be more confident in rejecting the user activity as accidental.

The direct versus indirect mode detection block 5136 uses the processed hands and eye data to determine an interaction mode for interpreting user activity, e.g., selecting a direct interaction mode or an indirect interaction mode.

If a direct interaction mode is selected, the hands and eye data (processed and/or unprocessed) is provided to direct interaction recognition block 5140, which provides direct input to the user interface. The trajectory correction block 5142 may adjust the trajectory of a user motion, e.g., adjusting a user hand motion to account for user behavior in 3D environments, e.g., to make the motion data better correspond to the user's intended motion / intended interactions. The hover, make, break block 5144 may perform various recognition processes using a hand gesture, motion path, velocity, acceleration, etc. to identify certain types of direct interactions with a user interface element, e.g., a "hover" interaction based on detecting that a hand/finger is proximate but not touching a user interface element, a "make" interaction based on detecting a point (in 3D space/time) that a hand/finger has made contact with a user interface element, a "break" interaction based on detecting a point (in 3D space/time) that a hand/finger has stopped contacting a user interface element, etc.

Numerous types of direct interactions may be recognized and provided as user input. In another example, a direct interaction is recognized by recognizing that the user makes contact with a slider bar user interface element, moves the hand left a distance X while making contact with the slider bar, and then retracts their hand to break contact with the slider bar. The slider bar may be moved left based on this input, e.g., by a distance X. In another example, the user makes a similar motion to provide input imparting a velocity on a user interface element, e.g., providing 3D swipe gesture through on a user interface to cause the user interface to begin moving and continue moving after the hand breaks contact where the continued motion is based on a velocity having been imparted on the UI object, e.g., analogous to when a user swipes up on a multi-touch interface of a mobile phone.

If an indirect interaction mode is selected, the hands and eye data (processed and/or unprocessed) is provided to indirect interaction recognition block 5150, which provides indirect input to the user interface. User centric motion block 5152 accounts for user centric motion in the hands data (e.g., accounting for the fact that the user may be making motions that pivot around a rotation point, e.g., a shoulder, elbow, wrist, etc.). User centric motion block 5152 may be used to map user hand motion into an object or affordance separate from the hand, e.g., an affordance displayed on application content.

The pinch and gaze fusion block 5154 determines which gaze data to associate with a user activity indicative of an intention to interact with a UI element, such as a pinch gesture. Numerous types of indirect interactions may be recognized and provided as user input. In one example, a user pinches fingers together and moves the pinched hand while gazing at a UI element to provide movement input to that UI element. In another example, a user pinches and releases quickly while gazing at a UI element to provide selection events (e.g., analogous to touch screen tap or mouse click input events).

An input support process as illustrated in the example of Figure 51 may perform one or more core functions. In some implementations these functions include, but are not limited to, obtaining gaze data and associating a user's gaze with UI elements associated with one or more applications. Doing so may involve performing a fuzzy hit testing process. Doing so may involve creating an attention zone corresponding to a set of zero or more UI elements that the user is likely giving attention to at a given time and using such an attention zone to disambiguate between interaction types (e.g., direct v. indirect input modalities), disambiguate which application a user in interacting with, and/or disambiguate which UI elements are the targets of the user's intentions to interact with UI elements.

In some implementations, an input support process 5032 relies heavily upon a reality system support process 5034 to provide a geometric representation of a user interface for hit testing against hands and gaze data. An input support process 5032 may use a collision world (e.g., 3D geometry abstractions) provided by a reality system support process 5034. An input support process 5032 may use user interface priority information (e.g., hierarchical display ordering, transparency information, etc.). An input support process 5032 may utilize a separate hit-testing process that produces 3D world hit test results (RE). An input support process 5032 may utilize a hit testing process uses an application-provided hierarchical tree (e.g., declaring UI elements and relationships) to determine hits / UI element targets to associate with user activity.

In some implementations, performs the functions illustrated in Figure 51 to provide an input support process 5032 that produces data for an application. The input support process 5032 may produce an interaction state for one or more UI elements, e.g., identifying whether an interaction is direct or indirect, whether an interaction is a hover/close proximity interaction (e.g., associated with user activity not linked to UI interaction behavior) or gesture/pinch/touch interaction (e.g., associated with user activity indicating UI intentional behavior).

In some implementations, an input support process 5032 provides an interaction pose, e.g., a trajectory corrected point on a UI element configured to drive a touch-screen tap type of input.

In some implementations, an input support process 5032 provides manipulator pose, e.g., corresponding to a position and/or orientation of the hand itself. A manipulator pose may provide a 3D location of a stable hand center or pinch centroid.

In some implementations, an input support process 5032 provides an active target (e.g., UI element).

In one example, a user initiates an interaction by pinching while gazing at a UI element. The application receives an interaction pose on the UI element and recognizes the user's intent to interact with the UI element. The user continues pinching and moves their hand to the left. The application receives more interaction poses, e.g., a set of positions on the user interface based on the moving 3D positions of the hand as it moves left, and responds by moving the associated UI element to the left. In this example, by pinching while gazing at a UI object and then moving the pinched hand to the left, the user provides input that the application can recognize to move the object to the left. The application is able to respond accordingly without needing to receive (and without actually receiving) information about the user's gaze directions and/or specific hand characteristics. In this example, the application receives only interaction pose data and thus may be an application capable of only receiving interaction pose data as a proxy for touch input data. The application may additionally or alternatively be provided with manipulator pose data, e.g., of the 3D positions of the hand as it moves left and may determine the motion of the associated object based on the changing manipulator pose position.

In some implementations, an input support process 5032 receives a gaze direction that could potentially be associated with different UI elements, e.g., because it is between the UI elements or because the UI elements overlap one another. Fuzzy hit testing and other such processes may help disambiguate user intention to identify an appropriate UI element in such cases.

In some implementations, an input support process 5032 recognizes two-handed 3D gestures, e.g., a two-handed zoom gesture, and provides information to an application that corresponds to multi-touch touch screen input gestures. Doing so, for example, may involve generating an interaction pose for each hand that can be interpreted by an application's 2D touch-based gesture recognition processes as two touch points moving closer to or farther from one another, which may be interpreted as a pinch-to-zoom touch-screen gesture.

In some implementations, some applications may be enabled to render using custom rendering engines, e.g., straight to display hardware without utilizing OS rendering, and thus provide limited UI element information for input support process 5032 to use to support input recognition processes. Such applications may be authorized to use an API that enables the applications to use filtered hands data (e.g., with upsampling, POVc, etc.) and at the movement of an intentional interaction, e.g., during a pinch, a single gaze ray is provided to the applications. Doing so may enable some custom application input recognition while still protecting most of the user's gaze direction data. The applications do not receive continuous gaze direction data in this example. Such a framework may be appropriate, for example, for applications being migrated from another 3D XR framework that already include 3D recognition capabilities built into the apps, e.g., enabling use of such apps with little or no modification while still protecting user privacy.

In some implementations, an application is developed for use on a mobile platform that uses single and/or multi-touch input gestures. The application may be developed by the application developer including calls to a gesture API and then specifying what to do on certain types of touch events, e.g., do X on a tap event, Y on a swipe event, etc. It may be desirable to use such applications on a new or different platform that offers input modalities different than (or in addition to) single and/or multi-touch input gestures. Rather than implementing all new 3D gestures and gesture recognition processes within the application, some implementations disclosed herein interpret 3D user activity (e.g., hand positions, gaze directions, etc.) and send proxy data to the application corresponding to where a touch would be if the 3D user activity had been performed as a 2D touch input gesture. Input support process 5032 may provide such proxy data to such applications and, in doing so, enable a large universe of existing 2D/touch-based applications to be easily imported and used within a new 3D system that uses new and different 3D user activity-based inputs. Input support process 5032 may make additional information available so that newer / modified application can take advantage / use more information about the user's 3D activity. In some implementations, to enable use of both legacy 2D/touch-based applications and newer applications with additional, 3D recognition capabilities, the input support process may provide multiple types of information, e.g., interaction pose data to support touch-based input recognition by a legacy application as well as manipulator pose data to support applications with additional, 3D recognition capabilities.

Interpreting 3D user activity as 2D touch-based activity can require overcoming various challenges. For example, a user's hand movement in 3D space when performing a touch gesture may be equated with a touch-screen tap gesture but may lack the precision expected for a touch-screen tap gesture. A touch on a touch screen involves contact with a physical surface that stops the finger while a motion "virtually" touching a UI in a 3D XR environment may involve the user's hand poking through the UI element. A user may intend to tap the surface of a virtual button but actually poke through the surface at one position and then retract the hand/finger at a slightly different position. This user activity involving two different UI element positions can be interpreted (by an input support process) as a tap at a single point using various algorithms and/or machine learning processes, e.g., performing a trajectory correction. The application receives the single location (from the input support process) and recognizes it as a touch event. Thus, the input support process 5032 may classify and/or interpret user activity to account for unique circumstances of interacting within a 3D environment and package the data provided to the application so that the application does not need to itself distinguish between the action intended by the user and the action actually performed by the user.

The input support process 5032 may account for sensor inaccuracy/limitations, e.g., accounting for the fact that gaze direction that are identified may differ from actual gaze directions, in providing data to applications. The applications need not account for such inaccuracies themselves.

In formatting the data for the application in a format the application will understand, the input support process 5032 can resolve ambiguities, account for inaccuracies, and/or repackage input provided in an input modality that the application does not/need not itself understand into a format that the application does recognize.

In short, the input support process 5032 may perform various process that interpret raw 3D data for consumption by applications so that the applications (and their developers) need not perform those processes via manually-programmed processes. Additionally, performing such processes by a shared OS process can unify the input experience across all apps so that users receive consistent UI response behavior.

Moreover, a shared input support process 5032 may enable multiple interaction modalities, e.g., that provide different ways of a user selecting a button, and abstract the user activity data associated with those different modalities for the same types of interactions to provide that same data to the application for different types of input. The input modalities can thus be changed and/or added to over time without requiring changes to the applications, so long as the input support process 5032 can abstract the new or changed input modality user activities to the format understood by the applications.

In some implementations, an application utilizes a gesture recognizer that runs within the application process. The gesture recognizer may include a state machine that classifies inputs that are received in a stream of input data, e.g., a tap has started, a tap is ongoing, a tap has ended. An input support process 5032 may provide data to the application that are recognized by the gesture recognizer running within the application process as particular types of input, e.g., taps, that may correspond to a single input modality specific to the application, e.g., a touch-based input modality. The input support process 5032 may configure the data provided to the application to ensure that the application's process recognizes the user activity accurately, e.g., by provided data in a form that the gesture recognizer expects. In one example, the input support process 5032 converts user activity involving a user gaze and a hand gesture to data that can be recognized as touch input. In another example, the input support process 5032 converts user activity involve a 6DOF controller and a gaze to data that can be recognized as touch input.

An application developer need not write an application for different input modality platforms. Rather an application developer can write an application for a touch platform (or a generic 2D input modality) and the application may be imported with little or no effort to work within a 3D user activity platform. A single application may be used on mobile devices, laptop devices, tablet devices, desktop devices, and 3D XR devices. The techniques disclosed here can enable bin compat, i.e., an application being executable in different environments that utilize different input modalities.

In some implementations, an input support process 5032 provides a gesture flag and/or gesture classification to an application, e.g., indicating to the application that the user has raised their hand or recognizing that a particular gesture is a tap, swipe, scroll, etc. as a hint that the application can use in recognizing the gesture.

In some implementations, an input support process 5032 facilitates an application recognizing gaze-only input without providing raw gaze data to the application. This may involve periodically provide gaze data (i.e., the location on a UI element that the user is gazing at). Gaze-only data may be associated with an interaction state and data provided to the applications based on gaze-only data only when the gaze data is associated with a particular interaction state, e.g., providing data when a gaze-hover state is applicable. Such data may be provided only based on express user authorization. For example, when a user stares at a UI element for more than a threshold amount of time the application may be notified and an affordance may be displayed (e.g., a dot). If the user then looks at the affordance, the application may be notified that the stared at UI element has been hit/selected. In another example, a stare at a point within a UI element for more than a threshold amount of time may trigger a hover feedback, which may be handled out of process or by the application. A gaze-only input modality may be another input modality that is abstracted into data provided to an application such that the application can interpret the input, e.g., using a generic or touch-based gesture recognition process.

In some implementations, an input support process determines an interaction state for each hand (e.g., direct versus indirect) and/or an interaction state associated with a user gaze (e.g., gaze only or not gaze only).

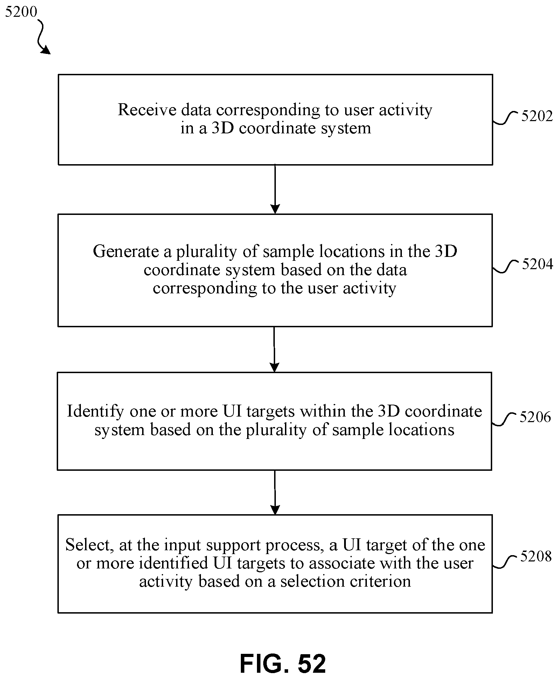

**Figure 52** is a flowchart illustrating a method 5200 for supporting application input recognition using sampling. In some implementations, a device such as electronic device 105 or electronic device 110 performs method 5200. In some implementations, method 5200 is performed on a mobile device, desktop, laptop, HMD, or server device. The method 5200 is performed by processing logic, including hardware, firmware, software, or a combination thereof. In some implementations, the method 5200 is performed on a processor executing code stored in a non-transitory computer-readable medium (e.g., a memory). The method 5200 may be performed at an input support process, e.g., via a OS or system-level process.

At block 5202, the method 5200 receives data corresponding to user activity in a 3D coordinate system. In some implementations, the data corresponding to the user activity is a gaze direction within the 3D coordinate system, the gaze direction determined based on sensor data, e.g., a gaze direction identified at every frame during indirect touch. In some implementations, the data corresponding to the user activity is a synthesized direction within the 3D coordinate system. Such a synthesized direction may be determined based on determining a hand position of a hand in the 3D coordinate system based on sensor data, determining an intersection position of the hand with at least one UI element based on the hand position, and determining the direction based on the intersection and a viewpoint position, e.g., a ray from eye to touch point synthesized on the first frame of a direct touch.

The data corresponding to the user activity may include but is not limited to including hands data, gaze data, and/or human interface device (HID) data. Various combinations of two or more different types of data may be received, e.g., hands data and gaze data, controller data and gaze data, hands data and controller data, voice data and gaze data, voice data and hands data, etc. Different combinations of sensor/HID data may correspond to different input modalities. In one exemplary implementation, the data includes both hands data (e.g., a hand pose skeleton identifying 20+ joint locations) and gaze data (e.g., a stream of gaze vectors), and both the hands data and gaze data may both be relevant to recognizing input via a direct touch input modality and an indirect touch input modality.

At block 5204, the method 5200 generates a plurality of sample locations (e.g., based on a pattern of rays) in the 3D coordinate system based on the data corresponding to the user activity. The 3D coordinate system may combine 3D virtual objects and 2D app content, e.g., providing 3D colliders at positions within the 3D coordinate system. The plurality of sample locations may be generated by generating a pattern of rays around a gaze direction or a synthesized direction corresponding to user activity. In various implementations, the pattern of rays has between 2 and 100 rays, or between 5 and 35 rays. In some implementations, the pattern of rays has 15 rays, 16, rays, 17 rays, 18 rays, 19 rays, 20 rays, 21 rays, 22 rays, or 23 rays. In some implementations, the pattern of rays comprises equally spaced rays. In some implementations, the pattern or rays form a square shape, a circular shape, a pentagon shape, a hexagonal shape, an octagon shape, etc. In some implementations, the pattern of rays forms a shape that is rotated relative to a horizon or a horizontal, e.g., a pattern of 15-25 rays in a pattern rotated by 5-10 degrees. In various implementations, the pattern may include locations or rays configured to be spaced to ensure that UI elements of particular size and/or shape are detected. The pattern may change over time, e.g., frame to time. For example, the pattern for each frame may include randomly positioned rays/points generated based on a user activity (e.g., gaze ray or gaze ray intersection point).

At block 5206, the method 5200 identifies UI targets within the 3D coordinate system based on the plurality of sample locations. Identifying the UI targets may involve identifying 3D virtual objects (e.g., based on intersections with colliders corresponding to 3D virtual objects) and/or UI elements (e.g., identifying 3D elements defined by one or more applications based on identifying intersections with colliders corresponding to UI high-level/high layer elements and then traversing the associated UI hierarchical structures to identify lower-level/lower-layer elements).

Identifying the UI targets may involve receiving data corresponding to positioning of UI elements of an application within the 3D coordinate system (e.g., in a UI geometry collision world), the data corresponding to the positioning of the UI element based at least in part on data (e.g., positions/shapes of 2D elements intended for a 2D window area) provided by the application. An application may provide a layered tree with some layers identified for remote input effects. Such information may be provided to a simulation process that positions the application element in the 3D space, e.g., by defining the 3D position of one or more colliders (e.g., each having a rectangular window area) in the 3D space for the app elements. Data provided by an application may include a layered tree structure defining the positional and containment relationships of the UI elements relative to one another on a 2D coordinate system. Data provided by the application may identifies remote effects for some of the UI elements, where a remote effect specifies that an OS process is to provide responses to a specified user activity relative to a specified UI element outside of an application process, (e.g., perform hover feedback on this button out of process.

Identifying the UI targets may be based on identifying intersections of the plurality of gaze sample locations with the UI elements of the application positioned within the 3D coordinate system. If a random sampling pattern is used for each frame, intersection locations may be tracked to resample the same locations on subsequent frames.

At block 5208, the method 5200 selects a UI target of the identified UI targets to associate with the user activity based on a selection criterion. Selecting the UI target to associate with the UI activity may involve, for each of the identified UI targets, determining a point on the respective UI target based on the user activity, and prioritizing the identified UI targets based on the point computed for each respective UI target. Determining the point on each respective UI target may involve determining a closest opaque point to a sample location associated with the user activity (e.g., a location the gaze direction/ray intersects the UI). It may involve determining a distance (e.g., angular distance) of the closest opaque point of each of the respective UI targets to the sample location associated with the user activity.

Selecting the UI target to associate with the UI activity may be based on determining that a closest opaque point within the UI target is within an angular distance threshold of a sample location associated with the user activity.

The UI target selected to associate with the UI activity may be selected based on determining that closest opaque points within multiple UI targets are within an angular distance threshold of a sample location associated with the user activity and selecting the UI target from the multiple UI targets based on a policy that ranks UI targets based on element type, UI layers, UI geometry, or hysteresis logic. In some implementations, when multiple targets are within a threshold (e.g., 1° of gaze) of the user activity location, the selected UI target is selected based on a policy that ranks targets according to type (e.g., ranking remote effects above non-remote effect type elements). The policy may select amongst elements of the same types based on other criteria, e.g., for targets of the same type prioritizing (1) nested targets and then (2) closest distance (angular) to user activity location. Some implementations apply hysteresis logic to prioritize previous targets to avoid flicker, as described with respect to Figure 13.

In some implementations, the UI elements of the application occupy 2D region and the method 5200 further comprises, based on selecting the UI target to associate with the user activity, identifying a point within the 2D region to an associated application (e.g., the owner of the UI target) such that the application can recognize an action (e.g., selection/hit/hover) to associate with the UI element using a 2D app action recognition process.

In method 5200, the method provides views of a 3D environment including the UI targets and/or other 3D objects. Some or all of the UI targets may be 2D user interface elements provided by one or more applications. An input support process may recognizes the user activity in the 3D coordinate system and provide data to the one or more applications (e.g., to the respective owner of each UI element associated with a user activity) to recognize 2D user interface input.

In some implementations, the operating system manages information about a virtual and/or real content positioned within a 3D coordinate system. Such a 3D coordinate system may correspond to an XR environment representing the physical environment and/or virtual content corresponding to content from one or more apps. The executing application may provide information about the positioning of its UI elements via a layered tree (e.g., a declarative, hierarchical layer tree) with some layers identified for remote (i.e., out of app process) input effects. Such information may be provided via an inter-process communication to a simulation process (e.g., reality system support 5034 of Figures 50A and 50B) that positions the application UI element in the 3D coordinate system, e.g., by defining the 3D position of one or more colliders (e.g., each having a rectangular, cubic, or other-shaped window area) in the 3D coordination for the application UI elements to be positioned within.

The method 5200 may identify data for an application that may include interaction event data. Interaction events may be selected by identifying only certain types of activity, e.g., user activity determined to correspond to a first type of user activity versus one or more other types of user activity. In some implementations, this involves identifying user activity that satisfies criteria configured to distinguish intentional actions on UI elements from other types of user activity. In some implementations, identifying a first type of user activity involves identifying user activity of a first type that is deemed to be intentional and excluding types of activity such as gaze-only activity that are deemed to be unintentional interactions.

The interaction event data may include an interaction pose (e.g., 6DOF data for a point on the app's UI), a manipulator pose (e.g., 3D location of the stable hand center or pinch centroid), an interaction state (i.e., direct, indirect, hover, pinch, etc.) and/or identify which UI element is being interacted with.

The interaction data may exclude data associated with user activity occurring between intentional events. The interaction event data may exclude detailed sensor/HID data such as hand skeleton data. The interaction event data may abstract detailed sensor/HID data to avoid providing data to the application that is unnecessary for the application to recognize inputs and potentially private to the user.

The input support process may respond to some user activities on behalf of the application without necessarily involving or notifying the application of the user activity or the provided response. For example, the input support process may respond to some user activities by adjusting the appearance of displayed application content without notifying the application, e.g., providing hover feedback based on gaze without notifying the application of the user activity triggering the feedback or of provision of the hover feedback.

Access by the application to at least some of the data corresponding to the user activity may be withheld. An application process may recognize input to the application based on the data it receives, e.g., based on interaction event data. An input support process may provide data sufficient for the application to recognize input while avoiding providing the application access to user activity data that is not associated with identified interaction events. Similarly, it may provide abstracted data to avoid providing detailed user activity data, e.g., not providing access to hand skeleton data. The data may be formatted to be recognized by a 2D input recognition process executed within the application, e.g., by an input recognition process configured to recognize abstracted input data and/or input corresponding to an input modality from a legacy or different system, e.g., an input recognition process configured to receive 2D touch-based input.

The method 5200 may display a view of an XR environment corresponding to the 3D coordinate system, where the UI elements of the application are displayed in the view of the XR environment. Such an XR environment may include UI elements from multiple application processes corresponding to multiple applications and the input support process may identify the interaction event data for the multiple applications and route interaction event data to only the appropriate applications, e.g., the applications to which the interactions are intended by the user. Accurately routing data to only the intended applications may help ensure that one application does to misuse input data intended for another application.

The OS may provide an OS process (e.g., a shared 3D environment tracking / simulation process) configured to perform the method 5200 outside of the application process. The 3D environment / simulation may be provided for use in tracking virtual content provided by multiple sources, e.g., by the OS itself, multiple system and/or non-system applications provided by the OS provider and/or 3^{rd} parties, etc. The OS may provide an OS process that includes a simulation process configured to perform a simulation of a 3D environment based on a physical environment associated with the 3D coordinate system. Such a simulation process positions the UI elements of the application within the 3D coordinate system based on data provided by the application. It may do the same for multiple applications and may adjust the positioning of such application content within the 3D coordinate system, e.g., based on which application the user is focused upon, user input, and/or other criteria. In one example, the simulation process positions the UI elements by: positioning one or more components within the 3D coordinate system (e.g., positioning colliders (e.g., each having a rectangular window area, cube shape, or other shape) with the 3D coordinate system; and positioning the UI elements of the application on/within the one or more components. The positioning of the UI elements of the application on the one or more components may be defined based on the data provided by the application. The application may be unaware of the positioning of the one or more components within the 3D coordinate system.

In some implementations, the data provided by the application includes a layered tree structure defining the positional and containment relationships of the UI elements relative to one another on a 2D coordinate system. In some implementations, the layered tree structure defines such positioning for a legacy input modality (e.g., a touch screen modality or 2D desktop/laptop cursor-driven modality). The data provided by the application may identify remote effects for some of the UI elements. Such a remote effect may specify that the OS process is to provide responses to a specified user activity relative to a specified UI element outside of the application process (e.g., perform hover feedback on this button out of process). The data provided by the application may be provided to the OS process via an inter-process communication link.

The data corresponding to the user activity may have various formats and be based on or include (without being limited to being based on or including) sensor data or HID data. In some implementations, the data corresponding to the user activity includes gaze data including a stream of gaze vectors corresponding to gaze directions over time during use of the electronic device. The data corresponding to the user activity may include hands data including a hand pose skeleton of multiple joints for each of multiple instants in time during use of the electronic device. The data corresponding to the user activity may include both hands data and gaze data. The data corresponding to the user activity may include controller data and gaze data. The data corresponding to the user activity may include, but is not limited to, any combination of data of one or more types, associated with one or more sensors or one or more sensor types, associated with one or more input modalities, associated with one or more parts of a user (e.g., eyes, nose, cheeks, mouth, hands, fingers, arms, torso, etc.) or the entire user, and/or associated with one or more items worn or held by the user (e.g., mobile devices, tablets, laptops, laser pointers, hand-held controllers, wands, rings, watches, bracelets, necklaces, etc.).

In some implementations, the interaction event data, which may be provided to an application, includes one or more of: an interaction pose including position and/or orientation data for an interaction point within the UI elements of the application; a manipulator pose including position and/or orientation data corresponding to a hand within the 3D coordinate system (e.g., 3D location of the stable hand center or pinch centroid); and/or an interaction state including data identifying a type of interaction. The interaction data may include interaction event data that includes an interaction pose, a manipulator pose, and an interaction state, and the receiving application's input recognition process may select which information to use. Some applications may only use some of the data (e.g., a touch-based input recognition process may use only interaction pose) while other applications may use all of the data.

The interaction event data may identify a UI element being interacted with during an interaction event. An application may use this to identify which of its UI elements is the target of the user's interaction or may use the other data (e.g., identifying which UI element an interaction pose is on) to identify which of the UI elements is the target of the user's interaction.

In some implementations, the interaction event data provided to the application excludes data associated with interaction events associated with applications other than the application.

In some implementations, the method 5200 is performed by an electronic device that is a head-mounted device (HMD) that may provide an XR environment that is a virtual reality environment or an augmented reality environment.

Some implementations provide output to applications that the apps can recognize as existing touchscreen/2D input, e.g., mobile device apps do not need to change their own 2D fuzzy hit testing or otherwise to account for the fuzziness of the underlying 3D user activity, e.g., inaccuracy in sensor data tracking gaze (indirect) or hand/joint position (direct).

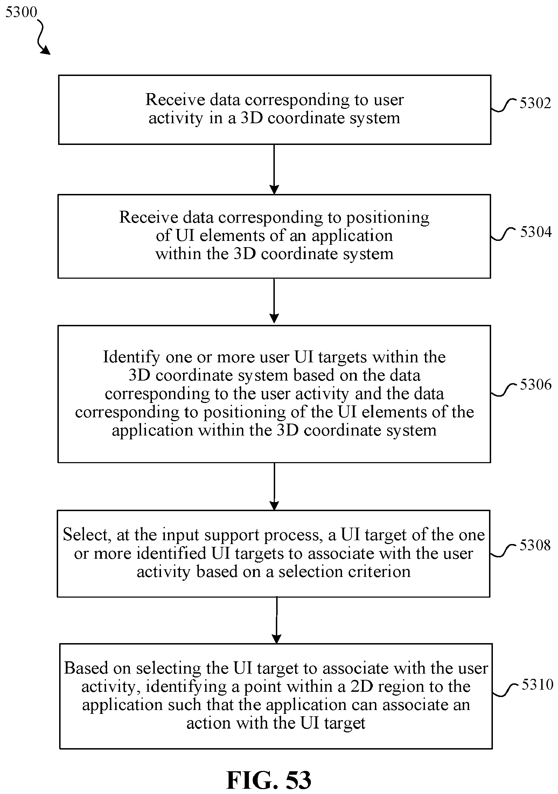

**Figure 53** is a flowchart illustrating a method 5300 for supporting application input recognition supporting application user activity recognition. In some implementations, a device such as electronic device 105 or electronic device 110 performs method 5300. In some implementations, method 5300 is performed on a mobile device, desktop, laptop, HMD, or server device. The method 5300 is performed by processing logic, including hardware, firmware, software, or a combination thereof. In some implementations, the method 5300 is performed on a processor executing code stored in a non-transitory computer-readable medium (e.g., a memory). The method 5300 may be performed at an input support process, e.g., via a OS or system-level process.

At block 5302, the method 5300 receives data corresponding to user activity in a 3D coordinate system. This may be similar to receiving data corresponding to user activity as described with respect to block 5202 of method 5200.

At block 5304, the method 5300 receives data corresponding to positioning of UI elements of an application within the 3D coordinate system (e.g., a UI geometry collision world). The data may correspond to the positioning of the UI element based at least in part on data (e.g., positions/shapes of 2D elements intended for a 2D window area) provided by the application. The data provided by the application may include a layered tree structure defining the positional and containment relationships of the UI elements relative to one another on a 2D coordinate system. The data provided by the application may identify remote effects for some of the UI elements, where a remote effect specifies that an OS process is to provide responses to a specified user activity relative to a specified UI element outside of an application process (e.g., perform hover feedback on this button out of process).

At block 5306, the method 5300 identifies UI targets within the 3D coordinate system based on the data corresponding to the user activity and the data corresponding to positioning of the UI elements of the application within the 3D coordinate system.

At block 5308, the method 5300 selects a UI target of the identified UI targets to associate with the user activity based on a selection criterion.

At block 5310, the method 5300, based on selecting the UI target to associate with the user activity, identifies a point within a 2D region to the application such that the application can associate an action (e.g., selection/hit/hover/etc.) with the UI target. The selection of the UI target to associate with the user activity may involve selection processes such as those described with respect to block 5208 of Figure 52.

The application may include a 2D input recognition framework configured to associate actions with the UI targets based on 2D position data. Such a 2D input recognition framework may be configured to recognize (a) touch input corresponding to touch points on a 2D touch screen interface and/or (b) a 2D mouse cursor position or a 2D trackpad cursor position within a 2D user interface.

The method 5200 and 5300 may involve fuzzy hit testing as described and illustrated throughout this disclosure, e.g., using exemplary processes described with respect to Figure 48 and elsewhere in this disclosure.

### Pinch Recognition and Rejection

Some aspects of this disclosure pertain to systems, methods, and computer readable media to enable gesture recognition and input. In some XR contexts, image data and/or other sensor data can be used to detect gestures by tracking hand data. For some gestures, such as a pinch, the hand pose information is obtained to determine whether a touch occurs between two fingers, or between two portions of a hand. A framework is applied to determine intentionality of the touch, intentionality may be determined based on hand tracking data. In some embodiments other considerations may be used, such as gaze information, other peripheral object information, user interface (UI) components, or other contextual information. The framework can then determine whether the input action should be enabled based on the intentionality of the gesture.

In some enhanced reality contexts, image data and/or other sensor data can be used to detect gestures by tracking hand data. User input can fail or be unreliable when part or all of the hand is occluded. When a hand becomes occluded or substantially occluded, a gesture can be "locked" so that the state of the hand prior to the occlusion is used for a given frame. In some embodiments, an amount of occlusion can be determined and considered when identifying a gesture.

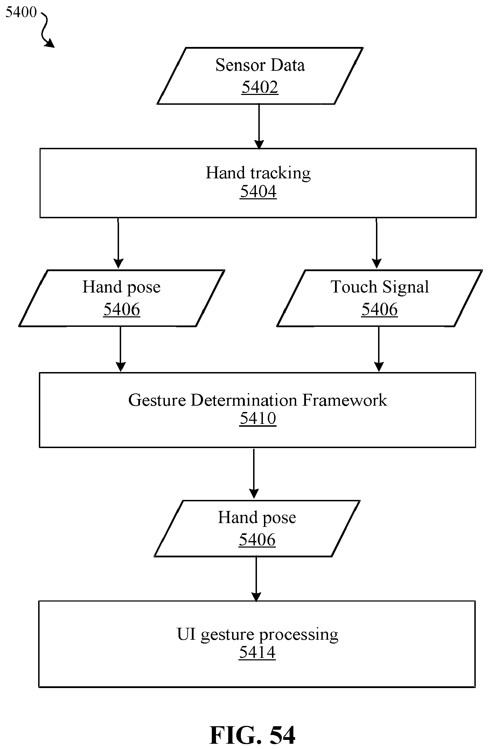

**Figure 54** shows a flow diagram of a technique for detecting input gestures, in accordance with some embodiments. In particular, Figure 54 shows a gesture estimation pipeline 5400 in which a user input gesture is recognized and processed. Although the flow diagram shows various components which are described as performing particular processes, it should be understood that the flow of the diagram may be different in accordance with some embodiments, and the functionality of the components may be different in accordance with some embodiments.

The flow diagram 5400 begins with sensor data 5402. In some embodiments, the sensor data may include image data and/or depth data captured of a user's hand or hands. In some embodiments, the sensor data may be captured from sensors on an electronic device, such as outward facing cameras on a head mounted device, or cameras otherwise configured in an electronic device to capture sensor data including a user's hands. According to one or more embodiments, the sensor data may be captured by one or more cameras, which may include one or more sets of stereoscopic cameras. In some embodiments, the sensor data 5402 may include additional data collected by an electronic device and related to the user. For example, the sensor data may provide location data for the electronic device, such as position and orientation of the device.

In some embodiments, the sensor data 5402 may be applied to a hand tracking network 5404. The hand tracking network may be a network trained to estimate a physical state of a user's hand or hands. In some embodiments, the hand tracking network 5404 predicts a hand pose 5406. The hand pose may be a classified pose of a hand based on the estimated physical state, or may provide some other form of data indicative of a pose of a hand. For example, in some embodiments, the hand pose data 5406 may include an estimation of joint location for a hand. Further, in some embodiments, the hand tracking network 5404 may be trained to provide an estimation of an estimate of a device location, such as a headset, and/or simulation world space.

In some embodiments, the hand tracking network 5404 may further be configured to provide touch data. The touch data may include a prediction as to whether, for a given frame or frames, a touch is occurring between two regions on the hand. For example, a machine learning model may be trained to predict whether a thumb pad and index finger are in contact. For purposes of the description herein, a touch refers to contact between two surfaces regardless of intent, whereas a pinch is defined as a touch being performed with the intent of producing a corresponding input action. As will be described in greater detail below, in some embodiments, the hand tracking may predict whether a touch occurs based on the sensor data 5402 and/or hand pose data 5406.

According to one or more embodiments, gesture determination framework 5410 provides a determination as to whether a particular pose presented in the sensor data 5402 is intentional. That is, a determination is made as to whether a classified pose of the hand (for example, based on or provided by the hand pose data 5406) is intentional. When the determined hand pose includes a touch, such as a pinch, then the gesture determination framework 5410, may use the touch signal 5408 provided by the hand tracking network 5404 in determining whether an intentional gesture is performed.

In some embodiments, the gesture determination framework 5410 may utilize additional data not explicitly depicted in Figure 54. For example, the gesture determination framework 5410 may receive signals such as user interface (UI) geometry, gaze estimation, events generated by connected peripherals, user interaction with objects, and the like. As will be described in FIG. 3., the gesture determination framework 5410 may consider the various features from the inputs to make a determination for a particular input gesture, whether the gesture is intentional. This determination may be transmitted in the form of a gesture signal 5412 to a UI gesture processing module 5414. The gesture signal may indicate, whether or not an intentional input gesture has occurred. In some embodiments, the gesture signal 5412 may also be used to indicate whether a previous gesture signal should be cancelled. This may occur, for example, if a user shifts their position, sets their hands down, or the like.

The UI gesture processing module 5414 may be configured to enable a user input action based on the gesture signal 5412. A particular gesture, such as a pinch, may be associated with a selection action of a UI component or the like. In some embodiments, if a cancellation signal is received corresponding to a gesture signal 5412 which has already been initiated, the system can process that gesture differently than if it were not cancelled. For example, a UI component can be shown as selected but not activated, etc. As another example, a previously initiated stroke drawn by the user can be truncated or undone.

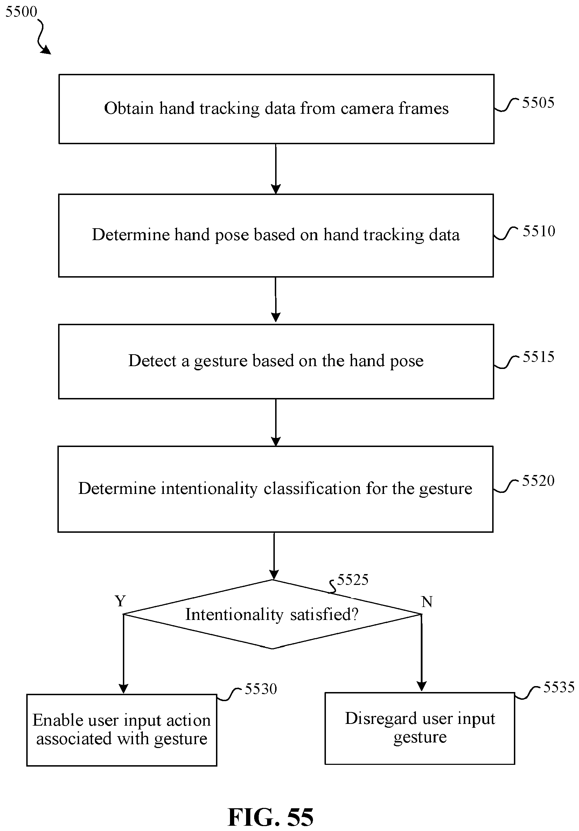

**Figure 55** shows a flowchart of a technique for enabling gesture input, in accordance with some embodiments. In particular, the flowchart presented in Figure 55 depicts an example technique for detecting and processing gestures, as described above with respect to Figure 54. For purposes of explanation, the following steps will be described as being performed by particular components. However, it should be understood, that the various actions may be performed by alternate components. In addition, the various actions may be performed in a different order. Further, some actions may be performed simultaneously, and some may not be required, or others may be added.

The flowchart 5500 begins at block 5505, where hand tracking data is obtained from one or more camera frames. According to one or more embodiments, the hand tracking data may include image data and/or depth data. The hand tracking data may be obtained from one or more cameras, including stereoscopic cameras or the like. In some embodiments, the hand tracking data may include sensor data captured by outward facing cameras of a head mounted device. The hand tracking data may be obtained from hand tracking network 104, or another source which generates hand tracking data from camera or other sensor data.

At block 5510, a hand pose is determined based on the hand tracking data. As described above, the device may consider gaze information, UI geometry, contextual information, or the like. The hand pose data may include, joint locations and/or orientations, skeletal features, and the like. In some embodiments, other data can be provided by the hand pose network which is derived from the determination of the hand pose. For example, a relative location of a device to the hand may be determined based on the hand pose data. In doing so, the hand tracking network may provide an estimated location for a device.

The flowchart 5500 continues to block 5515, where a gesture is detected based on the hand pose. In some embodiments, the device may select a gesture from among a set of predefined gesture classifications based on the pose. In some embodiments, the gesture may be based on hand pose in a single frame (or, in some embodiments, stereoscopic frame pair), over a series of frames, or the like. The gesture may be determined, for example, by a gesture determination framework 110, as described above.

At block 5520, the device determines an intentionality classification for the gesture. In some embodiments, the gesture determination framework 110 can further determine the intentionality of the particular gesture. The intentionality may indicate that by performing the gesture, the user intended to enable an associated input action. This determination may reduce the number of unintentional inputs by the user. Intentionality can be determined based on the hand tracking data, as well as additional data, as will be described below with respect to FIG. 3., Intentionality may be determined in the form of an intentionality score which must satisfy a threshold score in order for a gesture signal to be passed to the UI gesture processing module. Alternatively, the intentionality may be determined to be satisfied as part of a determination of the gesture. That is, the gesture determination framework may determine the gesture and the intentionality of the gesture and a single process, concurrently, and the like.

If at block 5525, intentionality is satisfied, the flowchart proceeds to block 5530, and the user input action associated with the gesture is enabled. As described above, enabling the user input action may include triggering a UI gesture processing module 114 to initiate an input action associated with gesture. By contrast, if intentionality is not satisfied at block 5525, the flowchart concludes at block 5535, where the user input gesture is disregarded. The user input gesture may be disregarded by actively transmitting a signal that the detected gesture was not intentional, or by refraining from transmitting the gesture signal, for example, from the gesture determination framework 110 to the UI gesture processing module 114.

Although not shown in some embodiments, if the intentionality is not satisfied at block 5525, but an action associated with gesture has already been initiated (for example, from a satisfactory intentionality score a prior frame), then a current input action associated with a gesture may be canceled. As described above, this may occur using a cancellation signal. The cancellation signal may prompt the UI gesture processing module 114 to process the input action differently than if the gesture signal had not been canceled. For example, the input action may cease to occur, may be undone, etc. In some embodiments, the UI gesture processing module 114 may present an indication that the gesture was recognized (for example, by highlighting an associated UI component), but will refrain from completing the input action.

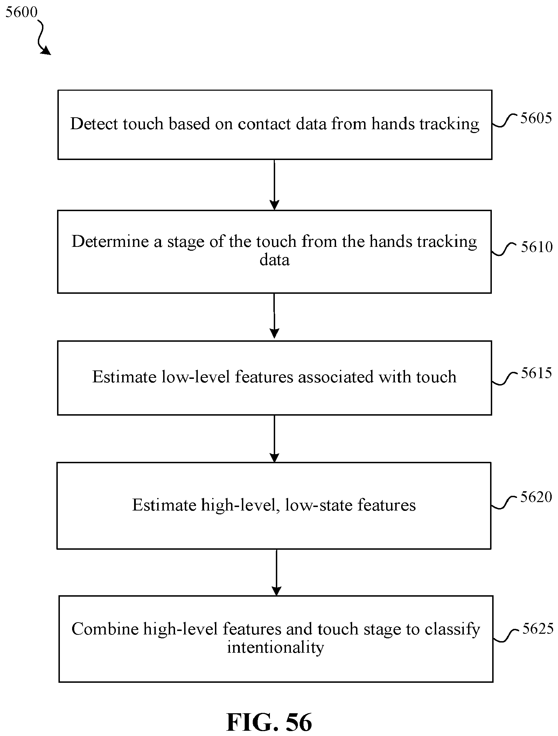

As described above, the gesture determination framework may be configured to generate a classification of intentionality for a gesture. The gesture determination framework 110 may be configured to estimate a pose or gesture of a hand, and determine whether the gesture was intended to be used for triggering a user input action. **Figure 56** shows a flowchart of a technique for classifying intentionality of a gesture, in accordance with some embodiments. For purposes of explanation, the following steps will be described as being performed by particular components of FIG. 1. However, it should be understood that the various actions may be performed by alternate components. The various actions may be performed in a different order. Further, some actions may be performed simultaneously, and some may not be required, or others may be added.

The flowchart 5600 begins at block 5605, where a touch event is detected based on context data from the hand tracking network. The touch event may be detected, for example, based on a touch signal 108 received from the hand tracking network 104. According to some embodiments, some gestures may require touch, such as a pinch or the like. Further, multiple types of pinches may be recognized with different kinds of touch. According to some embodiments, not every gesture may require a touch. As such, the touch may not be detected, or the touch signal may indicate that the touch occurs. In some embodiments, the touch signal may not be received, or may otherwise be ignored and a gesture may still be recognized.

The touch event may be determined in a number of ways. In some embodiments, a touch event can be predicted for a given frame based on a trained network, a set of heuristics, or the like. In some embodiments, the touch event may include multiple phases, such as a pinch-down and a pinch-up. As such, a touch signal may indicate a touch is occurring even when contact between two fingers is not confirmed. As another example, as will be described below, a touch event may be signaled in some cases when at least part of the hand is occluded. In some embodiments, the contact may be detected for a particular frame of a series of frames determined to be part of the touch event. Each frame, or a subset of the frames, may be

The flowchart 5600 continues to block 5610, where a touch stage is determined from hand tracking data. The touch stage may indicate, for a given frame, what phase of the touch action the fingers are currently in. According to some embodiments, the features of interest in determining intentionality may vary depending upon a current state of a gesture. For gestures that include a pinch or other touch actions, the stage in which the gesture is currently in may affect the ability to enable, cancel, or reject an associated input action. Some examples of touch stage include an idle state, an entry state in which a touch is beginning or anticipated, such as a pinch down phase. A hold state, where a pinch is currently occurring, and an exit stage, for example when a pinch up occurs for the pinch is ending. The various touch stages will be described in greater detail below with respect to FIG. 4. According to one or more embodiments, each frame in a set of frames may be determined to be associated with a particular touch stage during a touch event.

At block 5615, low-level features are estimated in association with the touch. The low-level features may be determined from the hand tracking data and/or additional data may include estimations of what a hand is doing during the frame. For example, other sources of data include pose information for a device capturing the hand tracking data, hand pose, UI geometry, etc. In some embodiments, the low-level features are determined without regard for intent. Examples of low-level features include, for example, a pinch speed on pinch down, a measure of wrist flex, finger curl, proximity of hand to head, velocity of hand, and the like.

The flowchart 5600 continues to block 5620, where high-level, low state features are estimated. The high-level low-state features may include, modal features which estimate what a user is doing during the touch in order to determine intentionality. In some embodiments, the high-level features may be features which are interoperable, and which can be individually validated. Examples include, estimates as to whether hands are using one or more peripheral devices, a frequency of a repetition of a gesture (for example, if a user is pinching quickly), if hand is holding an object, if a hand is in a resting position, a particular pinch or gesture style (i.e., a pinch using pads of two fingers, or using the side of a finger). In some embodiments, the high-level features may be based on user activity, such as a user fidgeting, talking, or reading.

According to one or more embodiments, the high-level features may be determined based on the hand tracking data, the determined touch stage, and/or the estimated basic features. In some embodiments, the high-level features may directly determine intentionality of an action. In particular, the high-level features may indicate that a user is in a particular use mode. As an example, if a user is in a peripheral use mode, the user is determined to be using a peripheral device such as a keyboard. A pinch or other gesture by thereby be rejected, or the gesture may be determined to be unintentional. In another example, a user may be determined to be in a self-interaction mode when a hand is performing actions within a threshold distance of another part of the user's body. This may occur, for example, when a user is using one hand to scratch the other arm, pull up a sleeve, or the like. These actions may appear to include pinches or other gestures, but because the actions occur near another part of the user's body, the gestures may be ignored as unintentional input gestures.

The flowchart concludes at block 5625, where the gesture determination framework 110 combines high level features and the touch stage to classify intentionality for the gesture captured by the touch event. In some embodiments, the gesture determination framework 110, uses a conditional combination of high-level features and touch stage to classify intentionality. The classification can then be used to signal the gesture to be processed as an input gesture (thereby activating an associated UI input action), cancel the associated action if the gesture is determined to be unintentional (for example, if a UI action associated with the gesture has already been initiated), or disregard the gesture.

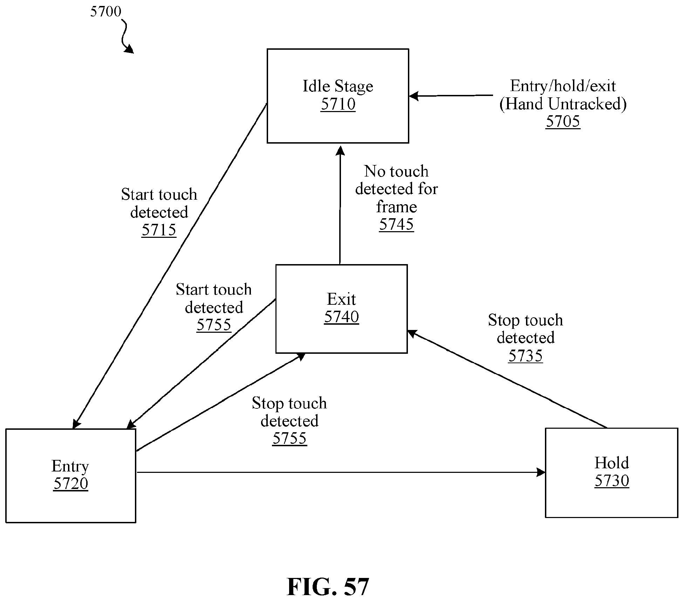

**Figure 57** shows a flow diagram of a technique for classifying a touch stage, in accordance with some embodiments. Figure 57 depicts a flow diagram for determining a touch stage, as described above with respect to block 5610 of Figure 3. In particular, Figure 57 can be interpreted as a state machine to determine a state of a touch in a given frame. For purposes of the description in FIG. 57, a touch indicates a contact between two portions of the hand. For example, and without limitation, a contact event between two fingers, or a contact event between a finger pad and another portion of the hand may be considered a touch.

In some embodiments, the particular touch stage or movement between touch stage, may be determined based on a set of heuristics using image data and/or depth data from a particular frame, for example, from hand tracking data. As will be described below with respect to FIG. 5, in some embodiments, the touch stage may be determined using machine learning models.

The flow 5700 begins at 5705, where a hand is untracked. The hand may be untracked, for example, during idle stage 5710. Because the hand is untracked for this stage, the touch stage may actually be in an entry, hold, or exit stage, but the actual stage may go unrecognized as the hand is not being tracked. The hand may be untracked, for example, when a hand tracking process is not running, or when a touch detection process is not running. That is, hand tracking may be occurring for other purposes, but not for touch detection in accordance with one or more embodiments. As another example, the touch stage may be tracked at a different power level than during an active tracking session. In the idle stage 5710, a touch may not have been detected between two portions of the hand for some predetermined amount of time. For example, two fingers may not have touched within a certain number of prior frames.

Upon the tracked hand moving in such a manner that a touch may be anticipated, then the flow continues to block 5715, where the start of a touch is detected. Upon detecting the start of a touch at 5715, then the touch stage enters an entry state 5720. In the entry stage 5720, a touch is anticipated but has not occurred yet. This may occur for example, during a "pinch down," where two fingers are moving toward each other, or another movement in which to portions of the hand are moving towards each other. The movement may be detected, for example, based on a pose of the hand over a set of frames, such as comparing the current hose of a hand in a current frame to a prior pose of the hand in a prior frame. Additionally, or alternatively, the start of the touch may be detected using machine learning models, as will be described below with respect to FIG. 5.

The entry state 5720 may occur over a single frame for several frames. Following the entry state 5720, a touch may be determined either to the occurring, as shown at 5725, or may be determined to no longer be occurring, as shown where the detected touch is stopped at 5755. A sustained touch may be detected as shown at 5725, when a touch is determined to be occurring for a particular frame. This causes the touch stage to enter the hold stage 5730. In the hold stage, a touch is currently occurring. That is, two regions of the hand may be determined to be in contact. For example, an index finger and a thumb may be determined to be touching in a pinch fashion.

Returning to the entry stage 5720, if a subsequent frame indicates that the touch is no longer detected, as shown at stop entry detected 5755, then the touch stage enters the exit stage 5740. In the exit stage 5740, the touch is no longer detected. This may occur, for example, if the determination that the touch was being initiated, in the entry stage 5720, was incorrect. For example, a user may have initiated movement of two fingers towards each other but never actually touched the two fingers together. For example, the touch stage may exit the entry stage 5720 after a timeout period, or a predetermined number of frames, in which the sustained touch is not detected.

In the situation when the touch stage entered the hold stage 5730, then the hold stage 5730 occurs while the touch is occurring. For example, the touch stage may be held for each frame for which two portions of the hand are determined to be in contact. This may occur, for example, if a pinch is performed very slowly such that the contact takes place over multiple frames, or if a pinch is held, for example during a dragging motion, or the like. Upon detecting, for a subsequent frame, that the two portions of the hand are no longer in contact, then the touch stage may no longer be detected, as shown by stop touch detected 5735. Accordingly, the touch stage enters the exit stage 5740. The exit stage 5740 may indicate, as described above, that the touch never actually occurred, or upon entering the exit stage 5740 from the hold stage 5730, that the touch is ending. This may occur, for example, when to portions of the hand previously in contact move away from each other, for example in a "pinch up."

From the exit stage 5740, the flow 5700 may continue to either an idle stage 5710, if no entry is detected for one or more subsequent frames 5745. Alternatively, from the exit stage 5740, a start touch may be detected as shown at 5750, and the touch stage may reenter the entry stage 5720. This may occur, for example, when a user proceeds from a pinch up to a pinch down quickly, and the like. The flow 5700 may continue while frames of hand tracking data are received.

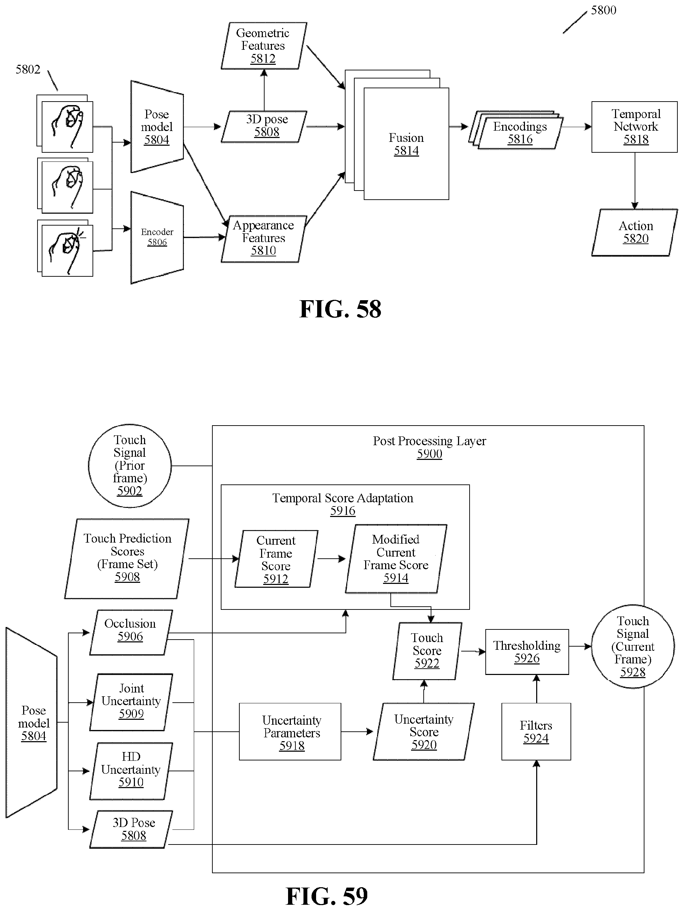

A touch signal indicating a touch event is occurring for a frame, can be determined in a number of ways. For example, in some embodiments, heuristics can be used based on the hand tracking data to determine whether a touch has occurred, and/or a current touch stage. **Figure 58** shows a flow diagram of an action network, in accordance with some embodiments, which provides an example machine learning process for determining whether a touch has occurred.

The pipeline 5800 begins with a set of frames 5802 as input. The frames 5802 may be a temporal series of image frames of a hand captured by one or more cameras. The cameras may be individual cameras, stereo cameras, cameras for which the camera exposures have been synchronized, or a combination thereof. The cameras may be situated on a user's electronic device, such as a mobile device or a head mounted device. The frames may include a series of one or more frames associated with a predetermined time. For example, the frames 5802 may include a series of individual frames captured at consecutive times, or can include multiple frames captured at each of the consecutive times. The entirety of the frames may represent a motion sequence of a hand from which a touch may be detected or not for any particular time,

The frames 5802 may be applied to a pose model 5804. The pose model 5804 may be a trained neural network configured to predict a 3D pose 5808 of a hand based on a given frame (or set of frames, for example in the case of a stereoscopic camera) for a given time. That is, each frame of frame set 5802 may be applied to pose model 5804 to generate a 3D pose 5808. As such, the pose model can predict the pose of a hand at a particular point in time. In some embodiments, geometric features 5812 may be derived from the 3D pose 5808. The geometric features may indicate, relational features among the joints of the hand, which may be identified by the 3D pose. That is, in some embodiments, the 3D pose 5808 may indicate a position and location of joints in the hand, whereas the geometric features 5812 may indicate the spatial relationship between the joints. As an example, the geometric features 5812 may indicate a distance between two joints, etc.

In some embodiments, the frames 5802 may additionally be applied to an encoder 5806, which is trained to generate latent values for a given input frame (or frames) from a particular time indicative of an appearance of the hand. The appearance features 5810 may be features which can be identifiable from the frames 5802, but not particularly useful for pose. As such, these appearance features may be overlooked by the pose model 5804, but may be useful within the pipeline 5800 to determine whether a touch occurs. For example, the appearance features 5810 may be complementary features to the geometric features 5812 or 3D pose 5808 to further the goal of determining a particular action 5820, such as whether a touch has occurred. According to some embodiments, the encoder 5806 may be part of a network that is related to the pose model 5804, such that the encoder may use some of the pose data for predicting appearance features. Further, in some embodiments, the 3D pose 5808 and the appearance features 5810 may be predicted by a single model, or two separate, unrelated models. The result of the encoder 5806 may be a set of appearance features 5810, for example, in the form of a set of latents.

A fusion network 5814 is configured to receive as input, the geometric features 5812, 3D pose 5808, and appearance features 5810, and generate, per time, a set of encodings 5816. The fusion network 5814 may combine the geometric features 5812, 3D pose 5808, and appearance features 5810 in any number of ways. For example, the various features can be weighted in the combination in different ways or otherwise combined in different ways to obtain a set of encodings 5816 per time.

The encodings are then run through a temporal network 5818, to determine an action 5820 per time. The action 5820 may indicate, for example, whether a touch, or change in touch stage has occurred or not. The temporal network 5818 may consider both a frame (or set of frames) for a particular time for which the action 5820 is determined, as well as other frame in the frame set 5802.

According to one or more embodiments, the action signal 5820 may be further refined in a post processing step. **Figure 59** shows a flow diagram for handling occluded hands for gesture recognition, according to some embodiments. Although the various components of the flow diagram are presented in a particular configuration, it should be understood that in some embodiments, the various components and functionality may be differently arranged.

Initially, a touch signal is received for a prior frame 5902. The touch signal may be determined, for example, based on data from the hand tracking network. In some embodiments, the touch signal may be obtained from the pipeline 5800 described above with respect to Figure 58, and/or from a frame previously processed by the framework described herein with respect to Figure 59. The touch signal may indicate a touch or no touch state.

A touch prediction score is obtained for each set of frames (or each set of synced frames), for example frame set 5802. The touch prediction scores for the frame set may include a current frame score 5912, as well as prior frame scores, for example during previous iterations of the post processing in the post processing layer 5900 for the frame set. The frame score may be based on a network trained to predict whether a touch occurs at a given time based on the image data for that time. The frame score may be generated in the form of a value which may indicate a likelihood of a touch for that frame.

The post processing layer 5900, may also take as input, outputs from the pose model 5804. As described above with respect to Figure 58, the pose model may generate 3D pose data 5808 for a given time. In some embodiments, the pose model 5804 may generate additional outputs, such as occlusion score 5906, joint uncertainty score 5909, and hover distance uncertainty score 5910.

The occlusion score 5906, indicates the probability per joint (and per view, when multiple frames capture a hand for a single time) that the particular joint is occluded. Occlusion refers to the ability to make inferences, regarding the action of the hand from the given images. In some embodiments, the occlusion score 5906 may be represented in other ways, such as a percentage of the hand that is occluded, or the like. The joint uncertainty score 5909 includes a value that refers to how certain the prediction is for a particular joint. The hover distance uncertainty score indicates a certainty of a hover distance prediction by the post model 5804, such as the distance between two portions of the hand. The hover distance uncertainty score 5910, may be a single score or multiple scores per hand. That is, the hover distance score may be determined per joint or per hand, or for a subset of joints of the hand. The 3D pose 5808, indicates a 3D location for a particular joint and may be determined on a per-joint basis.

The post processing layer 5900 includes a temporal score adaptation 5916. The temporal score adaptation 5916 may take the current frame score 5912, along with the prior frame scores from the touch prediction scores 5908, and the occlusion scores 5906 to generate a modified current frame score 5914. The current frame score 5912, may be based on a single frame, or on a set of frames. According to one or more embodiments, the temporal score adaptation 5916 modifies a particular frame score based on occlusion such that changes in the score are dampened in response to occlusion. The temporal score adaptation 5916 may consider the occlusion scores 5906 for all the joints, or for a subset of joints, such as the pertinent joints for a given gesture. As an example, to detect a pinch, the tips of the index finger and thumbs may be considered, but other joints may be disregarded. According to one or more embodiments, consideration of occlusion scores temporally because movement may be considered.

According to one or more embodiments, the current frame score 5912 may be associated with a value within a range that has thresholds indicating a "make" or "break" for a pinch. A make threshold may be satisfied by a substantially high value, whereas a break threshold may be satisfied by a substantially low value. The thresholding values may be predetermined. The occlusion score may cause the current frame score 5912 to be increased or reduced to a modified current frame score 5914. The result will be that it is more difficult to change touch state when a hand is occluded.

Before the modified current frame score 5914 is thresholded, the post processing layer 5900 may consider other uncertainty values. For example, other uncertainty parameters 5918 may be determined. These may include, uncertainty parameters for a particular gesture, determined using the various scores or combinations of the scores. For example, in detecting a touch between an index finger and a thumb, the uncertainty parameters may include a pinch occlusion score, a pinch joint uncertainty score, a pinch hover distance uncertainty score (for example, based on the 3D pose 5808 and hover distance uncertainty 5910), hover distance unsure score (for example, based on pose), or a "make" unsure score (for example, based on temporal score adaptation). The combination of the uncertainty parameters 5918 may be used to generate an uncertainty score 5920. The uncertainty score may indicate whether to apply a filter to the modified current frame score 5914 to obtain a touch score 5922. The touch score 5922 may then be thresholded at 5926. In some embodiments, additional filters 5924 may be applied based on 3D pose, for example a given rotation of the hand. Based on the comparison of the touch score 5922 to the thresholding values 5926, a final touch signal 5928 can be determined. The touch signal may indicate a change in touch stage, such as a "make" when contact occurs, or a "break" when contact ends.

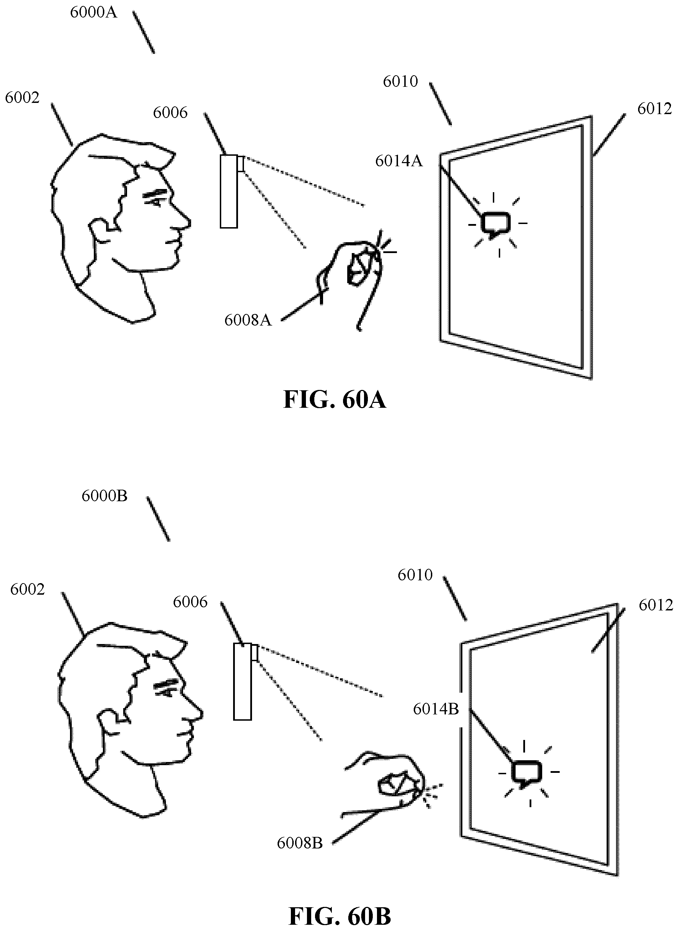

Figures 60A-B show an example system setup in which a hand gesture is occluded. In particular, Figures 60A-B show a system setup for a user interacting with a device, in accordance with some embodiments. It should be understood, that the various features and description of Figures 60A-B are provided for illustrative purposes and are not necessarily intended to limit the scope of the disclosure.

In Figure 60A, a system setup 6000A is provided in which a user 6002 is viewing a display device 6006, which is used to interact with virtual content 6010. The virtual content 6010 is depicted as being separate from the device 6006 and situated in front of the user 6002. However, it should be understood that the virtual content 6010 may actually be displayed by the device 6006 and would not be physically separate from the device 6006 in the physical environment. The virtual content 6010, includes a display region on which a selectable component 6014A is displayed. In system setup 6000A, the user 6002 is using their hand 6008A to perform an input gesture, which causes the selectable component 6014A to be selected. For example, the input component 6014A may be selected such that the user can drag it around the display region 6012. In the system setup 6000A, the hand 6008A is posed in such a manner that the gesture is un-occluded. That is, enough of the hand 6008A is visible so as to make a determination that the pinch gesture is occurring. For example, as described above with respect to Figures 58-59, the hand tracking data collected by hand tracking sensors on device 6006, may collect sufficient data to determine that the hand 6008 is performing a pinch gesture.

By contrast, as shown at Figure 60B, a system setup 6000B is provided in which the user 6002 is viewing the display device 6006. However, in this figure, the hand of the user 6008B is positioned such that hand tracking data captured by device 6006 may not collect sufficient data to determine whether the pinch is occurring. According to one or more embodiments, if a gesture becomes occluded such that the device 6006 is unable to decide as to whether or not the gesture is occurring, then the last determined gesture state may be used for the frame that has the occlusion. As an example, the frame captured in Figure 60A, may indicate that a pinch is occurring. When the hand 6008B becomes occluded at Figure 60B, then the last gesture state immediately before the occlusion of hand 6008B may be used. For instance, if the hand 6008A was determined to be performing a pinch immediately before the index finger and thumb were occluded at the position of the hand 6008B, then the hand 6008B may be considered to be performing a pinch regardless of whether the hand 6008B is actually performing a pinch while the joints are occluded. Conversely, if the hand 6008A was determined to be not performing a pinch immediately before the index finger and thumb were occluded at the position of the hand 6008B, then the hand 6008B may be considered not to be performing a pinch regardless of whether the hand 6008B is actually performing a pinch while the joints are occluded.

According to one or more embodiments, when one or more joints of the hand are occluded, the configuration of the joints is "locked" from a prior frame in which the joints were not occluded. In this manner, when hand joints are occluded, or substantially occluded such that a threshold level of occlusion is satisfied, a touch stage from a prior frame will be used for the current frame. As such, in some embodiments, an occluded hand may not result in a change in determined pinch stage.

Holding a prior determined gesture state may be based on a heuristic technique. For example, returning to Figure 1, if the hand tracking data 104 indicates that the hand is sufficiently occluded, such that no determination is made as to whether a gesture is occurring, then the hand tracking network 104 may utilize a previous-determined touch signal 108 for a prior frame. In another example, as described above with respect to Figures 58-59, one manner in which the gesture state can be held, particularly with respect to touch-based gestures, is held by modifying a touch signal for the occluded frame such that the touch signal fails to satisfy a break threshold indicating that the touch is no longer occurring. As shown here in Figure 60B, the joints of the hand 6008B are occluded from the perspective of the device 6006, but the input component 6014B continues to be dragged along the display region 6012 of the virtual content 6010.

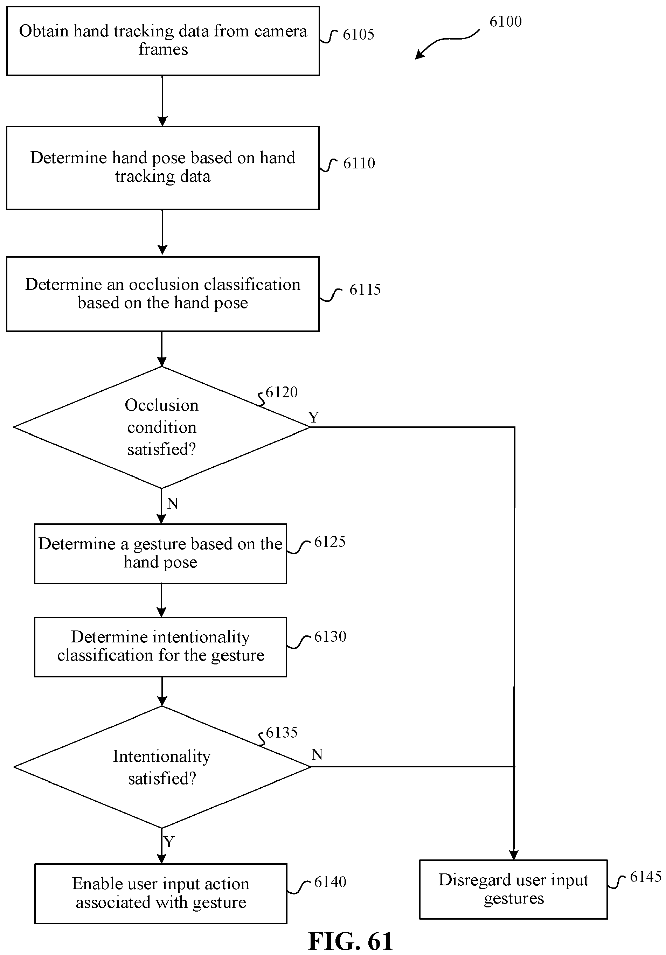

**Figure 61** depicts a flowchart of a technique for processing gesture input while considering the level of occlusion. For purposes of explanation, the following steps will be described as being performed by particular components. However, it should be understood that the various actions may be performed by alternate components. In addition, the various actions may be performed in a different order. Further, some actions may be performed simultaneously, and some may not be required, or others may be added.

The flowchart 6100 begins at block 6105, where hand tracking data is obtained from camera frames. The hand tracking data may include, for example, image data, depth data, etc. In some embodiments, the hand tracking data may include or be based on sensors data, such as image data and/or depth data captured of a user's hand or hands. In some embodiments, the sensor data may be captured from sensors on an electronic device, such as outward facing cameras on a head mounted device, or cameras otherwise configured in an electronic device to capture sensor data including a user's hands. In some embodiments, the sensor data 102 may include additional data collected by an electronic device and related to the user. For example, the sensor data may provide location data for the electronic device, such as position and orientation of the device.

At block 6110, a hand pose is determined based on the hand tracking data. According to one or more embodiments, the hand pose data may include location information for each of the set of joints of the hand. From the locations of the joints of the hand, pose information about the hand can be inferred.

The flowchart 6100 continues to block 6115, where an occlusion classification is determined based on the hand pose. The occlusion classification may include, for example, an occlusion score as described above with respect to Figure 59. Alternatively, the occlusion classification may indicate a level of occlusion, or whether the occlusion rises to a substantial level that a determination cannot be made as to whether a user is performing a gesture. The occlusion classification may be based on an occlusion score for each of the set of joints from the hand tracking data, a subset of the joints of the hand tracking data (for example, the joints used for a particular gesture), or may be determined more holistically. For example, a percentage of joints determined to be substantially included may indicate that the hand satisfies an occlusion condition. Similarly, a percentage of a 3D representation of the hand, such as a mesh representation, may indicate that an occlusion condition is satisfied.

A determination is made at block 6120 as to whether the occlusion condition is satisfied. If the occlusion condition is satisfied, then the gesture is disregarded for the user input, as shown at block 6145. In some embodiments, as described above, disregarding the gesture for user input, may also include utilizing a prior determined touch signal for the hand. Moreover, in some embodiments, disregarding user input gesture at block 6145 may include modifying a touch score for a particular frame such that make or break thresholding will not be satisfied, as described above with respect to Figure 59. The flowchart 6100 may then be repeated for a subsequent frame or frames of hand tracking data.

Returning to block 6120, if the occlusion condition is not satisfied, then the flowchart continues to block 6125. For example, the occlusion condition may not be satisfied when the hand is not substantially occluded, such that the gesture can't be determined with a threshold level of confidence. This may occur, for example, based on a threshold percentage of joints (or pertinent joints for a gesture) of the hand, threshold portion of the hand, or the like is not occluded. At block 6125, a gesture is determined based on hand pose. According to some embodiments, a gesture may indicate a user input gesture which is associated with an input action. A pose performed by a hand can match the gesture. In addition, the hand may be partially occluded while still not satisfy the occlusion condition.

At block 6130, and intentionality classification is determined for the gesture. As described above with respect to Figure 1, a gesture determination framework 110 can make a determination as to whether the gesture was performed by a user with the intent of performing the user input action or was unintentional. For purposes of this description, unintentional means the user did not intend for the gesture to lead to a user input action. As such, the user may intend to perform the pose for another reason, such as scratching an arm, using a physical input device, without intending to generate gesture-based user input. In some embodiments, the intentionality classification may be determined based on the hand tracking data, as well as other data, such as eye tracking data, user interface geometry, events generated by connected peripherals, and the like.

The flowchart continues to block 6135, where a determination is made as to whether intentionality classification satisfied. In some embodiments, the intentionality classification may include will be based on a is intentionality score, which may be compared as a predetermined threshold of intentionality. This may indicate a sufficient level of confidence that the gesture was performed with intent to generate a user input action.

If the intentionality is classification is not satisfied, the flowchart concludes at block 6145, and the user input gesture is disregarded. The user input gesture can be disregarded by either transmitting a gesture signal that indicates no gesture is being performed. In some embodiments, if the user input gesture is disregarded, a cancellation signal may be transmitted to cancel a is gesture signal determined from a prior frame for the gesture. This may occur, for example, when a determination for a prior frame indicated that intentional user input gesture, but upon receiving further frames, a determination is made that the input gesture is unintentional. For example, additional data received may change the determination. Disregarding the input gesture at block 6125 using a cancellation signal, may cause gesture processing to action differently than if the signal was simply transmitted as no gesture received. For example, an input action associated with the gesture may be presented to the user to indicate that the gesture was recognized, but an action associated with the gesture may not be deployed.

By contrast, returning to block 6135, if the intentionality condition is satisfied, the flowchart concludes to block 6140 and the user input action is enabled. The user input action may be the particular input action associated with the gesture and/or other contextual information, such as available user interface components, gaze information, peripheral availability, and the like.

### MOTION SUPPRESSION BASED ON USER INTENT DURING TWO-HANDED GESTURES

Various two-handed gestures may be enabled based on interpreting hand positions and/or movements using sensor data, e.g., image or other sensor data captured by outward facing sensors on a head-mounted device (HMD). For example, a pan gesture may be performed by pinching both hands and then moving both hands in the same direction, e.g., holding the hands out at a fixed distance apart from one another and moving them both an equal amount to the right to provide input to pan to the right. In another example, a zoom gesture may be performed by holding the hands out and moving one or both hands to change the distance between the hands, e.g., moving the hands closer to one another to zoom in and farther from one another to zoom out. Since interpreting such gestures may depend upon the relative movement paths of the hands, there user's actual movements of their hands may not correspond precisely with their intent. While doing a zoom, a user's hands may have some aligned movement that might not be intended as a pan but may be interpreted as such based on simple application of relative motion gesture interpretation rules.

Implementations disclosed herein provide flexibility in interpreting two-handed gestures to better align the interpretation of the gestures with the user's intent. For example, when trying to do pan, zoom, rotate gestures, and other two-handed gestures there may be cross talk between gestures. For example, when a user attempts a pan, the interpretation system may identify an unintended zoom based on the motion of the hands. Similarly, when the user is trying to zoom, the system may identify an unintended pan. The same issues may apply with two-handed rotate gestures.

Some implementations reduce unintentional pan when a user is intending to perform a zoom.

When the user is performing a zoom, if the hands are moving away or towards each other, the system may suppress the component of pan delta orthogonal to the zoom direction. In the figure above, the pan delta is shown in purple. The system may decompose that pan delta into a component (green) perpendicular to the direction in which hands are moving away or towards each other and a component (red) along the same direction. If the system detects the motion away or towards from each other, it may suppress the red (same direction) component. And if both hands are moving the same direction, the system limit or avoid suppression all-together. Suppression could be implemented via a weight. It could be reduced by a scale factor to reduce magnitude of the component, or using a dead-band, e.g., suppressing it only up to a threshold amount of movement.

It may be possible to calculate the amount of motion on a two-handed gesture centroid that is expected to be detected due to hand distance changing from one to the other. The system may not need to check along whole component along the direction and instead it may estimate an amount to compensate by. If one hand is stationary and one is moving, the system may determine that all of that motion should be discarded. However, if the hands are also translating along the same direction and moving with respect to each other, the system may estimate how much of that motion to discard, e.g., how much motion to suppress. Thus, if only one hand is moving, a suppression can be applied. If both hands are moving in the same direction, the system may or may not do some suppression. Suppression may be applied, for example, based on determining that one hand is moving really fast.

In some implementations, motion on a two-handed gesture centroid may be decomposed into motion induced by hand motion relative to each other and bulk hand motion. The system may decompose what motion is due to pan, what motion is due to zoom, etc., without having to aggressively suppress everything that moves along the zoom component and instead just suppress the particular piece due to the zoom.

In some implementations, pan and zoom are enabled to be performed at the same time. For example, with respect to photos, when people are zooming, they may not want to focus on an area at the same time by providing a slight pan. There are various use cases in which users may want to pan, zoom, and/or rotate at the same time. Two hands may be used to pan and zoom one object, e.g., both hands are involved in both gestures. In some implementations, the system performs an algorithm or utilizes a machine learning model that uses motion (of one or both hands) to distinguish circumstances in which a user intends to perform a single two-handed gesture from circumstances in which the user intends to perform two simultaneous two-handed gestures (e.g., pan and zoom at the same time).

In some implementations, the system distinguishes between two-handed gestures and simultaneous one-handed gestures, e.g., in which each hand (left/right) simultaneously performs an independent gesture. For example, one hand may perform a content manipulation task while the other hand performs a one-handed pan (e.g., moving the board behind the object of interaction). In some implementations, the system performs an algorithm or utilizes a machine learning model that uses motion (of one or both hands) to distinguish circumstances in which a user intends to perform a two-handed gesture from simultaneous one-handed gestures.

In some implementations, a detect to zoom is detected and, even if hands do not move exactly on a zoom axis, the hands motion is interpreted as if it were on the zoom axis. A deviation of more than a threshold from the zoom axis may be detected and used to identify circumstances in which one or more other gestures are additionally (or alternatively intended).

### USER-CENTRIC AND APP-CENTRIC GESTURE INTERPRETATION

Various two-handed gestures may be enabled based on interpreting hand positions and/or movements using sensor data, e.g., image or other sensor data captured by outward facing sensors on a head-mounted device (HMD). For example, a pan gesture may be performed by pinching both hands and then moving both hands in the same direction, e.g., holding the hands out at a fixed distance apart from one another and moving them both an equal amount to the right to provide input to pan to the right. In another example, a zoom gesture may be performed by holding the hands out and moving one or both hands to change the distance between the hands, e.g., moving the hands closer to one another to zoom in and farther from one another to zoom out.

Gestures may be user centric, e.g., making sense in the user's own coordinate system for example relative to one or more pivot points on the user without regard to user interface (UI) location. Gestures may be app centric, e.g., where the location of the user interface (UI) may be accounted for in tracking user motion. For example, if a UI window is off to the user's far left, a zoom gesture may be interpreted based in part on the motion direction relative to the window plane. Some implementations interpret one-handed and two-handed gestures in the context of enabling user-centric, app-centric gestures, or blended/hybrid gestures.

In some implementations, motion data and/or context data is assessed to determine whether a gesture should be interpreted as a user centric, an app centric gesture, or a blended gesture, and then the motion is interpreted as a specific gesture accordingly.

One or more pivot points may be used to interpret a user centric gesture. In some case, for example, arc length may be used to interpret a user-centric gesture. However, this may introduce issues with respect to some two-handed gestures. The illustration at left below illustrates moving both hands in opposite directions with the user attempting to do a zoom. Using arc length may not make as much sense for interpreting such a gesture since the arc length distances may not correspond well to the Cartesian distance that the hands separate from one another and/or with the user's perception of how/how much their hands are separating. In contrast, if the hands are moving in the same direction, for example, during a pan two-handed gesture, arc length may be used to provide an accurate interpretation of the two-handed gestures intended movement.

In some implementations, two-handed gestures are only interpreted as app-centric gestures in certain circumstances, e.g., based on motion type, gesture type, etc. For example, when a zoom pinch motion is performed along the plane of a user interface component such a gesture may interpreted as an app-centric gesture.

Distance from the user interface, whether the user is facing a user interface, and/or whether the user is sitting or standing may also be used to distinguish between user-centric and app-centric gestures.

In some implementations, each user interface utilizes a UI/app specific set of gestures, which may or may not support two-handed gestures. If the UI does not support two-handed gestures, then the system may suppress interpreting hands in two-handed modes. If the UI does not support the two-handed gesture that the user made, then the system may ignore that two-handed gestures as an input or attempt to reinterpret the motion as another type of gesture.

Some implementations provide a blended user-centric and app-centric gesture interpretation. For example, in an app-centric mapping motion of a user's hands rotating about an elbow or torso may be detected.

In some implementations, an app-centric (e.g., Cartesian space-based) technique is modified to account for some user-centric aspects, e.g., use of pivot points on a user's body to interpret some (but not necessarily all) motion. Some implementations use app-centric tracking to generally track user motion and interpret gestures, but also use a reference orientation of the space is defined based on the user-interface/app orientation or the orientation of the user. Doing so may enable detection of two-handed zoom where the user can do things comfortable orthogonal to their torso even if the app is to the side.

In some implementations, a user motion is treated one way (e.g., when both arms move together to move a big box), for example, based on a fixed 3D position or on a single torso location and user motion is treated another way (e.g., when expanding or rotating something/manipulating something about itself), for example, by tracking each arm's movement independently as moving about its own shoulder/elbow or other pivot point. Some implementations mix and match, user centric, app centric, single pivot point (e.g., torso-based), dual pivot point (e.g., shoulder/elbow-based) features to optimize accurate single and/or two-handed gesture tracking.

### TWO-HANDED AND ONE-HANDED GESTURE DISAMBIGUATION

Various one-handed and two-handed gestures may be enabled based on interpreting hand positions and/or movements using sensor data, e.g., image or other sensor data captured by outward facing sensors on a head-mounted device (HMD). In one example, a single-handed pinch and move gesture is used to provide input moving a user-interface object that the user is gazing at to a different location. In another example, a two-handed pan gesture may be performed by pinching both hands and then moving both hands in the same direction, e.g., holding the hands out at a fixed distance apart from one another and moving them both an equal amount to the right to provide input to pan to the right. In another example, a zoom gesture may be performed by holding both hands out and moving one or both hands to change the distance between the hands, e.g., moving the hands closer to one another to zoom in and farther from one another to zoom out.

In some implementations, an algorithm or machine learning model is used to determine a user's intent to provide a single-handed gesture input or a two-handed gesture input. This can be challenging since a user may intend to perform single-handed gesturing but may perform some accidental pinching or other input-like motion with the other hand that might be mis-interpreted as an intent to provide two-handed gesturing. Some implementations, use the simultaneous or near-simultaneous occurrence of an initiation action by both hands as criteria to distinguish between circumstances in which the user intends to provide a single-handed gesture and the other hand happens to move and where the user intends to provide two handed gesture input. For example, an intent to provide a two-handed gesture may be identified based on determining that the hands perform an initiation action (e.g., both hands pinching) temporally close together, e.g., within a threshold amount of time such as 0.1 seconds. Separate one-handed gestures that may be identified based on determining that each hand performs the initiation action (e.g., a pinch) temporally separate from one another, e.g., at more than the threshold amount of time.

In some implementations, an algorithm or machine learning model is used to distinguish bimanual independent gestures (i.e., each hand doing their own manipulation) versus two-handed gestures. This may be based on timing, e.g., whether initiation action of each hand occur at or near the same time, e.g., within a threshold amount of time of one another.

Some implementations account for gaze location in assessing user gesture intent. For example, if a first pinch (of one hand) occurs while the user's gaze is on a first UI location and a second pinch (of the other hand) occurs while the user's gaze is on a second UI location, the system may (or use the information as evidence to) determine that the user is trying to do a bimanual independent gesture. Conversely, if the user looks at the same UI element during the initiation (e.g., pinching) performed by each hand, this may be used as evidence of an intent for a two-handed interaction.

Some implementations account for the relative positioning of the hands in distinguish two-handed gestures from single and/or bimanual gestures. For example, a two-handed gesture may be determined based, at least in part, on determining that the hands are at approximately the same height, e.g., a given point in time such as the occurrence of an initiation action (e.g., pinch) performed by either hand.

### MULTI-MODE TWO-HAND GESTURE TRACKING

Various gestures may be enabled based on interpreting hand positions and/or movements using sensor data, e.g., image or other sensor data captured by outward facing sensors on a HMD. Some implementations enable the use of hand gestures by both hands of the user, where each of the hands operates in a different operational mode.

There are often cases where a user wants to do interactions with one hand while the user's is looking at something else, e.g., a "blind" interaction where the user editing something visual and using their eyes to look at something else on the screen. In one example, one hand of the user operates in a direct interaction mode while the other operates in an indirect interaction mode. The direct mode may involve, for example, the user moving their hand relative to a displayed user interface, for example, to make virtual contact with the controls of the user interface control, e.g., virtually pressing a button by pushing a finger through a displayed button in an extended reality (XR) environment. The indirect mode may involve, for example, the user gazing at a user interface and providing a gesture that causes an interaction based on the gaze. For example, the user may gaze at a button and perform a pinch gesture to provide selection input to that button. In these examples, only the indirect mode uses the user's gaze direction. Accordingly, the user may use one hand to perform direct interactions while at the same time using the other hand and gaze to provide indirect interactions.

In some implementations, a system enables one hand to provide direct interaction while the other hand provides indirect interactions. One hand in the near field may be tied to controls that are direct while the other hand either selects in the far field or another near-field panel the interactions that are available to the first hand. This may provide the advantages of being able to combine direct and indirect interactions. This may facilitate a combination of big selection and fine selection. Things like sliders (e.g., to change photo background color) may be interacted with via a direct control panel while the user interacts with other features via an indirect mode.

In some implementations, a system enables each hand to independently interact in a direct interaction mode.

In some implementations, an interaction mode (for one or both hands) is determined automatically based on predicting the user's intent based on user motion and/or context. In some implementations, a dual modality mode (i.e., direct for one hand and indirect for the other) is determined via an algorithm or machine learning model. Some implementations provide feedback to the user to indicate which hand is operating in which mode, e.g., which hand is gaze tied to.

In some implementations, functionalities are mapped left and right, e.g., left is always direct in dual interaction mode and right is always indirect in dual interaction mode. Gaze may always be tied to a particular hand, e.g., a given user may prefer to always use right hand for indirect interactions. In some implementations, one hand is always associated with certain types/modes of interactions while the other hand is always associated with other types/modes of interaction.

Proximity to a particular type of UI (e.g., a defined "functional" space in the 3D space of an XR environment tied to a UI element) may be used to determine which hand is in direct mode, e.g., whichever hand is proximal / closest to that UI.

Some implementations account for user interface element positioning relative to the user and/or the user's gaze in determining when and how to implement a switch of interaction mode. For example, based on determining that a user's gaze is far from a user's fingertip that is doing a direct input, then the system may enable an indirect input mode for the other hand that uses the user's gaze. Conversely, based on determining that the user's gaze is close to fingertip that is doing direct touch, then you can disable indirect interaction and/or associated feedback, e.g., disabling gaze-based hover.

### 3D OBJECT MANIPULATION VIA HAND PROXY

Various gestures may be enabled based on interpreting hand positions and/or movements using sensor data, e.g., image or other sensor data captured by outward facing sensors on a head-mounted device (HMD). Some implementations enable the use of hand gestures by both hands of the user.

Some implementations provide manipulation of the position and/or orientation (e.g., 6DOF pose) of a 3D object in an extended reality (XR) using a indirect interaction mode. The indirect mode may involve, for example, the user gazing at a 3D object and providing one or more gestures as input that result in manipulation of the position and/or orientation of the 3D object.

Some implementations use a proxy of an object to enable manipulations. A proxy may be the user's hand, a space between the user's hands, a displayed virtual proxy object, etc. Some implementations use one hand as a proxy of an object. For example, a user may make a fist and that creates a fantom version of it and then the user can gaze at it and then rotating/moving the fist. The other hand to manipulate it. The system may identify a center point or other point of rotation.

Some implementations use a second hand to manipulate a proxy object.

Some implementations enable manipulation of an object based on interactions of both hands with the proxy object. For example, the user may look at an object on a far-away user interface and make a fist to generate a closer/smaller proxy object, and then use both hands to manipulate the position and orientation of the proxy object, which may also affect the 3D object's position and/or orientation on the far-away UI.

Some implementations utilize anchor points that can be selected (e.g., via gaze and pinch) and then manipulated (e.g., dragged, rotated, etc.) to change the shape/perimeter of the object or otherwise directly manipulate the object. In the 3D context such an anchor point may have a 3D shape (e.g., a matchstick) that the user can manipulate.

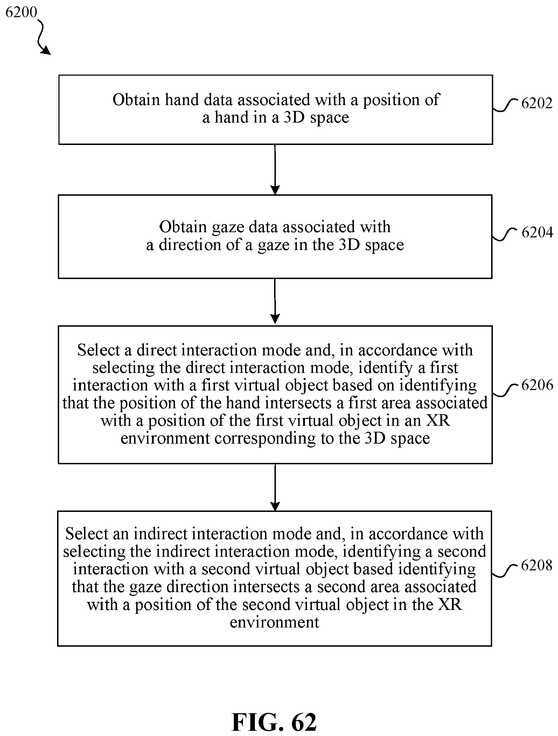

Figure 62 is a flowchart illustrating a method 6200 for user input recognition. In some implementations, a device such as electronic device 105 or electronic device 110 performs method 6200. In some implementations, method 6200 is performed on a mobile device, desktop, laptop, HMD, or server device. The method 6200 is performed by processing logic, including hardware, firmware, software, or a combination thereof. In some implementations, the method 6200 is performed on a processor executing code stored in a non-transitory computer-readable medium (e.g., a memory).

At block 6202, the method 6200 involves obtaining hand data associated with a position of a hand in a 3D space. The hand data may be obtained based on first sensor data, e.g., using outward facing image sensors on an HMD, and the hand position may be associated with a hand gesture.

At block 6204, the method 6200 involves obtaining gaze data associated with a direction of a gaze in the 3D space. The gaze data may be obtained based on second sensor data, e.g., based on outward facing image and/or depth sensors on an HMD that capture images of the hand.

At block 6206, the method 6200 involves selecting a direct interaction mode. The direct interaction mode may be selected manually or automatically. In some implementations, a direct interaction mode is selected automatically based on a criterion, e.g., based on the user hand position and the position of the virtual object in the 3D space satisfying a spatial relationship to one another. In accordance with selecting the direct interaction mode, the method 6200 involves identifying a first interaction with a first virtual object based on identifying that the position of the hand intersects a first area associated with a position of the first virtual object in a XR environment corresponding to the 3D space.

At block 6208, the method 6200 further involves, either before or after the direct interaction mode, selecting an indirect interaction mode. Such a mode may be selected automatically or manually. In some implementations, an indirect interaction mode is selected based on automatically determining that a criterion for a direct interaction mode is not satisfied. In accordance with selecting the indirect interaction mode, the method 6200 involves identifying a second interaction with a second virtual object based on identifying that the gaze direction intersects a second area associated with a position of the second virtual object in the XR environment.

In some implementations, the direct interaction mode and indirect interaction mode are selected based on proximity of hand position to positions of virtual objects in the XR environment, wherein the indirect interaction mode is selected in circumstances in which hand position in the XR environment intersects areas associated with the virtual objects in the XR environment.

In some implementations, identifying the second interaction with the second virtual object is further based on identifying a hand gesture coinciding with the gaze direction intersecting the gaze the second area.

In some implementations, identifying the first interaction with the first virtual object comprises determining an input location on a user interface based on a movement path of the hand. In some implementations, identifying the first interaction with the first virtual object comprises determining whether the gesture is a tap gesture based on a movement path of the hand.

In some implementations, identifying the first interaction with the first virtual object comprises: determining whether segments of a hand movement have a characteristic that satisfies a retraction criterion, the retraction criterion configured to distinguish retraction motion from another type of motion; and associating a subset of the segments of the movement with user interface contact based on whether the characteristic of each of the segments satisfies the retraction criterion.

In some implementations, identifying the first interaction with the first virtual object comprises: configuring a break volume based on a hand movement, the break volume defining a region of the XR environment in which the movement will be associated with user interface contact; and determining to discontinue associating the movement with user interface contact based on the movement crossing a boundary of the break volume.

In some implementations, identifying the second interaction with the second virtual object comprises: obtaining gaze motion classification data based on the gaze data, the gaze motion classification data distinguishing gaze periods associated with gaze holding events from gaze periods associated with non-gaze-holding events.

In some implementations, identifying the second interaction with the second virtual object comprises: generating a plurality of sample locations based on the gaze data; identifying virtual objects based on the plurality of sample locations; and selecting the second virtual object, from the virtual objects, to associate with a user activity based on a selection criterion.

In some implementations, identifying the second interaction with the second virtual object further comprises: identifying a point to an application that provided the second virtual object such that the application can associate an action with the second virtual object.

In some implementations, the method 6200 further involves: determining an intentionality classification for a gesture based on the hand data; and enabling an input action corresponding to the gesture based on the intentionality classification.

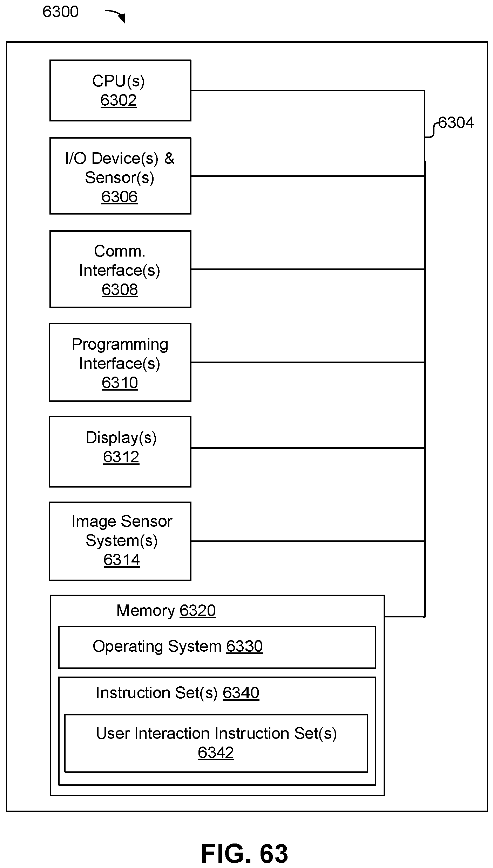

**Figure 63** is a block diagram of electronic device 6300. Device 6300 illustrates an exemplary device configuration for electronic device 105 or 110. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the device 6300 includes one or more processing units 6302 (e.g., microprocessors, ASICs, FPGAs, GPUs, CPUs, processing cores, and/or the like), one or more input/output (I/O) devices and sensors 6306, one or more communication interfaces 6308 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, SPI, I2C, and/or the like type interface), one or more programming (e.g., I/O) interfaces 6310, one or more output device(s) 6312 (e.g., including displays), one or more interior and/or exterior facing image sensor systems 6314, a memory 6320, and one or more communication buses 6304 for interconnecting these and various other components.

In some implementations, the one or more communication buses 6304 include circuitry that interconnects and controls communications between system components. In some implementations, the one or more I/O devices and sensors 6306 include at least one of an inertial measurement unit (IMU), an accelerometer, a magnetometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some implementations, the one or more output device(s) 6312 include one or more displays configured to present a view of a 3D environment to the user. In some implementations, the one or more displays correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more displays correspond to diffractive, reflective, polarized, holographic, etc. waveguide displays. In one example, the device 6300 includes a single display. In another example, the device 6300 includes a display for each eye of the user.

In some implementations, the one or more output device(s) 6312 include one or more audio producing devices. In some implementations, the one or more output device(s) 6312 include one or more speakers, surround sound speakers, speaker-arrays, or headphones that are used to produce spatialized sound, e.g., 3D audio effects. Such devices may virtually place sound sources in a 3D environment, including behind, above, or below one or more listeners. Generating spatialized sound may involve transforming sound waves (e.g., using head-related transfer function (HRTF), reverberation, or cancellation techniques) to mimic natural soundwaves (including reflections from walls and floors), which emanate from one or more points in a 3D environment. Spatialized sound may trick the listener's brain into interpreting sounds as if the sounds occurred at the point(s) in the 3D environment (e.g., from one or more particular sound sources) even though the actual sounds may be produced by speakers in other locations. The one or more output device(s) 6312 may additionally or alternatively be configured to generate haptics.

In some implementations, the one or more image sensor systems 6314 are configured to obtain image data that corresponds to at least a portion of a physical environment. For example, the one or more image sensor systems 6314 may include one or more RGB cameras (e.g., with a complimentary metal-oxide-semiconductor (CMOS) image sensor or a charge-coupled device (CCD) image sensor), monochrome cameras, IR cameras, depth cameras, event-based cameras, and/or the like. In various implementations, the one or more image sensor systems 6314 further include illumination sources that emit light, such as a flash. In various implementations, the one or more image sensor systems 6314 further include an on-camera image signal processor (ISP) configured to execute a plurality of processing operations on the image data.

The memory 6320 includes high-speed random-access memory, such as DRAM, SRAM, DDR RAM, or other random-access solid-state memory devices. In some implementations, the memory 6320 includes non-volatile memory, such as one or more magnetic disk storage devices, optical disk storage devices, flash memory devices, or other non-volatile solid-state storage devices. The memory 6320 optionally includes one or more storage devices remotely located from the one or more processing units 6302. The memory 6320 comprises a non-transitory computer readable storage medium.

In some implementations, the memory 6320 or the non-transitory computer readable storage medium of the memory 6320 stores an optional operating system 6330 and one or more instruction set(s) 6340. The operating system 6330 includes procedures for handling various basic system services and for performing hardware dependent tasks. In some implementations, the instruction set(s) 6340 include executable software defined by binary information stored in the form of electrical charge. In some implementations, the instruction set(s) 6340 are software that is executable by the one or more processing units 6302 to carry out one or more of the techniques described herein.

The instruction set(s) 6340 include user interaction instruction set(s) 6342 configured to, upon execution, identify and/or interpret user gestures and other activities as described herein. The instruction set(s) 6340 may be embodied as a single software executable or multiple software executables.

Although the instruction set(s) 6340 are shown as residing on a single device, it should be understood that in other implementations, any combination of the elements may be located in separate computing devices. Moreover, the figure is intended more as functional description of the various features which are present in a particular implementation as opposed to a structural schematic of the implementations described herein. As recognized by those of ordinary skill in the art, items shown separately could be combined and some items could be separated. The actual number of instructions sets and how features are allocated among them may vary from one implementation to another and may depend in part on the particular combination of hardware, software, and/or firmware chosen for a particular implementation.

### Exemplary Implementations

Some implementations provide a method comprising:
at an electronic device having a processor:
obtaining a position of a virtual object in an extended reality (XR) environment corresponding to a three-dimensional (3D) space;
obtaining a user hand position in the 3D space based on sensor data, wherein the hand position is associated with a hand gesture;
determining an interaction mode based on the user hand position and the position of the virtual object in the 3D space; and
interpreting the hand gesture using an interaction recognition process associated with the determined interaction mode.

Some implementations provide a method:
wherein determining the interaction mode comprises selecting whether the interaction mode is direct or indirect based on the user hand position and the position of the virtual object in the 3D space.

Some implementations provide a method:
wherein determining the interaction mode comprises selecting a direct interaction mode in which the virtual object is identified based on the hand position intersecting a 3D area associated with the virtual object in the 3D space, and
wherein the interaction recognition process is a direct interaction recognition process applied to the hand gesture.

Some implementations provide a method:
wherein determining the interaction mode comprises selecting a direct interaction mode based on the hand position intersecting a 3D area associated with the virtual object in the 3D space.

Some implementations provide a method:
wherein determining the interaction mode comprises selecting a direct interaction mode based on:
determining an attention zone based on a gaze direction or head pose of the user;
determining an intersection of the hand position intersecting a 3D area associated with the virtual object in the 3D space; and
determining that the intersection is within the attention zone.

Some implementations provide a method:
wherein the interaction mode is a direct interaction mode and the method further comprises discontinuing interaction detection for a predetermined period of time following a recognition of the hand gesture.

Some implementations provide a method:
further comprising initiating a selection of the virtual object based on interaction mode being a direct interaction mode and the hand gesture being a direct touch with the virtual object.

Some implementations provide a method:
further comprising initiating a hover of the virtual object based on interaction mode being a direct interaction mode and the hand position satisfying a proximity criterion with respect to the position of the virtual object and within an attention zone.

Some implementations provide a method:
further comprising maintaining the hover of the virtual object when the position of the virtual object is no longer in the attention zone.

Some implementations provide a method:
wherein determining the interaction mode comprises selecting an indirect interaction mode in which the virtual object is identified based on a gaze direction intersecting an area associated with the virtual object, and
wherein the interaction recognition process is an indirect interaction recognition process applied to the hand gesture.

Some implementations provide a method:
wherein determining the interaction mode comprises selecting an indirect interaction mode based on the hand position being outside of a 3D area associated with the virtual object in the 3D space.

Some implementations provide a method:
wherein determining the interaction mode comprises selecting an indirect interaction mode based on:
determining an attention zone based on a gaze direction or head pose of the user;
determining an intersection of the hand position intersecting a 3D area associated with the virtual object in the 3D space; and
determining that the intersection is outside of the attention zone.

Some implementations provide a method:
further comprising initiating a selection of the virtual object based on interaction mode being an indirect interaction mode and the hand gesture being a pinch occurring while a gaze is direct towards the virtual object.

Some implementations provide a method:
wherein the interaction mode is an indirect interaction mode and interpreting the hand gesture comprises:
recognizing that the hand gesture is a pinch; and
identifying the virtual object based on a gaze direction occurring during the pinch.

Some implementations provide a method:
wherein the interaction mode is an indirect interaction mode and interpreting the hand gesture comprises:
recognizing that the hand gesture corresponds to hand engagement;
identifying the virtual object based on a gaze direction occurring during the hand engagement; and
initiating a hover of the virtual object based on the hand engagement.

Some implementations provide a method:
further comprising:
identifying a hand gesture;
tracking a position of the hand gesture in the 3D space; and
identifying one or more interaction points based on the tracking.

Some implementations provide a method:
wherein identifying the one or more interaction points is based on a gaze direction.

Some implementations provide a method:
wherein the electronic device is a head-mounted device and the XR environment is a virtual reality environment or an augmented reality environment.

Some implementations provide a method:
further comprising providing data corresponding to user activity to an application for the application to interpret the user activity based on the data, wherein the data is specific to the interaction mode.

Some implementations provide a method:
wherein for a direct interaction mode, the data comprises an index finger tip as a manipulator pose and a trajectory corrected interaction pose.

Some implementations provide a method:
wherein for an indirect interaction mode, the data comprises an pinch centroid as a manipulator pose and an interaction pose or user-centric data.

Some implementations provide a system comprising:
a non-transitory computer-readable storage medium; and
one or more processors coupled to the non-transitory computer-readable storage medium, wherein the non-transitory computer-readable storage medium comprises program instructions that, when executed on the one or more processors, cause the system to perform operations comprising:
   obtaining a position of a virtual object in an extended reality (XR) environment corresponding to a three-dimensional (3D) space;
   obtaining a user hand position in the 3D space based on sensor data, wherein the hand position is associated with a hand gesture;
   determining an interaction mode based on the user hand position and the position of the virtual object in the 3D space; and
   interpreting the hand gesture using an interaction recognition process associated with the determined interaction mode.

Some implementations provide a system:
wherein determining the interaction mode comprises selecting whether the interaction mode is direct or indirect based on the user hand position and the position of the virtual object in the 3D space.

Some implementations provide a system:
wherein determining the interaction mode comprises selecting a direct interaction mode in which the virtual element is identified based on the hand position intersecting a 3D area associated with the virtual object in the 3D space, and
wherein the interaction recognition process is a direct interaction recognition process applied to the hand gesture.

Some implementations provide a system:
wherein determining the interaction mode comprises selecting a direct interaction mode based on the hand position intersecting a 3D area associated with the virtual object in the 3D space.

Some implementations provide a system:
wherein determining the interaction mode comprises selecting a direct interaction mode based on:
determining an attention zone based on a gaze direction or head pose of the user;
determining an intersection of the hand position intersecting a 3D area associated with the virtual object in the 3D space; and
determining that the intersection is within the attention zone.

Some implementations provide a system:
wherein the interaction mode is a direct interaction mode and interaction detection is discontinued for a predetermined period of time following a recognition of the hand gesture.

Some implementations provide a system:
further comprising initiating a selection of the virtual object based on interaction mode being a direct interaction mode and the hand gesture being a direct touch with the virtual object.

Some implementations provide a system:
further comprising initiating a hover of the virtual object based on interaction mode being a direct interaction mode and the hand position satisfying a proximity criterion with respect to the position of the virtual object and within an attention zone.

Some implementations provide a system:
further comprising maintaining the hover of the virtual object when the position of the virtual object is no longer in the attention zone.

Some implementations provide a system:
wherein determining the interaction mode comprises selecting an indirect interaction mode in which the virtual element is identified based on a gaze direction intersecting an area associated with the virtual object, and
wherein the interaction recognition process is an indirect interaction recognition process applied to the hand gesture.

Some implementations provide a system:
wherein determining the interaction mode comprises selecting an indirect interaction mode based on the hand position being outside of a 3D area associated with the virtual object in the 3D space.

Some implementations provide a system:
wherein determining the interaction mode comprises selecting an indirect interaction mode based on:
determining an attention zone based on a gaze direction or head pose of the user;
determining an intersection of the hand position intersecting a 3D area associated with the virtual object in the 3D space; and
determining that the intersection is outside of the attention zone.

Some implementations provide a system:
further comprising initiating a selection of the virtual object based on interaction mode being an indirect interaction mode and the hand gesture being a pinch occurring while a gaze is direct towards the virtual object.

Some implementations provide a system:
wherein the interaction mode is an indirect interaction mode and interpreting the hand gesture comprises:
recognizing that the hand gesture is a pinch; and
identifying the virtual object based on a gaze direction occurring during the pinch.

Some implementations provide a system:
wherein the interaction mode is an indirect interaction mode and interpreting the hand gesture comprises:
recognizing that the hand gesture corresponds to hand engagement;
identifying the virtual object based on a gaze direction occurring during the hand engagement; and
initiating a hover of the virtual object based on the hand engagement.

Some implementations provide a system:
that includes an electronic device comprising the one or more processors; and
the electronic device is a head-mounted device and the XR environment is a virtual reality environment or an augmented reality environment.

Some implementations provide a non-transitory computer-readable storage medium storing program instructions executable via one or more processors to perform operations comprising:
obtaining a position of a virtual object in an extended reality (XR) environment corresponding to a three-dimensional (3D) space;
obtaining a user hand position in the 3D space based on sensor data, wherein the hand position is associated with a hand gesture;
determining an interaction mode based on the user hand position and the position of the virtual object in the 3D space; and
interpreting the hand gesture using an interaction recognition process associated with the determined interaction mode.

Some implementations provide a non-transitory computer-readable storage medium:
wherein determining the interaction mode comprises selecting whether the interaction mode is direct or indirect based on the user hand position and the position of the virtual object in the 3D space.

Some implementations provide a non-transitory computer-readable storage medium:
wherein determining the interaction mode comprises selecting a direct interaction mode in which the virtual element is identified based on the hand position intersecting a 3D area associated with the virtual object in the 3D space, and
wherein the interaction recognition process is a direct interaction recognition process applied to the hand gesture.

Some implementations provide a non-transitory computer-readable storage medium:
wherein determining the interaction mode comprises selecting a direct interaction mode based on the hand position intersecting a 3D area associated with the virtual object in the 3D space.

Some implementations provide a non-transitory computer-readable storage medium:
wherein determining the interaction mode comprises selecting a direct interaction mode based on:
determining an attention zone based on a gaze direction or head pose of the user;
determining an intersection of the hand position intersecting a 3D area associated with the virtual object in the 3D space; and
determining that the intersection is within the attention zone.

Some implementations provide a non-transitory computer-readable storage medium:
wherein the interaction mode is a direct interaction mode and interaction detection is discontinued for a predetermined period of time following a recognition of the hand gesture.

Some implementations provide a non-transitory computer-readable storage medium:
wherein the operations further comprise initiating a selection of the virtual object based on interaction mode being a direct interaction mode and the hand gesture being a direct touch with the virtual object.

Some implementations provide a non-transitory computer-readable storage medium:
wherein the operations further comprise initiating a hover of the virtual object based on interaction mode being a direct interaction mode and the hand position satisfying a proximity criterion with respect to the position of the virtual object and within an attention zone.

Some implementations provide a non-transitory computer-readable storage medium:
wherein the operations further comprise maintaining the hover of the virtual object when the position of the virtual object is no longer in the attention zone.

Some implementations provide a non-transitory computer-readable storage medium:
wherein determining the interaction mode comprises selecting an indirect interaction mode in which the virtual object is identified based on a gaze direction intersecting an area associated with the virtual object, and
wherein the interaction recognition process is an indirect interaction recognition process applied to the hand gesture.

Some implementations provide a non-transitory computer-readable storage medium:
wherein determining the interaction mode comprises selecting an indirect interaction mode based on the hand position being outside of a 3D area associated with the virtual object in the 3D space.

Some implementations provide a non-transitory computer-readable storage medium:
wherein determining the interaction mode comprises selecting an indirect interaction mode based on:
determining an attention zone based on a gaze direction or head pose of the user;
determining an intersection of the hand position intersecting a 3D area associated with the virtual object in the 3D space; and
determining that the intersection is outside of the attention zone.

Some implementations provide a non-transitory computer-readable storage medium:
wherein the operations further comprise initiating a selection of the virtual object based on interaction mode being an indirect interaction mode and the hand gesture being a pinch occurring while a gaze is direct towards the virtual object.

Some implementations provide a method comprising:
at an electronic device having a processor:
obtaining a user hand position in a three-dimensional (3D) space based on sensor data, wherein the hand position is associated with a hand gesture;
determining that an arm or hand associated with the hand position is supported by a physical object; and
in accordance with determining that the arm or hand is supported by the physical object, interpreting the hand gesture using an interaction recognition process associated with an indirect interaction mode, the hand gesture interpreted as a user interaction in an extended reality (XR) environment corresponding to the 3D space.

Some implementations provide a method:
further comprising determining to utilize the indirect interaction mode based on determining that the arm or hand is supported by the physical object.

Some implementations provide a method:
wherein, in the indirect interaction mode, a virtual element is identified based on a gaze direction intersecting an area associated with the virtual object.

Some implementations provide a method:
wherein the interaction recognition process is an indirect interaction recognition process applied that identifies a hand gesture.

Some implementations provide a method:
further comprising initiating a selection of a virtual object based on recognizing a hand gesture occurring while a gaze is direct towards the virtual object.

Some implementations provide a method:
wherein the hand gesture is a pinch and the virtual object is identified based on a gaze direction occurring during the pinch.

Some implementations provide a method:
wherein determining that the arm or hand associated with the hand position is supported by the physical object comprises determining that the arm is resting on an arm rest of a chair.

Some implementations provide a method:
wherein determining that the arm or hand associated with the hand position is supported by the physical object comprises determining that the hand is resting on an arm rest of a chair.

Some implementations provide a method:
wherein determining that the arm or hand associated with the hand position is supported by the physical object comprises determining that the arm is resting on a lap or leg.

Some implementations provide a method:
wherein determining that the arm or hand associated with the hand position is supported by the physical object comprises determining that the hand is resting on a lap or leg.

Some implementations provide a method:
wherein determining that the arm or hand associated with the hand position is supported by the physical object is based on:
determining a first position of the arm or hand;
determining a second position of the physical object; and
determining that a relationship between the first position and second position satisfy a criterion.

Some implementations provide a method:
wherein the electronic device is a head-mounted device and the XR environment is a virtual reality environment or an augmented reality environment.

Some implementations provide a system comprising:
a non-transitory computer-readable storage medium; and
one or more processors coupled to the non-transitory computer-readable storage medium, wherein the non-transitory computer-readable storage medium comprises program instructions that, when executed on the one or more processors, cause the system to perform operations comprising any one of the methods of methods described herein.

Some implementations provide a non-transitory computer-readable storage medium storing program instructions executable via one or more processors to perform operations comprising any one of the methods described herein.

Some implementations provide a method comprising:
at an electronic device having a processor:
displaying a user interface in an extended reality (XR) environment corresponding to a three-dimensional (3D) space;
obtaining user position data corresponding to a 3D position of a portion of a user in the 3D space, wherein the user position data is based on sensor data and provides a movement path of the portion of the user over a time period;
determining a 3D region based on the movement path of the portion of the user and a position of the user interface within the 3D space; and
determining an input location on the user interface based on the movement path of the portion of the user relative to the 3D region.

Some implementations provide a method:
wherein the 3D region is based on an intersection of the movement path with the position of the user interface.

Some implementations provide a method:
the 3D region is based on an orientation of the movement path.

Some implementations provide a method:
wherein the 3D region is based on speed (defines diameter) of the portion of the user on the movement path.

Some implementations provide a method:
wherein the 3D region has a shape that having a width that varies based on distance away from the 3D element.

Some implementations provide a method:
wherein the shape of the 3D region is a tapered cylinder.

Some implementations provide a method:
wherein the 3D region has an orientation determined based a viewpoint direction.

Some implementations provide a method:
wherein the 3D region has an orientation determined based on a viewpoint direction determined based a piercing position and a viewpoint position.

Some implementations provide a method:
wherein the 3D region has an orientation determined based on a normal direction of the user interface.

Some implementations provide a method:
wherein the 3D region has a size attribute determined based on a speed associated with a movement of the portion of the user along the path.

Some implementations provide a method:
further comprising interpreting the user position data by determining whether the path of the portion of the user over the time period corresponds to a tap gesture.

Some implementations provide a method:
wherein interpreting the user position data comprises:
determining that the path of the portion of the user relative to the 3D region is entirely within the 3D region.

Some implementations provide a method:
wherein interpreting the user position data comprises:
based on determining that the path of the portion of the user relative to the 3D region is entirely within the 3D region, using a tap recognizer algorithm or machine learning model to determine that the path of the portion of the user corresponds to a tap.

Some implementations provide a method:
wherein interpreting the user position data comprises:
determining that the path of the portion of the user relative to the 3D region extends beyond the 3D region.

Some implementations provide a method:
wherein interpreting the user position data comprises:
based on determining that the path of the portion of the user relative to the 3D region extends beyond the 3D region, using a non-tap recognizer algorithm or machine learning model to determine that the path of the portion of the user corresponds to a non-tap gesture.

Some implementations provide a method:
wherein the non-tap gesture is a scroll, pan, swipe, or drag gesture identified by the non-tap recognizer algorithm or machine learning model using only two-dimensional input data.

Some implementations provide a method:
wherein the user interface is a two-dimensional user interface positioned within the 3D space, wherein the user interface is displayed a distance in front of a user viewpoint within the XR environment.

Some implementations provide a method:
wherein the portion of the user corresponds to a point on or in a finger or hand of the user.

Some implementations provide a method:
wherein the user position data corresponds to a position within a skeleton representation of the user that is generated periodically, wherein the skeleton representation is generated based on an image sensor and depth sensor.

Some implementations provide a method:
wherein the electronic device is a head-mounted device.

Some implementations provide a system comprising:
a non-transitory computer-readable storage medium; and
one or more processors coupled to the non-transitory computer-readable storage medium, wherein the non-transitory computer-readable storage medium comprises program instructions that, when executed on the one or more processors, cause the system to perform operations comprising:
   displaying a user interface in an extended reality (XR) environment corresponding to a three-dimensional (3D) space;
   obtaining user position data corresponding to a 3D position of a portion of a user in the 3D space, wherein the user position data is based on sensor data and provides a movement path of the portion of the user over a time period;
   determining a 3D region based on the movement path of the portion of the user and a position of the user interface within the 3D space; and
   determining an input location on the user interface based on the movement path of the portion of the user relative to the 3D region.

Some implementations provide a system:
wherein the 3D region is based on an intersection of the movement path with the position of the user interface.

Some implementations provide a system:
wherein the 3D region is based on an orientation of the movement path.

Some implementations provide a system:
wherein the 3D region is based on speed (defines diameter) of the portion of the user on the movement path.

Some implementations provide a system:
wherein the 3D region has a shape that having a width that varies based on distance away from the 3D element.

Some implementations provide a system:
wherein the shape of the 3D region is a tapered cylinder.

Some implementations provide a system:
wherein the 3D region has an orientation determined based a viewpoint direction.

Some implementations provide a system:
wherein the 3D region has an orientation determined based on a viewpoint direction determined based a piercing position and a viewpoint position.

Some implementations provide a system:
wherein the 3D region has a size attribute determined based on a speed associated with a movement of the portion of the user along the path.

Some implementations provide a system:
further comprising interpreting the user position data by determining whether the path of the portion of the user over the time period corresponds to a tap gesture.

Some implementations provide a system:
wherein interpreting the user position data comprises:
determining that the path of the portion of the user relative to the 3D region is entirely within the 3D region.

Some implementations provide a system:
wherein interpreting the user position data comprises:
based on determining that the path of the portion of the user relative to the 3D region is entirely within the 3D region, using a tap recognizer algorithm or machine learning model to determine that the path of the portion of the user corresponds to a tap.

Some implementations provide a system:
wherein the tap recognizer algorithm or machine learning model uses only two-dimensional input data.

Some implementations provide a system:
wherein interpreting the user position data comprises:
determining that the path of the portion of the user relative to the 3D region extends beyond the 3D region3

Some implementations provide a system:
wherein interpreting the user position data comprises:
based on determining that the path of the portion of the user relative to the 3D region extends beyond the 3D region, using a non-tap recognizer algorithm or machine learning model to determine that the path of the portion of the user corresponds to a non-tap gesture.

Some implementations provide a system:
wherein the non-tap gesture is a scroll, pan, swipe, or drag gesture identified by the non-tap recognizer algorithm or machine learning model using only two-dimensional input data.

Some implementations provide a system:
wherein the user interface is a two-dimensional user interface positioned within the 3D space, wherein the user interface is displayed a distance in front of a user viewpoint within the XR environment.

Some implementations provide a system:
wherein the portion of the user corresponds to a point on or in a finger or hand of the user.

Some implementations provide a system:
wherein the user position data corresponds to a position within a skeleton representation of the user that is generated periodically, wherein the skeleton representation is generated based on an image sensor and depth sensor.

Some implementations provide a system:
wherein the electronic device is a head-mounted device.

Some implementations provide a non-transitory computer-readable storage medium storing program instructions executable via one or more processors to perform operations comprising:
displaying a user interface in an extended reality (XR) environment corresponding to a three-dimensional (3D) space;
obtaining user position data corresponding to a 3D position of a portion of a user in the 3D space, wherein the user position data is based on sensor data and provides a movement path of the portion of the user over a time period;
determining a 3D region based on the movement path of the portion of the user and a position of the user interface within the 3D space; and
determining an input location on the user interface based on the movement path of the portion of the user relative to the 3D region.

Some implementations provide a non-transitory computer-readable storage medium:
wherein the 3D region is based on an intersection of the movement path with the position of the user interface.

Some implementations provide a non-transitory computer-readable storage medium:
wherein the 3D region is based on an orientation of the movement path.

Some implementations provide a non-transitory computer-readable storage medium:
wherein the 3D region is based on speed (defines diameter) of the portion of the user on the movement path.

Some implementations provide a non-transitory computer-readable storage medium:
wherein the 3D region has a shape that having a width that varies based on distance away from the 3D element.

Some implementations provide a non-transitory computer-readable storage medium:
wherein the shape of the 3D region is a tapered cylinder.

Some implementations provide a non-transitory computer-readable storage medium:
wherein the 3D region has an orientation determined based a viewpoint direction.

Some implementations provide a non-transitory computer-readable storage medium:
wherein the 3D region has an orientation determined based on a viewpoint direction determined based a piercing position and a viewpoint position.

Some implementations provide a non-transitory computer-readable storage medium:
wherein the 3D region has a size attribute determined based on a speed associated with a movement of the portion of the user along the path.

Some implementations provide a non-transitory computer-readable storage medium:
further comprising interpreting the user position data by determining whether the path of the portion of the user over the time period corresponds to a tap gesture.

Some implementations provide a non-transitory computer-readable storage medium:
wherein interpreting the user position data comprises:
determining that the path of the portion of the user relative to the 3D region is entirely within the 3D region.

Some implementations provide a non-transitory computer-readable storage medium:
wherein interpreting the user position data comprises:
based on determining that the path of the portion of the user relative to the 3D region is entirely within the 3D region, using a tap recognizer algorithm or machine learning model to determine that the path of the portion of the user corresponds to a tap.

Some implementations provide a non-transitory computer-readable storage medium:
wherein the tap recognizer algorithm or machine learning model uses only two-dimensional input data.

Some implementations provide a non-transitory computer-readable storage medium:
wherein interpreting the user position data comprises:
determining that the path of the portion of the user relative to the 3D region extends beyond the 3D region3

Some implementations provide a non-transitory computer-readable storage medium:
wherein interpreting the user position data comprises:
based on determining that the path of the portion of the user relative to the 3D region extends beyond the 3D region, using a non-tap recognizer algorithm or machine learning model to determine that the path of the portion of the user corresponds to a non-tap gesture.

Some implementations provide a non-transitory computer-readable storage medium:
wherein the non-tap gesture is a scroll, pan, swipe, or drag gesture identified by the non-tap recognizer algorithm or machine learning model using only two-dimensional input data.

Some implementations provide a non-transitory computer-readable storage medium:
wherein the user interface is a two-dimensional user interface positioned within the 3D space, wherein the user interface is displayed a distance in front of a user viewpoint within the XR environment.

Some implementations provide a non-transitory computer-readable storage medium:
wherein the portion of the user corresponds to a point on or in a finger or hand of the user.

Some implementations provide a non-transitory computer-readable storage medium:
wherein the user position data corresponds to a position within a skeleton representation of the user that is generated periodically, wherein the skeleton representation is generated based on an image sensor and depth sensor.

Some implementations provide a non-transitory computer-readable storage medium:
wherein the electronic device is a head-mounted device.

Some implementations provide a method comprising:
at an electronic device having a processor:
displaying an extended reality (XR) environment corresponding to a three-dimensional (3D) environment, wherein the XR environment comprises a user interface and a movement, the movement comprising segments;
determining an occurrence of an event associated with contact with the user interface in the XR environment;
determining whether each of the segments of the movement has a characteristic that satisfies a retraction criterion, the retraction criterion configured to distinguish retraction motion from another type of motion; and
associating a subset of the segments of the movement with user interface contact based on whether the characteristic of each of the segments satisfies the retraction criterion.

Some implementations provide a method:
wherein the characteristic comprises a retraction confidence determined based on alignment between a direction of the movement during a respective segment and a retraction direction.

Some implementations provide a method:
wherein the retraction direction is a direction from a portion of the user to a head of the user.

Some implementations provide a method:
wherein the retraction criterion is whether the retraction confidence exceeds a threshold.

Some implementations provide a method:
wherein the retraction criterion is whether a change in the retraction confidence exceeds a threshold.

Some implementations provide a method:
wherein the retraction criterion comprises whether a portion of the user has stopped moving.

Some implementations provide a method:
wherein associating a subset of the segments of the movement with user interface contact comprises generating a retraction dead-band.

Some implementations provide a method:
wherein the movement corresponds to a movement of a fingertip or hand.

Some implementations provide a method:
wherein the electronic device is a head-mounted device.

Some implementations provide a system comprising:
a non-transitory computer-readable storage medium; and
one or more processors coupled to the non-transitory computer-readable storage medium, wherein the non-transitory computer-readable storage medium comprises program instructions that, when executed on the one or more processors, cause the system to perform operations comprising:
   determining an occurrence of an event associated with contact with the user interface in the XR environment;
   displaying an extended reality (XR) environment corresponding to a three-dimensional (3D) environment, wherein the XR environment comprises a user interface and a movement, the movement comprising segments;
   determining whether each of the segments of the movement has a characteristic that satisfies a retraction criterion, the retraction criterion configured to distinguish retraction motion from another type of motion; and
   associating a subset of the segments of the movement with user interface contact based on whether the characteristic of each of the segments satisfies the retraction criterion.

Some implementations provide a system:
wherein the characteristic comprises a retraction confidence determined based on alignment between a direction of the movement during a respective segment and a retraction direction.

Some implementations provide a system:
wherein the retraction direction is a direction from a portion of the user to a head of the user.

Some implementations provide a system:
wherein the retraction criterion is whether the retraction confidence exceeds a threshold.

Some implementations provide a system:
wherein the retraction criterion is whether a change in the retraction confidence exceeds a threshold.

Some implementations provide a system:
wherein the retraction criterion comprises whether a portion of the user has stopped moving.

Some implementations provide a system:
wherein associating a subset of the segments of the movement with user interface contact comprises generating a retraction dead-band.

Some implementations provide a system:
wherein the movement corresponds to a movement of a fingertip or hand.

Some implementations provide a system:
wherein the electronic device is a head-mounted device.

Some implementations provide a non-transitory computer-readable storage medium storing program instructions executable via one or more processors to perform operations comprising:
displaying an extended reality (XR) environment corresponding to a three-dimensional (3D) environment, wherein the XR environment comprises a user interface and a movement, the movement comprising segments;
determining an occurrence of an event associated with contact with the user interface in the XR environment;
determining whether each of the segments of the movement has a characteristic that satisfies a retraction criterion, the retraction criterion configured to distinguish retraction motion from another type of motion; and
associating a subset of the segments of the movement with user interface contact based on whether the characteristic of each of the segments satisfies the retraction criterion.

Some implementations provide a non-transitory computer-readable storage medium:
wherein the characteristic comprises a retraction confidence determined based on alignment between a direction of the movement during a respective segment and a retraction direction.

Some implementations provide a non-transitory computer-readable storage medium:
wherein the retraction direction is a direction from a portion of the user to a head of the user.

Some implementations provide a non-transitory computer-readable storage medium:
wherein the retraction criterion is whether the retraction confidence exceeds a threshold.

Some implementations provide a non-transitory computer-readable storage medium:
wherein the retraction criterion is whether a change in the retraction confidence exceeds a threshold.

Some implementations provide a non-transitory computer-readable storage medium:
wherein the retraction criterion comprises whether a portion of the user has stopped moving.

Some implementations provide a non-transitory computer-readable storage medium:
wherein associating a subset of the segments of the movement with user interface contact comprises generating a retraction dead-band.

Some implementations provide a non-transitory computer-readable storage medium:
wherein the movement corresponds to a movement of a fingertip or hand.

Some implementations provide a non-transitory computer-readable storage medium:
wherein the electronic device is a head-mounted device.

Some implementations provide a method comprising:
at an electronic device having a processor:
displaying an extended reality (XR) environment corresponding to a three-dimensional (3D) environment, wherein the XR environment comprises a user interface and a movement;
determining an occurrence of an event associated with contact with the user interface in the XR environment;
adjusting a break volume based on the movement, the break volume defining a region of the XR environment in which the movement will be associated with user interface contact; and
determining to discontinue associating the movement with user interface contact based on the movement crossing a boundary of the break volume.

Some implementations provide a method:
wherein adjusting the break volume comprises shifting the break volume based on a retraction confidence, wherein the retraction confidence is based on alignment between a direction of the movement and a retraction direction.

Some implementations provide a method:
wherein the retraction direction is a direction from the portion of the user to a head of the user.

Some implementations provide a method:
wherein adjusting the break volume comprises adjusting a slope of the break volume based on a piercing depth of the movement.

Some implementations provide a method:
further comprising adjusting a velocity associated with a first time based on determining that the movement will cross outside the boundary of the break volume at the subsequent time.

Some implementations provide a method:
wherein the velocity associated with the first time is adjusted based on a velocity of a prior time.

Some implementations provide a method:
wherein the movement corresponds to a movement of a fingertip or hand.

Some implementations provide a method:
wherein the electronic device is a head-mounted device.

Some implementations provide a system comprising:
a non-transitory computer-readable storage medium; and
one or more processors coupled to the non-transitory computer-readable storage medium, wherein the non-transitory computer-readable storage medium comprises program instructions that, when executed on the one or more processors, cause the system to perform operations comprising:
   displaying an extended reality (XR) environment corresponding to a three-dimensional (3D) environment, wherein the XR environment comprises a user interface and a movement;
   determining an occurrence of an event associated with contact with the user interface in the XR environment;
   adjusting a break volume based on the movement, the break volume defining a region of the XR environment in which the movement will be associated with user interface contact; and
   determining to discontinue associating the movement with user interface contact based on the movement crossing a boundary of the break volume.

Some implementations provide a system:
wherein adjusting the break volume comprises shifting the break volume based on a retraction confidence, wherein the retraction confidence is based on alignment between a direction of the movement and a retraction direction.

Some implementations provide a system:
wherein the retraction direction is a direction from the portion of the user to a head of the user.

Some implementations provide a system:
wherein adjusting the break volume comprises adjusting a slope of the break volume based on a piercing depth of the movement.

Some implementations provide a system:
further comprising adjusting a velocity associated with a first time based on determining that the movement will cross outside the boundary of the break volume at the subsequent time.

Some implementations provide a system:
wherein the velocity associated with the first time is adjusted based on a velocity of a prior time.

Some implementations provide a system:
wherein the movement corresponds to a movement of a fingertip or hand.

Some implementations provide a system:
wherein the electronic device is a head-mounted device.

Some implementations provide a non-transitory computer-readable storage medium storing program instructions executable via one or more processors to perform operations comprising:
displaying an extended reality (XR) environment corresponding to a three-dimensional (3D) environment, wherein the XR environment comprises a user interface and a movement;
determining an occurrence of an event associated with contact with the user interface in the XR environment;
adjusting a break volume based on the movement, the break volume defining a region of the XR environment in which the movement will be associated with user interface contact; and
determining to discontinue associating the movement with user interface contact based on the movement crossing a boundary of the break volume.

Some implementations provide a non-transitory computer-readable storage medium:
wherein adjusting the break volume comprises shifting the break volume based on a retraction confidence, wherein the retraction confidence is based on alignment between a direction of the movement and a retraction direction.

Some implementations provide a non-transitory computer-readable storage medium:
wherein the retraction direction is a direction from the portion of the user to a head of the user.

Some implementations provide a non-transitory computer-readable storage medium:
wherein adjusting the break volume comprises adjusting a slope of the break volume based on a piercing depth of the movement.

Some implementations provide a non-transitory computer-readable storage medium:
further comprising adjusting a velocity associated with a first time based on determining that the movement will cross outside the boundary of the break volume at the subsequent time.

Some implementations provide a non-transitory computer-readable storage medium:
wherein the velocity associated with the first time is adjusted based on a velocity of a prior time.

Some implementations provide a non-transitory computer-readable storage medium:
wherein the movement corresponds to a movement of a fingertip or hand.

Some implementations provide a non-transitory computer-readable storage medium:
wherein the electronic device is a head-mounted device.

Some implementations provide a method comprising:
at an electronic device having a processor and one or more sensors:
obtaining gaze motion classification data that was generated based on sensor data of an eye captured by the one or more sensors, the gaze motion classification data distinguishing gaze periods associated with gaze holding events from gaze periods associated with non-gaze-holding events;
detecting a user activity; and
triggering a user interface response based on the user activity and the gaze motion classification data.

Some implementations provide a method:
wherein the user activity is a gaze in a gaze direction occurring during a gaze-holding event; and
the user interface response comprises providing an indication of user attention to the user interface element based on determining that the gaze-holding event corresponds to the user interface element.

Some implementations provide a method:
wherein:
the user activity is a gesture or input device interaction distinct from the gaze;
the gaze-holding event is associated with the user activity; and
the user interface response is triggered based on associating the user activity with the user interface element.

Some implementations provide a method:
wherein associating the gaze-holding event with the user activity is based on determining that the user activity occurred during the gaze-holding event.

Some implementations provide a method:
wherein associating the gaze-holding event with the user activity comprises:
   determining that the user activity did not occur during any of the gaze-holding events; and
   determining that the user activity occurred within a threshold time after the gaze-holding event.

Some implementations provide a method:
wherein associating the gaze-holding event with the user activity comprises:
determining that the user activity did not occur during any of the gaze-holding events;
determining that the user activity did not occur within a threshold time after any of the gaze-holding events; and
determining that the gaze-holding event occurred within a threshold time after the user activity.

Some implementations provide a method:
wherein the user activity is:
a finger pinch;
a multi-finger gesture;
a hand grasping gesture;
finger pinches made by both hands;
grasping gestures made by both hands;
a gesture made by moving both hands relative to one another;
a head movement;
user input provided via a hand-held device;
user input provided via an input device; or
user input provided via a wearable device.

Some implementations provide a method:
wherein the user activity is detected based on images captured from an outward-facing camera of a head-mounted device.

Some implementations provide a method:
wherein obtaining the gaze data comprises receiving a signal of live gaze velocity data based on a stream of live images of the eye.

Some implementations provide a method:
wherein identifying the gaze-holding events comprises:
motion classification;
pose stabilization; or
blink removal.

Some implementations provide a method:
wherein:
the user activity a saccadic event having a characteristic that exceeds a threshold; and
the user interface response is based on excluding a potential gaze holding event or a portion of a gaze holding event occurring during a time period following the saccadic event.

Some implementations provide a method:
wherein identifying gaze-holding events based on the gaze velocity comprises excluding a potential gaze holding event or a portion of gaze holding event occurring during a time period following a saccadic event in the velocity data, wherein potential gaze holding event is excluded based on:
(a) an amplitude representing velocity change during saccadic event;
(b) a rate of change of velocity during the saccadic event;
(c) a duration of the potential gaze holding event; or
(d) distance of eye travel during the saccadic event.

Some implementations provide a system comprising:
a non-transitory computer-readable storage medium; and
one or more processors coupled to the non-transitory computer-readable storage medium, wherein the non-transitory computer-readable storage medium comprises program instructions that, when executed on the one or more processors, cause the system to perform operations comprising:
   obtaining gaze motion classification data that was generated based on sensor data of an eye captured by the one or more sensors, the gaze motion classification data distinguishing gaze periods associated with gaze holding events from gaze periods associated with non-gaze-holding events;
   detecting a user activity; and
   triggering a user interface response based on the user activity and the gaze motion classification data.

Some implementations provide a system:
wherein:
the user activity is a gaze in a gaze direction occurring during a gaze-holding event; and
the user interface response comprises providing an indication of user attention to the user interface element based on determining that the gaze-holding event corresponds to the user interface element.

Some implementations provide a system:
wherein:
the user activity is a gesture or input device interaction distinct from the gaze;
the gaze-holding event is associated with the user activity; and
the user interface response is triggered based on associating the user activity with the user interface element.

Some implementations provide a system:
wherein associating the gaze-holding event with the user activity is based on determining that the user activity occurred during the gaze-holding event.

Some implementations provide a system:
wherein associating the gaze-holding event with the user activity comprises:
determining that the user activity did not occur during any of the gaze-holding events; and
determining that the user activity occurred within a threshold time after the gaze-holding event.

Some implementations provide a system:
wherein associating the gaze-holding event with the user activity comprises:
determining that the user activity did not occur during any of the gaze-holding events;
determining that the user activity did not occur within a threshold time after any of the gaze-holding events; and
determining that the gaze-holding event occurred within a threshold time after the user activity.

Some implementations provide a system:
wherein the user activity is:
a finger pinch;
a multi-finger gesture;
a hand grasping gesture;
finger pinches made by both hands;
grasping gestures made by both hands;
a gesture made by moving both hands relative to one another;
a head movement;
user input provided via a hand-held device;
user input provided via an input device; or
user input provided via a wearable device.

Some implementations provide a system:
wherein the user activity is detected based on images captured from an outward-facing camera of a head-mounted device.

Some implementations provide a system:
wherein obtaining the gaze data comprises receiving a signal of live gaze velocity data based on a stream of live images of the eye.

Some implementations provide a system:
wherein identifying the gaze-holding events comprises:
motion classification;
pose stabilization; or
blink removal.

Some implementations provide a system:
wherein:
the user activity a saccadic event having a characteristic that exceeds a threshold; and
the user interface response is based on excluding a potential gaze holding event or a portion of a gaze holding event occurring during a time period following the saccadic event.

Some implementations provide a system:
wherein identifying gaze-holding events based on the gaze velocity comprises excluding a potential gaze holding event or a portion of gaze holding event occurring during a time period following a saccadic event in the velocity data, wherein potential gaze holding event is excluded based on:
(a) an amplitude representing velocity change during saccadic event;
(b) a rate of change of velocity during the saccadic event;
(c) a duration of the potential gaze holding event; or
(d) distance of eye travel during the saccadic event.

Some implementations provide a non-transitory computer-readable storage medium storing program instructions executable via one or more processors to perform operations comprising:
obtaining gaze motion classification data that was generated based on sensor data of an eye captured by the one or more sensors, the gaze motion classification data distinguishing gaze periods associated with gaze holding events from gaze periods associated with non-gaze-holding events;
detecting a user activity; and
triggering a user interface response based on the user activity and the gaze motion classification data.

Some implementations provide a non-transitory computer-readable storage medium:
wherein:
the user activity is a gaze in a gaze direction occurring during a gaze-holding event; and
the user interface response comprises providing an indication of user attention to the user interface element based on determining that the gaze-holding event corresponds to the user interface element.

Some implementations provide a non-transitory computer-readable storage medium:
wherein:
the user activity is a gesture or input device interaction distinct from the gaze;
the gaze-holding event is associated with the user activity; and
the user interface response is triggered based on associating the user activity with the user interface element.

Some implementations provide a non-transitory computer-readable storage medium:
wherein associating the gaze-holding event with the user activity is based on determining that the user activity occurred during the gaze-holding event.

Some implementations provide a non-transitory computer-readable storage medium:
wherein associating the gaze-holding event with the user activity comprises:
determining that the user activity did not occur during any of the gaze-holding events; and
determining that the user activity occurred within a threshold time after the gaze-holding event.

Some implementations provide a non-transitory computer-readable storage medium:
wherein associating the gaze-holding event with the user activity comprises:
determining that the user activity did not occur during any of the gaze-holding events;
determining that the user activity did not occur within a threshold time after any of the gaze-holding events; and
determining that the gaze-holding event occurred within a threshold time after the user activity.

Some implementations provide a non-transitory computer-readable storage medium:
wherein the user activity is:
a finger pinch;
a multi-finger gesture;
a hand grasping gesture;
finger pinches made by both hands;
grasping gestures made by both hands;
a gesture made by moving both hands relative to one another;
a head movement;
user input provided via a hand-held device;
user input provided via an input device; or
user input provided via a wearable device.

Some implementations provide a non-transitory computer-readable storage medium:
wherein the user activity is detected based on images captured from an outward-facing camera of a head-mounted device.

Some implementations provide a non-transitory computer-readable storage medium:
wherein obtaining the gaze data comprises receiving a signal of live gaze velocity data based on a stream of live images of the eye.

Some implementations provide a non-transitory computer-readable storage medium:
wherein identifying the gaze-holding events comprises:
motion classification;
pose stabilization; or
blink removal.

Some implementations provide a non-transitory computer-readable storage medium:
wherein:
the user activity a saccadic event having a characteristic that exceeds a threshold; and
the user interface response is based on excluding a potential gaze holding event or a portion of a gaze holding event occurring during a time period following the saccadic event.

Some implementations provide a non-transitory computer-readable storage medium:
wherein identifying gaze-holding events based on the gaze velocity comprises excluding a potential gaze holding event or a portion of gaze holding event occurring during a time period following a saccadic event in the velocity data, wherein potential gaze holding event is excluded based on:
(a) an amplitude representing velocity change during saccadic event;
(b) a rate of change of velocity during the saccadic event;
(c) a duration of the potential gaze holding event; or
(d) distance of eye travel during the saccadic event.

Some implementations provide a method comprising:
at an electronic device having a processor:
receiving, at an input support process, data corresponding to user activity in a 3D coordinate system;
generating, at the input support process, a plurality of sample locations in the 3D coordinate system based on the data corresponding to the user activity;
identifying, at the input support process, user interface (UI) targets within the 3D coordinate system based on the plurality of sample locations; and
selecting, at the input support process, a UI target of the identified UI targets to associate with the user activity based on a selection criterion.

Some implementations provide a method:
wherein selecting the UI target to associate with the UI activity comprises:
for each of the identified UI targets, determining a point on the respective UI target based on the user activity; and
prioritizing the identified UI targets based on the point computed for each respective UI target.

Some implementations provide a method:
wherein determining the point on each of the respective UI targets comprises:
determining a closest opaque point to a sample location associated with the user activity; and
determining a distance of the closest opaque point of each of the respective UI targets to the sample location associated with the user activity.

Some implementations provide a method:
wherein selecting the UI target to associate with the UI activity is based on determining that a closest opaque point within the UI target is within an angular distance threshold of a sample location associated with the user activity.

Some implementations provide a method:
wherein the UI target to associate with the UI activity is selected based on:
determining that closest opaque points within multiple UI targets are within an angular distance threshold of a sample location associated with the user activity; and
selecting the UI target from the multiple UI targets based on a policy that ranks UI targets based on element type, UI layers, UI geometry, or hysteresis logic.

Some implementations provide a method:
wherein the identified UI targets comprises:
3D virtual objects; and
2D elements defined by one or more applications.

Some implementations provide a method:
wherein identifying the UI targets comprises:
receiving, at the input support process, data corresponding to positioning of UI elements of an application within the 3D coordinate system, the data corresponding to the positioning of the UI element based at least in part on data provided by the application; and
identifying the UI targets by identifying intersections of the plurality of gaze sample locations with the UI elements of the application positioned within the 3D coordinate system.

Some implementations provide a method:
wherein the UI elements of the application occupy a two-dimensional (2D) region and the method further comprises, based on selecting the UI target to associate with the user activity, identifying a point within the 2D region to the application such that the application can recognize an action to associate with the UI element using a 2D app action recognition process.

Some implementations provide a method:
wherein the data provided by the application comprises a layered tree structure defining the positional and containment relationships of the UI elements relative to one another on a two-dimensional (2D) coordinate system.

Some implementations provide a method:
wherein the data provided by the application identifies external effects for some of the UI elements, wherein an external effect specifies that an operating system (OS) process is to provide responses to a specified user activity relative to a specified UI element outside of an application process.

Some implementations provide a method:
wherein the data corresponding to the user activity is a gaze direction within the 3D coordinate system, the gaze direction determined based on sensor data.

Some implementations provide a method:
wherein the data corresponding to the user activity is a synthesized direction within the 3D coordinate system, the direction determined based on:
determining a hand position of a hand in the 3D coordinate system based on sensor data;
determining an intersection position of the hand with at least one UI element based on the hand position; and
determining the direction based on the intersection and a viewpoint position.

Some implementations provide a method:
wherein the plurality of sample locations are generated by generating a pattern of rays around a gaze direction or a synthesized direction corresponding to user activity.

Some implementations provide a method:
wherein the pattern of rays has between 2 and 100 rays.

Some implementations provide a method:
wherein the pattern of rays has between 5 and 35 rays.

Some implementations provide a method:
wherein the pattern of rays comprises an outer set of rays forming a shape.

Some implementations provide a method:
wherein the shape is rotated relative to a horizon or a horizontal.

Some implementations provide a method:
wherein the electronic device provides views of a 3D environment including the UI targets, wherein at least some of the UI targets are 2D user interface elements provided by one or more applications, wherein the input support process recognizes the user activity in the 3D coordinate system and provides data to the one or more applications to recognize 2D user interface input.

Some implementations provide a system comprising: memory; and one or more processors coupled to the memory, wherein the memory comprises program instructions that, when executed by the one or more processors, cause the system to perform the method of any one of the methods of methods described herein.

Some implementations provide a non-transitory computer-readable storage medium, storing program instructions computer-executable on a computer to perform the method of any one of the methods of methods described herein.

Some implementations provide a method comprising:
at an electronic device having a processor:
receiving, at an input support process, data corresponding to user activity in a 3D coordinate system;
receiving, at the input support process, data corresponding to positioning of UI elements of an application within the 3D coordinate system, the data corresponding to the positioning of the UI element based at least in part on data provided by the application; and
identifying, at the input support process, user interface (UI) targets within the 3D coordinate system based on the data corresponding to the user activity and the data corresponding to positioning of the UI elements of the application within the 3D coordinate system;
selecting, at the input support process, a UI target of the identified UI targets to associate with the user activity based on a selection criterion; and
based on selecting the UI target to associate with the user activity, identifying a point within a 2D region to the application such that the application can associate an action with the UI target.

Some implementations provide a method:
wherein the application comprises a 2D input recognition framework configured to associate actions with the UI targets based on 2D position data.

Some implementations provide a method:
wherein the 2D input recognition framework is configured to recognize touch input corresponding to touch points on a 2D touch screen interface.

Some implementations provide a method:
wherein the 2D input recognition framework is configured to recognize a 2D mouse cursor position or a 2D trackpad cursor position within a 2D user interface.

Some implementations provide a method:
wherein the data provided by the application comprises a layered tree structure defining the positional and containment relationships of the UI elements relative to one another on a two-dimensional (2D) coordinate system.

Some implementations provide a method:
wherein the data provided by the application identifies external effects for some of the UI elements, wherein an external effect specifies that a respective UI element either responds to hover feedback or is targetable.

Some implementations provide a method:
wherein selecting the UI target to associate with the UI activity comprises:
for each of the identified UI targets, determining a point on the respective UI target based on the user activity; and
prioritizing the identified UI targets based on the point computed for each respective UI target.

Some implementations provide a method:
wherein determining the point on each of the respective UI targets comprises:
determining a closest opaque point to a ray associated with the user activity; and
determining a distance of the closest opaque point of each of the respective UI targets to the ray associated with the user activity.

Some implementations provide a method:
wherein selecting the UI target to associate with the UI activity is based on determining that a closest opaque point within the UI target is within an angular distance threshold of a ray associated with the user activity.

Some implementations provide a method:
wherein the UI target to associate with the UI activity is selected based on:
determining that closest opaque points within multiple UI targets are within an angular distance threshold of a ray associated with the user activity; and
selecting the UI target from the multiple UI targets based on a policy that ranks UI targets based on element type, UI layers, UI geometry, or hysteresis logic.

Some implementations provide a method:
wherein the identified UI targets comprises:
3D virtual objects; and
2D elements defined by one or more applications.

Some implementations provide a method:
wherein the data corresponding to the user activity is a gaze direction within the 3D coordinate system, the gaze direction determined based on sensor data.

Some implementations provide a method:
wherein the data corresponding to the user activity is a synthesize direction within the 3D coordinate system, the direction determined based on:
determining a hand position of a hand in the 3D coordinate system based on sensor data;
determining an intersection position of the hand with at least one UI element based on the hand position; and
determining the direction based on the intersection and a viewpoint position.

Some implementations provide a method:
wherein the electronic device provides views of a 3D environment including the UI targets, wherein at least some of the UI targets are 2D user interface elements provided by multiple applications, wherein the input support process recognizes the user activity in the 3D coordinate system and provides data to the multiple applications to recognize 2D user interface input.

Some implementations provide a system comprising: memory; and one or more processors coupled to the memory, wherein the memory comprises program instructions that, when executed by the one or more processors, cause the system to perform the method of any one of the methods described herein.

Some implementations provide a non-transitory computer-readable storage medium, storing program instructions computer-executable on a computer to perform the method of any of the methods described herein.

Some implementations provide a method comprising:
obtaining hand tracking data based on one or more camera frames;
determining a hand pose based on the hand tracking data;
determining an intentionality classification for a gesture based on the hand pose; and
enabling an input action corresponding to the gesture in accordance with the hand pose and the intentionality classification.

Some implementations provide a method:
wherein determining an intentionality classification for a gesture based on the hand pose comprises:
detecting the gesture based on the hand tracking data; and
classifying the gesture as an intentional user input gesture based on the hand pose and hand tracking data.

Some implementations provide a method:
wherein determining the intentionality classification for the gesture based on the hand pose comprises:
determining an intentionality score for the detected gesture, and
determining that the intentionality score satisfies a predetermined threshold.

Some implementations provide a method:
comprising:
determining whether a contact occurs between two fingers based on the hand tracking data,
wherein the intentionality for a gesture corresponds to an intended pinch gesture.

Some implementations provide a method:
comprising:
obtaining additional hand tracking data;
determining an additional hand pose based on the additional hand tracking data;
determining a second intentionality score for a second gesture based on the additional hand pose; and
in accordance with the second intentionality score failing to satisfy a threshold, ceasing enablement of an input action corresponding to the second gesture.

Some implementations provide a method:
wherein the additional hand tracking data is associated with a same hand as the hand tracking data and is obtained at a different time.

Some implementations provide a method:
wherein the additional hand tracking data is associated with a different hand than the hand tracking data.

Some implementations provide a method:
wherein determining an intentionality classification for a gesture based on the hand pose comprises:
obtaining gaze tracking data associated with the hand tacking data; and
determining that the gesture is intended as a user input gesture based on the gaze tracking data.

Some implementations provide a non-transitory computer readable medium comprising computer readable code executable by one or more processors to:
obtain hand tracking data based on one or more camera frames;
determine a hand pose based on the hand tracking data;
determine an intentionality classification for a gesture based on the hand pose; and
enable an input action corresponding to the gesture in accordance with the hand pose and the intentionality classification.

Some implementations provide a non-transitory computer readable medium:
wherein the computer readable code to determine the intentionality classification for a gesture based on the hand pose comprises computer readable code to:
detect the gesture based on the hand tracking data; and
classifying the gesture as an intentional user input gesture based on the hand pose and hand tracking data.

Some implementations provide a non-transitory computer readable medium:
wherein the computer readable code to determine the intentionality classification for a gesture based on the hand pose comprises computer readable code to:
determine an intentionality score for the detected gesture, and
determine that the intentionality score satisfies a predetermined threshold.

Some implementations provide a non-transitory computer readable medium:
further comprising computer readable code to:
determine whether a contact occurs between two fingers based on the hand tracking data,
wherein the intentionality for a gesture corresponds to an intended pinch gesture.

Some implementations provide a non-transitory computer readable medium:
further comprising computer readable code to:
obtain additional hand tracking data;
determine an additional hand pose based on the additional hand tracking data;
determine a second intentionality score for a second gesture based on the additional hand pose; and
in accordance with the second intentionality score failing to satisfy a threshold, cease enablement of an input action corresponding to the second gesture.

Some implementations provide a non-transitory computer readable medium:
wherein the additional hand tracking data is associated with a same hand as the hand tracking data and is obtained at a different time.

Some implementations provide a non-transitory computer readable medium:
wherein the additional hand tracking data is associated with a different hand than the hand tracking data.

Some implementations provide a non-transitory computer readable medium:
wherein the computer readable code to determine the intentionality classification for the gesture based on the hand pose comprises computer readable code to:
obtain gaze tracking data associated with the hand tacking data; and
determine that the gesture is intended as a user input gesture based on the gaze tracking data.

Some implementations provide a system comprising:
one or more processors; and
one or more computer readable media comprising computer readable code executable by the one or more processors to:
   obtain hand tracking data based on one or more camera frames;
   determine a hand pose based on the hand tracking data;
   determine an intentionality classification for a gesture based on the hand pose; and
   enable an input action corresponding to the gesture in accordance with the hand pose and the intentionality classification.

Some implementations provide a system:
wherein the computer readable code to determine the intentionality classification for a gesture based on the hand pose comprises computer readable code to:
detect the gesture based on the hand tracking data; and
classifying the gesture as an intentional user input gesture based on the hand pose and hand tracking data.

Some implementations provide a system:
wherein the computer readable code to determine the intentionality classification for a gesture based on the hand pose comprises computer readable code to:
determine an intentionality score for the detected gesture, and
determine that the intentionality score satisfies a predetermined threshold.

Some implementations provide a system:
further comprising computer readable code to:
determine whether a contact occurs between two fingers based on the hand tracking data,
wherein the intentionality for a gesture corresponds to an intended pinch gesture.

Some implementations provide a system:
further comprising computer readable code to:
obtain additional hand tracking data;
determine an additional hand pose based on the additional hand tracking data;
determine a second intentionality score for a second gesture based on the additional hand pose; and
in accordance with the second intentionality score failing to satisfy a threshold, cease enablement of an input action corresponding to the second gesture.

Some implementations provide a system:
wherein the additional hand tracking data is associated with a same hand as the hand tracking data and is obtained at a different time.

Some implementations provide a system:
wherein the additional hand tracking data is associated with a different hand than the hand tracking data.

Some implementations provide a system:
wherein the computer readable code to determine the intentionality classification for the gesture based on the hand pose comprises computer readable code to:
obtain gaze tracking data associated with the hand tacking data; and
determine that the gesture is intended as a user input gesture based on the gaze tracking data.

Some implementations provide a method comprising:
obtaining hand tracking data for a hand based on one or more camera frames;
determining a hand pose based on the hand tracking data;
determining an occlusion classification for the hand based on the hand pose; and
determining an input gesture in accordance with the hand pose and the occlusion classification.

Some implementations provide a method:
wherein determining an occlusion classification for the hand based on the hand pose comprises:
determining an occlusion score for each of one or more joints of the hand; and
determining the occlusion classification based on the occlusion score for each of the one or more joints of the hand.

Some implementations provide a method:
wherein the determining the input gesture in accordance with the hand pose and the occlusion classification comprises:
utilizing a gesture state from a prior frame for a current frame.

Some implementations provide a method:
comprising:
enabling an input action corresponding to the gesture in accordance with the hand pose and the occlusion classification.

Some implementations provide a method:
wherein determining an input gesture in accordance with the hand pose and the occlusion classification comprises:
ceasing enablement of an input action corresponding to the gesture based on the occlusion classification.

Some implementations provide a method:
wherein determining an occlusion classification for the hand based on the hand pose comprises:
applying the one or more camera frames to an action network to obtain a predicted gesture state; and
modifying the predicted gesture state based on the occlusion classification.

Some implementations provide a method:
wherein determining an occlusion classification for the hand based on the hand pose comprises:
determining a portion of a hand mesh that is occluded based on the hand pose.

Some implementations provide a non-transitory computer readable medium comprising computer readable code executable by one or more processors to:
obtain hand tracking data for a hand based on one or more camera frames;
determine a hand pose based on the hand tracking data;
determine an occlusion classification for the hand based on the hand pose; and
determine an input gesture in accordance with the hand pose and the occlusion classification.

Some implementations provide a non-transitory computer readable medium:
wherein the computer readable code to determine an occlusion classification for the hand based on the hand pose comprises computer readable code to:
determine an occlusion score for each of one or more joints of the hand; and
determine the occlusion classification based on the occlusion score for each of the one or more joints of the hand.

Some implementations provide a non-transitory computer readable medium:
wherein the computer readable code to determine the input gesture in accordance with the hand pose and the occlusion classification comprises computer readable code to:
utilize a gesture state from a prior frame for a current frame.

Some implementations provide a non-transitory computer readable medium:
further comprising computer readable code to:
enable an input action corresponding to the gesture in accordance with the hand pose and the occlusion classification.

Some implementations provide a non-transitory computer readable medium:
wherein the computer readable code to determine an input gesture in accordance with the hand pose and the occlusion classification comprises computer readable code to:
cease enablement of an input action corresponding to the gesture based on the occlusion classification.

Some implementations provide a non-transitory computer readable medium:
wherein the computer readable code to determine an occlusion classification for the hand based on the hand pose comprises computer readable code to:
apply the one or more camera frames to an action network to obtain a predicted gesture state; and
modify the predicted gesture state based on the occlusion classification.

Some implementations provide a non-transitory computer readable medium:
wherein the computer readable code to determine an occlusion classification for the hand based on the hand pose comprises computer readable code to:
determine a portion of a hand mesh that is occluded based on the hand pose.

Some implementations provide a system comprising:
one or more processors; and
one or more computer readable media comprising computer readable code executable by one or more processors to:
   obtain hand tracking data for a hand based on one or more camera frames;
   determine a hand pose based on the hand tracking data;
   determine an occlusion classification for the hand based on the hand pose; and
   determine an input gesture in accordance with the hand pose and the occlusion classification.

Some implementations provide a system:
wherein the computer readable code to determine an occlusion classification for the hand based on the hand pose comprises computer readable code to:
determine an occlusion score for each of one or more joints of the hand; and
determine the occlusion classification based on the occlusion score for each of the one or more joints of the hand.

Some implementations provide a system:
wherein the computer readable code to determine the input gesture in accordance with the hand pose and the occlusion classification comprises computer readable code to:
utilize a gesture state from a prior frame for a current frame.

Some implementations provide a system:
comprising computer readable code to:
enable an input action corresponding to the gesture in accordance with the hand pose and the occlusion classification.

Some implementations provide a system:
wherein the computer readable code to determine an input gesture in accordance with the hand pose and the occlusion classification comprises computer readable code to:
cease enablement of an input action corresponding to the gesture based on the occlusion classification.

Some implementations provide a system:
wherein the computer readable code to determine an occlusion classification for the hand based on the hand pose comprises computer readable code to:
apply the one or more camera frames to an action network to obtain a predicted gesture state; and
modify the predicted gesture state based on the occlusion classification.

Some implementations provide a system:
wherein the computer readable code to determine an occlusion classification for the hand based on the hand pose comprises computer readable code to:
determine a portion of a hand mesh that is occluded based on the hand pose.

It will be appreciated that the implementations described above are cited by way of example, and that the present invention is not limited to what has been particularly shown and described hereinabove. Rather, the scope includes both combinations and sub combinations of the various features described hereinabove, as well as variations and modifications thereof which would occur to persons skilled in the art upon reading the foregoing description and which are not disclosed in the prior art.

As described above, one aspect of the present technology is the gathering and use of sensor data that may include user data to improve a user's experience of an electronic device. The present disclosure contemplates that in some instances, this gathered data may include personal information data that uniquely identifies a specific person or can be used to identify interests, traits, or tendencies of a specific person. Such personal information data can include movement data, physiological data, demographic data, location-based data, telephone numbers, email addresses, home addresses, device characteristics of personal devices, or any other personal information.

The present disclosure recognizes that the use of such personal information data, in the present technology, can be used to the benefit of users. For example, the personal information data can be used to improve the content viewing experience. Accordingly, use of such personal information data may enable calculated control of the electronic device. Further, other uses for personal information data that benefit the user are also contemplated by the present disclosure.

The present disclosure further contemplates that the entities responsible for the collection, analysis, disclosure, transfer, storage, or other use of such personal information and/or physiological data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates implementations in which users selectively block the use of, or access to, personal information data. That is, the present disclosure contemplates that hardware or software elements can be provided to prevent or block access to such personal information data. For example, in the case of user-tailored content delivery services, the present technology can be configured to allow users to select to "opt in" or "opt out" of participation in the collection of personal information data during registration for services. In another example, users can select not to provide personal information data for targeted content delivery services. In yet another example, users can select to not provide personal information, but permit the transfer of anonymous information for the purpose of improving the functioning of the device.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences or settings based on non-personal information data or a bare minimum amount of personal information, such as the content being requested by the device associated with a user, other non-personal information available to the content delivery services, or publicly available information.

In some embodiments, data is stored using a public/private key system that only allows the owner of the data to decrypt the stored data. In some other implementations, the data may be stored anonymously (e.g., without identifying and/or personal information about the user, such as a legal name, username, time and location data, or the like). In this way, other users, hackers, or third parties cannot determine the identity of the user associated with the stored data. In some implementations, a user may access their stored data from a user device that is different than the one used to upload the stored data. In these instances, the user may be required to provide login credentials to access their stored data.

Numerous specific details are set forth herein to provide a thorough understanding of the claimed subject matter. However, those skilled in the art will understand that the claimed subject matter may be practiced without these specific details. In other instances, methods apparatuses, or systems that would be known by one of ordinary skill have not been described in detail so as not to obscure claimed subject matter.

Unless specifically stated otherwise, it is appreciated that throughout this specification discussions utilizing the terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provides a result conditioned on one or more inputs. Suitable computing devices include multipurpose microprocessor-based computer systems accessing stored software that programs or configures the computing system from a general-purpose computing apparatus to a specialized computing apparatus implementing one or more implementations of the present subject matter. Any suitable programming, scripting, or other type of language or combinations of languages may be used to implement the teachings contained herein in software to be used in programming or configuring a computing device.

Implementations of the methods disclosed herein may be performed in the operation of such computing devices. The order of the blocks presented in the examples above can be varied for example, blocks can be re-ordered, combined, and/or broken into sub-blocks. Certain blocks or processes can be performed in parallel.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or value beyond those recited. Headings, lists, and numbering included herein are for ease of explanation only and are not meant to be limiting.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

The foregoing description and summary of the invention are to be understood as being in every respect illustrative and exemplary, but not restrictive, and the scope of the invention disclosed herein is not to be determined only from the detailed description of illustrative implementations but according to the full breadth permitted by patent laws. It is to be understood that the implementations shown and described herein are only illustrative of the principles of the present invention and that various modification may be implemented by those skilled in the art without departing from the scope and spirit of the invention.

Exemplary embodiments of the present disclosure are set out in the following items:
1. A method comprising:
   at an electronic device having a processor:
      obtaining hand data associated with a position of a hand in a three-dimensional (3D) space, the hand data obtained based on first sensor data;
      obtaining gaze data associated with a direction of a gaze in the 3D space, the gaze data obtained based on second sensor data;
      selecting a direct interaction mode;
      in accordance with selecting the direct interaction mode, identifying a first interaction with a first virtual object based on identifying that the position of the hand intersects a first area associated with a position of the first virtual object in an extended reality (XR) environment corresponding to the 3D space;
      selecting an indirect interaction mode; and
      in accordance with selecting the indirect interaction mode, identifying a second interaction with a second virtual object based on identifying that the gaze direction intersects a second area associated with a position of the second virtual object in the XR environment.
2. The method of item 1, wherein the direct interaction mode and indirect interaction mode are selected based on proximity of hand position to positions of virtual objects in the XR environment, wherein the indirect interaction mode is selected in circumstances in which hand position in the XR environment intersects areas associated with the virtual objects in the XR environment.
3. The method of any of items 1-2, wherein identifying the second interaction with the second virtual object is further based on identifying a hand gesture coinciding with the gaze direction intersecting the gaze the second area.
4. The method of any of items 1-3, wherein identifying the first interaction with the first virtual object comprises determining an input location on a user interface based on a movement path of the hand.
5. The method of any of items 1-4, wherein identifying the first interaction with the first virtual object comprises determining whether the gesture is a tap gesture based on a movement path of the hand.
6. The method of any of items 1-5, wherein identifying the first interaction with the first virtual object comprises:
   determining whether segments of a hand movement have a characteristic that satisfies a retraction criterion, the retraction criterion configured to distinguish retraction motion from another type of motion; and
   associating a subset of the segments of the movement with user interface contact based on whether the characteristic of each of the segments satisfies the retraction criterion.
7. The method of any of items 1-6, wherein identifying the first interaction with the first virtual object comprises:
   configuring a break volume based on a hand movement, the break volume defining a region of the XR environment in which the movement will be associated with user interface contact; and
   determining to discontinue associating the movement with user interface contact based on the movement crossing a boundary of the break volume.
8. The method of any of items 1-7, wherein identifying the second interaction with the second virtual object comprises:
   obtaining gaze motion classification data based on the gaze data, the gaze motion classification data distinguishing gaze periods associated with gaze holding events from gaze periods associated with non-gaze-holding events.
9. The method of any of items 1-8, wherein identifying the second interaction with the second virtual object comprises:
   generating a plurality of sample locations based on the gaze data;
   identifying virtual objects based on the plurality of sample locations; and
   selecting the second virtual object, from the virtual objects, to associate with a user activity based on a selection criterion.
10. The method of item 9, wherein identifying the second interaction with the second virtual object further comprises:
   identifying a point to an application that provided the second virtual object such that the application can associate an action with the second virtual object.
11. The method of any of items 1-10 further comprising:
   determining an intentionality classification for a gesture based on the hand data; and
   enabling an input action corresponding to the gesture based on the intentionality classification.
12. A system comprising:
   a non-transitory computer-readable storage medium; and
   one or more processors coupled to the non-transitory computer-readable storage medium, wherein the non-transitory computer-readable storage medium comprises program instructions that, when executed on the one or more processors, cause the system to perform operations comprising:
      obtaining hand data associated with a position of a hand in a three-dimensional (3D) space, the hand data obtained based on first sensor data;
      obtaining gaze data associated with a direction of a gaze in the 3D space, the gaze data obtained based on second sensor data;
      selecting a direct interaction mode;
      in accordance with selecting the direct interaction mode, identifying a first interaction with a first virtual object based on identifying that the position of the hand intersects a first area associated with a position of the first virtual object in an extended reality (XR) environment corresponding to the 3D space;
      selecting an indirect interaction mode; and
      in accordance with selecting the indirect interaction mode, identifying a second interaction with a second virtual object based on identifying that the gaze direction intersects a second area associated with a position of the second virtual object in the XR environment.
13. The system of item 12, wherein the direct interaction mode and indirect interaction mode are selected based on proximity of hand position to positions of virtual objects in the XR environment, wherein the indirect interaction mode is selected in circumstances in which hand position in the XR environment intersects areas associated with the virtual objects in the XR environment.
14. The system of any of items 12-13, wherein identifying the second interaction with the second virtual object is further based on identifying a hand gesture coinciding with the gaze direction intersecting the gaze the second area.
15. The system of any of items 12-14, wherein identifying the first interaction with the first virtual object comprises determining an input location on a user interface based on a movement path of the hand.
16. The system of any of items 12-15, wherein identifying the first interaction with the first virtual object comprises determining whether the gesture is a tap gesture based on a movement path of the hand.
17. The system of any of items 12-16, wherein identifying the first interaction with the first virtual object comprises:
   determining whether segments of a hand movement have a characteristic that satisfies a retraction criterion, the retraction criterion configured to distinguish retraction motion from another type of motion; and
   associating a subset of the segments of the movement with user interface contact based on whether the characteristic of each of the segments satisfies the retraction criterion.
18. The system of any of items 12-17, wherein identifying the first interaction with the first virtual object comprises:
   configuring a break volume based on a hand movement, the break volume defining a region of the XR environment in which the movement will be associated with user interface contact; and
   determining to discontinue associating the movement with user interface contact based on the movement crossing a boundary of the break volume.
19. The system of any of items 12-18, wherein identifying the second interaction with the second virtual object comprises:
   obtaining gaze motion classification data based on the gaze data, the gaze motion classification data distinguishing gaze periods associated with gaze holding events from gaze periods associated with non-gaze-holding events.
20. A non-transitory computer-readable storage medium storing program instructions executable via one or more processors to perform operations comprising:
   obtaining hand data associated with a position of a hand in a three-dimensional (3D) space, the hand data obtained based on first sensor data;
   obtaining gaze data associated with a direction of a gaze in the 3D space, the gaze data obtained based on second sensor data;
   selecting a direct interaction mode;
   in accordance with selecting the direct interaction mode, identifying a first interaction with a first virtual object based on identifying that the position of the hand intersects a first area associated with a position of the first virtual object in an extended reality (XR) environment corresponding to the 3D space;
   selecting an indirect interaction mode; and
   in accordance with selecting the indirect interaction mode, identifying a second interaction with a second virtual object based on identifying that the gaze direction intersects a second area associated with a position of the second virtual object in the XR environment.

## Claims

1. A method comprising:
at an electronic device having a processor:
obtaining hand data associated with a position of a hand in a three-dimensional (3D) space, the hand data obtained based on first sensor data;
obtaining gaze data associated with a direction of a gaze in the 3D space, the gaze data obtained based on second sensor data;
selecting a direct interaction mode;
in accordance with selecting the direct interaction mode, identifying a first interaction with a first virtual object based on identifying that the position of the hand intersects a first area associated with a position of the first virtual object in an extended reality (XR) environment corresponding to the 3D space;
selecting an indirect interaction mode; and
in accordance with selecting the indirect interaction mode, identifying a second interaction with a second virtual object based on identifying that the gaze direction intersects a second area associated with a position of the second virtual object in the XR environment.

2. The method of claim 1, wherein the direct interaction mode and indirect interaction mode are selected based on proximity of hand position to positions of virtual objects in the XR environment, wherein the indirect interaction mode is selected in circumstances in which hand position in the XR environment intersects areas associated with the virtual objects in the XR environment.

3. The method of any of claims 1-2, wherein identifying the second interaction with the second virtual object is further based on identifying a hand gesture coinciding with the gaze direction intersecting the gaze the second area.

4. The method of any of claims 1-3, wherein identifying the first interaction with the first virtual object comprises determining an input location on a user interface based on a movement path of the hand.

5. The method of any of claims 1-4, wherein identifying the first interaction with the first virtual object comprises determining whether the gesture is a tap gesture based on a movement path of the hand.

6. The method of any of claims 1-5, wherein identifying the first interaction with the first virtual object comprises:
determining whether segments of a hand movement have a characteristic that satisfies a retraction criterion, the retraction criterion configured to distinguish retraction motion from another type of motion; and
associating a subset of the segments of the movement with user interface contact based on whether the characteristic of each of the segments satisfies the retraction criterion.

7. The method of any of claims 1-6, wherein identifying the first interaction with the first virtual object comprises:
configuring a break volume based on a hand movement, the break volume defining a region of the XR environment in which the movement will be associated with user interface contact; and
determining to discontinue associating the movement with user interface contact based on the movement crossing a boundary of the break volume.

8. The method of any of claims 1-7, wherein identifying the second interaction with the second virtual object comprises:
obtaining gaze motion classification data based on the gaze data, the gaze motion classification data distinguishing gaze periods associated with gaze holding events from gaze periods associated with non-gaze-holding events.

9. The method of any of claims 1-8, wherein identifying the second interaction with the second virtual object comprises:
generating a plurality of sample locations based on the gaze data;
identifying virtual objects based on the plurality of sample locations; and
selecting the second virtual object, from the virtual objects, to associate with a user activity based on a selection criterion.

10. The method of claim 9, wherein identifying the second interaction with the second virtual object further comprises:
identifying a point to an application that provided the second virtual object such that the application can associate an action with the second virtual object.

11. The method of any of claims 1-10 further comprising:
determining an intentionality classification for a gesture based on the hand data; and
enabling an input action corresponding to the gesture based on the intentionality classification.

12. A system comprising:
a non-transitory computer-readable storage medium; and
one or more processors coupled to the non-transitory computer-readable storage medium, wherein the non-transitory computer-readable storage medium comprises program instructions that, when executed on the one or more processors, cause the system to perform operations comprising any one of the methods of claims 1-11.

13. A non-transitory computer-readable storage medium storing program instructions executable via one or more processors to perform operations comprising any one of the methods of claims 1-11.
